(19) Europäisches Patentamt
European Patent Office
Office européen des brevets

(11) EP 4 059 986 A1

(12) EUROPEAN PATENT APPLICATION
published in accordance with Art. 153(4) EPC

(43) Date of publication:
**21.09.2022 Bulletin 2022/38**

(21) Application number: **20887810.8**

(22) Date of filing: **30.10.2020**

(51) International Patent Classification (IPC):
***C08G 65/336*** (2006.01) ***H01M 4/13*** (2010.01)
***H01M 4/36*** (2006.01) ***H01M 4/62*** (2006.01)
***H01G 11/06*** (2013.01) ***H01G 11/26*** (2013.01)
***H01G 11/30*** (2013.01) ***H01M 10/052*** (2010.01)
***H01M 10/054*** (2010.01)

(52) Cooperative Patent Classification (CPC):
**C08G 65/336; H01G 11/06; H01G 11/26; H01G 11/30; H01M 4/13; H01M 4/36; H01M 4/62; H01M 10/052; H01M 10/054;** Y02E 60/10

(86) International application number:
**PCT/JP2020/040890**

(87) International publication number:
**WO 2021/095574 (20.05.2021 Gazette 2021/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2019 JP 2019205501**

(71) Applicant: **Daikin Industries, Ltd.**
**Osaka-shi, Osaka 530-8323 (JP)**

(72) Inventors:
- **SHIMOOKA, Toshiharu**
**Osaka-shi, Osaka 530-8323 (JP)**
- **YAMAZAKI, Shigeaki**
**Osaka-shi, Osaka 530-8323 (JP)**
- **YAMADA, Takaya**
**Osaka-shi, Osaka 530-8323 (JP)**
- **FUJIWARA, Kae**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) ELECTRODE AND ELECTROCHEMICAL DEVICE

(57) The present invention preovides an electrode comprising a fluoropolyether group-containing compound, wherein the fluoropolyether group-containing compound is a fluoropolyether group-containing compound represented by the following formula (1) or (2).

$$R^{F1}_{\alpha}\text{-}X^{A}\text{-}R^{Si}_{\beta} \qquad (1)$$

$$R^{Si}_{\gamma}\text{-}X^{A}\text{-}R^{F2}\text{-}X^{A}\text{-}R^{Si}_{\gamma} \qquad (2)$$

EP 4 059 986 A1

## Description

### Technical Field

The present disclosure relates to an electrochemical device.

### Background Art

Electrochemical devices such as an alkali metal ion battery and an electrochemical capacitor, which may have characteristics such as small size, high capacity, and light-weight, are employed in various electronic devices. In particular, lithium ion secondary batteries, which are light-weight and have a high capacity and a high energy density, are widely used in particularly small electronic devices, for example, portable devices such as a smartphone, a mobile phone, a tablet terminal, a video camera, and a notebook computer.

### Citation List

### Patent Literature

Patent Literature 1 JP 2002-83632A

### Summary of Invention

### Technical Problem

In these electrochemical devices, required are a longer service life, in other words, improvement in the remaining capacity retention, suppression of gas generation, improvement in cycle characteristics, and the like. For example, in Patent Literature 1, vinylene carbonate, 1,3-propanesultone, or the like is used as an additive for the electrolytic solution to thereby improve the cycle characteristics. However, such an additive may be responsible for gas generation or increase in the resistance. In other words, it is difficult for an electrochemical device to combine a longer service life and lower resistance.

It is an object of the present disclosure to provide an electrochemical device combining a longer service life and lower resistance.

### Solution to Problem

The present disclosure includes embodiments as follows.

[1] An electrode comprising a fluoropolyether group-containing compound, wherein the fluoropolyether group-containing compound is a fluoropolyether group-containing compound represented by the following formula (1) or (2):

$$\mathbf{R^{F1}}_{\alpha}\mathbf{-X^{A}-R^{Si}}_{\beta} \qquad (1)$$

$$\mathbf{R^{Si}}_{\gamma}\mathbf{-X^{A}-R^{F2}-X^{A}-R^{Si}}_{\gamma} \qquad (2)$$

wherein:

$R^{F1}$ at each occurrence is each independently $Rf^1-R^F-O_q-$;
$R^{F2}$ is $-Rf^2_p-R^F-O_q-$;
$Rf^1$ at each occurrence is each independently a $C_{1-16}$ alkyl group optionally substituted with one or more fluorine atoms;
$Rf^2$ is a $C_{1-6}$ alkylene group optionally substituted with one or more fluorine atoms;
$R^F$ at each occurrence is each independently a divalent fluoropolyether group;
p is 0 or 1;
q at each occurrence is each independently 0 or 1;
$R^{Si}$ at each occurrence is each independently a group represented by

$$-\mathbf{SiR^{a1}_{k1}R^{b1}_{l1}R^{c1}_{m1}} \qquad (S)$$

wherein:

$R^{a1}$ at each occurrence is each independently $-Z^1-SiR^{21}{}_{p1}R^{22}{}_{q1}R^{23}{}_{r1}$;
$Z^1$ at each occurrence is each independently an oxygen atom or a divalent organic group;
$R^{21}$ at each occurrence is each independently $-Z^{1'}-SiR^{21'}{}_{p1'}R^{22'}{}_{q1'}R^{23'}{}_{r1'}$;
$R^{22}$ at each occurrence is each independently a hydroxy group or a hydrolyzable group;
$R^{23}$ at each occurrence is each independently a hydrogen atom or a monovalent organic group;
p1 at each occurrence is each independently an integer of 0 to 3;
q1 at each occurrence is each independently an integer of 0 to 3;
r1 at each occurrence is each independently an integer of 0 to 3;
$Z^{1'}$ at each occurrence is each independently an oxygen atom or a divalent organic group;
$R^{21'}$ at each occurrence is each independently $-Z^{1''}-SiR^{22''}{}_{q1''}R^{23''}{}_{r1''}$ ;
$R^{22'}$ at each occurrence is each independently a hydroxy group or a hydrolyzable group;
$R^{23'}$ at each occurrence is each independently a hydrogen atom or a monovalent organic group;
p1' at each occurrence is each independently an integer of 0 to 3;
q1' at each occurrence is each independently an integer of 0 to 3;
r1' at each occurrence is each independently an integer of 0 to 3;
$Z^{1''}$ at each occurrence is each independently an oxygen atom or a divalent organic group;
$R^{22''}$ at each occurrence is each independently a hydroxy group or a hydrolyzable group;
$R^{23''}$ at each occurrence is each independently a hydrogen atom or a monovalent organic group;
q1" at each occurrence is each independently an integer of 0 to 3;
r1" at each occurrence is each independently an integer of 0 to 3;
$R^{b1}$ at each occurrence is each independently a hydroxy group or a hydrolyzable group;
$R^{c1}$ at each occurrence is each independently a hydrogen atom or a monovalent organic group;
k1 at each occurrence is each independently an integer of 0 to 3;
11 at each occurrence is each independently an integer of 0 to 3; and
m1 at each occurrence is each independently an integer of 0 to 3;
$X^A$ is each independently a single bond or a divalent to decavalent organic group;
$\alpha$ is an integer of 1 to 9;
$\beta$ is an integer of 1 to 9; and
$\gamma$ is each independently an integer of 1 to 9.

[2] The electrode according to [1], wherein $Rf^1$ at each occurrence is each independently a $C_{1-16}$ perfluoroalkyl group, and
$Rf^2$ at each occurrence is each independently a $C_{1-6}$ perfluoroalkylene group.
[3] The electrode according to [1] or [2], wherein $R^F$ at each occurrence is each independently a group represented by the formula:

$$-(OC_6F_{12})_a-(OC_5F_{10})_b-(OC_4F_8)_c-(OC_3R^{Fa}{}_6)_d-(OC_2F_4)_e-(OCF_2)_f-$$

wherein $R^{Fa}$ at each occurrence is each independently a hydrogen atom, a fluorine atom or a chlorine atom, a, b, c, d, e, and f are each independently an integer of 0 to 200, the sum of a, b, c, d, e, and f is 1 or more, and the occurrence order of the respective repeating units in parentheses with a, b, c, d, e, or f is optional in the formula.

[4] The electrode according to [3], wherein $R^{Fa}$ is a fluorine atom.
[5] The electrode according to any one of [1] to [4], wherein $R^F$ at each occurrence is each independently a group represented by the following formula (f1), (f2), (f3), (f4), or (f5):

$$-(OC_3F_6)_d- \qquad (f1)$$

wherein d is an integer of 1 to 200;

$$-(OC_4F_8)_c-(OC_3F_6)_d-(OC_2F_4)_e-(OCF_2)_f- \qquad (f2)$$

wherein c and d are each independently an integer of 1 to 30;
e and f are each independently an integer of 1 to 200;

the sum of c, d, e, and f is an integer of 10 to 200; and
the occurrence order of the respective repeating units in parentheses with the subscript c, d, e, or f is optional in the formula;

$$-(R^6-R^7)_g- \quad (f3)$$

wherein $R^6$ is $OCF_2$ or $OC_2F_4$;
$R^7$ is a group selected from $OC_2F_4$, $OC_3F_6$, $OC_4F_8$, $OC_5F_{10}$, and $OC_6F_{12}$, or a combination of 2 or 3 groups selected from these groups; and
g is an integer of 2 to 100;

$$-(OC_6F_{12})_a-(OC_5F_{10})_b-(OC_4F_8)_c-(OC_3F_6)_d-(OC_2F_4)_e-(OCF_2)_f- \quad (f4)$$

wherein e is an integer of 1 or more and 200 or less,
a, b, c, d, and f are each independently an integer of 0 or more and 200 or less, and
the occurrence order of the respective repeating units in parentheses with a, b, c, d, e, or f is optional in the formula;

$$-(OC_6F_{12})_a-(OC_5F_{10})_b-(OC_4F_8)_c-(OC_3F_6)_d-(OC_2F_4)_e-(OCF_2)_f- \quad (f5)$$

wherein f is an integer of 1 or more and 200 or less a, b, c, d, and e are each independently an integer of 0 or more and 200 or less, and
the occurrence order of the respective repeating units in parentheses with a, b, c, d, e, or f is optional in the formula.

[6] The electrode according to any one of [1] to [5], wherein

$R^F$ is a group represented by the following formula (f1') :

$$-(OCF(CF_3)CF_2)_d- \quad (f1')$$

wherein d is an integer of 1 to 200.

[7] The electrode according to any one of [1] to [5], wherein

$R^F$ is a group represented by the following formula (f2'):

$$-(OCF_2CF_2CF_2CF_2)_c-(OCF_2CF_2CF_2)_d-(OCF_2CF_2)_e-(OCF_2)_f- \quad (f2')$$

wherein c and d are each independently an integer of 0 to 30;
e and f are each independently an integer of 1 to 200;
the sum of c, d, e, and f is an integer of 10 to 200; and
the occurrence order of the respective repeating units in parentheses with the subscript c, d, e, or f is optional in the formula.

[8] The electrode according to any one of [1] to [7], wherein $\alpha$, $\beta$, and $\gamma$ each are 1.
[9] The electrode according to any one of [1] to [8], wherein k1 is 3, l1 and m1 each are 0, p1 and r1 each are 0, and q1 is 1.
[10] The electrode according to any one of [1] to [9], wherein the fluoropolyether group-containing compound comprises two or more fluoropolyether group-containing compounds.
[11] The electrode according to any one of [1] to [9], wherein the fluoropolyether group-containing compound is a fluoropolyether group-containing compound represented by the formula (1).
[12] The electrode according to any one of [1] to [9], wherein the fluoropolyether group-containing compound is a fluoropolyether group-containing compound represented by the formula (2).
[13] The electrode according to any one of [1] to [10], wherein the fluoropolyether group-containing compound is a fluoropolyether group-containing compound represented by the formula (1) and a fluoropolyether group-containing compound represented by the formula (2).
[14] The electrode according to any one of [1] to [13], wherein a surface of the electrode is coated with the fluoropolyether group-containing compound.
[15] The electrode according to any one of [1] to [14], wherein an active material of the electrode is coated with the

fluoropolyether group-containing compound.

[16] The electrode according to any one of [1] to [15], further comprising one or more additional components selected from a fluorine-containing oil, a silicone oil, and a catalyst.

[17] The electrode according to any one of [1] to [16], comprising a fluorine-containing oil.

[18] An electrochemical device comprising the electrode according to any one of [1] to [17].

[19] The electrochemical device according to [18], being an alkali metal battery or an alkaline earth metal battery.

[20] The electrochemical device according to [9], being a lithium ion secondary battery.

[21] The electrochemical device according to [19] or [20], wherein a positive electrode of the battery is the electrode according to any one of [1] to [17].

[22] The electrochemical device according to [19] or [20], wherein a negative electrode of the battery is the electrode according to any one of [1] to [17].

[23] The electrochemical device according to [19] or [20], wherein a positive electrode and a negative electrode of the battery each are the electrode according to any one of [1] to [17] .

[24] A module comprising the electrochemical device according to any one of [18] to [23].

Advantageous Effect of Invention

According to the present disclosure, use of an electrode treated with a specific perfluoropolyether group-containing compound in an electrochemical device can improve the performance of the electrochemical device.

Description of Embodiment

<Electrode>

An electrode of the present disclosure (hereinafter, the term "electrode" will be used to include both a positive electrode and a negative electrode) contains a fluoropolyether group-containing compound. The phrase "the electrode contains a fluoropolyether group-containing compound" include that the electrode has a layer formed from a composition containing the fluoropolyether group-containing compound. For example, the electrode of the present disclosure may be constituted by an electrode material (hereinafter, the term "electrode material" will be used to include both a positive electrode material and a negative electrode material) and a coating layer of a fluoropolyether group-containing compound formed on the surface thereof, or may be constituted by an electrode material containing an active material having a coating layer of a fluoropolyether group-containing compound formed on the surface thereof.

• Fluoropolyether group-containing compound

As described above, the electrode of the present disclosure contains a perfluoropolyether group-containing compound.

The above fluoropolyether group-containing compound is a fluoropolyether group-containing compound represented by the following formula (1) or (2):

$$\mathbf{R^{F1}}_{\alpha}\text{-}\mathbf{X^{A}}\text{-}\mathbf{R^{Si}}_{\beta} \qquad \mathbf{(1)}$$

$$\mathbf{R^{Si}}_{\gamma}\text{-}\mathbf{X^{A}}\text{-}\mathbf{R^{F2}}\text{-}\mathbf{X^{A}}\text{-}\mathbf{R^{Si}}_{\gamma} \qquad \mathbf{(2)}$$

wherein:

$R^{F1}$ at each occurrence is each independently $Rf^1\text{-}R^F\text{-}O_q\text{-}$;
$R^{F2}$ is $\text{-}Rf^2_p\text{-}R^F\text{-}O_q\text{-}$;
$Rf^1$ at each occurrence is each independently a $C_{1-16}$ alkyl group optionally substituted with one or more fluorine atoms;
$Rf^2$ is a $C_{1-6}$ alkylene group optionally substituted with one or more fluorine atoms;
$R^F$ at each occurrence is each independently a divalent fluoropolyether group;
p is 0 or 1;
q at each occurrence is each independently 0 or 1;
$R^{Si}$ at each occurrence is each independently a group represented by the formula (S):

$$\mathbf{\text{-}\,SiR^{a1}_{k1}R^{b1}_{l1}R^{c1}_{m1}} \qquad \mathbf{(S)}$$

wherein:

$R^{a1}$ at each occurrence is each independently $-Z^1-SiR^{21}_{p1}R^{22}_{q1}R^{23}_{r1}$;
$Z^1$ at each occurrence is each independently an oxygen atom or a divalent organic group;
$R^{21}$ at each occurrence is each independently $-Z^{1'}-SiR^{21'}_{p1'}R^{22'}_{q1'}R^{23'}_{r1'}$;
$R^{22}$ at each occurrence is each independently a hydroxy group or a hydrolyzable group;
$R^{23}$ at each occurrence is each independently a hydrogen atom or a monovalent organic group;
p1 at each occurrence is each independently an integer of 0 to 3;
q1 at each occurrence is each independently an integer of 0 to 3;
r1 at each occurrence is each independently an integer of 0 to 3;
$Z^{1'}$ at each occurrence is each independently an oxygen atom or a divalent organic group;
$R^{21'}$ at each occurrence is each independently $-Z^{1''}-SiR^{22''}_{q1''}R^{23''}_{r1''}$ ;
$R^{22'}$ at each occurrence is each independently a hydroxy group or a hydrolyzable group;
$R^{23'}$ at each occurrence is each independently a hydrogen atom or a monovalent organic group;
p1' at each occurrence is each independently an integer of 0 to 3;
q1' at each occurrence is each independently an integer of 0 to 3;
r1' at each occurrence is each independently an integer of 0 to 3;
$Z^{1''}$ at each occurrence is each independently an oxygen atom or a divalent organic group;
$R^{22''}$ at each occurrence is each independently a hydroxy group or a hydrolyzable group;
$R^{23''}$ at each occurrence is each independently a hydrogen atom or a monovalent organic group;
q1" at each occurrence is each independently an integer of 0 to 3;
r1" at each occurrence is each independently an integer of 0 to 3;
$R^{b1}$ at each occurrence is each independently a hydroxy group or a hydrolyzable group;
$R^{c1}$ at each occurrence is each independently a hydrogen atom or a monovalent organic group;
k1 at each occurrence is each independently an integer of 0 to 3;
11 at each occurrence is each independently an integer of 0 to 3; and
m1 at each occurrence is each independently an integer of 0 to 3;
$X^A$ is each independently a single bond or a divalent to decavalent organic group;
$\alpha$ is an integer of 1 to 9;
$\beta$ is an integer of 1 to 9; and
$\gamma$ is each independently an integer of 1 to 9.

The electrode of the present disclosure, which contains the fluoropolyether group-containing compound having a group represented by the above formula (S), can provide an electrochemical device having excellent characteristics, specifically, being excellent in resistance increase rate, remaining capacity retention, gas increase rate, and cycle capacity retention. In other words, the electrode of the present disclosure, which contains the fluoropolyether group-containing compound having a group represented by the above formula (S), can provide an electrochemical device combining a longer service life and lower resistance.

Here, in the present disclosure, the electrode containing the fluoropolyether group-containing compound include, in addition to an embodiment in which the fluoropolyether group-containing compound is contained as it is, an embodiment in which the fluoropolyether group-containing compounds condensed with each other are contained or in which the fluoropolyether group-containing compound bonded to the electrode material (or the active material) is contained. For example, the electrode containing the fluoropolyether group-containing compound includes an electrode having a coating layer formed by treating the surface of the electrode material or the active material with the fluoropolyether group-containing compound.

In the formula (1), $R^{F1}$ at each occurrence is each independently $Rf^1-R^F-O_q-$.

In the formula (2), $R^{F2}$ is $-Rf^2_p-R^F-O_q-$.

In the above formula, $Rf^1$ at each occurrence is each independently a $C_{1-16}$ alkyl group optionally substituted with one or more fluorine atoms.

The "$C_{1-16}$ alkyl group" in the above "$C_{1-16}$ alkyl group optionally substituted with one or more fluorine atoms" may be linear or branched, and is preferably a linear or branched $C_{1-6}$ alkyl group, particularly a linear or branched $C_{1-3}$ alkyl group, more preferably a linear $C_{1-6}$ alkyl group, especially a linear $C_{1-3}$ alkyl group.

$Rf^1$ is preferably a $C_{1-16}$ alkyl group substituted with one or more fluorine atoms, more preferably a $CF_2H-C_{1-15}$ perfluoroalkylene group, further preferably a $C_{1-16}$ perfluoroalkyl group.

The $C_{1-16}$ perfluoroalkyl group may be linear or branched, and is preferably a linear or branched $C_{1-6}$ perfluoroalkyl group, particularly a linear or branched $C_{1-3}$ perfluoroalkyl group, more preferably a linear $C_{1-6}$ perfluoroalkyl group, particularly a linear $C_{1-3}$ perfluoroalkyl group, specifically $-CF_3$, $-CF_2CF_3$, or $-CF_2CF_2CF_3$.

In the above formula, $Rf^2$ is a $C_{1-6}$ alkylene group optionally substituted with one or more fluorine atoms.

The "$C_{1-6}$ alkylene group" in the above "$C_{1-6}$ alkylene group optionally substituted with one or more fluorine atoms" may be linear or branched, and is preferably a linear or branched $C_{1-3}$ alkylene group, more preferably a linear $C_{1-3}$ alkylene group.

$Rf^2$ is preferably a $C_{1-6}$ alkylene group substituted with one or more fluorine atoms, more preferably a $C_{1-6}$ perfluoroalkylene group, further preferably a $C_{1-3}$ perfluoroalkylene group.

The $C_{1-6}$ perfluoroalkylene group may be linear or branched, and is preferably a linear or branched $C_{1-3}$ perfluoroalkylene group, more preferably a linear $C_{1-3}$ perfluoroalkyl group, specifically $-CF_2-$, $-CF_2CF_2-$, or $-CF_2CF_2CF_2-$.

In the above formula, p is 0 or 1. In one embodiment, p is 0. In another embodiment, p is 1.

In the above formula, q at each occurrence is each independently 0 or 1. In one embodiment, q is 0. In another embodiment, q is 1.

In the above formulas (1) and (2), $R^F$ at each occurrence is each independently a divalent fluoropolyether group.

$R^F$ is preferably a group represented by the formula:

$$-(OC_6F_{12})_a-(OC_5F_{10})_b-(OC_4F_8)_c-(OC_3R^{Fa}{}_6)_d-(OC_2F_4)_e-(OCF_2)_f-$$

wherein $R^{Fa}$ at each occurrence is each independently a hydrogen atom, a fluorine atom, or a chlorine atom,

a, b, c, d, e, and f are each independently an integer of 0 to 200, the sum of a, b, c, d, e, and f is 1 or more, and the occurrence order of the respective repeating units in parentheses with a, b, c, d, e, or f is optional in the formula.

$R^{Fa}$ is preferably a hydrogen atom or a fluorine atom, more preferably a fluorine atom.

a, b, c, d, e and f may be preferably each independently an integer of 0 to 100, for example, an integer of 0 to 50, 0 to 30, 0 to 20, 1 to 50, 1 to 30, or 1 to 20.

The sum of a, b, c, d, e, and f is preferably 5 or more, more preferably 10 or more, and for example, may be 15 or more, 20 or more, or 30 or more. The sum of a, b, c, d, e, and f is preferably 200 or less, more preferably 100 or less, further preferably 60 or less, and for example, may be 50 or less or 30 or less.

These repeating units may be linear or branched. For example, among the repeating units, $-(OC_6F_{12})-$ may be $-(OCF_2CF_2CF_2CF_2CF_2CF_2)-$, $-(OCF(CF_3)CF_2CF_2CF_2CF_2)-$, $-(OCF_2CF(CF_3)CF_2CF_2CF_2)-$, $-(OCF_2CF_2CF(CF_3)CF_2CF_2)-$, $-(OCF_2CF_2CF_2CF(CF_3)CF_2)-$, $-(OCF_2CF_2CF_2CF_2CF(CF_3))-$, or the like. $-(OC_5F_{10})-$ may be $-(OCF_2CF_2CF_2CF_2CF_2)-$, $-(OCF(CF_3)CF_2CF_2CF_2)-$, $-(OCF_2CF(CF_3)CF_2CF_2)-$, $-(OCF_2CF_2CF(CF_3)CF_2)-$, $-(OCF_2CF_2CF_2CF(CF_3))-$, or the like. $-(OC_4F_8)-$ may be any of $-(OCF_2CF_2CF_2CF_2)-$, $-(OCF(CF_3)CF_2CF_2)-$, $-(OCF_2CF(CF_3)CF_2)-$, $-(OCF_2CF_2CF(CF_3))-$, $-(OC(CF_3)_2CF_2)-$, $-(OCF_2C(CF_3)_2)-$, $-(OCF(CF_3)CF(CF_3))-$, $-(OCF(C_2F_5)CF_2)$ and $-(OCF_2CF(C_2F_5))-$. $-(OC_3F_6)-$ (i.e., in the above formula, $R^{Fa}$ is a fluorine atom) may be any of $-(OCF_2CF_2CF_2)-$, $-(OCF(CF_3)CF_2)-$, and $-(OCF_2CF(CF_3))-$. $-(OC_2F_4)-$ may be either of $-(OCF_2CF_2)-$ and $-(OCF(CF_3))-$.

In one embodiment, the repeating unit is linear.

In one embodiment, the repeating unit is branched.

In one embodiment, $R^F$ at each occurrence is each independently is a group represented by any of the following formulas (f1) to (f5):

$$-(OC_3F_6)_d- \qquad (f1)$$

wherein d an integer of 1 to 200;

$$-(OC_4F_8)c-(OC_3F_6)_d-(OC_2F_4)_e-(OCF_2)_f- \qquad (f2)$$

wherein c and d are each independently an integer of 0 or more and 30 or less, e and f is each independently an integer of 1 or more and 200 or less,

the sum of c, d, e, and f is 2 or more, and

the occurrence order of the respective repeating units in parentheses with the subscript c, d, e, or f is optional in the formula;

$$-(R^6-R^7)_g- \qquad (f3)$$

wherein $R^6$ is $OCF_2$ or $OC_2F_4$,

$R^7$ is a group selected from $OC_2F_4$, $OC_3F_6$, $OC_4F_8$, $OC_5F_{10}$, and $OC_6F_{12}$, or a combination of 2 or 3 groups independently selected from these groups, and

g is an integer of 2 to 100;

$$-(OC_6F_{12})_a-(OC_5F_{10})_b-(OC_4F_8)_c-(OC_3F_6)_d-(OC_2F_4)_e-(OCF_2)_f- \quad (f4)$$

wherein e is an integer of 1 or more and 200 or less, a, b, c, d, and f are each independently an integer of 0 or more and 200 or less, the sum of a, b, c, d, e, and f is at least one, and the occurrence order of the respective repeating units in parentheses with a, b, c, d, e, or f is optional in the formula; and

$$-(OC_6F_{12})_a-(OC_5F_{10})_b-(OC_4F_8)_c-(OC_3F_6)_d-(OC_2F_4)_e-(OCF_2)_f- \quad (f5)$$

wherein f is an integer of 1 or more and 200 or less, a, b, c, d, and e are each independently an integer of 0 or more and 200 or less, the sum of a, b, c, d, e, and f is at least 1, and the occurrence order of the respective repeating units in parentheses with a, b, c, d, e or f is optional in the formula.

In the above formula (f1), d is preferably an integer of 5 to 200, more preferably 10 to 100, further preferably 15 to 50, for example, 25 to 35. The formula (f1) is preferably a group represented by $-(OCF_2CF_2CF_2)_d-$ or $-(OCF(CF_3)CF_2)_d-$. In one embodiment, the formula (f1) is a group represented by $-(OCF(CF_3)CF_2)_d-$. In another embodiment, the formula (f1) is a group represented by $-(OCF_2CF_2CF_2)_d-$.

In the above formula (f2), e and f are each independently, preferably an integer of 5 or more and 200 or less, more preferably 10 to 200, for example, an integer of 10 to 100, 10 to 80, or 20 to 60. The sum of c, d, e, and f is preferably 5 or more, more preferably 10 or more, and may be, for example, 15 or more or 20 or more. The sum of c, d, e, and f is preferably 200 or less, more preferably 100 or less, further preferably 60 or less, and may be, for example, 50 or less or 30 or less. In one embodiment, the formula (f2) is preferably a group represented by $-(OCF_2CF_2CF_2CF_2)_c-(OCF_2CF_2CF_2)_d-(OCF_2CF_2)_e-(OCF_2)_f-$. In another embodiment, the formula (f2) may be a group represented by $-(OC_2F_4)_e-(OCF_2)_f-$.

In the above formula (f3), $R^6$ is preferably $OC_2F_4$. In (f3) above, $R^7$ is preferably a group selected from $OC_2F_4$, $OC_3F_6$, and $OC_4F_8$, or a combination of 2 or 3 groups independently selected from these groups, more preferably a group selected from $OC_3F_6$ and $OC_4F_8$. The combination of 2 or 3 groups independently selected from $OC_2F_4$, $OC_3F_6$, and $OC_4F_8$ is not limited, and examples thereof include $-OC_2F_4OC_3F_6-$, $-OC_2F_4OC_4F_8-$, $-OC_3F_6OC_2F_4-$, $-OC_3F_6OC_3F_6-$, $-OC_3F_6OC_4F_8-$, $-OC_4F_8OC_4F_8-$, $-OC_4F_8OC_3F_6-$, $-OC_4F_8OC_2F_4-$, $-OC_2F_4OC_2F_4OC_3F_6-$, $-OC_2F_4OC_2F_4OC_4F_8-$, $-OC_2F_4OC_3F_6OC_2F_4-$, $-OC_2F_4OC_3F_6OC_3F_6-$, $-OC_2F_4OC_4F_8OC_2F_4-$, $-OC_3F_6OC_2F_4OC_2F_4-$, $-OC_3F_6OC_2F_4OC_3F_6-$, $-OC_3F_6OC_3F_6OC_2F_4-$, and $-OC_4F_8OC_2F_4OC_2F_4-$. In the formula (f3), g is preferably an integer of 3 or more, more preferably 5 or more, for example, an integer of 10 or more. g is preferably an integer of 50 or less, for example, an integer of 30 or less. In the formula (f3), $OC_2F_4$, $OC_3F_6$, $OC_4F_8$, $OC_5F_{10}$, and $OC_6F_{12}$ may be either linear or branched and are preferably linear. In this embodiment, the formula (f3) is preferably $-(OC_2F_4-OC_3F_6)_g-$ or $-(OC_2F_4-OC_4F_8)_g-$.

In the above formula (f4), e is preferably an integer of 1 or more and 100 or less, more preferably 5 or more and 100 or less. The sum of a, b, c, d, e, and f is preferably 5 or more, more preferably 10 or more, for example, 10 or more and 100 or less.

In the above formula (f5), f is preferably an integer of 1 or more and 100 or less, more preferably 5 or more and 100 or less. The sum of a, b, c, d, e, and f is preferably 5 or more, more preferably 10 or more, for example, 10 or more and 100 or less.

In one embodiment, $R^F$ is a group represented by the formula (f1).

In one embodiment, $R^F$ is a group represented by the formula (f2).

In one embodiment, $R^F$ is a group represented by the formula (f3).

In one embodiment, $R^F$ is a group represented by the formula (f4).

In one embodiment, $R^F$ is a group represented by the formula (f5).

In a preferred embodiment, $R^F$ is a group represented by the above formula (f1) in which $OC_3F_6$ is $OCF(CF_3)CF_2$.

In another preferred embodiment, $R^F$ is a group represented by the above formula (f1) in which $OC_3F_6$ is $OCF_2CF_2CF_2$.

In another preferred embodiment, $R^F$ is a group represented by the above formula (f2).

In $R^F$, the ratio of e to f (hereinafter, referred to as the "e/f ratio".) is 0.1 to 10, preferably 0.2 to 5, more preferably 0.2 to 2, further preferably 0.2 to 1.5, still more preferably 0.2 to 0.85. Setting the e/f ratio to 0.1 or more can further improve the stability of the compound. A larger e/f ratio allows the stability of the compound to be further improved.

In one embodiment, the e/f ratio is preferably 0.2 to 0.95, more preferably 0.2 to 0.9.

In one embodiment, from the viewpoint of heat resistance, the e/f ratio is preferably 1.0 or more, more preferably 1.0 to 2.0.

In the fluoropolyether group-containing compound, the number average molecular weight of the $R^{F1}$ and $R^{F2}$ moieties is not limited and, for example, is 500 to 30,000, preferably 1,500 to 30,000, more preferably 2,000 to 10,000. The number average molecular weight of $R^{F1}$ and $R^{F2}$ herein is a value determined by $^{19}F$-NMR.

In another embodiment, the number average molecular weight of the $R^{F1}$ and $R^{F2}$ moieties is 500 to 30,000, preferably 1,000 to 20,000, more preferably 2,000 to 15,000, still more preferably 2,000 to 10,000 and may be, for example, 3,000 to 6,000.

In another embodiment, the number average molecular weight of the $R^{F1}$ and $R^{F2}$ moieties may be 4,000 to 30,000, preferably 5,000 to 10,000, more preferably 6,000 to 10,000.

In the above formulas (1) and (2), $R^{Si}$ at each occurrence is each independently a group represented by

$$-SiR^{a1}_{k1}R^{b1}_{l1}R^{c1}_{m1} \qquad (S)$$

wherein:

$R^{a1}$ at each occurrence is each independently $-Z^1-SiR^{21}_{p1}R^{22}_{q1}R^{23}_{r1}$;
$Z^1$ at each occurrence is each independently an oxygen atom or a divalent organic group;
$R^{21}$ at each occurrence is each independently $-Z^{1'}-SiR^{21'}_{p1'}R^{22'}_{q1'}R^{23'}_{r1'}$ ;
$R^{22}$ at each occurrence is each independently a hydroxy group or a hydrolyzable group;
$R^{23}$ at each occurrence is each independently a hydrogen atom or a monovalent organic group;
p1 at each occurrence is each independently an integer of 0 to 3;
q1 at each occurrence is each independently an integer of 0 to 3;
r1 at each occurrence is each independently an integer of 0 to 3;
$Z^{1'}$ at each occurrence is each independently an oxygen atom or a divalent organic group;
$R^{21'}$ at each occurrence is each independently $-Z^{1''}-SiR^{22''}_{q1''}R^{23''}_{r1''}$ ;
$R^{22'}$ at each occurrence is each independently a hydroxy group or a hydrolyzable group;
$R^{23'}$ at each occurrence is each independently a hydrogen atom or a monovalent organic group;
p1' at each occurrence is each independently an integer of 0 to 3;
q1' at each occurrence is each independently an integer of 0 to 3;
r1' at each occurrence is each independently an integer of 0 to 3;
$Z^{1''}$ at each occurrence is each independently an oxygen atom or a divalent organic group;
$R^{22''}$ at each occurrence is each independently a hydroxy group or a hydrolyzable group;
$R^{23''}$ at each occurrence is each independently a hydrogen atom or a monovalent organic group;
q1" at each occurrence is each independently an integer of 0 to 3;
r1" at each occurrence is each independently an integer of 0 to 3;
$R^{b1}$ at each occurrence is each independently a hydroxy group or a hydrolyzable group;
$R^{c1}$ at each occurrence is each independently a hydrogen atom or a monovalent organic group;
k1 at each occurrence is each independently an integer of 0 to 3;
11 at each occurrence is each independently an integer of 0 to 3; and
m1 at each occurrence is each independently an integer of 0 to 3.

In the above formula, $R^{a1}$ at each occurrence is each independently $-Z^1-SiR^{21}_{p1}R^{22}_{q1}R^{23}_{r1}$.

$Z^1$ at each occurrence is each independently an oxygen atom or a divalent organic group. A structure denoted by $Z^1$ hereinafter is bonded on the right side to $(SiR^{21}_{p1}R^{22}_{q1}R^{23}_{r1})$ .

In a preferred embodiment, $Z^1$ is a divalent organic group.

In a preferred embodiment, $Z^1$ does not include a group which forms a siloxane bond together with the Si atom to which $Z^1$ is bonded. Preferably, in the formula (S), $Si-Z^1-Si$ does not include a siloxane bond.

$Z^1$ is preferably a $C_{1-6}$ alkylene group, $-(CH_2)_{z1}-O-(CH_2)_{z2}-$, wherein z1 is an integer of 0 to 6, for example, an integer of 1 to 6, and z2 is an integer of 0 to 6, for example, an integer of 1 to 6, or $-(CH_2)_{z3}$-phenylene-$(CH_2)_{z4}-$, wherein z3 is an integer of 0 to 6, for example, an integer of 1 to 6, and z4 is an integer of 0 to 6, for example, an integer of 1 to 6. The $C_{1-6}$ alkylene group may be linear or branched and is preferably linear. These groups are optionally substituted with one or more substituents selected from, for example, a fluorine atom, a $C_{1-6}$ alkyl group, a $C_{2-6}$ alkenyl group, and a $C_{2-6}$ alkynyl group, and are preferably unsubstituted.

In one embodiment, $Z^1$ is a $C_{1-6}$ alkylene group or $-(CH_2)_{z3}$-phenylene-$(CH_2)_{z4}-$, preferably -phenylene-$(CH_2)_{z4}-$.

In another embodiment, $Z^1$ is a $C_{1-3}$ alkylene group. In one embodiment, $Z^1$ may be $-CH_2CH_2CH_2-$. In another embodiment, $Z^1$ may be $-CH_2CH_2-$.

$R^{21}$ at each occurrence is each independently $-Z^{1'}-SiR^{21'}_{p1'}R^{22'}_{q1'}R^{23'}_{r1'}$ .

$Z^{1'}$ at each occurrence is each independently an oxygen atom or a divalent organic group. A structure denoted by $Z^{1'}$ hereinafter is bonded on the right side to $SiR^{21'}_{p1'}R^{22'}_{q1'}R^{23'}_{r1'}$.

In a preferred embodiment, $Z^{1'}$ is a divalent organic group.

In a preferred embodiment, $Z^{1'}$ does not include a group which forms a siloxane bond together with the Si atom to which $Z^{1'}$ is bonded. Preferably, in the formula (S), $Si-Z^{1'}-Si$ does not include a siloxane bond.

$Z^{1'}$ is preferably a $C_{1-6}$ alkylene group, $-(CH_2)_{z1'}O-(CH_2)_{z2'}-$, wherein z1' is an integer of 0 to 6, for example, an integer of 1 to 6, and z2' is an integer of 0 to 6, for example, an integer of 1 to 6, or - $(CH_2)_{z3'}$-phenylene- $(CH_2)_{z4'}$-, wherein z3' is an integer of 0 to 6, for example, an integer of 1 to 6, and z4' is an integer of 0 to 6, for example, an integer of 1 to 6. The $C_{1-6}$ alkylene group may be linear or branched and is preferably linear. These groups are optionally substituted with one or more substituents selected from, for example, a fluorine atom, a $C_{1-6}$ alkyl group, a $C_{2-6}$ alkenyl group, and a $C_{2-6}$ alkynyl group, and are preferably unsubstituted.

In one embodiment, $Z^{1'}$ is a $C_{1-6}$ alkylene group or - $(CH_2)_{z3'}$-phenylene- $(CH_2)_{z4'}$-, preferably -phenylene-$(CH_2)_{z4'}$-.

In another embodiment, $Z^{1'}$ is a $C_{1-3}$ alkylene group. In one embodiment, $Z^{1'}$ may be-$CH_2CH_2CH_2$-. In another embodiment, $Z^{1'}$ may be -$CH_2CH_2$-.

$R^{21'}$ at each occurrence is each independently $-Z^{1''}-SiR^{22''}_{q1''}R^{23''}_{r1''}$ .

$Z^{1''}$ at each occurrence is each independently an oxygen atom or a divalent organic group. A structure denoted by $Z^{1''}$ hereinafter is bonded on the right side to $(SiR^{22''}_{q1''}R^{23''}_{r1''})$ .

In a preferred embodiment, $Z^{1''}$ is a divalent organic group.

In a preferred embodiment, $Z^{1''}$ does not include a group which forms a siloxane bond together with the Si atom to which $Z^{1''}$ is bonded. Preferably, in the formula (S), $(Si-Z^{1''}-Si)$ does not include a siloxane bond.

$Z^{1''}$ is preferably a $C_{1-6}$ alkylene group, $-(CH_2)_{z1''}-O-(CH_2)_{z2''}-$, wherein z1" is an integer of 0 to 6, for example, an integer of 1 to 6, and z2" is an integer of 0 to 6, for example, an integer of 1 to 6, or - $(CH_2)_{z3''}$-phenylene- $(CH_2)_{z4''}$-, wherein z3" is an integer of 0 to 6, for example, an integer of 1 to 6, and z4" is an integer of 0 to 6, for example, an integer of 1 to 6. The $C_{1-6}$ alkylene group may be linear or branched and is preferably linear. These groups are optionally substituted with one or more substituents selected from, for example, a fluorine atom, a $C_{1-6}$ alkyl group, a $C_{2-6}$ alkenyl group, and a $C_{2-6}$ alkynyl group, and are preferably unsubstituted.

In one embodiment, $Z^{1''}$ is a $C_{1-6}$ alkylene group or - $(CH_2)_{z3''}$-phenylene- $(CH_2)_{z4''}$-, preferably -phenylene-$(CH_2)_{z4''}$- .

In another embodiment, $Z^{1''}$ is a $C_{1-3}$ alkylene group. In one embodiment, $Z^{1''}$ may be -$CH_2CH_2CH_2$-. In another embodiment, $Z^{1''}$ may be -$CH_2CH_2$-.

$R^{22''}$ at each occurrence is each independently a hydroxy group or a hydrolyzable group.

Here, the term "hydrolyzable group" means a group that may be subjected to hydrolysis reaction, that is, a group that may be removed from the main backbone of a compound by hydrolysis reaction. Examples of the hydrolyzable group include $-OR^h$, $-OCOR^h$, $-O-N=CR^h_2$, $-NR^h_2$, $-NHR^h$, and a halogen, wherein $R^h$ represents a substituted or unsubstituted $C_{1-4}$ alkyl group.

$R^{22''}$ is preferably each independently at each occurrence a hydrolyzable group.

$R^{22''}$ is preferably each independently at each occurrence $-OR^h$, $-OCOR^h$, $-O-N=CR^h_2$, $-NR^h_2$, $-NHR^h$, or a halogen, wherein $R^h$ represents a substituted or unsubstituted $C_{1-4}$ alkyl group, more preferably $-OR^h$, that is, an alkoxy group. Examples of $R^h$ include an unsubstituted alkyl group such as a methyl group, an ethyl group, a propyl group, an isopropyl group, a n-butyl group, and an isobutyl group; and a substituted alkyl group such as a chloromethyl group. Among these, an alkyl group, particularly an unsubstituted alkyl group is preferred, and a methyl group or an ethyl group is more preferred. In one embodiment, $R^h$ is a methyl group, and in another embodiment, $R^h$ is an ethyl group.

$R^{23''}$ at each occurrence is each independently a hydrogen atom or a monovalent organic group. The monovalent organic group is a monovalent organic group other than the above hydrolyzable group.

In $R^{23''}$, the monovalent organic group is preferably a $C_{1-20}$ alkyl group, more preferably a $C_{1-6}$ alkyl group, further preferably a methyl group.

q1" at each occurrence is each independently an integer of 0 to 3, and r1" at each occurrence is each independently an integer of 0 to 3. The sum of q1" and r1" is 3 in the $(SiR^{22''}_{q1''}R^{23''}_{r1''})$ unit.

q1" is each independently, preferably an integer of 1 to 3, more preferably 2 to 3, further preferably 3, per $(SiR^{22''}_{q1''}R^{23''}_{r1''})$ unit.

$R^{22'}$ at each occurrence is each independently a hydroxy group or a hydrolyzable group.

$R^{22'}$ is preferably each independently at each occurrence a hydrolyzable group.

$R^{22'}$ is preferably each independently at each occurrence $-OR^h$, $-OCOR^h$, $-O-N=CR^h_2$, $-NR^h_2$, $-NHR^h$, or a halogen, wherein $R^h$ represents a substituted or unsubstituted $C_{1-4}$ alkyl group, more preferably $-OR^h$, that is, an alkoxy group. Examples of $R^h$ include an unsubstituted alkyl group such as a methyl group, an ethyl group, a propyl group, an isopropyl group, a n-butyl group, and an isobutyl group; and a substituted alkyl group such as a chloromethyl group. Among these, an alkyl group, particularly an unsubstituted alkyl group is preferred, and a methyl group or an ethyl group is more preferred. In one embodiment, $R^h$ is a methyl group, and in another embodiment, $R^h$ is an ethyl group.

$R^{23'}$ at each occurrence is each independently a hydrogen atom or a monovalent organic group. The monovalent organic group is a monovalent organic group other than the above hydrolyzable group.

In $R^{23'}$, the monovalent organic group is preferably a $C_{1-20}$ alkyl group, more preferably a $C_{1-6}$ alkyl group, further preferably a methyl group.

p1' at each occurrence is each independently an integer of 0 to 3, q1' at each occurrence is each independently an integer of 0 to 3, and r1' at each occurrence is each independently an integer of 0 to 3. The sum of p'1, q1', and r1' is 3 in the $(SiR^{21'}_{p1'}R^{22'}_{q1'}R^{23'}_{r1'})$ unit.

In one embodiment, p1' is 0.

In one embodiment, p1' may be each independently an integer of 1 to 3, an integer of 2 to 3, or 3, per $(SiR^{21'}_{p1'}R^{22'}_{q1'}R^{23'}_{r1'})$ unit. In a preferred embodiment, p1' is 3.

In one embodiment, q1' is each independently an integer of 1 to 3, preferably an integer of 2 to 3, more preferably 3, per $(SiR^{21'}_{p1'}R^{22'}_{q1'}R^{23'}_{r1'})$ unit.

In one embodiment, p1' is 0, and q1' is each independently an integer of 1 to 3, preferably an integer of 2 to 3, further preferably 3, per $(SiR^{21'}_{p1'}R^{22'}_{q1'}R^{23'}_{r1'})$ unit.

$R^{22}$ at each occurrence is each independently a hydroxy group or a hydrolyzable group.

$R^{22}$ is preferably each independently at each occurrence a hydrolyzable group.

$R^{22}$ is preferably each independently at each occurrence $-OR^h$, $-OCOR^h$, $-O-N=CR^h_2$, $-NR^h_2$, $-NHR^h$, or a halogen, wherein $R^h$ represents a substituted or unsubstituted $C_{1-4}$ alkyl group, more preferably $-OR^h$, that is, an alkoxy group. Examples of $R^h$ include an unsubstituted alkyl group such as a methyl group, an ethyl group, a propyl group, an isopropyl group, a n-butyl group, and an isobutyl group; and a substituted alkyl group such as a chloromethyl group. Among these, an alkyl group, particularly an unsubstituted alkyl group is preferred, and a methyl group or an ethyl group is more preferred. In one embodiment, $R^h$ is a methyl group, and in another embodiment, $R^h$ is an ethyl group.

$R^{23}$ at each occurrence is each independently a hydrogen atom or a monovalent organic group. The monovalent organic group is a monovalent organic group other than the above hydrolyzable group.

In $R^{23}$, the monovalent organic group is preferably a $C_{1-20}$ alkyl group, more preferably a $C_{1-6}$ alkyl group, further preferably a methyl group.

p1 at each occurrence is each independently an integer of 0 to 3, q1 at each occurrence is each independently an integer of 0 to 3, and r1 at each occurrence is each independently an integer of 0 to 3. The sum of p1, q1, and r1 is 3 in the $(SiR^{21}_{p1}R^{22}_{q1}R^{23}_{r1})$ unit.

In one embodiment, p1 is 0.

In one embodiment, p1 may be each independently an integer of 1 to 3, an integer of 2 to 3, or 3, per $(SiR^{21}_{p1}R^{22}_{q1}R^{23}_{r1})$ unit. In a preferred embodiment, p1 is 3.

In one embodiment, q1 is each independently an integer of 1 to 3, preferably an integer of 2 to 3, more preferably 3, per $(SiR^{21}_{p1}R^{22}_{q1}R^{23}_{r1})$ unit.

In one embodiment, p1 is 0, and q1 is each independently an integer of 1 to 3, preferably an integer of 2 to 3, further preferably 3, per $(SiR^{21}_{p1}R^{22}_{q1}R^{23}_{r1})$ unit.

In the above formula, $R^{b1}$ at each occurrence is each independently a hydroxy group or a hydrolyzable group.

$R^{b1}$ is preferably each independently at each occurrence a hydrolyzable group.

$R^{b1}$ is preferably each independently at each occurrence $-OR^h$, $-OCOR^h$, $-O-N=CR^h_2$, $-NR^h_2$, $-NHR^h$, or a halogen, wherein $R^h$ represents a substituted or unsubstituted $C_{1-4}$ alkyl group, more preferably $-OR^h$, that is, an alkoxy group. Examples of $R^h$ include an unsubstituted alkyl group such as a methyl group, an ethyl group, a propyl group, an isopropyl group, a n-butyl group, and an isobutyl group; and a substituted alkyl group such as a chloromethyl group. Among these, an alkyl group, particularly an unsubstituted alkyl group is preferred, and a methyl group or an ethyl group is more preferred. In one embodiment, $R^h$ is a methyl group, and in another embodiment, $R^h$ is an ethyl group.

In the above formula, $R^{c1}$ at each occurrence is each independently a hydrogen atom or a monovalent organic group. The monovalent organic group is a monovalent organic group other than the above hydrolyzable group.

In $R^{c1}$, the monovalent organic group is preferably a $C_{1-20}$ alkyl group, more preferably a $C_{1-6}$ alkyl group, further preferably a methyl group.

k1 at each occurrence is each independently an integer of 0 to 3, 11 at each occurrence is each independently an integer of 0 to 3, and m1 at each occurrence is each independently an integer of 0 to 3. The sum of k1, 11, and m1 is 3 in the $(SiR^{a1}_{k1}R^{b1}_{l1}R^{c1}_{m1})$ unit.

In one embodiment, k1 is each independently an integer of 1 to 3, preferably 2 or 3, more preferably 3, per $(SiR^{a1}_{k1}R^{b1}_{l1}R^{c1}_{m1})$ unit. In a preferred embodiment, k1 is 3.

When $R^{Si}$ is a group represented by the formula (S) in the above formulas (1) and (2), at least two Si atoms to which a hydroxy group or a hydrolyzable group is bonded are present preferably at the end portion of the formula (1) and the formula (2).

In a preferred embodiment, the group represented by the formula (S) has at least one of: $-Z^1-SiR^{22}_{q1}R^{23}_{r1}$, wherein q1 is an integer of 1 to 3, preferably 2 or 3, more preferably 3, and r1 is an integer of 0 to 2; $-Z^{1'}-SiR^{22'}_{q1'}R^{23'}_{r1'}$, wherein q1' is an integer of 1 to 3, preferably 2 or 3, more preferably 3, and r1' is an integer of 0 to 2; or $-Z^{1"}-SiR^{22"}_{q1"}R^{23"}_{r1"}$, wherein q1" is an integer of 1 to 3, preferably 2 or 3, more preferably 3, and r1" is an integer of 0 to 2.

In a preferred embodiment, when $R^{21'}$ is present in the formula (S), in at least one $R^{21'}$, preferably in all of $R^{21"}$s, q1" is an integer of 1 to 3, preferably 2 or 3, more preferably 3.

In a preferred embodiment, when $R^{21}$ is present in the formula (S), in at least one $R^{21}$, preferably in all of $R^{21}$'s, p1' is 0, and q1' is an integer of 1 to 3, preferably 2 or 3, more preferably 3.

In a preferred embodiment, when $R^{a1}$ is present in the formula (S), in at least one $R^{a1}$, preferably in all of $R^{a1}$'s, p1 is 0, and q1 is an integer of 1 to 3, preferably 2 or 3, more preferably 3.

In a preferred embodiment, in the formula (S), k1 is 2 or 3, preferably 3, p1 is 0, and q1 is 2 or 3, preferably 3.

In the above formulas (1) and (2), $X^A$ is interpreted as a linker that links the fluoropolyether moieties ($R^{F1}$ and $R^{F2}$) to the moiety that provides binding ability with the substrate ($R^{Si}$). Accordingly, $X^A$ may be a single bond or may be any group as long as the compound represented by the formulas (1) and (2) may be stably present.

In the above formula (1), $\alpha$ is an integer of 1 to 9, and $\beta$ is an integer of 1 to 9. These $\alpha$ and $\beta$ may vary in accordance with the valence of $X^A$. The sum of $\alpha$ and $\beta$ is equivalent to the valence of $X^A$. For example, when $X^A$ is a decavalent organic group, the sum of $\alpha$ and $\beta$ is 10. For example, $\alpha$ may be 9 and $\beta$ may be 1, $\alpha$ may be 5 and $\beta$ may be 5, or $\alpha$ may be 1 and $\beta$ may be 9. When $X^A$ is a divalent organic group, $\alpha$ and $\beta$ each are 1.

In the formula (2), $\gamma$ is an integer of 1 to 9. $\gamma$ may vary in accordance with the valence of $X^A$. That is, $\gamma$ is a value obtained by subtracting 1 from the valence of $X^A$.

$X^A$ is each independently a single bond or a divalent to decavalent organic group.

The divalent to decavalent organic group in $X^A$ is preferably a divalent to octavalent organic group. In one embodiment, the divalent to decavalent organic group is preferably a divalent to tetravalent organic group, more preferably a divalent organic group. In another embodiment, the divalent to decavalent organic group is preferably a trivalent to octavalent organic group, more preferably a trivalent to hexavalent organic group.

In one embodiment, $X^A$ is a single bond or a divalent organic group, $\alpha$ is 1, and $\beta$ is 1.

In one embodiment, $X^A$ is a single bond or a divalent organic group, and $\gamma$ is 1.

In one embodiment, $X^A$ is a trivalent to hexavalent organic group, $\alpha$ is 1, and $\beta$ is 2 to 5.

In one embodiment, $X^A$ is a trivalent to hexavalent organic group, and $\gamma$ is 2 to 5.

In one embodiment, $X^A$ is a trivalent organic group, $\alpha$ is 1, and $\beta$ is 2.

In one embodiment, $X^A$ is a trivalent organic group, and $\gamma$ is 2.

When $X^A$ is a single bond or a divalent organic group, the formulas (1) and (2) are represented by the following formulas (1') and (2'), respectively.

$$\mathbf{R^{F1}\text{-}X^A\text{-}R^{Si}} \qquad (1')$$

$$\mathbf{R^{Si}\text{-}X^A\text{-}R^{F2}\text{-}X^A\text{-}R^{Si}} \qquad (2')$$

In one embodiment, $X^A$ is a single bond.

In another embodiment, $X^A$ is a divalent organic group.

In one embodiment, examples of $X^A$ include a single bond or a divalent organic group represented by the following formula:

$$-(R^{51})_{p5}-(X^{51})_{q5}-$$

wherein:

$R^{51}$ represents a single bond, $-(CH_2)_{s5}-$, or an o-, m-, or p-phenylene group, preferably $-(CH_2)_{s5}-$,
s5 is an integer of 1 to 20, preferably an integer of 1 to 6, more preferably an integer of 1 to 3, still more preferably 1 or 2,
$X^{51}$ represents $-(X^{52})_{l5}-$,
$X^{52}$ represents each independently at each occurrence a group selected from the group consisting of -O-, -S-, an o-, m-, or p-phenylene group, -C(O)O-, $-Si(R^{53})_2-$, $-(Si(R^{53})_2O)_{m5}-Si(R^{53})_2-$, $-CONR^{54}-$, $-O-CONR^{54}-$, $-NR^{54}-$, and $-(CH_2)_{n5}-$,
$R^{53}$ represents each independently at each occurrence a phenyl group, a $C_{1-6}$ alkyl group, or a $C_{1-6}$ alkoxy group, preferably a phenyl group or a $C_{1-6}$ alkyl group, more preferably a methyl group,
$R^{54}$ represents each independently at each occurrence a hydrogen atom, a phenyl group, or a $C_{1-6}$ alkyl group (preferably a methyl group),
m5 is at each occurrence each independently an integer of 1 to 100, preferably an integer of 1 to 20,
n5 is at each occurrence each independently, an integer of 1 to 20, preferably an integer of 1 to 6, more preferably an integer of 1 to 3,
15 is an integer of 1 to 10, preferably an integer of 1 to 5, more preferably an integer of 1 to 3,
p5 is 0 or 1,
q5 is 0 or 1,
wherein, at least one of p5 and q5 is 1, and the occurrence order of the respective repeating units in parentheses

with p5 or q5 is optional. Here, $R^A$ (typically a hydrogen atom of $R^A$) is optionally substituted with one or more substituents selected from a fluorine atom, a $C_{1-3}$ alkyl group, and a $C_{1-3}$ fluoroalkyl group. In a preferred embodiment, $R^A$ is not substituted with any of these groups.

In a preferred embodiment, $X^A$ is each independently - $(R^{51})_{p5}$- $(X^{51})_{q5}$-$R^{56}$-. $R^{56}$ represents a single bond, -$(CH_2)_{t5}$-, or an o-, m-, or p-phenylene group and is preferably -$(CH_2)_{t5}$-. t5 is an integer of 1 to 20, preferably an integer of 2 to 6, more preferably an integer of 2 to 3. Here, $R^{56}$ (typically a hydrogen atom of $R^{56}$) is optionally substituted with one or more substituents selected from a fluorine atom, a $C_{1-3}$ alkyl group, and a $C_{1-3}$ fluoroalkyl group. In a preferred embodiment, $R^{56}$ is not substituted with any of these groups.

Preferably, $X^A$ may be each independently

a single bond,
a $C_{1-20}$ alkylene group,
-$R^{51}$-$X^{53}$-$R^{52}$-, or
-$X^{54}$-$R^5$-
wherein $R^{51}$ and $R^{52}$ are as defined above,
$X^{53}$ represents
-O-,
-S-,
-C(O)O-,
-$CONR^{54}$-,
-O-$CONR^{54}$-,
-$Si(R^{53})_2$-,
- $(Si (R^{53})_2O)_{m5}$-$Si(R^{53})_2$-
-O-$(CH_2)_{u5}$-$(Si(R^{53})_2O)_{m5}$-$Si(R^{53})_2$-
-O-$(CH_2)_{u5}$-$Si(R^{53})_2$-O-$Si(R^{53})_2$-$CH_2CH_2$-$Si(R^{53})_2$-O-$Si(R^{53})_2$-
-O-$(CH_2)_{u5}$-$SiOCH_3)_2OSiOCH_3)_2$-,
-$CONR^{54}$-$(CH_2)_{u5}$-$(Si(R^{53})_2O)_{m5}$-$Si(R^{53})_2$-,
-$CONR^{54}$-$(CH_2)_{u5}$-$N(R^{54})$-, or
-$CONR^{54}$-(o-, m-, or p-phenylene)-$Si(R^{53})_2$-,
wherein $R^{53}$, $R^{54}$, and m5 are as defined above, and
u5 is an integer of 1 to 20, preferably an integer of 2 to 6, more preferably an integer of 2 to 3, and
$X^{54}$ represents
-S-,
-C(O)O-,
-$CONR^{54}$-,
-O-$CONR^{54}$-,
-$CONR^{54}$-$(CH_2)_{u5}$-$(Si(R^{14})_2O)_{m5}$-$Si(R^{54})_2$-,
-$CONR^{54}$-$(CH_2)_{u5}$-$N(R^{14})$-, or
-$CONR^{54}$-(o-, m-, or p-phenylene) -Si $(R^{54})_2$-,
wherein each symbol is as defined above.

More preferably, $X^A$ is each independently

a single bond,
a $C_{1-20}$ alkylene group,
-$(CH_2)_{s5}$-$X^{53}$-,
-$(CH_2)_{s5}$-$X^{53}$-$(CH_2)_{t5}$-,
-$X^{54}$-, or
-$X^{54}$-$(CH_2)_{t5}$-,
wherein $X^{53}$, $X^{54}$, s5, and t5 are as defined above.

More preferably, $X^A$ may be each independently

a single bond,
a $C_{1-20}$ alkylene group,
-$(CH_2)_{s5}$-$X^{53}$-$(CH_2)_{t5}$-, or
-$X^{54}$-$(CH_2)_{t5}$-,

wherein each symbol is as defined above.

In a preferred embodiment, $X^A$ may be each independently

a single bond,
a $C_{1-20}$ alkylene group,
$-(CH_2)_{s5}-X^{53}-$, or
$-(CH_2)_{s5}-X^{53}-(CH_2)_{t5}-$,
wherein
$X^{53}$ is -O-, $-CONR^{54}-$, or $-O-CONR^{54}-$,
$R^{54}$ represents each independently at each occurrence a hydrogen atom, a phenyl group, or a $C_{1-6}$ alkyl group,
s5 is an integer of 1 to 20, and
t5 is an integer of 1 to 20.

In one embodiment, $X^A$ is each independently,

a single bond,
a $C_{1-20}$ alkylene group,
$-(CH_2)_{s5}-O-(CH_2)_{t5}-$,
$-(CH_2)_{s5}-(Si(R^{53})_2O)_{m5}-Si(R^{53})_2-(CH_2)_{t5}-$,
$-(CH_2)_{s5}-O-(CH_2)_{u5}-(Si(R^{53})_2O)_{m5}-Si(R^{53})_2-(CH_2)_{t5}-$, or
$-(CH_2)_{s5}-O-(CH_2)_{t5}-Si(R^{53})_2-(CH_2)_{u5}-Si(R^{53})_2-(C_vH_{2v})-$,
wherein $R^{53}$, m5, s5, t5, and u5 are as defined above, and v5 is an integer of 1 to 20, preferably an integer of 2 to 6, more preferably an integer of 2 to 3.

In the above formula, $-(C_vH_{2v})-$ may be linear or branched, and may be, for example, $-CH_2CH_2-$, $-CH_2CH_2CH_2-$, $-CH(CH_3)-$, and $-CH(CH_3)CH_2-$.
$X^A$ may be each independently substituted with one or more substituents selected from a fluorine atom, a $C_{1-3}$ alkyl group, and a $C_{1-3}$fluoroalkyl group (preferably a $C_{1-3}$ perfluoroalkyl group). In one embodiment, $X^A$ is unsubstituted.
$X^A$, in each formula, is bonded on the left side to $R^{F1}$ or $R^{F2}$ and bonded on the right side to $R^{si}$.
In one embodiment, $X^A$ may be each independently other than a $-O-C_{1-6}$ alkylene group.
In another embodiment, examples of $X^A$ include groups below:

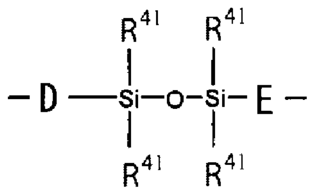

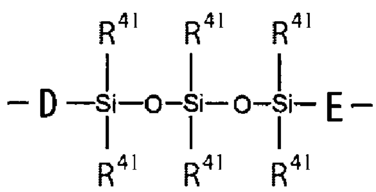

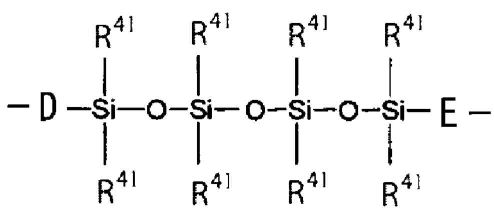

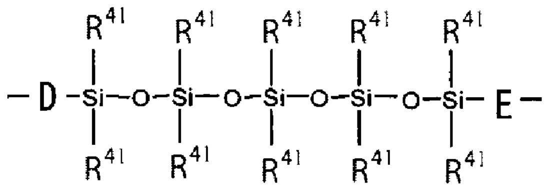

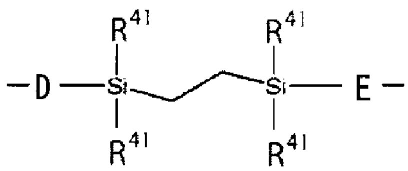

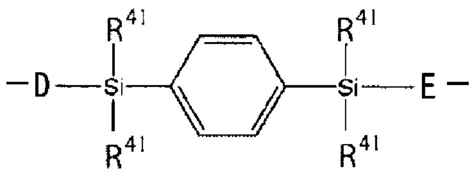

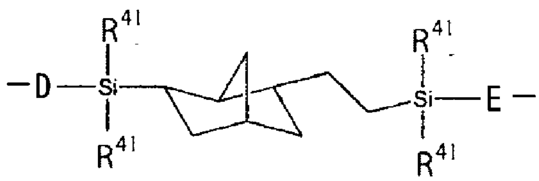

wherein $R^{41}$ is each independently a hydrogen atom, a phenyl group, an alkyl group having 1 to 6 carbon atoms, or a $C_{1-6}$ alkoxy group, preferably a methyl group;

D is a group selected from

$-CH_2O(CH_2)_2-$,

$-CH_2O(CH_2)_3-$,

$-CF_2O(CH_2)_3-$,

$-(CH_2)_2-$,

$-(CH_2)_3-$,

$-(CH_2)4-$,

$-CONH-(CH_2)_3-$

$-CON(CH_3)-(CH_2)_3-$

$-CON(Ph)-(CH_2)_3-$, wherein Ph means phenyl, and

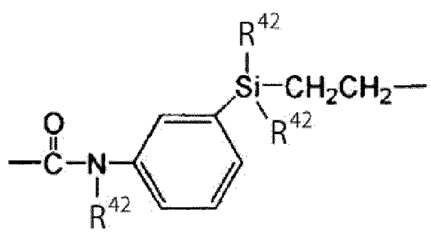

wherein $R^{42}$ represents each independently a hydrogen atom, a $C_{1-6}$ alkyl group, or a $C_{1-6}$ alkoxy group, preferably a methyl group or a methoxy group, more preferably a methyl group,

E is $-(CH_2)_n-$, wherein n is an integer of 2 to 6,

D is bonded to $R^{F1}$ or $R^{F2}$ in the molecular backbone, and E is bonded to $R^{si}$.

Specific examples of $X^A$ include:

a single bond,

$-CH_2OCH_2-$,
$-CH_2O(CH_2)_2-$,
$-CH_2O(CH_2)_3-$,
$-CH_2O(CH_2)_6-$,
$-CF_2-CH_2-O-CH_2-$,
$-CF_2-CH_2-O-(CH_2)_2-$,
$-CF_2-CH_2-O-(CH_2)_3-$,
$-CF_2-CH_2-O-(CH_2)_6-$,
$-CH_2O(CH_2)_3Si(CH_3)_2OSi(CH_3)_2(CH_2)_2-$,
$-CH_2O(CH_2)_3Si(CH_3)_2OSi(CH_3)_2OSi(CH_3)_2(CH_2)_2-$,
$-CH_2O(CH_2)_3Si(CH_3)_2O(Si(CH_3)_2O)_2Si(CH_3)_2(CH_2)_2-$,
$-CH_2O(CH_2)_3Si(CH_3)_2O(Si(CH_3)_2O)_3Si(CH_3)_2(CH_2)_2-$,
$-CH_2O(CH_2)_3Si(CH_3)_2O(Si(CH_3)_2O)_{10}Si(CH_3)_2(CH_2)_2-$,
$-CH_2O(CH_2)_3Si(CH_3)_2O(Si(CH_3)_2O)_2OSi(CH_3)_2(CH_2)_2-$,
$-CH_2OCF_2CHFOCF_2-$,
$-CH_2OCF_2CHFOCF_2CF_2-$,
$-CH_2OCF_2CHFOCF_2CF_2CF_2-$,
$-CH_2OCH_2CF_2CF_2OCF_2-$,
$-CH_2OCH_2CF_2CF_2OCF_2CF_2-$,
$-CH_2OCH_2CF_2CF_2OCF_2CF_2CF_2-$,
$-CH_2OCH_2CF_2CF_2OCF(CF_3)CF_2OCF_2-$,
$-CH_2OCH_2CF_2CF_2OCF(CF_3)CF_2OCF_2CF_2-$,
$-CH_2OCH_2CF_2CF_2OCF(CF_3)CF_2OCF_2CF_2CF_2-$,
$-CH_2OCH_2CHFCF_2OCF_2-$,
$-CH_2OCH_2CHFCF_2OCF_2CF_2-$,
$-CH_2OCH_2CHFCF_2OCF_2CF_2CF_2-$,
$-CH_2OCH_2CHFCF_2OCF(CF_3)CF_2OCF_2-$,
$-CH_2OCH_2CHFCF_2OCF(CF_3)CF_2OCF_2CF_2-$,
$-CH_2OCH_2CHFCF_2OCF(CF_3)CF_2OCF_2CF_2CF_2-$,
$-CH_2OCF_2CHFOCF_2CF_2CF_2-C(O)NH-CH_2-$,
$-CH_2OCH_2(CH_2)_7CH_2SiOCH_3)_2OSiOCH_3)_2(CH_2)_2SiOCH_3)_2OSiOCH_3)_2(CH_2)_2-$,
$-CH_2OCH_2CH_2CH_2SiOCH_3)_2OSiOCH_3)_2(CH_2)_3-$,
$-CH_2OCH_2CH_2CH_2Si(OCH_2CH_3)_2OSi(OCH_2CH_3)_2(CH_2)_3-$,
$-CH_2OCH_2CH_2CH_2SiOCH_3)_2OSiOCH_3)_2(CH_2)_2-$,
$-CH_2OCH_2CH_2CH_2Si(OCH_2CH_3)_2OSi(OCH_2CH_3)_2(CH_2)_2-$,
$-(CH_2)_2-Si(CH_3)_2-(CH_2)_2-$,
$-CH_2-$,
$-(CH_2)_2-$,
$-(CH_2)_3-$,
$-(CH_2)_4-$,
$-(CH_2)_5-$,
$-(CH_2)_6-$,
$-CF_2-CH_2-$,
$-CF_2-(CH_2)_2-$,
$-CF_2-(CH_2)_3-$,
$-CF_2-(CH_2)_4-$,
$-CF_2-(CH_2)_5-$,
$-CF_2-(CH_2)_6-$,
-CO-,
-CONH-,
$-CONH-CH_2-$,
$-CONH-(CH_2)_2-$,
$-CONH-(CH_2)_3-$,
$-CONH-(CH_2)_6-$,
$-CF_2CONHCH_2-$,
$-CF_2CONH(CH_2)_2-$,
$-CF_2CONH(CH_2)_3-$,
$-CF_2CONH(CH_2)_6-$,

$-CON(CH_3)-(CH_2)_3-$
$-CON(Ph)-(CH_2)_3-$, wherein Ph means phenyl,
$-CON(CH_3)-(CH_2)_6-$
$-CON(Ph)-(CH_2)_6-$, wherein Ph means phenyl,
$-CF_2-CON(CH_3)-(CH_2)_3-$,
$-CF_2-CON(Ph)-(CH_2)_3-$, wherein Ph means phenyl,
$-CF_2-CON(CH_3)-(CH_2)_6-$,
$-CF_2-CON(Ph)-(CH_2)_6-$, wherein Ph means phenyl,
$-CONH-(CH_2)_2NH(CH_2)_3-$,
$-CONH-(CH_2)_6NH(CH_2)_3-$,
$-CH_2O-CONH-(CH_2)_3-$,
$-CH_2O-CONH-(CH_2)_6-$,
$-S-(CH_2)_3-$,
$-(CH_2)_2S(CH_2)_3-$ ,
$-CONH- (CH_2)_3Si(CH_3)_2OSi(CH_3)_2(CH_2)_2-$,
$-CONH- (CH_2)_3Si(CH_3)_2OSi(CH_3)_2OSi(CH_3)_2(CH_2)_2-$,
$-CONH- (CH_2)_3Si(CH_3)_2O(Si(CH_3)_2O)_2Si(CH_3)_2(CH_2)_2-$,
$-CONH- (CH_2)_3Si(CH_3)_2O(Si(CH_3)_2O)_3Si(CH_3)_2(CH_2)_2-$,
$-CONH- (CH_2)_3Si(CH_3)_2O(Si(CH_3)_2O)_{10}Si(CH_3)_2(CH_2)_2-$,
$-CONH- (CH_2)_3Si(CH_3)_2O(Si(CH_3)_2O)_{20}Si(CH_3)_2(CH_2)_2-$,
$-C(O)O-(CH_2)_3-$,
$-C(O)O-(CH_2)_6-$,
$-CH_2-O-(CH_2)_3-Si(CH_3)_2-(CH_2)_2-Si(CH_3)_2-(CH_2)_2-$,
$-CH_2-O-(CH_2)_3-Si(CH_3)_2-(CH_2)_2-Si(CH_3)_2-CH(CH_3)-$,
$-CH_2-O-(CH_2)_3-Si(CH_3)_2-(CH_2)_2-Si(CH_3)_2-(CH_2)_3-$,
$-CH_2-O-(CH_2)_3-Si(CH_3)_2-(CH_2)_2-Si(CH_3)_2-CH(CH_3)-CH_2-$,
$-OCH_2-$,
$-O(CH_2)_3-$,
$-OCFHCF_2-$,

[Formula 9]

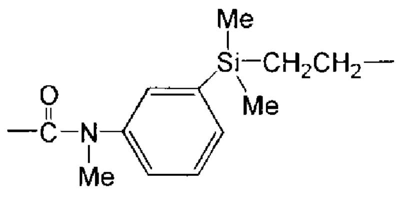

,

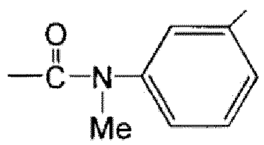

.

In further another embodiment, examples of $X^A$ include groups below:

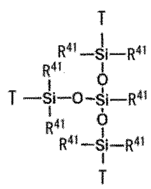

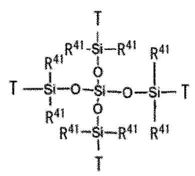

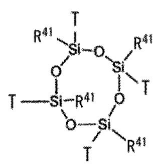

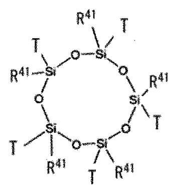

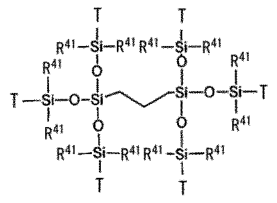

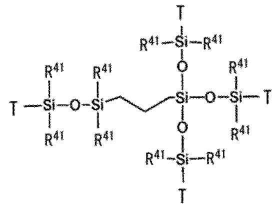

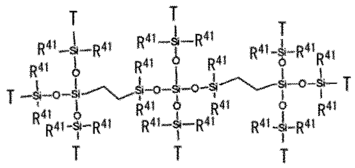

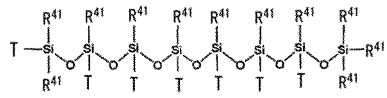

wherein

$R^{41}$ is each independently a hydrogen atom, a phenyl group, an alkyl group having 1 to 6 carbon atoms, or a $C_{1-6}$ alkoxy group, preferably a methyl group;
in each $X^{101}$ group, any of T's each are a group below, which is to be bonded to $R^{F1}$ or $R^{F2}$ in the molecular backbone:
$-CH_2O(CH_2)_2-$,
$-CH_2O(CH_2)_3-$,
$-CF_2O(CH_2)_3-$,
$-(CH_2)_2-$,
$-(CH_2)_3-$,
$-(CH_2)_4-$,
$-CONH-(CH_2)_3-$,
$-CON(CH_3)-(CH_2)_3-$
$-CON(Ph)-(CH_2)_3-$, wherein Ph means phenyl, or

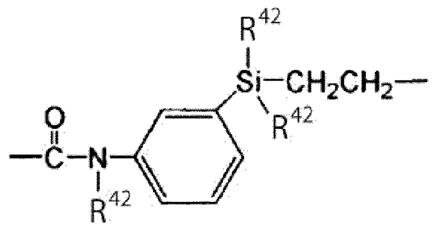

wherein $R^{42}$ represents each independently a hydrogen atom, a $C_{1-6}$ alkyl group, or a $C_{1-6}$ alkoxy group, preferably a methyl group or a methoxy group, more preferably a methyl group, and
any of other T's are each bonded to $R^{si}$ in the molecular backbone, and the other T's, if present, are each independently a methyl group, a phenyl group, a $C_{1-6}$ alkoxy group, or a radical capturing group or a UV absorbing group.

The radical capturing group is not limited as long as the group can capture a radical generated by light irradiation, and examples thereof include a residue of benzophenones, benzotriazoles, benzoic esters, phenyl salicylates, crotonic acids, malonic esters, organoacrylates, hindered amines, hindered phenols, or triazines.

The UV absorbing group is not limited as long as the group can absorb an ultraviolet ray, and examples thereof include a residue of benzotriazoles, hydroxybenzophenones, esters of substituted or unsubstituted benzoic acid or salicylic acid, acrylates or alkoxycinnamates, oxamides, oxanilides, benzoxazinones, or benzoxazoles.

In a preferred embodiment, examples of a preferred radical capturing group or an UV absorbing group include

[Formula 12]

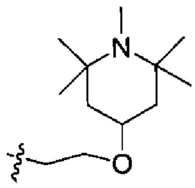

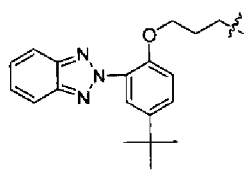

,

or

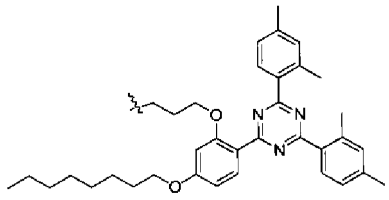

.

In the present embodiment, $X^A$ may be each independently a trivalent to decavalent organic group.

The number average molecular weight of the fluoropolyether group-containing compound is not limited, for example, is 1,000 to 30,000, preferably 1,500 to 30,000, more preferably 2,000 to 10,000, and may be, for example, 4,500 to 10,000. The number average molecular weight of the fluoropolyether group-containing compound herein is a value determined by $^{19}F$-NMR.

In one embodiment, in the surface-treating agent used in the present disclosure, the fluorine-containing silane compound is a compound represented by the formula (1).

In another embodiment, in the surface-treating agent used in the present disclosure, the fluorine-containing silane compound is a compound represented by the formula (2) .

In another embodiment, in the surface-treating agent used in the present disclosure, the fluorine-containing silane compound is a compound represented by the formula (1) and a compound represented by the formula (2).

The compound represented by the formula (1) and the compound represented by the formula (2) can be produced by a known method.

In one embodiment, the electrode of the present disclosure is composed of an electrode material and a coating layer of a fluoropolyether group-containing compound formed on the surface of the electrode material.

The coating layer in the embodiment is not required to be formed entirely on the surface of the electrode material but is only required to be formed on the contact face between the electrode and an electrolyte. The coating layer is preferably formed entirely on the surface of the electrode material.

In another embodiment, the electrode of the present disclosure is composed of an electrode material that includes an active material having a coating layer of a fluoropolyether group-containing compound formed on the surface thereof. That is, the electrode of the present disclosure is an electrode given by forming a layer of a fluoropolyether group-containing compound on the surface of the active material and then using the active material.

The coating layer can be formed by treating the electrode or the active material with a fluoropolyether group-containing compound or a composition including the fluoropolyether group-containing compound.

In the composition, the fluoropolyether group-containing compound may be included in an amount of 0.01% by mass to 99.9% by mass, preferably 0.1% by mass to 50% by mass, more preferably 0.1% by mass to 30% by mass, further preferably 0.1% by mass to 20% by mass, for example, 1% by mass to 30% by mass or 5% by mass to 20% by mass. In the composition, the content of the fluoropolyether group-containing compound may be 100 mol% (i.e., only the fluoropolyether group-containing compound is included) and may be 1 mol% to 99.9 mol%, preferably 10 mol% to 99 mol%, more preferably 30 mol% to 99 mol%, further preferably 50 mol% to 98 mol%, for example, 60 mol% to 95 mol%, 70 mol% to 95 mol%, or 80 mol% to 95 mol% with respect to the components excluding the solvent.

In the composition, the content of the compound represented by the formula (2) is 0.1 mol% or more and 35 mol% or less with respect to the total of the compound represented by the formula (1) and the compound represented by the formula (2). The lower limit of the content of the compound represented by the formula (2) with respect to the total of the compound represented by the formula (1) and the compound represented by the formula (2) may be preferably 0.1 mol%, more preferably 0.2 mol%, further preferably 0.5 mol%, still more preferably 1 mol%, particularly preferably 2 mol%, especially 5 mol%. The upper limit of the content of the compound represented by the formula (2) with respect to the total of the compound represented by the formula (1) and the compound represented by the formula (2) may be preferably 35 mol%, more preferably 30 mol%, further preferably 20 mol%, still more preferably 15 mol% or 10 mol%.

The content of the compound represented by the formula (2) with respect to the total of the compound represented by the formula (1) and the compound represented by the formula (2) is preferably 0.1 mol% or more and 30 mol% or less, more preferably 0.1 mol% or more and 20 mol% or less, further preferably 0.2 mol% or more and 10 mol% or less, still more preferably 0.5 mol% or more and 10 mol% or less, particularly preferably 1 mol% or more and 10 mol% or less, for example, 2 mol% or more and 10 mol% or less, or 5 mol% or more and 10 mol% or less. Setting the content of the compound represented by the formula (2) within the ranges enables the electric characteristics to be improved.

The composition may include an additional component in addition to the compound represented by the formula (1) or (2). Such additional component is not limited, and examples thereof include a (non-reactive) fluoropolyether compound that may be understood as a fluorine-containing oil, preferably a perfluoro(poly)ether compound (hereinafter, referred to as a "fluorine-containing oil"), a (non-reactive) silicone compound that may be understood as a silicone oil (hereinafter, referred to as a "silicone oil"), and a catalyst.

Further examples of the additional component include an alcohol, a transition metal, a halide ion, and a compound containing an atom having an unshared electron pair in its molecular structure.

In a preferred embodiment, the additional component is a fluorine-containing oil.

The fluorine-containing oil is not limited, and examples thereof include a compound represented by the following general formula (3) (a perfluoro(poly)ether compound) .

$$R^{21}\text{-}(OC_4F_8)_{a'}\text{-}(OC_3F_6)_{b'}\text{-}(OC_2F_4)_{c'}\text{-}(OCF_2)_{d'}\text{-}R^{22} \qquad (3)$$

Wherein $R^{21}$ represents a $C_{1-16}$ alkyl group optionally substituted with one or more fluorine atoms (preferably a $C_{1-16}$ perfluoroalkyl group), $R^{22}$ represents a $C_{1-16}$ alkyl group optionally substituted with one or more fluorine atoms (preferably a $C_{1-16}$ perfluoroalkyl group), a fluorine atom, or a hydrogen atom, $R^{21}$ and $R^{22}$ are more preferably each independently a $C_{1-3}$ perfluoroalkyl group.

a', b', c', and d', which each represent the number of four types of repeating units of perfluoro(poly)ether constituting the polymer main backbone, are each independently an integer of 0 or more and 300 or less. The sum of a', b', c', and d' is at least 1, preferably 1 to 300, more preferably 20 to 300. The occurrence order of the respective repeating units in parentheses with the subscript a', b', c', or d' is optional in the formula. Of these repeating units, $-(OC_4F_8)-$ may be any of $-(OCF_2CF_2CF_2CF_2)-$, $-(OCF(CF_3)CF_2CF_2)-$, $-(OCF_2CF(CF_3)CF_2)-$, $-(OCF_2CF_2CF(CF_3))-$, $-(OC(CF_3)_2CF_2)-$, $-(OCF_2C(CF_3)_2)-$, $-(OCF(CF_3)CF(CF_3))-$, $-(OCF(C_2F_5)CF_2)-$, and $-(OCF_2CF(C_2F_5))-$ and is preferably $-(OCF_2CF_2CF_2CF_2)-$. $-(OC_3F_6)-$ may be any of $-(OCF_2CF_2CF_2)-$, $-(OCF(CF_3)CF_2)-$, and $-(OCF_2CF(CF_3))-$ and is preferably $-(OCF_2CF_2CF_2)-$. $-(OC_2F_4)-$ may be either of $-(OCF_2CF_2)-$ and $-(OCF(CF_3))-$ and is preferably $-(OCF_2CF_2)-$.

Examples of the perfluoro(poly)ether compound represented by the general formula (3) include a compound represented by either of the following general formulas (3a) and (3b) (may be a mixture of one or two or more).

$$R^{21}\text{-}(OCF_2CF_2CF_2)_{b''}\text{-}R^{22} \qquad (3a)$$

$$R^{21}\text{-}(OCF_2CF_2CF_2CF_2)_{a''}\text{-}(OCF_2CF_2CF_2)_{b''}\text{-}(OCF_2CF_2)_{c''}\text{-}(OCF_2)_{d''}\text{-}R^{22} \quad (3b)$$

In these formulas, $R^{21}$ and $R^{22}$ are as described above; in the formula (3a), b" is an integer of 1 or more and 100 or less; in the formula (3b), a" and b" are each independently an integer of 0 or more and 30 or less, and c" and d" are each independently an integer of 1 or more and 300 or less. The occurrence order of the respective repeating units in parentheses with the subscript a", b", c", or d" is optional in the formula.

In one embodiment, the compound represented by the formula (3b) is one or more compounds represented by the formula (3b) having a ratio of c" to d" (c"/d" ratio) of 0.2 or more and 2 or less.

The fluorine-containing oil may have an average molecular weight of 1,000 to 30,000.

In the composition, the compound represented by the formula (3) is contained in an amount of preferably 0.1 mol% or more and 50 mol% or less, more preferably 1 mol% or more and 40 mol% or less, further preferably 5 mol% or more and 30 mol% or less, with respect to the total of the compound represented by the formula (1) or (2) and the compound represented by the formula (3).

In the composition, the silicone oil may be contained in an amount of, for example, 0 to 300 parts by mass, preferably 50 to 200 parts by mass, based on 100 parts by mass in total of the fluoropolyether group-containing compound (in a case of two or more compounds, the total of the two or more; the same applies to the following).

Examples of the catalyst include an acid (such as acetic acid and trifluoroacetic acid), a base (such as ammonia, triethylamine, and diethylamine), and a transition metal (such as Ti, Ni, and Sn).

The catalyst promotes hydrolysis and dehydration condensation of the fluoropolyether group-containing compound to thereby promote formation of a coating layer.

Examples of the transition metal include platinum, ruthenium, and rhodium.

Examples of the halide ion include a chloride ion.

The compound containing an atom having an unshared electron pair in its molecular structure preferably contains at least one atom selected from the group consisting of a nitrogen atom, an oxygen atom, a phosphorous atom, and a sulfur atom, more preferably contains a sulfur atom or a nitrogen atom.

The compound containing an atom having an unshared electron pair in its molecular structure preferably contains at least one functional group selected from the group consisting of an amino group, an amide group, a sulfinyl group, a P=O group, a S=O group, and a sulfonyl group, more preferably at least one functional group selected from the group consisting of a P=O group and a S=O group, in its molecular structure.

The compound containing an atom having an unshared electron pair in its molecular structure is preferably at least one compound selected from the group consisting of an aliphatic amine compound, an aromatic amine compound, a phosphoric amide compound, an amide compound, a urea compound, and a sulfoxide compound, more preferably at least one compound selected from the group consisting of an aliphatic amine compound, aromatic amines, a phosphoric amide, a urea compound, and a sulfoxide compound, particularly preferably at least one compound selected from the group consisting of a sulfoxide compound, an aliphatic amine compound, and an aromatic amine compound, further preferably a sulfoxide compound.

Examples of the aliphatic amine compound can include diethylamine and triethylamine. Examples of the aromatic amine compound can include aniline and pyridine. Examples of the phosphoric amide compound can include hexamethylphosphoramide. Examples of the amide compound can include N,N-diethylacetamide, N,N-diethylformamide, N,N-dimethylacetamide, N-methylformamide, N,N-dimethylformamide, and N-methylpyrrolidone. Examples of the urea compound can include tetramethylurea. Examples of the sulfoxide compound can include dimethyl sulfoxide (DMSO), tetramethylene sulfoxide, methylphenyl sulfoxide, and diphenyl sulfoxide. Among these compounds, dimethylsulfoxide or tetramethylene sulfoxide is preferably used.

Examples of the additional component also include, besides those described above, tetraethoxysilane, methyltrimethoxysilane, 3-aminopropyltrimethoxysilane, 3-glycidoxypropyltrimethoxysilane, and methyltriacetoxysilane.

Examples of the additional component include, besides those described above, an alcohol compound having 1 to 6 carbon atoms.

An example of a method for forming a coating layer of the fluoropolyether group-containing compound on the surface of the electrode or the active material is a method in which a film of the fluoropolyether group-containing compound is formed on the electrode material or the active material and the film is post-treated as required to thereby form a coating layer.

The method of forming a film of the fluoropolyether group-containing compound on the electrode material or the active material can be implemented by applying the fluoropolyether group-containing compound on the surface of the electrode material such that the surface is coated with the compound. The coating method is not limited. For example, a wet coating method and a dry coating method can be used.

The perfluoropolyether group-containing compound itself may be applied directly, or the perfluoropolyether group-containing compound is mixed with an additional component, for example, a solvent, and the resulting composition may be applied.

Examples of the solvent used in the composition include solvents below: a $C_{5-12}$ perfluoroaliphatic hydrocarbon, (such as perfluorohexane, perfluoromethylcyclohexane, and perfluoro-1,3-dimethylcyclohexane); a polyfluoroaromatic hydrocarbon, (such as bis(trifluoromethyl)benzene); a polyfluoroaliphatic hydrocarbon, (such as $C_6F_{13}CH_2CH_3$ (e.g., ASAHIKLIN(R) AC-6000 manufactured by ASAHI GLASS CO., LTD.) and 1,1,2,2,3,3,4-heptafluorocyclopentane (e.g., ZEORORA(R) H manufactured by Zeon Corporation)); a hydrofluorocarbon (HFC), (such as 1,1,1,3,3-pentafluorobutane (HFC-365mfc)); a hydrochlorofluorocarbon, (such as HCFC-225 (ASAHIKLIN(R) AK225)); an alkylperfluoroalkylether (the perfluoroalkyl group and the alkyl group may be linear or branched) including hydrofluoroether (HFE), (such as perfluoropropylmethylether ($C_3F_7OCH_3$) (e.g., Novec(trade name) 7000 manufactured by Sumitomo 3M Limited.), perfluorobutylmethylether ($C_4F_9OCH_3$) (e.g., Novec(trade name) 7100 manufactured by Sumitomo 3M Limited.), perfluorobutylethylether ($C_4F_9OC_2H_5$) (e.g., Novec(trade name) 7200 manufactured by Sumitomo 3M Limited.), and perfluorohexylmethylether ($C_2F_5CF(OCH_3)C_3F_7$) (e.g., Novec(trade name) 7300 manufactured by Sumitomo 3M Limited.), or $CF_3CH_2OCF_2CHF_2$ (e.g., ASAHIKLIN(R) AE-3000 manufactured by ASAHI GLASS CO., LTD.)), and 1,2-dichloro-1,3,3,3-tetrafluoro-1-propene (e.g., Vertrel(R) Sion manufactured by Du Pont-Mitsui Fluorochemicals Co. Ltd.). One of these solvent may be used singly, or two or more of these may be combined and used as a mixture. Further, the solvents also can be mixed with another solvent in order to adjust the solubility of a fluoropolyether group-containing silane compound, for example.

The composition may contain an additional component. The additional component is not limited, and examples thereof include a catalyst.

Examples of the catalyst include an acid (such as acetic acid and trifluoroacetic acid), a base (such as ammonia, triethylamine, and diethylamine), and a transition metal (such as Ti, Ni, and Sn).

The catalyst promotes hydrolysis and dehydration condensation of the fluoropolyether group-containing silane compound to thereby promote formation of a coating layer.

Examples of the wet coating method include dip coating, spin coating, flow coating, spray coating, roll coating, gravure coating, and similar methods.

Examples of the dry coating method include a PVD method, a CVD method, and similar methods. The PVD method is a method in which a solid material is heated in vacuum (vacuumdeposited) or physical energy is supplied to atoms on a solid surface by irradiation with high-speed electrons or ions to vaporize the atoms, the vaporized atoms are recombined on an electrode material, and thus a thin film is formed. The PVD method is not limited, and examples thereof include vapor deposition, (usually a vacuum deposition method), and sputtering. Specific examples of the vapor deposition, (usually the vacuum deposition method), include resistance heating, high-frequency heating using an electron beam, microwaves, or the like an ion beam, and similar methods. Specific examples of the CVD method include plasma-CVD, optical CVD, heat CVD, and similar methods. Among these, the PVD method is preferred. Particularly the vapor deposition, for example, resistance heat deposition or electron beam deposition is preferred, and electron beam deposition is more preferred.

Further, coating can be also made by an atmospheric pressure plasma method.

In one embodiment, treatment of the electrode material or the active material is conducted by dip coating, spray coating, or PVD.

In another embodiment, treatment of the electrode material or the active material is conducted by dip coating.

In another embodiment, treatment of the electrode material or the active material is conducted by spray coating.

In another embodiment, treatment of the electrode material or the active material is conducted by means of PVD.

Next, the film is post-treated as required. This post-treatment is not limited and may be heating, moisture supply or both of these, for example.

The post-treatment may be implemented to improve the durability of the coating layer, (in turn, the cycle characteristics or storage stability of a lithium ion secondary battery), but it should be noted that the post-treatment is not an essential step. For example, after application of the fluoropolyether group-containing compound, the coating layer may be left to stand as it is.

A coating layer derived from a film of the fluoropolyether group-containing compound is formed on the electrode material or the active material in the manner as described above.

The thickness of the coating layer is not limited and is in the range of preferably 0.1 to 50 nm, preferably 0.3 to 50 nm, more preferably 0.5 to 30 nm, further preferably 1 to 10 nm. Making the thickness larger can more effectively inhibit contact between the electrode material or the active material and the electrolyte and can improve the function or electric characteristics of the electrochemical device. Making the thickness smaller can shorten the distance between the active material and the electrolytes to thereby enable the capacity to be larger.

In a preferred embodiment, the coating layer is a monomolecular film. Forming the coating layer as a monomolecular film can provide a thinner and denser film to thereby enable improvement in the electric characteristics and increase in the capacity to be simultaneously achieved at a higher level.

The electrode of the present disclosure contains a compound having a fluoropolyether group having a specific structure. Thus, when used in an electrochemical device, the electrode improves the electric characteristics. The electrode of the present disclosure can achieve improvement in the remaining capacity retention, suppression of gas generation, improvement in the cycle characteristics, and suppression of the resistance increase rate of an electrochemical device, for example.

<Electrode Material>

The electrode material means a member constituting the main part of the electrode of the electrochemical device, which member is commonly used in various electrochemical devices. Those skilled in the art could appropriately select such an electrode material in accordance with the type of the electrochemical device. For example, in an alkali metal ion battery, the electrode material may be an active material-containing portion that contains an active material (hereinafter, employed including a positive electrode active material and a negative electrode active material). Typically, the electrode material is composed of an active material-containing portion and a current collector. In one embodiment, the active material-containing portion is present in the form of a layer on the current collector. In an electric double-layer capacitor, the electrode material may be a portion forming the electric double layer at the interface with an electrolytic solution, for example, a portion containing carbon or graphite.

The above electrode may be used as either of a positive electrode and a negative electrode in an electrochemical device. When used as the positive electrode, the electrode of the present disclosure can suppress oxidative decomposition of the electrolytic solution and thus can suppress deterioration in the battery and decomposition of the positive electrode

structure due to decomposition of the electrolytic solution. Particularly when used as the positive electrode, the electrode of the present disclosure can suppress the resistance increase rate, improve the remaining capacity retention, and suppress gas increase rate. Alternatively, when used as the negative electrode, the electrode of the present disclosure can stabilize the structure of the solid electrolyte interface (SEI) formed on the electrode/electrolytic solution interface and make movement of lithium ions favorable to thereby enable increase in the resistance to be suppressed. Particularly, the electrode of the present disclosure, when used as the negative electrode, can improve the cycle capacity retention.

The above electrode contains the fluoropolyether group-containing compound on the surface thereof as described above. Thus, use of the electrode as the positive electrode and/or the negative electrode of an electrochemical device may allow favorable electric characteristics to be achieved in the electrochemical device.

<Electrochemical Device>

The electrode of the present disclosure can be employed in various electrochemical devices.

Accordingly, the present disclosure also provides an electrochemical device comprising the electrode of the present disclosure.

The electrochemical device means a device comprising at least one pair of electrodes, and an electrolytic solution interposed between the pair of electrodes.

The electrochemical device is not limited, and examples thereof include a battery, an electrochemical sensor, an electrochromic element, an electrochemical switching element, an electrolytic condenser, and an electrochemical capacitor.

The battery is not limited as long as the battery has electrodes and an electrolytic solution, and examples thereof include an alkali metal battery, an alkali metal ion battery, an alkaline earth metal ion battery, a radical battery, a solar battery, and a fuel battery. In a preferred embodiment, the battery is particularly an alkali metal battery, an alkali metal ion battery, or an alkaline earth metal battery, may be, for example, a lithium battery, a lithium ion battery, a sodium ion battery, a magnesium battery, a lithium air battery, a sodium sulfur battery, or a lithium sulfur battery, and may be preferably a lithium ion battery. The battery may be a primary battery or a secondary battery. Preferably, the battery is an alkali metal ion secondary battery, particularly a lithium ion secondary battery.

When the electrochemical device of the present disclosure is an alkali metal ion secondary battery, the alkali metal ion secondary battery has a common structure for an alkali metal ion secondary battery. The alkali metal ion secondary battery of the present disclosure may have, for example, a positive electrode, a negative electrode, a separator, an electrolytic solution, and the like in an external case. The alkali metal ion secondary battery of the present disclosure may further have additional members such as a positive electrode current collection tab, a negative electrode current collection tab, or a battery lid, or a member for protecting the battery such as an internal pressure release valve or a PTC element.

The electrochemical sensor means a sensor that detects or measures mechanical, electromagnetic, thermal, acoustic, and chemical properties of a natural phenomenon or artificial article or space information and time information indicated thereby, the sensor having electrodes to which electrochemical principles are applied and an electrolytic solution. Examples of the electrochemical sensor include an actuator, a humidity sensor, a gas concentration sensor, an ion concentration sensor, and an odor sensor.

The electrochromic element means an element that reversibly generates optical absorption on application of a voltage or current, the element having an electrode employing an electrochemical reaction and an electrolytic solution. Examples of the electrochromic element include an electrochromic element that changes color by electricity.

The electrochemical switching element is not limited as long as the electrochemical switching element has an electrode and an electrolytic solution, and examples thereof include an electrochemical transistor and a field effect transistor.

The electrolytic condenser is not limited as long as the electrolytic condenser has electrodes and an electrolytic solution, and examples thereof include an aluminum electrolytic condenser and a tantalum electrolytic condenser.

The electrochemical capacitor is not limited as long as the electrochemical capacitor has electrodes and an electrolytic solution, and examples thereof include a hybrid capacitor such as an electric double layer condenser, a redox capacitor, or a lithium ion capacitor.

The electrochemical device of the present disclosure is not limited to those exemplified above, and is not limited as long as the device comprises at least one pair of electrodes and an electrolytic solution interposed between the pair of electrodes. In the electrochemical device of the present disclosure, an electrode containing a fluoropolyether group-containing compound on the surface thereof, as at least one electrode, and an electrolytic solution are only required to be employed. Other constituents may be constituents equivalent as before, unless otherwise indicated.

In one embodiment, in the electrochemical device of the present disclosure, the electrode of the present disclosure may be employed as only one of the electrodes. For example, in the electrochemical device of the present disclosure, the electrode of the present disclosure may be employed as the negative electrode only or as the positive

electrode only. In one embodiment, in the electrochemical device of the present disclosure, the electrode of the present disclosure may be employed as the positive electrode only. In another embodiment, in the electrochemical device of the present disclosure, the electrode of the present disclosure may be employed as both of the positive electrode and the negative electrode.

The electrochemical device of the present disclosure is not limited to those exemplified above, and is not limited as long as the device comprises at least one pair of electrodes and an electrolyte interposed between the pair of electrodes. In the electrochemical device of the present disclosure, the electrode of the present disclosure is only required to be employed as at least one electrode. Other constituents may be constituents equivalent as before, unless otherwise indicated.

<Electrolytic Solution>

An electrolytic solution is a solvent including an electrolyte salt dissolved therein.

An electrolytic solution used in the present disclosure preferably includes a solvent.

The solvent preferably includes at least one selected from the group consisting of a carbonate and a carboxylate.

The carbonate may be a cyclic carbonate or a chain carbonate.

The cyclic carbonate may be a non-fluorinated cyclic carbonate or a fluorinated cyclic carbonate.

An example of the non-fluorinated cyclic carbonate includes a non-fluorinated saturated cyclic carbonate. Preferred is a non-fluorinated saturated alkylene carbonate having an alkylene group having 2 to 6 carbon atoms, and more preferred is a non-fluorinated saturated alkylene carbonate having an alkylene group having 2 to 4 carbon atoms.

Of these, in respect of high permittivity and a suitable viscosity, the non-fluorinated saturated cyclic carbonate is preferably at least one selected from the group consisting of ethylene carbonate, propylene carbonate, cis-2,3-pentylene carbonate, cis-2,3-butylene carbonate, 2,3-pentylene carbonate, 2,3-butylene carbonate, 1,2-pentylene carbonate, 1,2-butylene carbonate, and butylene carbonate.

One of the non-fluorinated saturated cyclic carbonates may be used singly, or two or more thereof may be used in any combination at any ratio.

When the non-fluorinated saturated cyclic carbonate is contained, the content of the non-fluorinated saturated cyclic carbonate is preferably 5 to 90% by volume, more preferably, 10 to 60% by volume, further preferably, 15 to 45% by volume with respect to the solvent.

The fluorinated cyclic carbonate is a cyclic carbonate having a fluorine atom. A solvent containing a fluorinated cyclic carbonate can be suitably used also at a high voltage. The term "high voltage" herein means a voltage of 4.2 V or more. The upper limit of the "high voltage" is preferably 4.9 V.

The fluorinated cyclic carbonate may be a fluorinated saturated cyclic carbonate or a fluorinated unsaturated cyclic carbonate.

The fluorinated saturated cyclic carbonate is a saturated cyclic carbonate having a fluorine atom. Specific examples thereof include a compound represented by the following general formula (A):

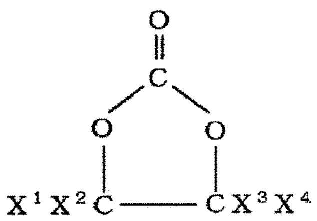

(A)

wherein $X^1$ to $X^4$ are the same as or different from each other, and are each -H, $-CH_3$, $-C_2H_5$, -F, a fluorinated alkyl group optionally having an ether bond, or a fluorinated alkoxy group optionally having an ether bond; provided that at least one of $X^1$ to $X^4$ is -F, a fluorinated alkyl group optionally having an ether bond, or a fluorinated alkoxy group optionally having an ether bond. Examples of the fluorinated alkyl group include $-CF_3$, $-CF_2H$, and $-CH_2F$.

In the case where the electrolytic solution used in the present disclosure, when containing the fluorinated saturated cyclic carbonate, is applied to a high-voltage lithium ion secondary battery or the like, the oxidation resistance of the electrolytic solution can be improved, and stable and excellent charge and discharge characteristics can be provided. The term "ether bond" herein means a bond represented by -O-.

In respect of favorable permittivity and oxidation resistance, one or two of $X^1$ to $X^4$ is/are each preferably - F, a fluorinated alkyl group optionally having an ether bond, or a fluorinated alkoxy group optionally having an ether bond.

In anticipation of decrease in a viscosity at low temperature, increase in the flash point, and improvement in

the solubility of an electrolyte salt, $X^1$ to $X^4$ are each preferably -H, -F, a fluorinated alkyl group (a), a fluorinated alkyl group having an ether bond (b), or a fluorinated alkoxy group (c).

The fluorinated alkyl group (a) is a group obtainable by replacing at least one hydrogen atom of an alkyl group by a fluorine atom. The fluorinated alkyl group (a) has preferably 1 to 20 carbon atoms, more preferably 1 to 17 carbon atoms, further preferably 1 to 7 carbon atoms, particularly preferably 1 to 5 carbon atoms. An excessively large number of carbon atoms may lead to deterioration of the low-temperature characteristics and decrease in the solubility of an electrolyte salt. An excessively small number carbon atoms may lead to decrease in the solubility of an electrolyte salt, decrease in the discharge efficiency, further increase in the viscosity, and the like.

Examples of the fluorinated alkyl group (a) having 1 carbon atom include $CFH_2$-, $CF_2H$-, and $CF_3$-. In respect of high-temperature storage characteristics, particularly preferred is $CF_2H$- or $CF_3$-, and most preferred is $CF_3$-.

In respect of favorable solubility of an electrolyte salt, among the above fluorinated alkyl groups (a), a preferred example of the group (a) having 2 or more carbon atoms includes a fluorinated alkyl group represented by the following general formula (a-1):

$R^1$-$R^2$- (a-1)

wherein $R^1$ is an alkyl group having one or more carbon atoms and optionally having a fluorine atom; $R^2$ is an alkylene group having 1 to 3 carbon atoms and optionally having a fluorine atom; provided that at least one of $R^1$ and $R^2$ has a fluorine atom.

$R^1$ and $R^2$ each may further have an atom other than carbon, hydrogen, and fluorine atoms.

$R^1$ is an alkyl group having one or more carbon atoms and optionally having a fluorine atom. $R^1$ is preferably a linear or branched chain alkyl group having 1 to 16 carbon atoms. $R^1$ has more preferably 1 to 6 carbon atoms, further preferably 1 to 3 carbon atoms.

Specific examples of linear or branched chain alkyl groups for $R^1$ include $CH_3$-, $CH_3CH_2$-, $CH_3CH_2CH_2$-, $CH_3CH_2CH_2CH_2$-, and

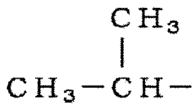 、 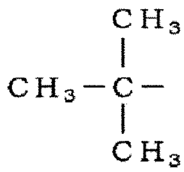

When $R^1$ is a linear alkyl group having a fluorine atom, examples of $R^1$ include $CF_3$-, $CF_3CH_2$-, $CF_3CF_2$-, $CF_3CH_2CH_2$-, $CF_3CF_2CH_2$-, $CF_3CF_2CF_2$-, $CF_3CH_2CF_2$-, $CF_3CH_2CH_2CH_2$-, $CF_3CF_2CH_2CH_2$-, $CF_3CH_2CF_2CH_2$-, $CF_3CF_2CF_2CH_2$-, $CF_3CF_2CF_2CF_2$-, $CF_3CF_2CH_2CF_2$-, $CF_3CH_2CH_2CH_2CH_2$-, $CF_3CF_2CH_2CH_2CH_2$-, $CF_3CH_2CF_2CH_2CH_2$-, $CF_3CF_2CF_2CH_2CH_2$-, $CF_3CF_2CF_2CF_2CH_2$-, $CF_3CF_2CH_2CF_2CH_2$-, $CF_3CF_2CH_2CH_2CH_2CH_2$-, $CF_3CF_2CF_2CF_2CH_2CH_2$-, $CF_3CF_2CH_2CF_2CH_2CH_2$-, $HCF_2$-, $HCF_2CH_2$-, $HCF_2CF_2$-, $HCF_2CH_2CH_2$-, $HCF_2CF_2CH_2$-, $HCF_2CH_2CF_2$-, $HCF_2CF_2CH_2CH_2$-, $HCF_2CH_2CF_2CH_2$-, $HCF_2CF_2CF_2CF_2$-, $HCF_2CF_2CH_2CH_2CH_2$-, $HCF_2CH_2CF_2CH_2CH_2$-, $HCF_2CF_2CF_2CF_2CH_2$-, $HCF_2CF_2CF_2CF_2CH_2CH_2$-, $FCH_2$-, $FCH_2CH_2$-, $FCH_2CF_2$-, $FCH_2CF_2CH_2$-, $FCH_2CF_2CF_2$-, $CH_3CF_2CH_2$-, $CH_3CF_2CF_2$-, $CH_3CF_2CH_2CF_2$-, $CH_3CF_2CF_2CF_2$-, $CH_3CH_2CF_2CF_2$-, $CH_3CF_2CH_2CF_2CH_2$-, $CH_3CF_2CF_2CF_2CH_2$-, $CH_3CF_2CF_2CH_2CH_2$-, $CH_3CH_2CF_2CF_2CH_2$-, $CH_3CF_2CH_2CF_2CH_2CH_2$-, $CH_3CF_2CH_2CF_2CH_2CH_2$-, $HCFClCF_2CH_2$-, $HCF_2CFClCH_2$-, $HCF_2CFClCF_2CFClCH_2$-, and $HCFClCF_2CFClCF_2CH_2$.

When $R^1$ is a branched chain alkyl group having a fluorine atom, preferred examples of $R^1$ include:

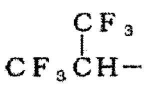 、 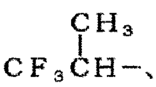 、 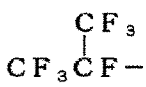 、 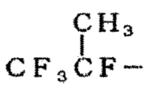 、

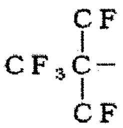 、 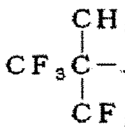 、 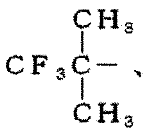 、

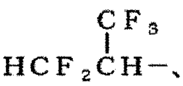 、 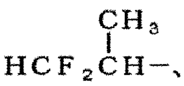 、 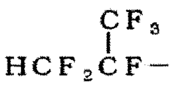 、 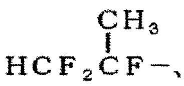 、

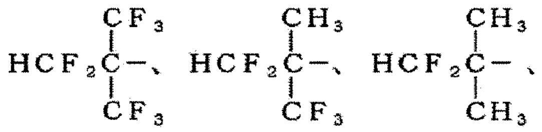

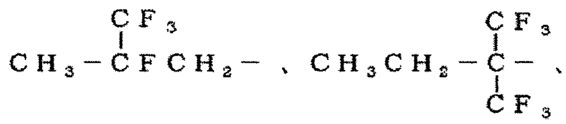

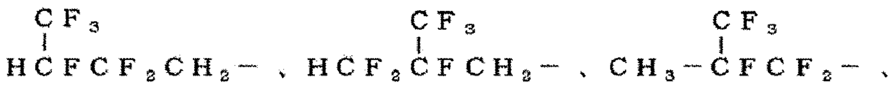

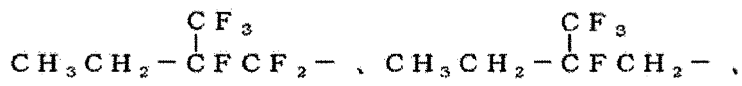

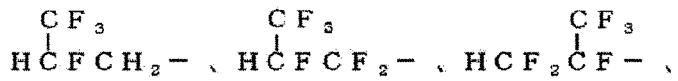

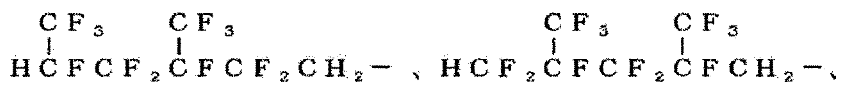

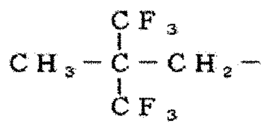

However, if a branch such as $CH_3$- or $CF_3$- is contained, the viscosity is likely to increase. Thus, the number of such branches is more preferably small (one) or zero.

$R^2$ is an alkylene group having 1 to 3 carbon atoms and optionally having a fluorine atom. $R^2$ may be linear or branched chain. Examples of a minimum structural unit constituting such a linear or branched chain alkylene group are shown below. $R^2$ is constituted by one or combination of these units.

(i) Linear Minimum Structural Units: $-CH_2-$, -CHF-, $-CF_2-$, -CHCl-, -CFCl-, $-CCl_2-$

(ii) Branched Chain Minimum Structural Units:

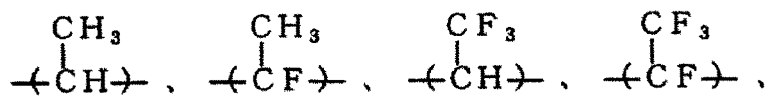

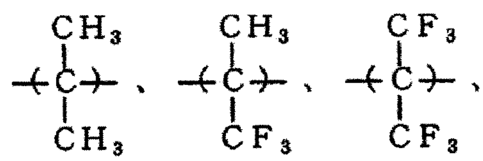

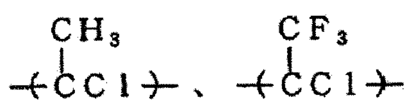

$R^2$ is preferably constituted by Cl-free structural units among these examples, because such units may not be

dehydrochlorinated by a base and thus may be more stable.

When being linear, $R^2$ is composed only of any of the above linear minimum structural units, and is preferably - $CH_2$-, -$CH_2CH_2$-, or $CF_2$- among these. Since the solubility of an electrolyte salt can be further improved, -$CH_2$- or -$CH_2CH_2$-is more preferred.

When being branched chain, $R^2$ includes at least one of the above branched chain minimum structural units. A preferred example thereof is a group represented by the general formula: -($CX^aX^b$)-, wherein $X^a$ is H, F, $CH_3$, or $CF_3$; $X^b$ is $CH_3$ or $CF_3$; provided that, when $X^b$ is $CF_3$, $X^a$ is H or $CH_3$. Such groups can much further particularly improve the solubility of an electrolyte salt.

Preferred examples of the fluorinated alkyl group (a) include groups below.

$CF_3CF_2$-, $HCF_2CF_2$-, $H_2CFCF_2$-, $CH_3CF_2$-, $CF_3CHF$-, $CH_3CF_2$-, $CF_3CF_2CF_2$-, $HCF_2CF_2CF_2$-, $H_2CFCF_2CF_2$-, $CH_3CF_2CF_2$-,

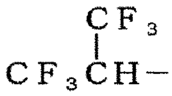、 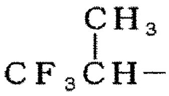、 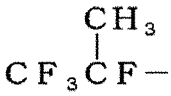、

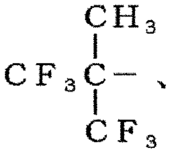、 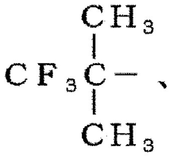、

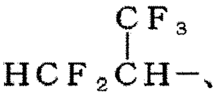、 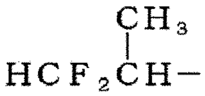、 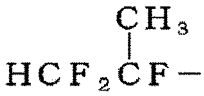、

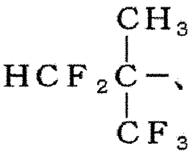、 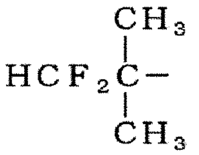、

and

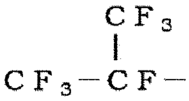、 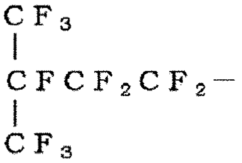、

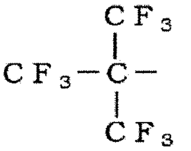、

The above fluorinated alkyl group having an ether bond (b) is a group obtainable by replacing at least one hydrogen atom of an alkyl group having an ether bond by a fluorine atom. The fluorinated alkyl group having an ether bond (b) preferably has 2 to 17 carbon atoms. An excessively large number of carbon atoms may lead to increase in the viscosity of the fluorinated saturated cyclic carbonate and also increase of fluorine-containing groups. Thus, there may be observed decrease in the solubility of an electrolyte salt due to reduction in permittivity, and decrease in miscibility with other solvents. From this viewpoint, the fluorinated alkyl group having an ether bond (b) has more preferably 2 to 10 carbon atoms, further preferably 2 to 7 carbon atoms.

The alkylene group which constitutes the ether moiety of the fluorinated alkyl group having an ether bond (b)

may be a linear or branched chain alkylene group. Examples of a minimum structural unit constituting such a linear or branched chain alkylene group are shown below.

(i) Linear Minimum Structural Units:
$-CH_2-$, $-CHF-$, $-CF_2-$, $-CHCl-$, $-CFCl-$, $-CCl_2-$
(ii) Branched chain Minimum Structural Units:

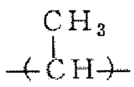 、 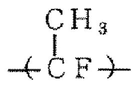 、 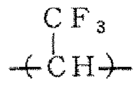 、 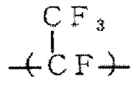 、

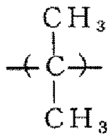 、 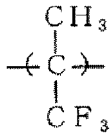 、 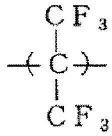 、

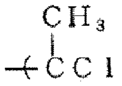 、 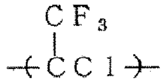

The alkylene group may be constituted by one of these minimum structural units, or may be constituted by linear units (i), by branched chain units (ii), or by a combination of a linear unit (i) and a branched chain unit (ii). Preferred specific examples will be described below in detail.
$R^2$ is preferably constituted by Cl-free structural units among these examples, because such units may not be dehydrochlorinated by a base and thus may be more stable.
A further preferred example of the fluorinated alkyl group having an ether bond (b) includes a group represented by the general formula (b-1):

$R^3-(OR^4)_{n1}-$ (b-1)

wherein $R^3$ is preferably an alkyl group having 1 to 6 carbon atoms and optionally having a fluorine atom; $R^4$ is preferably an alkylene group having 1 to 4 carbon atoms and optionally having a fluorine atom; n1 is an integer of 1 to 3; provided that at least one of $R^3$ and $R^4$ has a fluorine atom.
Examples of $R^3$ and $R^4$ include the following groups, and any appropriate combination of these groups can provide, but not limited to, the fluorinated alkyl group having an ether bond (b) represented by the general formula (b-1).

(1) $R^3$ is preferably an alkyl group represented by the general formula: $X^c{}_3C-(R^5)_{n2}-$, wherein three $X^c$'s are the same as or different from each other, and are each H or F; $R^5$ is an alkylene group having 1 to 5 carbon atoms and optionally having a fluorine atom; and n2 is 0 or 1.

When n2 is 0, examples of $R^3$ include $CH_3-$, $CF_3-$, $HCF_2-$, and $H_2CF-$.
When n2 is 1, specific examples of $R^3$ which is a linear group include $CF_3CH_2-$, $CF_3CF_2-$, $CF_3CH_2CH_2-$, $CF_3CF_2CH_2-$, $CF_3CF_2CF_2-$, $CF_3CH_2CF_2-$, $CF_3CH_2CH_2CH_2-$, $CF_3CF_2CH_2CH_2-$, $CF_3CH_2CF_2CH_2-$, $CF_3CF_2CF_2CH_2-$, $CF_3CF_2CF_2CF_2-$, $CF_3CF_2CH_2CF_2-$, $CF_3CH_2CH_2CH_2CH_2-$, $CF_3CF_2CH_2CH_2CH_2-$, $CF_3CH_2CF_2CH_2CH_2-$, $CF_3CF_2CF_2CH_2CH_2-$, $CF_3CF_2CF_2CF_2CH_2-$, $CF_3CF_2CH_2CF_2CH_2-$, $CF_3CF_2CH_2CH_2CH_2CH_2-$, $CF_3CF_2CF_2CF_2CH_2CH_2-$, $CF_3CF_2CH_2CF_2CH_2CH_2-$, $HCF_2CH_2-$, $HCF_2CF_2-$, $HCF_2CH_2CH_2-$, $HCF_2CF_2CH_2-$, $HCF_2CH_2CF_2-$, $HCF_2CF_2CH_2CH_2-$, $HCF_2CH_2CF_2CH_2-$, $HCF_2CF_2CF_2CF_2-$, $HCF_2CF_2CH_2CH_2CH_2-$, $HCF_2CH_2CF_2CH_2CH_2-$, $HCF_2CF_2CF_2CF_2CH_2-$, $HCF_2CF_2CF_2CF_2CH_2CH_2-$, $FCH_2CH_2-$, $FCH_2CF_2-$, $FCH_2CF_2CH_2-$, $CH_3CF_2-$, $CH_3CH_2-$, $CH_3CF_2CH_2-$, $CH_3CF_2CF_2-$, $CH_3CH_2CH_2-$, $CH_3CF_2CH_2CF_2-$, $CH_3CF_2CF_2CF_2-$, $CH_3CH_2CF_2CF_2-$, $CH_3CH_2CH_2CH_2-$, $CH_3CF_2CH_2CF_2CH_2-$, $CH_3CF_2CF_2CF_2CH_2-$, $CH_3CF_2CF_2CH_2CH_2-$, $CH_3CH_2CF_2CF_2CH_2-$, $CH_3CF_2CH_2CF_2CH_2CH_2-$, $CH_3CH_2CF_2CF_2CH_2CH_2-$, and $CH_3CF_2CH_2CF_2CH_2CH_2-$.
Examples thereof in which n2 is 1 and $R^3$ is a branched chain group include groups below.

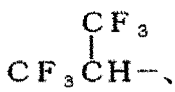 、 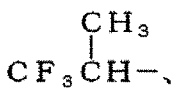 、 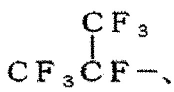 、 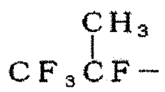 、

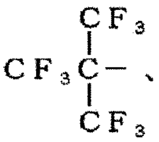 、 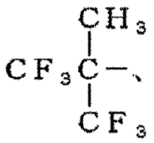 、 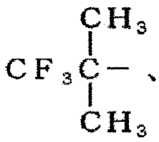 、 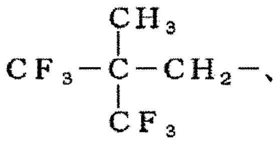 、

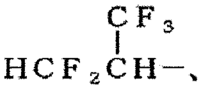 、 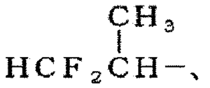 、 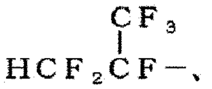 、 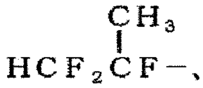 、

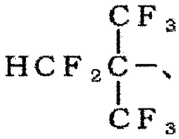 、 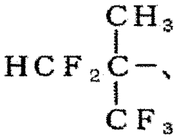 、 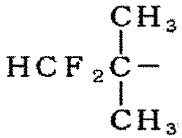

However, if a branch such as $CH_3$- or $CF_3$- is contained, the viscosity is likely to increase. Thus, those in which $R^3$ is a linear group are more preferred.

(2) In $-(OR^4)_{n1}-$ of the general formula (b-1), n1 is an integer of 1 to 3, preferably 1 or 2. When n1 is 2 or 3, $R^4$'s may be the same as or different from each other.

Preferred specific examples of $R^4$ include the following linear or branched chain groups.

Examples of $R^4$ which is a linear group include $-CH_2-$,$-CHF-$, $-CF_2-$, $-CH_2CH_2-$, $-CF_2CH_2-$, $-CF_2CF_2-$, $-CH_2CF_2-$, $-CH_2CH_2CH_2-$, $-CH_2CH_2CF_2-$, $-CH_2CF_2CH_2-$, $-CH_2CF_2CF_2-$, $-CF_2CH_2CH_2-$, $-CF_2CF_2CH_2-$, $-CF_2CH_2CF_2-$, and $-CF_2CF_2CF_2-$.

Examples of $R^4$ which is a branched chain group include groups below.

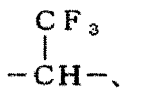 、 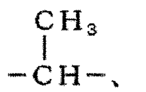 、 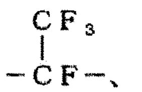 、 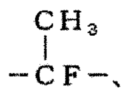 、

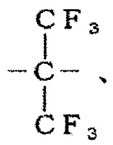 、 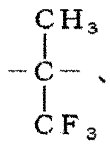 、 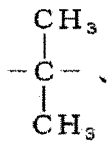 、

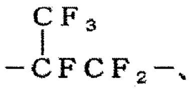 、 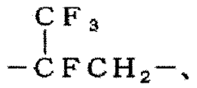 、 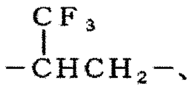 、 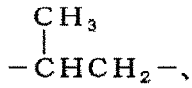 、

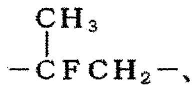 、 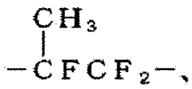 、 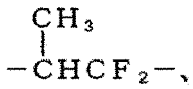 、 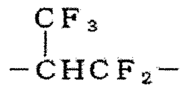

The fluorinated alkoxy group (c) is a group obtainable by replacing at least one hydrogen atom of an alkoxy group by a fluorine atom. The fluorinated alkoxy group (c) has preferably 1 to 17 carbon atoms, more preferably 1 to 6 carbon atoms.

The fluorinated alkoxy group (c) is particularly preferably a fluorinated alkoxy group represented by the general formula: $X^d{}_3C-(R^6)_{n3}-O-$, wherein three $X^d$'s are the same as or different from each other, and are each H or F; $R^6$ is an alkylene group having 1 to 5 carbon atoms and optionally having a fluorine atom; n3 is 0 or 1; provided that any of the three $X^d$'s contains a fluorine atom.

Specific examples of the fluorinated alkoxy group (c) include fluorinated alkoxy groups in which an oxygen atom binds to an end of an alkyl group, mentioned as an example for $R^1$ in the general formula (a-1).

The fluorinated alkyl group (a), the fluorinated alkyl group having an ether bond (b), and the fluorinated alkoxy group (c) in the fluorinated saturated cyclic carbonate each preferably have a fluorine content of 10% by mass or more. An excessively low fluorine content may not sufficiently achieve an effect of reducing the viscosity at low temperature and an effect of increasing the flash point. From this viewpoint, the fluorine content is more preferably 12% by mass or

more, further preferably 15% by mass or more. The upper limit thereof is usually 76% by mass.

The fluorine content of each of the fluorinated alkyl group (a), the fluorinated alkyl group having an ether bond (b), and the fluorinated alkoxy group (c) is a value calculated based on each structural formula thereof by:

[(Number of fluorine atoms × 19)/(Formula weight of each group)] × 100 (%).

In view of favorable permittivity and oxidation resistance, the fluorine content in the total fluorinated saturated cyclic carbonate is preferably 10% by mass or more, more preferably 15% by mass or more. The upper limit thereof is usually 76% by mass.

The fluorine content in the fluorinated saturated cyclic carbonate is a value calculated based on the structural formula of the fluorinated saturated cyclic carbonate by:

[(Number of fluorine atoms × 19)/(Molecular weight of fluorinated saturated cyclic carbonate)] × 100 (%).

Specific examples of the fluorinated saturated cyclic carbonate include the following.

Specific examples of the fluorinated saturated cyclic carbonate in which at least one of $X^1$ to $X^4$ is -F include compounds below.

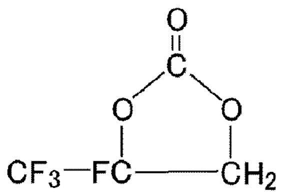 , 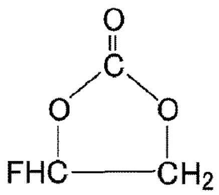 ,

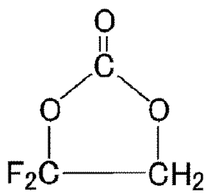 , 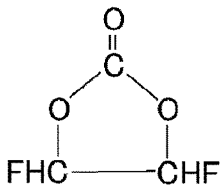 ,

These compounds have a high withstand voltage and also give favorable solubility of an electrolyte salt.

Alternatively, compounds below and the like may be used.

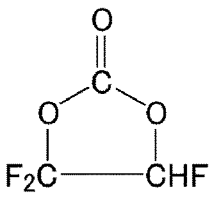 , 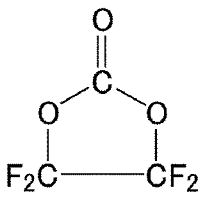 , 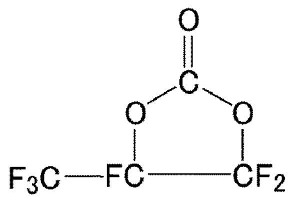 ,

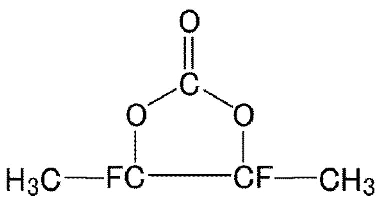 , 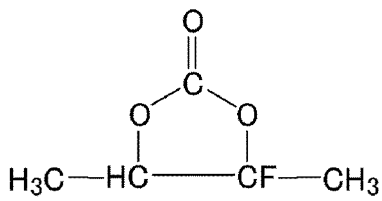

Specific examples of the fluorinated saturated cyclic carbonate in which at least one of $X^1$ to $X^4$ is a fluorinated alkyl group (a) and the others are -H include compounds below.

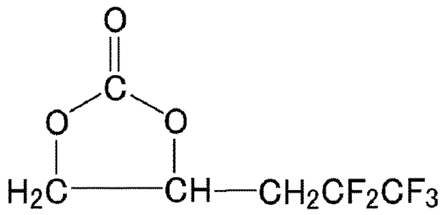
,
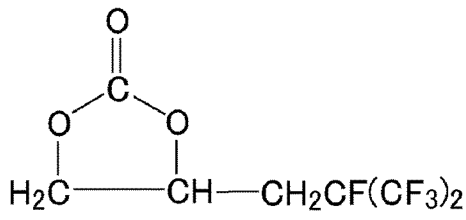
,
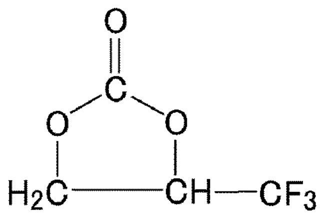
,
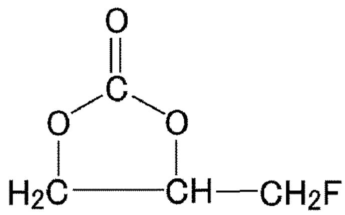
,
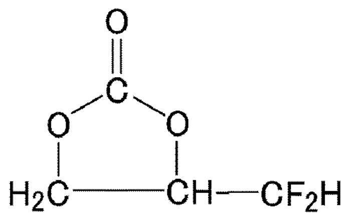
,
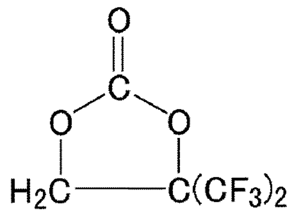
,
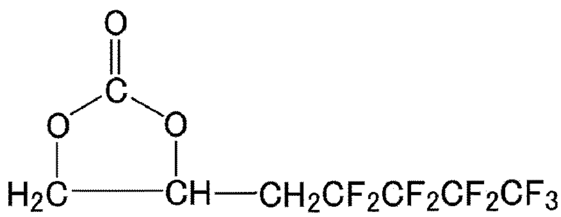
,
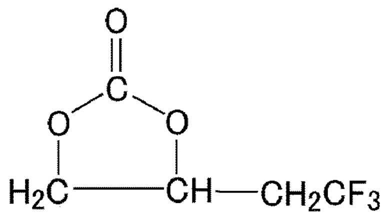

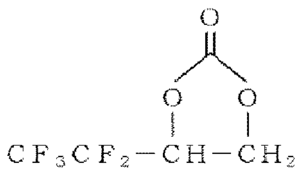
、
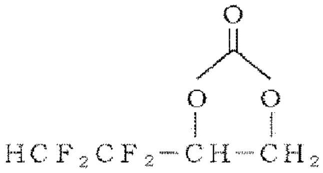
、
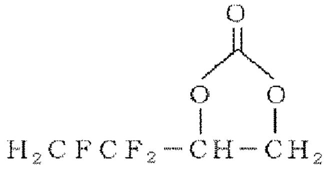
、
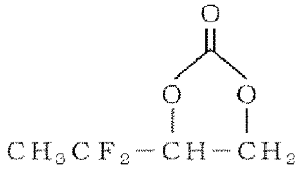
、

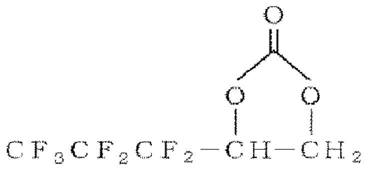 、

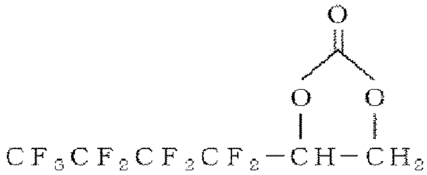 、

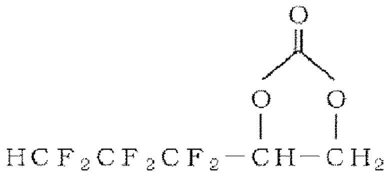 、

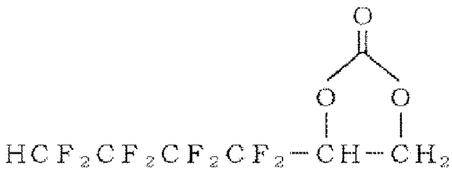 、

and

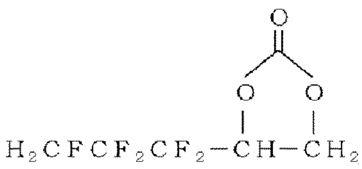 、

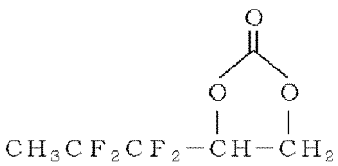 、

Specific examples of the fluorinated saturated cyclic carbonate in which at least one of $X^1$ to $X^4$ is a fluorinated alkyl group having an ether bond (b) or a fluorinated alkoxy group (c) and the others are -H include compounds below.

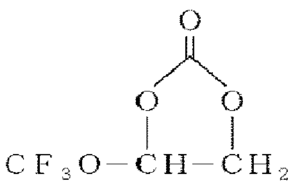 、 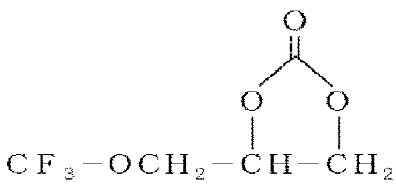 、

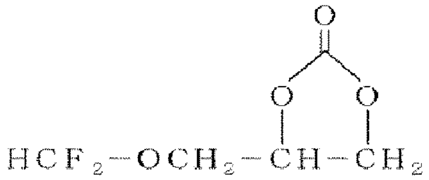 、 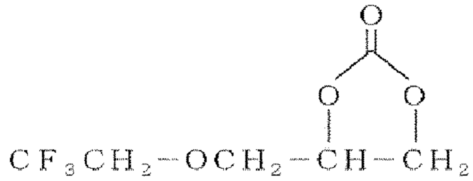 、

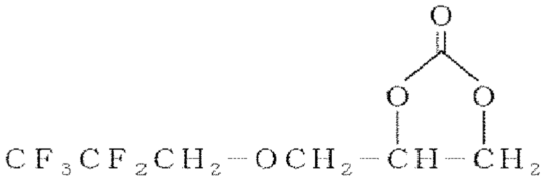 、

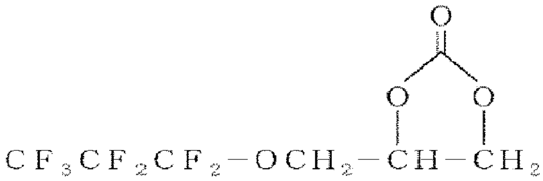 、

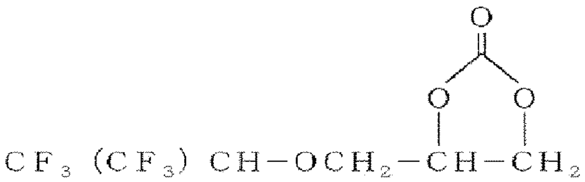 、

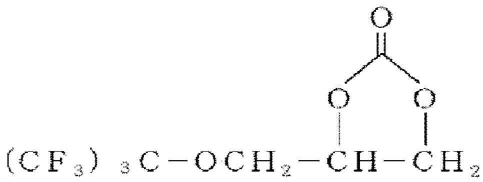 、

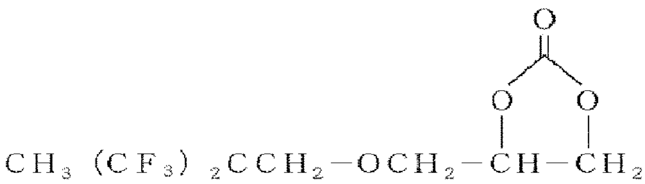 、

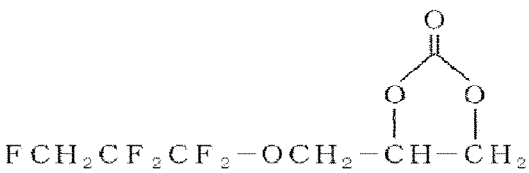 、

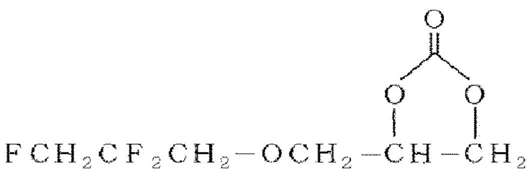 、

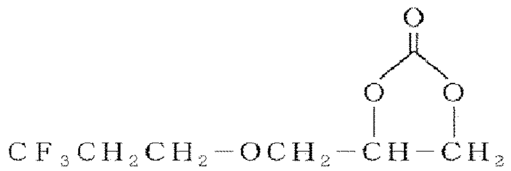

、

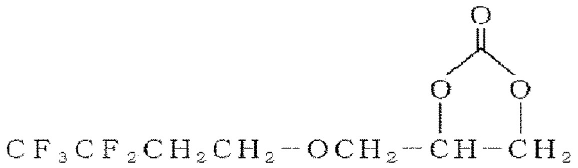

、

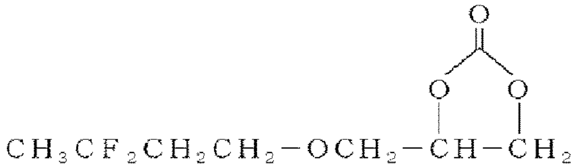

、

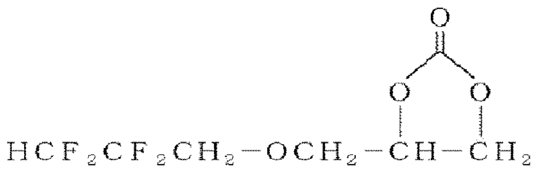

、

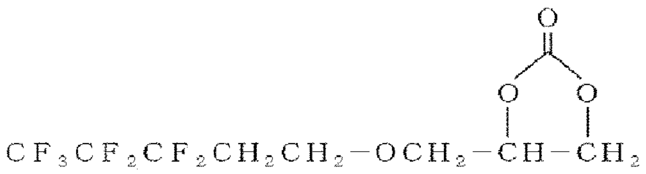

、

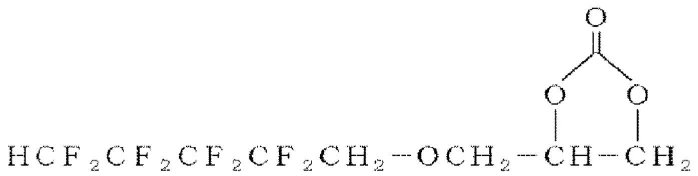

、

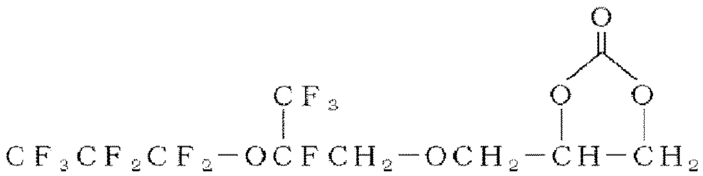

、

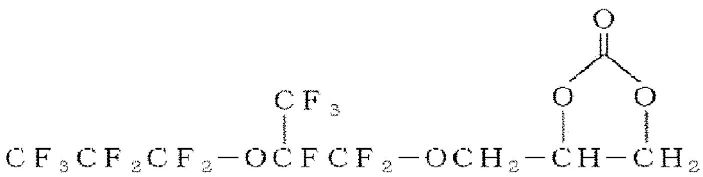

、

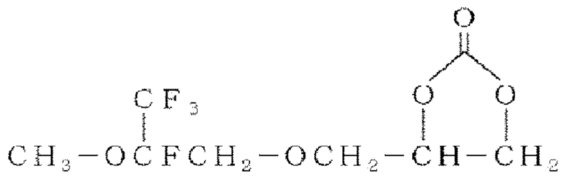 、

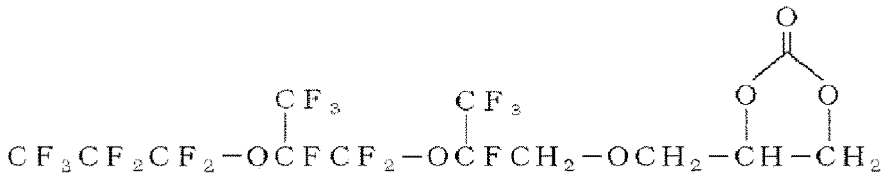 、

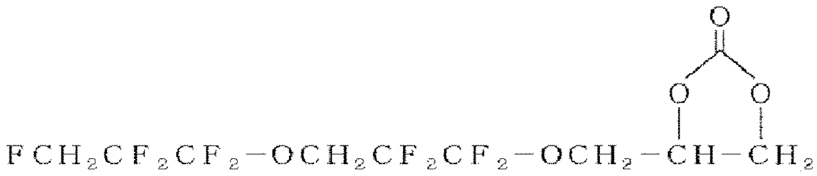 、

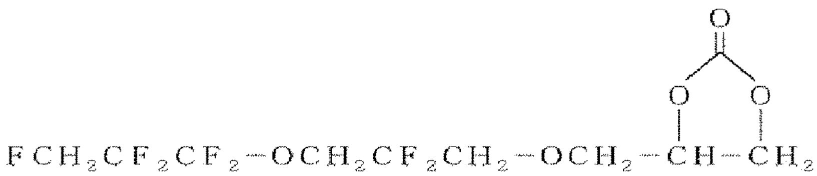 、

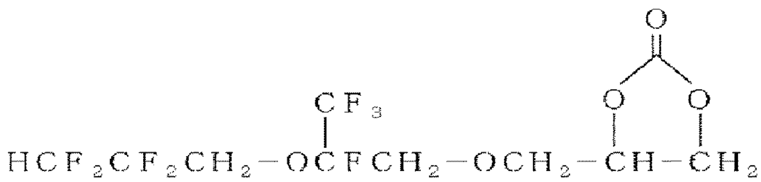 、

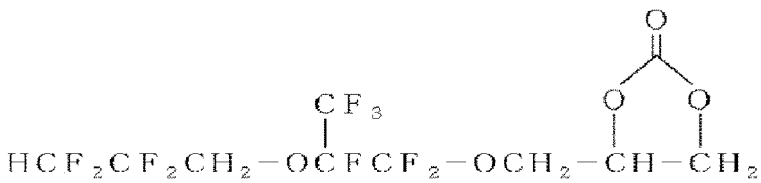 、

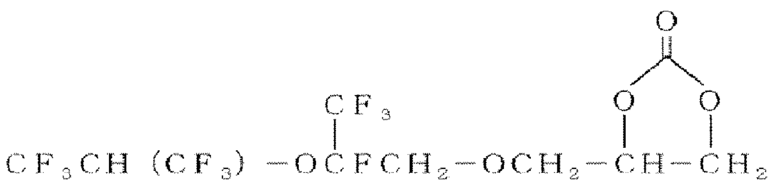 、

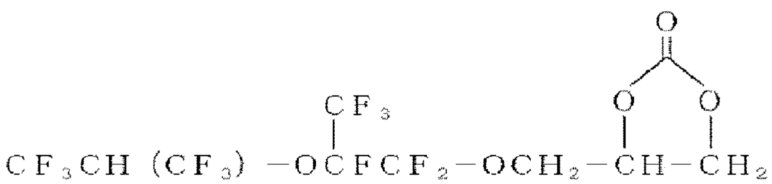 、

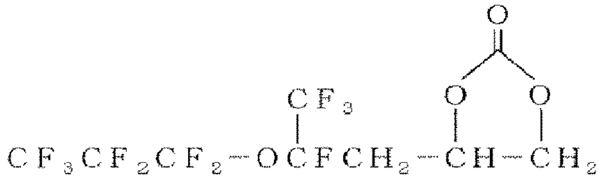

、

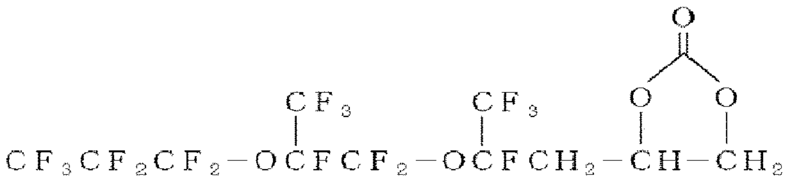

、

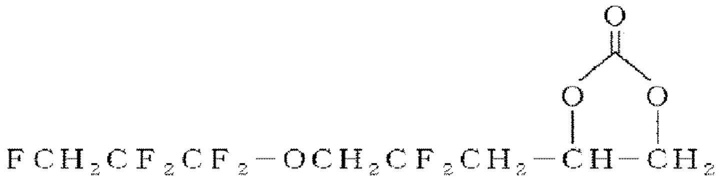

、

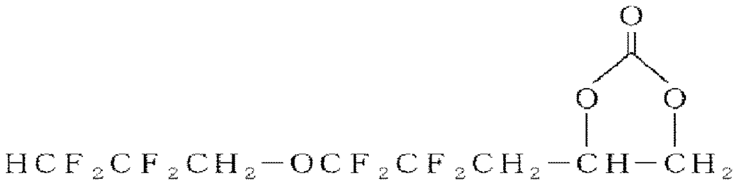

、

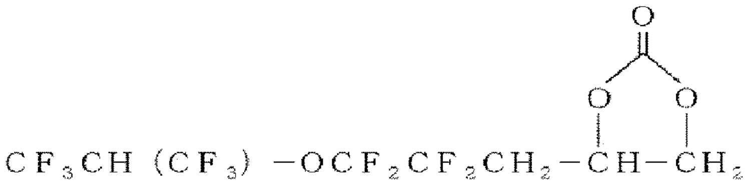

、

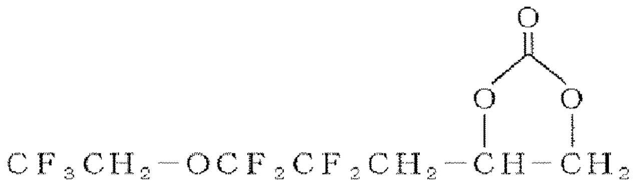

、

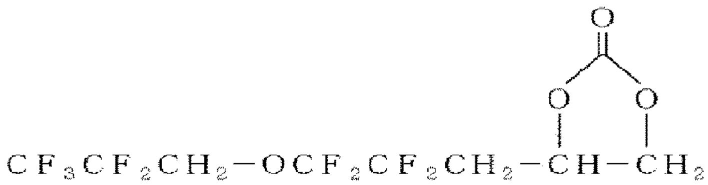

、

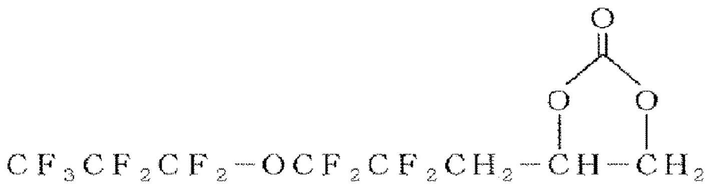

、

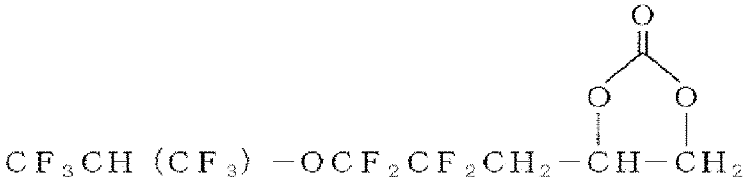 、

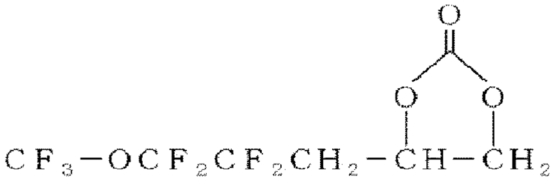 、

and

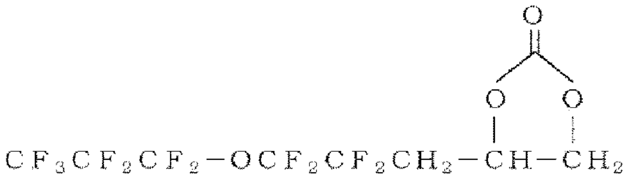 、

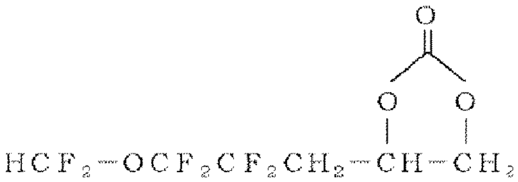 、

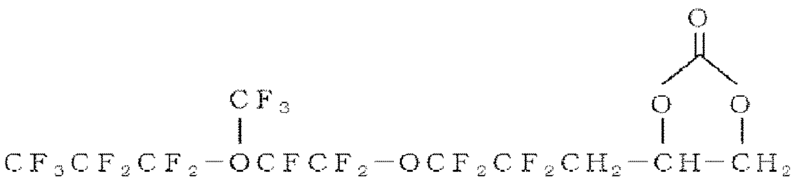 、

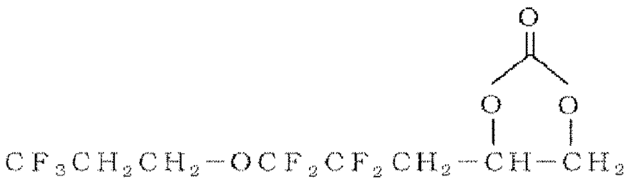 、

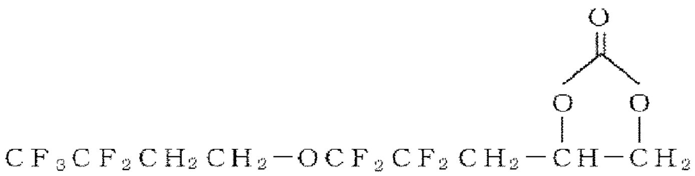 、

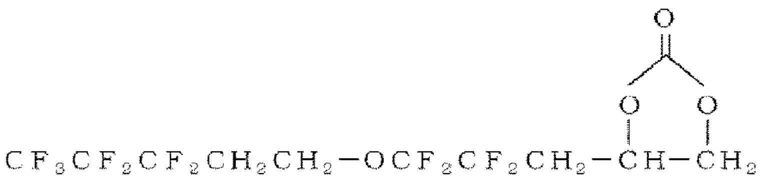 、

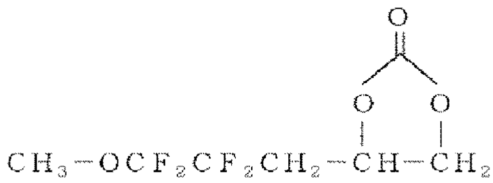

Among these, the fluorinated saturated cyclic carbonate is preferably any of the following compounds.

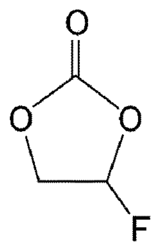
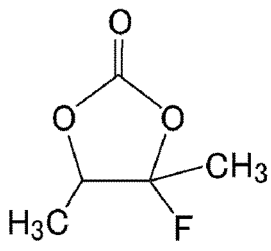
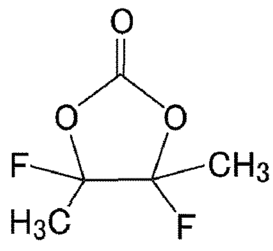
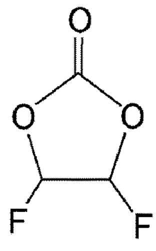

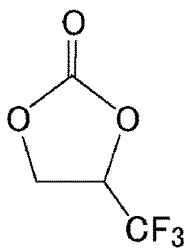
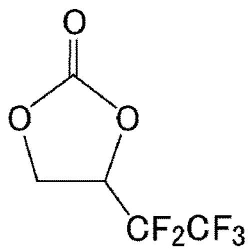
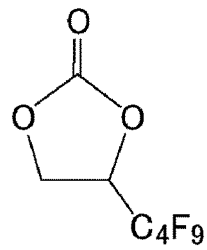
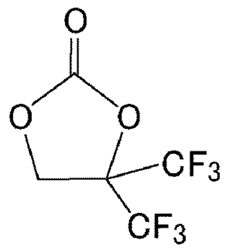

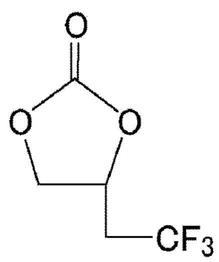
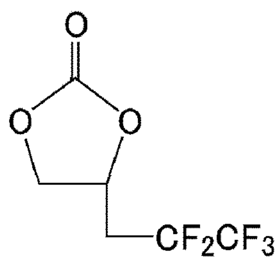
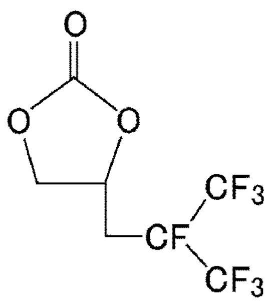
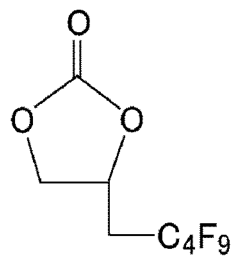

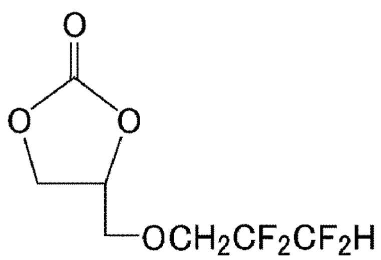
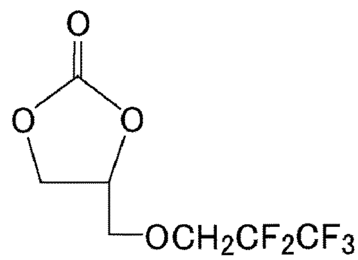
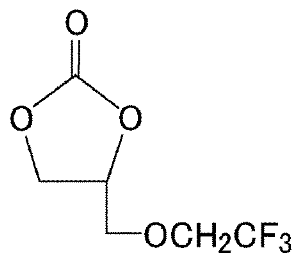

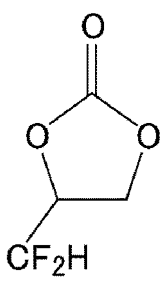
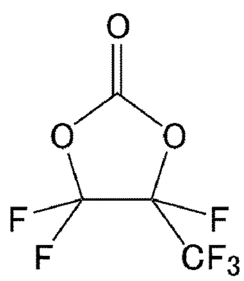
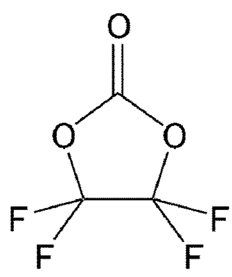
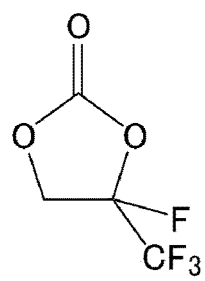

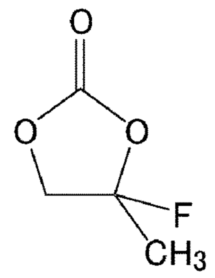 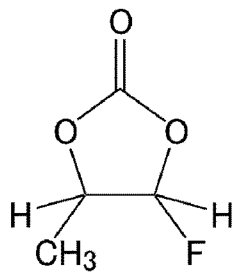 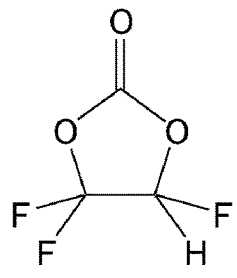 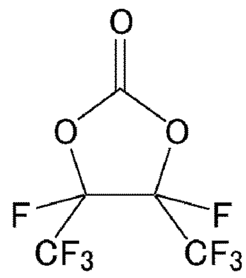

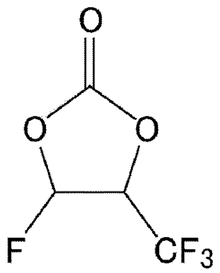

Examples of the fluorinated saturated cyclic carbonate also include trans-4,5-difluoro-1,3-dioxolan-2-one, 5-(1,1-difluoroethyl)-4,4-difluoro-1,3-dioxolan-2-one, 4-methylene-1,3-dioxolan-2-one, 4-methyl-5-trifluoromethyl-1,3-dioxolan-2-one, 4-ethyl-5-fluoro-1,3-dioxolan-2-one, 4-ethyl-5,5-difluoro-1,3-dioxolan-2-one, 4-ethyl-4,5-difluoro-1,3-dioxolan-2-one, 4-ethyl-4,5,5-trifluoro-1,3-dioxolan-2-one, 4,4-difluoro-5-methyl-1,3-dioxolan-2-one, 4-fluoro-5-methyl-1,3-dioxolan-2-one, 4-fluoro-5-trifluoromethyl-1,3-dioxolan-2-one, and 4,4-difluoro-1,3-dioxolan-2-one.

More preferred among these as the fluorinated saturated cyclic carbonate are fluoroethylene carbonate, difluoroethylene carbonate, trifluoromethylethylene carbonate (3,3,3-trifluoropropylene carbonate), and 2,2,3,3,3-pentafluoropropylethylene carbonate.

The fluorinated unsaturated cyclic carbonate is a cyclic carbonate having an unsaturated bond and a fluorine atom, and is preferably a fluorinated ethylene carbonate derivative substituted with a substituent having an aromatic ring or a carbon-carbon double bond. Specific examples thereof include 4,4-difluoro-5-phenyl ethylene carbonate, 4,5-difluoro-4-phenyl ethylene carbonate, 4-fluoro-5-phenyl ethylene carbonate, 4-fluoro-5-vinyl ethylene carbonate, 4-fluoro-4-phenyl ethylene carbonate, 4,4-difluoro-4-vinyl ethylene carbonate, 4,4-difluoro-4-allyl ethylene carbonate, 4-fluoro-4-vinyl ethylene carbonate, 4-fluoro-4,5-diallyl ethylene carbonate, 4,5-difluoro-4-vinyl ethylene carbonate, 4,5-difluoro-4,5-divinyl ethylene carbonate, and 4,5-difluoro-4,5-diallyl ethylene carbonate.

One of the fluorinated cyclic carbonates may be used singly, or two or more thereof may be used in any combination at any ratio.

When the fluorinated cyclic carbonate is contained, the content of the fluorinated cyclic carbonate is preferably 5 to 90% by volume, more preferably 10 to 60% by volume, further preferably 15 to 45% by volume with respect to the solvent.

The chain carbonate may be a non-fluorinated chain carbonate or a fluorinated chain carbonate.

Examples of the non-fluorinated chain carbonate include hydrocarbon-based chain carbonates such as $CH_3OCOOCH_3$ (dimethyl carbonate, DMC), $CH_3CH_2OCOOCH_2CH_3$ (diethyl carbonate, DEC), $CH_3CH_2OCOOCH_3$ (ethyl methyl carbonate, EMC), $CH_3OCOOCH_2CH_2CH_3$ (methyl propyl carbonate), methyl butyl carbonate, ethyl propyl carbonate, ethyl butyl carbonate, dipropyl carbonate, dibutyl carbonate, methyl isopropyl carbonate, methyl-2-phenyl phenyl carbonate, phenyl-2-phenyl phenyl carbonate, trans-2,3-pentylene carbonate, trans-2,3-butylene carbonate, and ethyl phenyl carbonate. Preferred among these is at least one selected from the group consisting of ethyl methyl carbonate, diethyl carbonate, and dimethyl carbonate.

One of the non-fluorinated chain carbonates may be used singly, or two or more thereof may be used in any combination at any ratio.

When the non-fluorinated chain carbonate is contained, the content of the non-fluorinated chain carbonate is preferably 10 to 90% by volume, more preferably 40 to 85% by volume, further preferably 50 to 80% by volume with respect to the solvent.

The fluorinated chain carbonate is a chain carbonate having a fluorine atom. A solvent containing a fluorinated chain carbonate can be suitably used also at a high voltage.

An example of the fluorinated chain carbonate can include a compound represented by the general formula (B):

$$Rf^2OCOOR^7 \qquad (B)$$

wherein $Rf^2$ is a fluorinated alkyl group having 1 to 7 carbon atoms, and $R^7$ is an alkyl group having 1 to 7 carbon atoms and optionally containing a fluorine atom.

$Rf^2$ is a fluorinated alkyl group having 1 to 7 carbon atoms, and $R^7$ is an alkyl group having 1 to 7 carbon atoms and optionally containing a fluorine atom.

The fluorinated alkyl group is a group obtainable by replacing at least one hydrogen atom of an alkyl group by a fluorine atom. When $R^7$ is an alkyl group containing a fluorine atom, the group is a fluorinated alkyl group.

$Rf^2$ and $R^7$ preferably have 1 to 7 carbon atoms, more preferably 1 to 2 carbon atoms, in view of giving a low viscosity.

An excessively large number of carbon atoms may lead to deterioration of the low-temperature characteristics and decrease in the solubility of an electrolyte salt. An excessively small number of carbon atoms may lead to decrease in the solubility of an electrolyte salt, decrease in the discharge efficiency, additionally, increase in the viscosity, and the like.

Examples of the fluorinated alkyl group having 1 carbon atom include $CFH_2$-, $CF_2H$-, and $CF_3$-. In respect of high-temperature storage characteristics, particularly preferred is $CFH_2$- or $CF_3$-.

In respect of favorable solubility of an electrolyte salt, a preferred example of the fluorinated alkyl group having 2 or more carbon atoms includes a fluorinated alkyl group represented by the following general formula (d-1):

$R^1$-$R^2$- (d-1)

wherein $R^1$ is an alkyl group having one or more carbon atoms and optionally having a fluorine atom; $R^2$ is an alkylene group having 1 to 3 carbon atoms and optionally having a fluorine atom; provided that at least one of $R^1$ and $R^2$ has a fluorine atom.

$R^1$ and $R^2$ each may further have an atom other than carbon, hydrogen, and fluorine atoms.

$R^1$ is an alkyl group having one or more carbon atoms and optionally having a fluorine atom. $R^1$ is preferably a linear or branched chain alkyl group having 1 to 6 carbon atoms. $R^1$ has more preferably 1 to 3 carbon atoms.

Specific examples of linear or branched chain alkyl groups for $R^1$ include $CH_3$-, $CH_3CH_2$-, $CH_3CH_2CH_2$-, $CH_3CH_2CH_2CH_2$-,

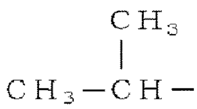 、 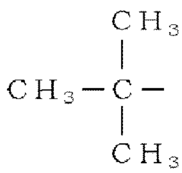

When $R^1$ is a linear alkyl group having a fluorine atom, examples of $R^1$ include $CF_3$-, $CF_3CH_2$-, $CF_3CF_2$-, $CF_3CH_2CH_2$-, $CF_3CF_2CH_2$-, $CF_3CF_2CF_2$-, $CF_3CH_2CF_2$-, $CF_3CH_2CH_2CH_2$-, $CF_3CF_2CH_2CH_2$-, $CF_3CH_2CF_2CH_2$-, $CF_3CF_2CF_2CH_2$-, $CF_3CF_2CF_2CF_2$-, $CF_3CF_2CH_2CF_2$-, $CF_3CH_2CH_2CH_2CH_2$-, $CF_3CF_2CH_2CH_2CH_2$-, $CF_3CH_2CF_2CH_2CH_2$-, $CF_3CF_2CF_2CH_2CH_2$-, $CF_3CF_2CF_2CF_2CH_2$-, $CF_3CF_2CH_2CF_2CH_2$-, $CF_3CF_2CH_2CH_2CH_2CH_2$-, $CF_3CF_2CF_2CF_2CH_2CH_2$-, $CF_3CF_2CH_2CF_2CH_2CH_2$-, $HCF_2$-, $HCF_2CH_2$-, $HCF_2CF_2$-, $HCF_2CH_2CH_2$-, $HCF_2CF_2CH_2$-, $HCF_2CH_2CF_2$-, $HCF_2CF_2CH_2CH_2$-, $HCF_2CH_2CF_2CH_2$-, $HCF_2CF_2CF_2CF_2$-, $HCF_2CF_2CH_2CH_2CH_2$-, $HCF_2CH_2CF_2CH_2CH_2$-, $HCF_2CF_2CF_2CF_2CH_2$-, $HCF_2CF_2CF_2CF_2CH_2CH_2$-, $FCH_2$-, $FCH_2CH_2$-, $FCH_2CF_2$-, $FCH_2CF_2CH_2$-, $FCH_2CF_2CF_2$-, $CH_3CF_2CH_2$-, $CH_3CF_2CF_2$-, $CH_3CF_2CH_2CF_2$-, $CH_3CF_2CF_2CF_2$-, $CH_3CH_2CF_2CF_2$-, $CH_3CF_2CH_2CF_2CH_2$-, $CH_3CF_2CF_2CF_2CH_2$-, $CH_3CF_2CF_2CH_2CH_2$-, $CH_3CH_2CF_2CF_2CH_2$-, $CH_3CF_2CH_2CF_2CH_2CH_2$-, $CH_3CF_2CH_2CF_2CH_2CH_2$-, $HCFClCF_2CH_2$-, $HCF_2CFClCH_2$-, $HCF_2CFClCF_2CFClCH_2$-, and $HCFClCF_2CFClCF_2CH_2$-.

When $R^1$ is a branched chain alkyl group having a fluorine atom, preferred examples of $R^1$ include groups below.

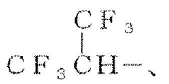 、 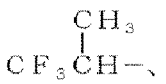 、 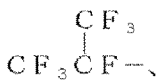 、 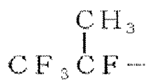 、

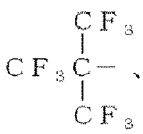 、 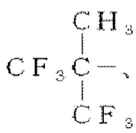 、 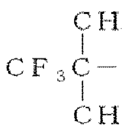 、

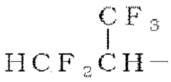, 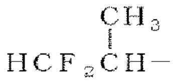, 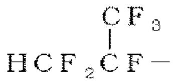, 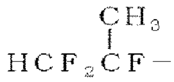,

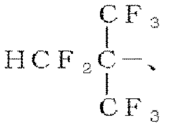, 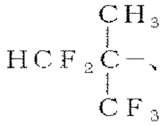, 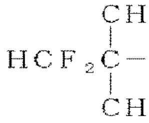,

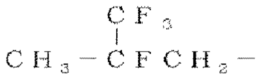, 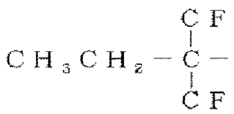,

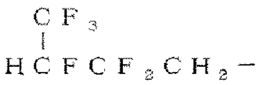, 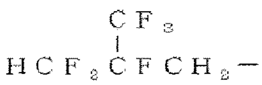, 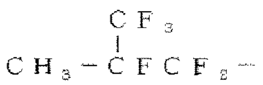,

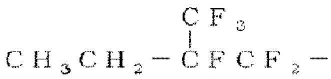, 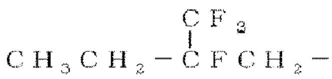,

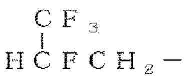, 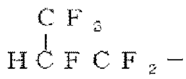, 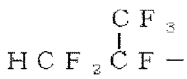,

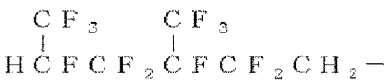, 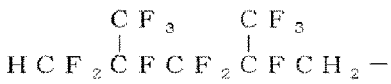,

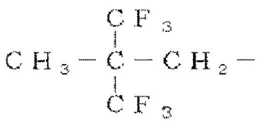

However, if a branch such as $CH_3$- or $CF_3$- is contained, the viscosity is likely to increase. Thus, the number of such branches is more preferably small (one) or zero.

$R^2$ is an alkylene group having 1 to 3 carbon atoms and optionally having a fluorine atom. $R^2$ may be linear or branched chain. Examples of a minimum structural unit constituting such a linear or branched chain alkylene group are shown below. $R^2$ is constituted by one or a combination of these units.

(i) Linear Minimum Structural Units:
$-CH_2-$, $-CHF-$, $-CF_2-$, $-CHCl-$, $-CFCl-$, $-CCl_2-$[0320]
(ii) Branched chain Minimum Structural Units:

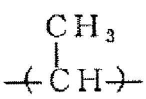, 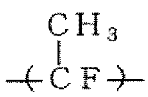, 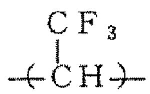, 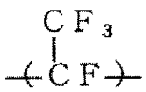,

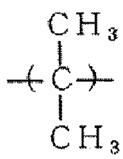, 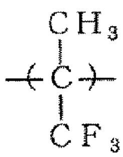, 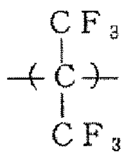,

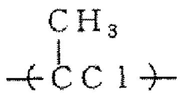 、 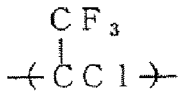

$R^2$ is preferably constituted by Cl-free structural units among these examples, because such units may not be dehydrochlorinated by a base and thus may be more stable.

When being linear, $R^2$ is composed only of any of the above linear minimum structural units, and is preferably - $CH_2$-, -$CH_2CH_2$-, or $CF_2$- among these. Since the solubility of an electrolyte salt can be further improved, -$CH_2$- or -$CH_2CH_2$-is more preferred.

When being branched chain, $R^2$ includes at least one of the above branched chain minimum structural units. A preferred example thereof is a group represented by the general formula: -($CX^aX^b$)-, wherein $X^a$ is H, F, $CH_3$, or $CF_3$; $X^b$ is $CH_3$ or $CF_3$; provided that, when $X^b$ is $CF_3$, $X^a$ is H or $CH_3$. Such groups can much further particularly improve the solubility of an electrolyte salt.

Preferred specific examples of the fluorinated alkyl group include groups below.

$CF_3CF_2$-, $HCF_2CF_2$-, $H_2CFCF_2$-, $CH_3CF_2$-, $CF_3CH_2$-, $CF_3CF_2CF_2$-, $HCF_2CF_2CF_2$-, $H_2CFCF_2CF_2$-, $CH_3CF_2CF_2$-,

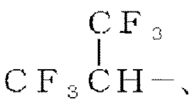 、 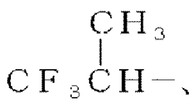 、 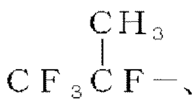 、

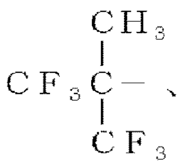 、 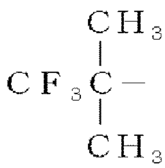 、

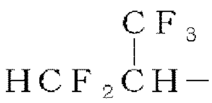 、 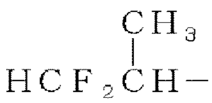 、 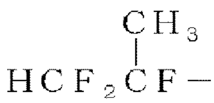 、

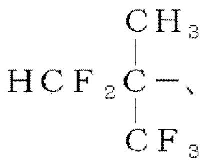 、 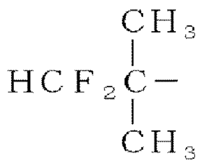 、

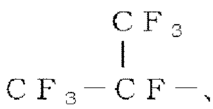 、 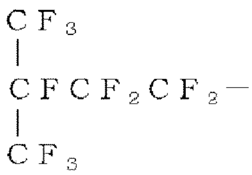 、

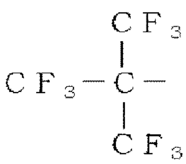 、

Among these, the fluorinated alkyl group for $Rf^2$ and $R^7$ is preferably $CF_3$-, $CF_3CF_2$-, $(CF_3)_2CH$-, $CF_3CH_2$-, $C_2F_5CH_2$-, $CF_3CF_2CH_2$-, $HCF_2CF_2CH_2$-, $CF_3CFHCF_2CH_2$-, $CFH_2$-, or $CF_2H$-, more preferably $CF_3CH_2$-, $CF_3CF_2CH_2$-,

$HCF_2CF_2CH_2$-, $CFH_2$-, or $CF_2H$-, in view of high flame retardancy and favorable rate characteristics and oxidation resistance.

When $R^7$ is an alkyl group containing no fluorine atom, the group is an alkyl group having 1 to 7 carbon atoms. $R^7$ has preferably 1 to 4 carbon atoms, more preferably 1 to 3 carbon atoms, in view of giving a low viscosity.

Examples of the alkyl group containing no fluorine atom include $CH_3$-, $CH_3CH_2$-, $(CH_3)_2CH$-, and $C_3H_7$-. Among these, $CH_3$- and $CH_3CH_2$- are preferred, in view of giving a low viscosity and favorable rate characteristics.

The fluorinated chain carbonate preferably has a fluorine content of 15 to 70% by mass. The fluorinated chain carbonate, when having a fluorine content in the range described above, can maintain the miscibility with a solvent and the solubility of a salt. The fluorine content is more preferably 20% by mass or more, further preferably 30% by mass or more, particularly preferably 35% by mass or more, and more preferably 60% by mass or less, further preferably 50% by mass or less.

In the present disclosure, the fluorine content is a value calculated based on the structural formula of the fluorinated chain carbonate by:

$$[(\text{Number of fluorine atoms} \times 19)/(\text{Mc fluorinated chain carbonate})] \times 100\ (\%).$$

The fluorinated chain carbonate is preferably any of the following compounds, in view of giving a low viscosity.

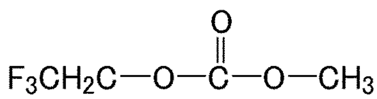

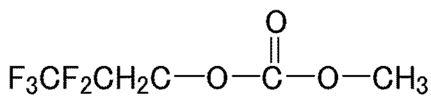

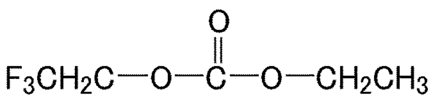

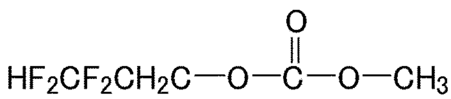

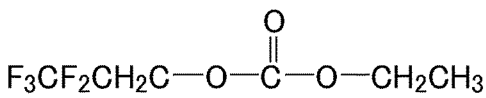

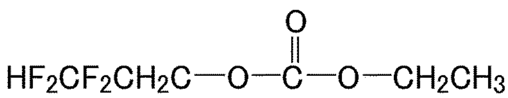

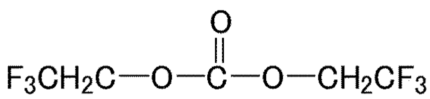

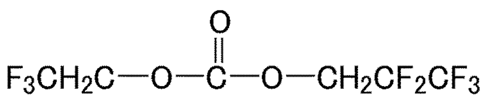

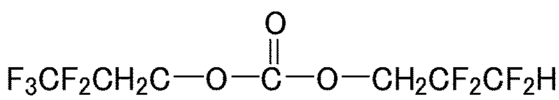

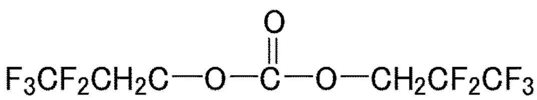

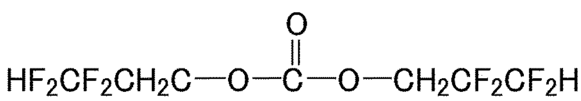

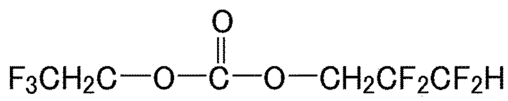

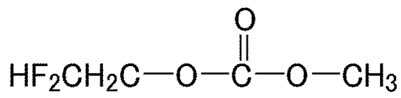

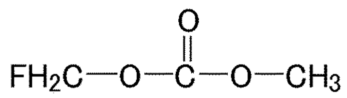

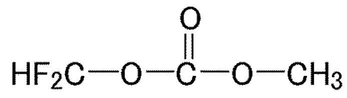

The fluorinated chain carbonate is particularly preferably methyl 2,2,2-trifluoroethyl carbonate ($F_3CH_2COC(=O)OCH_3$).

One of the fluorinated chain carbonates may be used singly, or two or more thereof may be used in any combination at any ratio.

When the fluorinated chain carbonate is contained, the content of the fluorinated chain carbonate is preferably 10 to 90% by volume, more preferably 40 to 85% by volume, further preferably 50 to 80% by volume with respect to the solvent.

The carboxylate may be a cyclic carboxylate or a chain carboxylate.

The cyclic carboxylate may be a non-fluorinated cyclic carboxylate or a fluorinated cyclic carboxylate.

An example of the non-fluorinated cyclic carboxylate includes a non-fluorinated saturated cyclic carboxylate. Preferred is a non-fluorinated saturated cyclic carboxylate having an alkylene group having 2 to 4 carbon atoms.

Specific examples of the non-fluorinated saturated cyclic carboxylate having an alkylene group having 2 to 4 carbon atoms include β-propiolactone, γ-butyrolactone, ε-caprolactone, δ-valerolactone, and α-methyl-γ-butyrolactone. Among these, γ-butyrolactone and δ-valerolactone are particularly preferred, in view of improvement of the degree of dissociation of lithium ions and improvement of the load characteristics.

One of the non-fluorinated saturated cyclic carboxylates may be used singly, or two or more thereof may be used in any combination at any ratio.

When the non-fluorinated saturated cyclic carboxylate is contained, the content of the non-fluorinated saturated cyclic carboxylate is preferably 0 to 90% by volume, more preferably 0.001 to 90% by volume, further preferably 1 to 60% by volume, particularly preferably 5 to 40% by volume with respect to the solvent.

The chain carboxylate may be a non-fluorinated chain carboxylate or a fluorinated chain carboxylate. When containing the chain carboxylate, the solvent enables the electrolytic solution to have a further suppressed increase in resistance after high-temperature storage.

Examples of the non-fluorinated chain carboxylate include methyl acetate, ethyl acetate, propyl acetate, butyl acetate, methyl propionate, ethyl propionate, propyl propionate, butyl propionate, tert-butyl propionate, tert-butyl butyrate, sec-butyl propionate, sec-butyl butyrate, n-butyl butyrate, methyl pyrophosphate, ethyl pyrophosphate, tert-butyl formate, tert-butyl acetate, sec-butyl formate, sec-butyl acetate, n-hexyl pivalate, n-propyl formate, n-propyl acetate, n-butyl formate, n-butyl pivalate, n-octyl pivalate, ethyl 2-(dimethoxyphosphoryl)acetate, ethyl 2-(dimethylphosphoryl)acetate, ethyl 2-(diethoxyphosphoryl)acetate, ethyl 2-(diethylphosphoryl)acetate, isopropyl propionate, isopropyl acetate, ethyl formate, ethyl 2-propynyl oxalate, isopropyl formate, isopropyl butyrate, isobutyl formate, isobutyl propionate, isobutyl butyrate, and isobutyl acetate.

Among these, butyl acetate, methyl propionate, ethyl propionate, propyl propionate, and butyl propionate are preferred, and ethyl propionate and propyl propionate are particularly preferred.

One of the non-fluorinated chain carboxylates may be used singly, or two or more thereof may be used in any combination at any ratio.

When the non-fluorinated chain carboxylate is contained, the content of the non-fluorinated chain carboxylate is preferably 0 to 90% by volume, more preferably 0.001 to 90% by volume, further preferably 1 to 60% by volume, particularly preferably 5 to 40% by volume with respect to the solvent.

The fluorinated chain carboxylate is a chain carboxylate having a fluorine atom. A solvent containing a fluorinated chain carboxylate can be suitably used also at a high voltage.

In view of favorable miscibility with other solvents and favorable oxidation resistance, the fluorinated chain carboxylate is preferably a fluorinated chain carboxylate represented by the following general formula:

$R^{31}COOR^{32}$

wherein $R^{31}$ and $R^{32}$ are each independently an alkyl group having 1 to 4 carbon atoms and optionally having a fluorine atom, and at least one of $R^{31}$ and $R^{32}$ contains a fluorine atom.

Examples of $R^{31}$ and $R^{32}$ include non-fluorinated alkyl groups such as a methyl group ($-CH_3$), an ethyl group ($-CH_2CH_3$), a propyl group ($-CH_2CH_2CH_3$), an isopropyl group ($-CH(CH_3)_2$), a n-butyl group ($-CH_2CH_2CH_2CH_3$), and a tertiary butyl group ($-C(CH_3)_3$); and fluorinated alkyl groups such as $-CF_3$, $-CF_2H$, $-CFH_2$, $-CF_2CF_3$, $-CF_2CF_2H$, $-CF_2CFH_2$, $-CH_2CF_3$, $-CH_2CF_2H$, $-CH_2CFH_2$, $-CF_2CF_2CF_3$, $-CF_2CF_2CF_2H$, $-CF_2CF_2CFH_2$, $-CH_2CF_2CF_3$, $-CH_2CF_2CF_2H$,$-CH_2CF_2CFH_2$, $-CH_2CH_2CF_3$, $-CH_2CH_2CF_2H$, $-CH_2CH_2CFH_2$, $-CF(CF_3)_2$,$-CF(CF_2H)_2$, $-CF(CFH_2)_2$, $-CH(CF_3)_2$, $-CH(CF_2H)_2$, $-CH(CFH_2)_2$,$-CF(OCH_3)CF_3$, $-CF_2CF_2CF_2CF_3$, $-CF_2CF_2CF_2CF_2H$, $-CF_2CF_2CF_2CFH_2$, $-CH_2CF_2CF_2CF_3$, $-CH_2CF_2CF_2CF_2H$, $-CH_2CF_2CF_2CFH_2$, $-CH_2CH_2CF_2CF_3$, $-CH_2CH_2CF_2CF_2H$, $-CH_2CH_2CF_2CFH_2$, $-CH_2CH_2CH_2CF_3$, $-CH_2CH_2CH_2CF_2H$, $-CH_2CH_2CH_2CFH_2$, $-CF(CF_3)CF_2CF_3$, $-CF(CF_2H)CF_2CF_3$, $-CF(CFH_2)CF_2CF_3$, $-CF(CF_3)CF_2CF_2H$, $-CF(CF_3)CF_2CFH_2$, $-CF(CF_3)CH_2CF_3$, $-CF(CF_3)CH_2CF_2H$, $-CF(CF_3)CH_2CFH_2$, $-CH(CF_3)CF_2CF_3$, $-CH(CF_2H)CF_2CF_3$, $-CH(CFH_2)CF_2CF_3$, $-CH(CF_3)CF_2CF_2H$, $-CH(CF_3)CF_2CFH_2$, $-CH(CF_3)CH_2CF_3$, $-CH(CF_3)CH_2CF_2H$, $-CH(CF_3)CH_2CFH_2$, $-CF_2CF(CF_3)CF_3$, $-CF_2CF(CF_2H)CF_3$, $-CF_2CF(CFH_2)CF_3$, $-CF_2CF(CF_3)CF_2H$, $-CF_2CF(CF_3)CFH_2$, $-CH_2CF(CF_3)CF_3$, $-CH_2CF(CF_2H)CF_3$, $-CH_2CF(CFH_2)CF_3$, $-CH_2CF(CF_3)CF_2H$, $-CH_2CF(CF_3)CFH_2$, $-CH_2CH(CF_3)CF_3$, $-CH_2CH(CF_2H)CF_3$, $-CH_2CH(CFH_2)CF_3$, $-CH_2CH(CF_3)CF_2H$, $-CH_2CH(CF_3)CFH_2$, $-CF_2CH(CF_3)CF_3$, $-CF_2CH(CF_2H)CF_3$, $-CF_2CH(CFH_2)CF_3$, $-CF_2CH(CF_3)CF_2H$, $-CF_2CH(CF_3)CFH_2$, $-C(CF_3)_3$,$-C(CF_2H)_3$, and $-C(CFH_2)_3$. Particularly preferred among these are a methyl group, an ethyl group, $-CF_3$, $-CF_2H$, $-CF_2CF_3$, $-CH_2CF_3$, $-CH_2CF_2H$, $-CH_2CFH_2$, $-CH_2CH_2CF_3$, $-CH_2CF_2CF_3$, $-CH_2CF_2CF_2H$, and $-CH_2CF_2CFH_2$, in view of favorable miscibility with other solvents, viscosities, and oxidation resistance.

Specific examples of the fluorinated chain carboxylate include one or two or more of $CF_3CH_2C(=O)OCH_3$ (methyl 3,3,3-trifluoropropionate), $HCF_2C(=O)OCH_3$ (methyl difluoroacetate), $HCF_2C(=O)OC_2H_5$ (ethyl difluoroacetate), $CF_3C(=O)OCH_2CH_2CF_3$, $CF_3C(=O)OCH_2C_2F_5$, $CF_3C(=O)OCH_2CF_2CF_2H$ (2,2,3,3-tetrafluoropropyl trifluoroacetate), $CF_3C(=O)OCH_2CF_3$, $CF_3C(=O)OCH(CF_3)_2$, ethyl pentafluorobutyrate, methyl pentafluoropropionate, ethyl pentafluoropropionate, methyl heptafluoroisobutyrate, isopropyl trifluorobutyrate, ethyl trifluoroacetate, tert-butyl trifluoroacetate, n-butyl trifluoroacetate, methyl tetrafluoro-2-(methoxy)propionate, 2,2-difluoroethyl acetate, 2,2,3,3-tetrafluoropropyl acetate, $CH_3C(=O)OCH_2CF_3$ (2,2,2-trifluoroethyl acetate), 1H,1H-heptafluorobutyl acetate, methyl 4,4,4-trifluorobutyrate, ethyl 4,4,4-trifluorobutyrate, ethyl 3,3,3-trifluoropropionate, 3,3,3-trifluoropropyl 3,3,3-trifluoropropionate, ethyl 3-(trifluoromethyl)butyrate, methyl 2,3,3,3-tetrafluoropropionate, butyl 2,2-difluoroacetate, methyl 2,2,3,3-tetrafluoropropionate, methyl 2-(trifluoromethyl)-3,3,3-trifluoropropionate, and methyl heptafluorobutyrate.

Among these, preferred are $CF_3CH_2C(=O)OCH_3$, $HCF_2C(=O)OCH_3$, $HCF_2C(=O)OC_2H_5$, $CF_3C(=O)OCH_2C_2F_5$, $CF_3C(=O)OCH_2CF_2CF_2H$, $CF_3C(=O)OCH_2CF_3$, $CF_3C(=O)OCH(CF_3)_2$, ethyl pentafluorobutyrate, methyl pentafluoropropionate, ethyl pentafluoropropionate, methyl heptafluoroisobutyrate, isopropyl trifluorobutyrate, ethyl trifluoroacetate, tert-butyl trifluoroacetate, n-butyl trifluoroacetate, methyl tetrafluoro-2-(methoxy)propionate, 2,2-difluoroethyl acetate, 2,2,3,3-tetrafluoropropyl acetate, $CH_3C(=O)OCH_2CF_3$, 1H,1H-heptafluorobutyl acetate, methyl 4,4,4-trifluorobutyrate, ethyl 4,4,4-trifluorobutyrate, ethyl 3,3,3-trifluoropropionate, 3,3,3-trifluoropropyl 3,3,3-trifluoropropionate, ethyl 3-(trifluoromethyl)butyrate, methyl 2,3,3,3-tetrafluoropropionate, butyl 2,2-difluoroacetate, methyl 2,2,3,3,-tetrafluoropropionate, methyl 2-(trifluoromethyl)-3,3,3-trifluoropropionate, and methyl heptafluorobutyrate, in view of favorable miscibility with other solvents and rate characteristics, more preferred are $CF_3CH_2C(=O)OCH_3$, $HCF_2C(=O)OCH_3$, $HCF_2C(=O)OC_2H_5$, and $CH_3C(=O)OCH_2CF_3$, and particularly preferred are $HCF_2C(=O)OCH_3$, $HCF_2C(=O)OC_2H_5$, and $CH_3C(=O)OCH_2CF_3$.

One of the fluorinated chain carboxylates may be used singly, or two or more thereof may be used in any combination at any ratio.

When the fluorinated chain carboxylate is contained, the content of the fluorinated chain carboxylate is preferably 10 to 90% by volume, more preferably 40 to 85% by volume, further preferably 50 to 80% by volume with respect to the solvent.

The solvent preferably contains at least one selected from the group consisting of the cyclic carbonate, the chain carbonate, and the chain carboxylate, more preferably contains the cyclic carbonate and at least one selected from the group consisting of the chain carbonate and the chain carboxylate. The above cyclic carbonate is preferably a saturated cyclic carbonate. An electrolytic solution containing a solvent of the compositional feature enables an electrochemical device to have further improved high-temperature storage characteristics and cycle characteristics.

When the above solvent contains the above cyclic carbonate and at least one selected from the group consisting of the above chain carbonate and the above chain carboxylate, the solvent contains the above cyclic carbonate and at least one selected from the group consisting of the above chain carbonate and the above chain carboxylate in a total amount of preferably 10 to 100% by volume, more preferably, 30 to 100% by volume, further preferably 50 to 100% by volume.

When the above solvent contains the above cyclic carbonate and at least one selected from the group consisting

of the above chain carbonate and the above chain carboxylate, the volume ratio of the cyclic carbonate to at least one selected from the group consisting of the chain carbonate and the chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The solvent also preferably contains at least one selected from the group consisting of the above non-fluorinated saturated cyclic carbonate, the above non-fluorinated chain carbonate, and the above non-fluorinated chain carboxylate, more preferably contains the above non-fluorinated saturated cyclic carbonate and at least one selected from the group consisting of the above non-fluorinated chain carbonate and the above non-fluorinated chain carboxylate. An electrolytic solution containing a solvent having the above compositional feature can be suitably used for electrochemical devices used at a relatively low voltage.

When the above solvent contains the above non-fluorinated saturated cyclic carbonate and at least one selected from the group consisting of the above non-fluorinated chain carbonate and the above non-fluorinated chain carboxylate, the other solvent contains the non-fluorinated saturated cyclic carbonate and at least one selected from the group consisting of the non-fluorinated chain carbonate and the non-fluorinated chain carboxylate in a total amount of preferably 5 to 100% by volume, more preferably 20 to 100% by volume, further preferably 30 to 100% by volume.

When the electrolytic solution contains the above non-fluorinated saturated cyclic carbonate and at least one selected from the group consisting of the above non-fluorinated chain carbonate and the above non-fluorinated chain carboxylate, the volume ratio of the non-fluorinated saturated cyclic carbonate to at least one selected from the group consisting of the non-fluorinated chain carbonate and the non-fluorinated chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The above solvent also preferably contains at least one selected from the group consisting of the above fluorinated saturated cyclic carbonate, the above fluorinated chain carbonate, and the above fluorinated chain carboxylate, more preferably contains the above fluorinated saturated cyclic carbonate and at least one selected from the group consisting of the above fluorinated chain carbonate and the above fluorinated chain carboxylate. An electrolytic solution containing a solvent of the compositional feature can be suitably used not only for electrochemical devices used at a relatively low voltage but also for electrochemical devices used at a relatively high voltage.

When the above solvent contains the above fluorinated saturated cyclic carbonate and at least one selected from the group consisting of the above fluorinated chain carbonate and the above fluorinated chain carboxylate, the other solvent contains the fluorinated saturated cyclic carbonate and at least one selected from the group consisting of the fluorinated chain carbonate and the fluorinated chain carboxylate in a total amount of preferably 5 to 100% by volume, more preferably 10 to 100% by volume, further preferably 30 to 100% by volume.

When the solvent contains the above fluorinated saturated cyclic carbonate and at least one selected from the group consisting of the above fluorinated chain carbonate and the above fluorinated chain carboxylate, the volume ratio of the fluorinated saturated cyclic carbonate to at least one selected from the group consisting of the fluorinated chain carbonate and the fluorinated chain carboxylate is preferably 5/95 to 95/5, more preferably 10/90 or more, further preferably 15/85 or more, particularly preferably 20/80 or more, and more preferably 90/10 or less, further preferably 60/40 or less, particularly preferably 50/50 or less.

The above solvent to be used may be an ion liquid. The "ion liquid" is a liquid composed of an ion containing an organic cation and an anion in combination.

Examples of the organic cation include, but are not limited to, imidazolium ions such as dialkyl imidazolium cations and trialkyl imidazolium cations; tetraalkyl ammonium ions; alkyl pyridinium ions; dialkyl pyrrolidinium ions; and dialkyl piperidinium ions.

Examples of the anion to be used as a counterion of any of these organic cations include, but are not limited to, a $PF_6$ anion, a $PF_3(C_2F_5)_3$ anion, a $PF_3(CF_3)_3$ anion, a $BF_4$ anion, a $BF_2(CF_3)_2$ anion, a $BF_3$ $(CF_3)$anion, a bisoxalatoborate anion, a $P(C_2O_4)F_2$ anion, a Tf (trifluoromethanesulfonyl) anion, a Nf (nonafluorobutanesulfonyl) anion, a bis(fluorosulfonyl)imide anion, a bis(trifluoromethanesulfonyl)imide anion, a bis(pentafluoroethanesulfonyl)imide anion, a dicyanoamine anion, and halide anions.

The solvent is preferably a non-aqueous solvent, and the electrolytic solution used in the present disclosure is preferably a non-aqueous electrolytic solution.

The content of the solvent is preferably 70 to 99.999% by mass, more preferably 80% by mass or more, more preferably 92% by mass or less relative to electrolytic solution.

The electrolytic solution used in the present disclosure may further contain a compound (5) represented by the general formula (5):

the general formula (5):

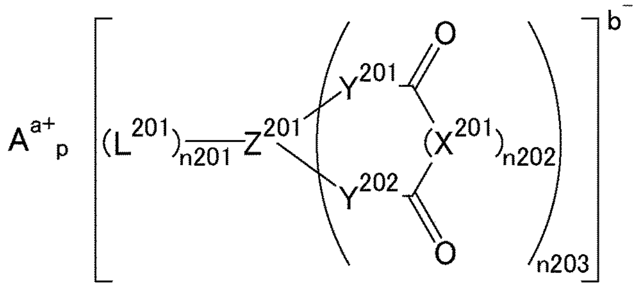

wherein $A^{a+}$ is a metal ion, a hydrogen ion, or an onium ion; a is an integer of 1 to 3, b is an integer of 1 to 3, p is b/a, n203 is an integer of 1 to 4, n201 is an integer of 0 to 8, n202 is 0 or 1, $Z^{201}$ is a transition metal or an element in group III, group IV, or group V of the Periodic Table,

$X^{201}$ is O, S, an alkylene group having 1 to 10 carbon atoms, a halogenated alkylene group having 1 to 10 carbon atoms, an arylene group having 6 to 20 carbon atoms, or an halogenated arylene group having 6 to 20 carbon atoms, with the alkylene group, the halogenated alkylene group, the arylene group, and the halogenated arylene group each optionally having a substituent and/or a hetero atom in the structure thereof, and when n202 is 1 and n203 is 2 to 4, n203 $X^{201}$'s optionally bind to each other,

$L^{201}$ is a halogen atom, a cyano group, an alkyl group having 1 to 10 carbon atoms, a halogenated alkyl group having 1 to 10 carbon atoms, an aryl group having 6 to 20 carbon atoms, a halogenated aryl group having 6 to 20 carbon atoms, with the alkylene group, the halogenated alkylene group, the arylene group, and the halogenated arylene group each optionally having a substituent and/or a hetero atom in the structure thereof, and when n201 is 2 to 8, n201 $L^{201}$'s optionally bind to each other to form a ring, or $-Z^{203}Y^{203}$,

$Y^{201}$, $Y^{202}$, and $Z^{203}$ are each independently O, S, $NY^{204}$, a hydrocarbon group, or a fluorinated hydrocarbon group, and $Y^{203}$ and $Y^{204}$ are each independently H, F, an alkyl group having 1 to 10 carbon atoms, a halogenated alkyl group having 1 to 10 carbon atoms, an aryl group having 6 to 20 carbon atoms, or a halogenated aryl group having 6 to 20 carbon atoms, with the alkyl group, the halogenated alkyl group, the aryl group, and the halogenated aryl group each optionally having a substituent and/or a hetero atom in the structure thereof, and when multiple $Y^{203}$'s or multiple $Y^{204}$'s are present, they optionally bind to each other to form a ring.

Examples of $A^{a+}$ include a lithium ion, a sodium ion, a potassium ion, a magnesium ion, a calcium ion, a barium ion, a cesium ion, a silver ion, a zinc ion, a copper ion, a cobalt ion, an iron ion, a nickel ion, a manganese ion, a titanium ion, a lead ion, a chromium ion, a vanadium ion, a ruthenium ion, an yttrium ion, lanthanoid ions, actinoid ions, a tetrabutyl ammonium ion, a tetraethyl ammonium ion, a tetramethyl ammonium ion, a triethyl methyl ammonium ion, a triethyl ammonium ion, a pyridinium ion, an imidazolium ion, a hydrogen ion, a tetraethyl phosphonium ion, a tetramethyl phosphonium ion, a tetraphenyl phosphonium ion, a triphenyl sulfonium ion, and a triethyl sulfonium ion.

In a case of using for applications such as electrochemical devices, $A^{a+}$ is preferably a lithium ion, a sodium ion, a magnesium ion, a tetraalkyl ammonium ion, or a hydrogen ion, particularly preferably a lithium ion. The valence a of the cation $A^{a+}$ is an integer of 1 to 3. If the valence a is greater than 3, the crystal lattice energy increases, and a problem occurs in that the compound (5) has difficulty in dissolving in a solvent. Thus, the valence a is more preferably 1 when solubility is needed. The valence b of the anion is also an integer of 1 to 3, particularly preferably 1. The constant p that represents the ratio between the cation and the anion is naturally defined by the ratio b/a between the valences thereof.

Next, ligands in the general formula (5) will be described. The ligands herein mean organic or inorganic groups binding to $Z^{201}$ in the general formula (5).

$Z^{201}$ is preferably Al, B, V, Ti, Si, Zr, Ge, Sn, Cu, Y, Zn, Ga, Nb, Ta, Bi, P, As, Sc, Hf, or Sb, more preferably Al, B, or P.

$X^{201}$ represents O, S, an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms. These alkylene groups and arylene groups each may have a substituent and/or a hetero atom in the structure thereof. Specifically, instead of a hydrogen atom in the alkylene group or the arylene group, the structure may have a halogen atom, a linear or cyclic alkyl group, an aryl group, an alkenyl group, an alkoxy group, an aryloxy group, a sulfonyl group, an amino group, a cyano group, a carbonyl group, an acyl group, an amide group, or a hydroxy group as a substituent. Alternatively, instead of a carbon atom in the alkylene or the arylene, the structure may have nitrogen, sulfur, or oxygen introduced therein. When n202 is 1 and n203 is 2 to 4, n203 $X^{201}$'s may bind to each other. One such example thereof includes a ligand such as ethylenediaminetetraacetate.

$L^{201}$ represents a halogen atom, a cyano group, an alkyl group having 1 to 10 carbon atoms, a halogenated

alkyl group having 1 to 10 carbon atoms, an aryl group having 6 to 20 carbon atoms, a halogenated aryl group having 6 to 20 carbon atoms, or $-Z^{203}Y^{203}$ ($Z^{203}$ and $Y^{203}$ will be described below) . Similar to $X^{201}$, the alkyl groups and the aryl groups here each may have a substituent and/or a hetero atom in the structure thereof. When n201 is 2 to 8, n201 $L^{201}$'s may bind to each other to form a ring. $L^{201}$ is preferably a fluorine atom or a cyano group. This is because, in the case of a fluorine atom, the solubility and the degree of dissociation of a salt of an anion compound are improved thereby improving the ion conductivity. This is also because the oxidation resistance is improved to thereby enable occurrence of side reactions to be suppressed.

$Y^{201}$, $Y^{202}$, and $Z^{203}$ each independently represent O, S, $NY^{204}$, a hydrocarbon group, or a fluorinated hydrocarbon group. $Y^{201}$ and $Y^{202}$ are each preferably O, S, or $NY^{204}$, more preferably O. The compound (5) characteristically has a bond between $Y^{201}$ and $Z^{201}$ and a bond between $Y^{202}$ and $Z^{201}$ in the same ligand. These ligands each form a chelate structure with $Z^{201}$. The effect of this chelate improves the heat resistance, the chemical stability, and the hydrolysis resistance of this compound. The constant n202 of the ligand is 0 or 1. In particular, n202 is preferably 0 because this chelate ring becomes a five-membered ring, leading to the most strongly exerted chelate effect and improved stability.

The fluorinated hydrocarbon group herein means a group obtainable by replacing at least one hydrogen atom of a hydrocarbon group by a fluorine atom.

$Y^{203}$ and $Y^{204}$ are each independently H, F, an alkyl group having 1 to 10 carbon atoms, a halogenated alkyl group having 1 to 10 carbon atoms, an aryl group having 6 to 20 carbon atoms, or a halogenated aryl group having 6 to 20 carbon atoms. These alkyl groups and aryl groups each may contain a substituent or a hetero atom in the structure thereof. When multiple $Y^{203}$'s or multiple $Y^{204}$'s are present, they may bind to each other to form a ring.

The constant n203 relating to the number of the aforementioned ligands is an integer of 1 to 4, preferably 1 or 2, more preferably 2. The constant n201 relating to the number of the aforementioned ligands is an integer of 0 to 8, preferably an integer of 0 to 4, more preferably 0, 2, or 4. Further, when n203 is 1, n201 is preferably 2, and when n203 is 2, n201 is preferably 0.

In the general formula (5), the alkyl group, the halogenated alkyl group, the aryl group, and the halogenated aryl group include those having any other functional groups such as branches, hydroxy groups, and ether bonds.

The compound (5) is preferably a compound represented by the general formula:

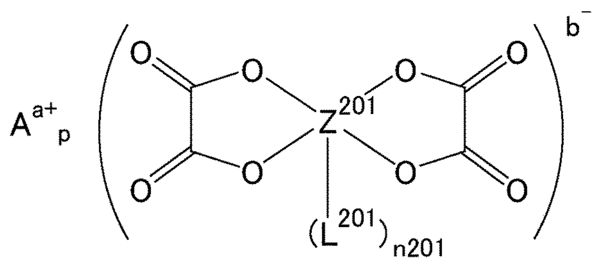

wherein $A^{a+}$, a, b, p, n201, $Z^{201}$, and $L^{201}$ are defined as described above, or a compound represented by the general formula:

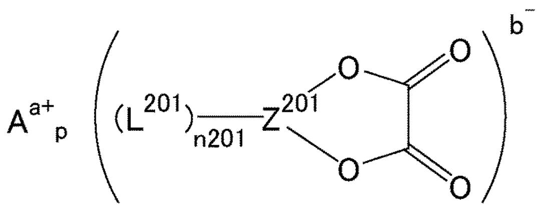

wherein $A^{a+}$, a, b, p, n201, $Z^{201}$, and $L^{201}$ are defined as described above.

The compound (5) may be a lithium oxalatoborate salt. Examples thereof include lithium bis(oxalato)borate (LIBOB) represented by the following formula:

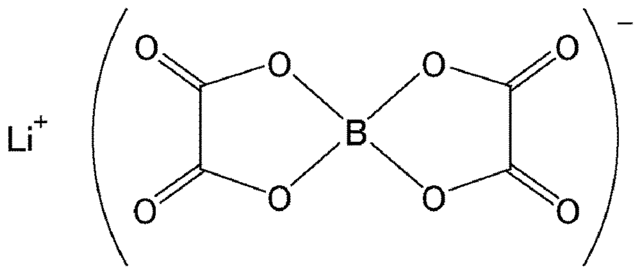

,

and lithium difluorooxalatoborate (LIDFOB) represented by the following formula:

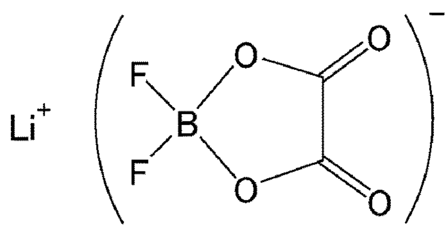

and examples of the compound (5) also include lithium difluorooxalatophosphanite (LIDFOP) represented by the following formula:

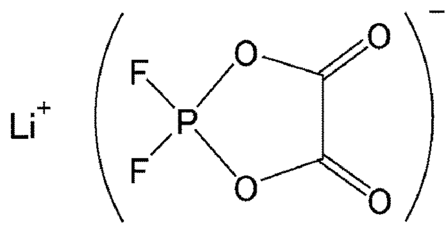

lithium tetrafluorooxalatophosphanite (LITFOP) represented by the following formula:

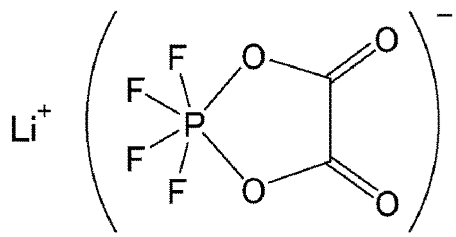

and lithium bis(oxalato)difluorophosphanite represented by the following formula:

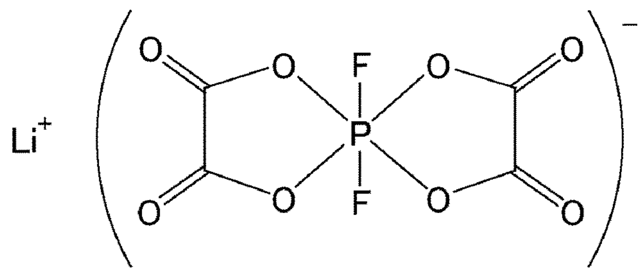

In addition, specific examples of dicarboxylic acid complex salts containing boron as a complex center element

include lithium bis(malonato)borate, lithium difluoro(malonato)borate, lithium bis(methylmalonato)borate, lithium difluoro(methylmalonato)borate, lithium bis(dimethylmalonato)borate, and lithium difluoro(dimethylmalonato)borate.

Specific examples of dicarboxylic acid complex salts containing phosphorus as a complex center element include lithium tris(oxalato)phosphate, lithium tris(malonato)phosphate, lithium difluorobis(malonato)phosphate, lithium tetrafluoro(malonato)phosphate, lithium tris(methylmalonato)phosphate, lithium difluorobis(methylmalonato)phosphate, lithium tetrafluoro(methylmalonato)phosphate, lithium tris(dimethylmalonato)phosphate, lithium difluorobis(dimethylmalonato)phosphate, and lithium tetrafluoro(dimethylmalonato)phosphate.

Specific examples of dicarboxylic acid complex salts containing aluminum as a complex center element include $LiAl(C_2O_4)_2$ and $LiAlF_2(C_2O_4)$.

In view of easy availability and ability to contribute to formation of a stable film-like structure, more suitably used among these are lithium bis(oxalato)borate, lithium difluoro(oxalato)borate, lithium tris(oxalato)phosphate, lithium difluorobis(oxalato)phosphate, and lithium tetrafluoro(oxalato)phosphate.

The compound (5) is particularly preferably lithium bis(oxalato)borate.

The content of the compound (5) is preferably 0.001% by mass or more, more preferably 0.01% by mass or more, and preferably 10% by mass or less, more preferably 3% by mass or less, with respect to the solvent, because further excellent cycle characteristics can be provided.

The electrolytic solution used in the present disclosure preferably further contains an electrolyte salt (provided that excluding the compounds (1) and (5)). Examples of the electrolyte salt that can be employed include a lithium salt, an ammonium salt, a metal salt, and any of those that can be used for an electrolyte solution, such as a liquid salt (ionic liquid), an inorganic polymer salt, and an organic polymer salt.

The electrolyte salt for the electrolytic solution for a lithium ion secondary battery is preferably a lithium salt.

Any lithium salt may be used. Specific examples thereof include the following: inorganic lithium salts such as $LiPF_6$, $LiBF_4$, $LiClO_4$, $LiAlF_4$, $LiSbF_6$, $LiTaF_6$, $LiWF_7$, $LiAsF_6$, $LiAlCl_4$, LiI, LiBr, LiCl, $LiB_{10}Cl_{10}$, $Li_2SiF_6$, $Li_2PFO_3$, and $LiPO_2F_2$;

lithium tungstates such as $LiWOF_5$;

lithium carboxylates such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$;

lithium salts having a S=O group such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, $CF_3CF_2CF_2CF_2SO_3Li$, lithium methylsulfate, lithium ethylsulfate ($C_2H_5OSO_3Li$), and lithium 2,2,2-trifluoroethylsulfate;

lithium imide salts such as $LiN(FCO)_2$, $LiN(FCO) (FSO_2)$ $LiN (FSO_2)_2$, $LiN (FSO_2) (CF_3SO_2)$, $LiN (CF_3SO_2)_2$, $LiN (C_2F_5SO_2)_2$, lithium bisperfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, $LiN(CF_3SO_2)(FSO_2)$, $LiN(CF_3SO_2)(C_3F_7SO_2)$, $LiN(CF_3SO_2)(C_4F_9SO_2)$, and $LiN (POF_2)_2$;

lithium methide salts such as $LiC(FSO_2)_3$, $LiC(CF_3SO_2)_3$, and $LiC (C_2F_5SO_2)_3$; and

fluorine-containing organic lithium salts such as salts represented by the formula: $LiPF_a(C_nF_{2n+1})_{6-a}$, wherein a is an integer of 0 to 5; and n is an integer of 1 to 6, such as $LiPF_3(C_2F_5)_3$, $LiPF_3(CF_3)_3$, $LiPF_3(iso\text{-}C_3F_7)_3$, $LiPF_5(iso\text{-}C_3F_7)$, $LiPF_4(CF_3)_2$, $LiPF_4 (C_2F_5)_2)$, $LiPF_4 (CF_3SO_2)_2$, $LiPF_4 (C_2F_5SO_2)_2$, $LiBF_3CF_3$, $LiBF_3C_2F_5$, $LiBF_3C_3F_7$, $LiBF_2(CF_3)_2$, $LiBF_2 (C_2F_5)_2$, $LiBF_2(CF_3SO_2)_2$, and $LiBF_2(C_2F_5SO_2)_2$, and LiSCN, $LiB(CN)_4$, $LiB(C_6H_5)_4$, $Li_2(C_2O_4)$, $LiP(C_2O_4)_3$, $Li_2B_{12}F_bH_{12-b}$, wherein b is an integer of 0 to 3.

In view of having an effect of improving properties such as output characteristics, high-rate charge and discharge characteristics, high-temperature storage characteristics, and cycle characteristics, particularly preferred among these are $LiPF_6$, $LiBF_4$, $LiSbF_6$, $LiTaF_6$, $LiPO_2F_2$, $FSO_3Li$, $CF_3SO_3Li$, $LiN (FSO_2)_2$, $LiN (FSO_2)(CF_3SO_2)$, $LiN(CF_3SO_2)_2$, $LiN(C_2F_SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$, and most preferred is at least one lithium salt selected from the group consisting of $LiPF_6$, $LiN(FSO_2)_2$, and $LiBF_4$.

These electrolyte salts may be used singly or in combinations of two or more thereof. Preferred examples for combination use of two or more thereof include a combination of $LiPF_6$ and $LiBF_4$ and a combination of $LiPF_6$ and $LiPO_2F_2$, $C_2H_5OSO_3Li$, or $FSO_3Li$. These combinations have an effect of improving the high-temperature storage characteristics, load characteristics, and cycle characteristics.

In this case, the amount of $LiBF_4$, $LiPO_2F_2$, $C_2H_5OSO_3Li$, or $FSO_3Li$ to be blended based on 100% by mass of the total electrolytic solution is not limited and optional as long as the effects of the present disclosure are not significantly impaired. The amount thereof is usually 0.01% by mass or more, preferably 0.1% by mass or more, while usually 30% by mass or less, preferably 20% by mass or less, more preferably 10% by mass or less, further preferably 5% by mass or less, with respect to the electrolytic solution used in the present disclosure.

In another example, an inorganic lithium salt and an organic lithium salt are used in combination. Such a combination has an effect of suppressing deterioration due to high-temperature storage. The organic lithium salt is preferably $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, or the like. In this case, the proportion of the organic lithium salt is preferably 0.1% by mass or more, particularly preferably 0.5% by mass or more, while preferably 30% by mass or less, particularly preferably 20% by mass or less, based on 100% by mass of the total electrolytic solution.

The concentration of the electrolyte salt in the electrolytic solution is not limited as long as the effects of the present disclosure is not impaired. In view of making the electric conductivity of the electrolytic solution within a favorable range and ensuring favorable battery performance, the lithium in the electrolytic solution preferably has a total mole concentration of 0.3 mol/L or more, more preferably 0.4 mol/L or more, further preferably 0.5 mol/L or more, while preferably 3 mol/L or less, more preferably 2.5 mol/L or less, further preferably 2.0 mol/L or less.

If the total mole concentration of lithium is excessively low, the electric conductivity of the electrolytic solution may be insufficient. On the other hand, if the total mole concentration thereof is excessively high, the electric conductivity may decrease due to increase in the viscosity, and the battery performance may deteriorate.

The electrolyte salt for the electrolytic solution for an electric double-layer capacitor is preferably an ammonium salt. Examples of the ammonium salt include (IIa) to (IIe) below.

(IIa) Tetraalkyl quaternary ammonium salt

A preferred example is a tetraalkyl quaternary ammonium salt represented by the general formula (IIa):

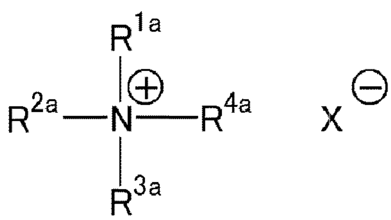

(IIa)

wherein $R^{1a}$, $R^{2a}$, $R^{3a}$, and $R^{4a}$ are the same as or different from each other, and each are an alkyl group having 1 to 6 carbon atoms and optionally containing an ether bond; $X^-$ is an anion. A tetraalkyl quaternary ammonium salt in which some or all of the hydrogen atoms of this ammonium salt are substituted with a fluorine atom and/or a fluorine-containing alkyl group having 1 to 4 carbon atoms is also preferred in view of improvement in the oxidation resistance.

Specific examples thereof include a tetraalkyl quaternary ammonium salt represented by the general formula (IIa-1) :

$$(R^{1a})_x(R^{2a})_yN^{\oplus} \quad X^{\ominus} \qquad (IIa-1)$$

wherein $R^{1a}$, $R^{2a}$, and $X^-$ are as described above; x and y are the same as or different from each other, each are an integer of 0 to 4, and x + y = 4; and an alkylether group-containing trialkyl ammonium salt represented by the general formula (IIa-2):

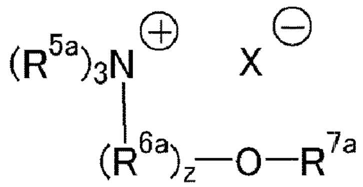

(IIa - 2)

wherein $R^{5a}$ is an alkyl group having 1 to 6 carbon atoms; $R^{6a}$ is a divalent hydrocarbon group having 1 to 6 carbon atoms; $R^{7a}$ is an alkyl group having 1 to 4 carbon atoms; z is 1 or 2; and $X^-$ is an anion. Introduction of an alkylether group can lower the viscosity.

The anion $X^-$ may be an inorganic anion or an organic anion. Examples of the inorganic anion include $AlCl_4^-$, $BF_4^-$, $PF_6^-$, $AsF_6^-$, $TaF_6^-$, $I^-$, and $SbF_6^-$. Examples of the organic anion include a bisoxalatoborate anion, a difluorooxalatoborate anion, a tetrafluorooxalatophosphate anion, a difluorobisoxalatophosphate anion, $CF_3COO^-$, $CF_3SO_3^-$,

$(CF_3SO_2)_2N^-$, and $(C_2F_sSO_2)_2N^-$.

Among these preferred are $BF_4^-$, $PF_6^-$, $AsF_6^-$, and $SbF_6^-$, in view of favorable oxidation resistance and a favorable degree of ion dissociation.

As a suitable specific example of the tetraalkyl quaternary ammonium salt, $Et_4NBF_4$, $Et_4NClO_4$, $Et_4NPF_6$, $Et_4NAsF_6$, $Et_4NSbF_6$, $Et_4NCF_3SO_3$, $Et_4N(CF_3SO_2)_2N$, $Et_4NC_4F_9SO_3$, $Et_3MeNBF_4$, $Et_3MeNClO_4$, $Et_3MeNPF_6$, $Et_3MeNAsF_6$, $Et_3MeNSbF_6$, $Et_3MeNCF_3SO_3$, $Et_3MeN(CF_3SO_2)_2N$, or $Et_3MeNC_4F_9SO_3$ may be used. In particular, examples thereof include $Et_4NBF_4$, $Et_4NPF_6$, $Et_4NSbF_6$, $Et_4NAsF_6$, $Et_3MeNBF_4$, and a N,N-diethyl-N-methyl-N-(2-methoxyethyl) ammonium salt.

(IIb) Spirocyclic bipyrrolidinium salt

Preferred examples thereof include a spirocyclic bipyrrolidinium salt represented by the general formula (IIb-1):

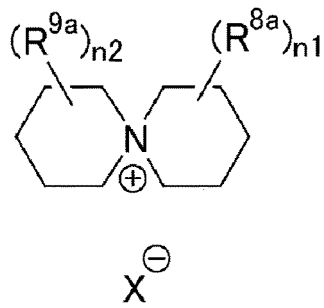

(IIb-1)

wherein $R^{8a}$ and $R^{9a}$ are the same as or different from each other, and each are an alkyl group having 1 to 4 carbon atoms; $X^-$ is an anion; n1 is an integer of 0 to 5; and n2 is an integer of 0 to 5; a spirocyclic bipyrrolidinium salt represented by the general formula (IIb-2):

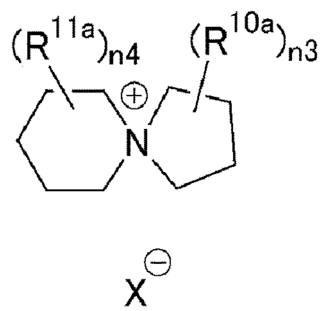

(IIb-2)

wherein $R^{10a}$ and $R^{11a}$ are the same as or different from each other, and each are an alkyl group having 1 to 4 carbon atoms; $X^-$ is an anion; n3 is an integer of 0 to 5; and n4 is an integer of 0 to 5; or a spirocyclic bipyrrolidinium salt represented by the general formula (IIb-3):

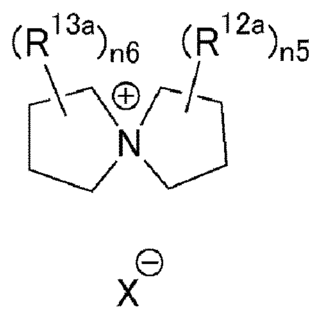

(IIb-3)

wherein $R^{12a}$ and $R^{13a}$ are the same as or different from each other, and each are an alkyl group having 1 to 4 carbon atoms; $X^-$ is an anion; n5 is an integer of 0 to 5; and n6 is an integer of 0 to 5. A spirocyclic bipyrrolidinium salt in which some or all of the hydrogen atoms of this spirocyclic bipyrrolidinium salt are substituted with a fluorine atom and/or a fluorine-containing alkyl group having 1 to 4 carbon atoms is also preferred in view of improvement in the oxidation

resistance.

Preferred specific examples of the anion $X^-$ are the same as in the case of (IIa). Among these preferred is $BF_4^-$, $PF_6^-$, $(CF_3SO_2)_2N$-, or $(C_2F_5SO_2)_2N$-, in view of a high degree of dissociation and low internal resistance at a high voltage.

Preferred specific examples of the spirocyclic bipyrrolidinium salt include salts below.

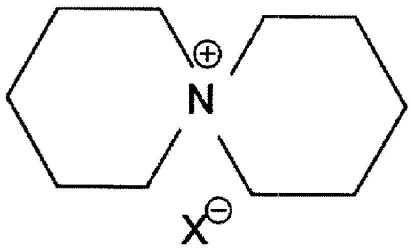

,

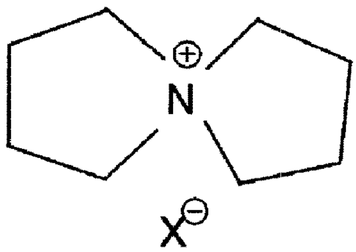

,

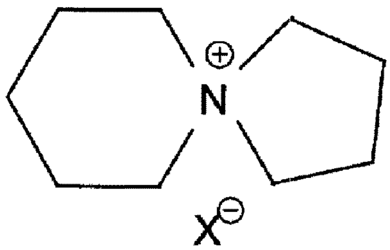

The spirocyclic bipyrrolidinium salt is excellent in view of solubility in a solvent, oxidation resistance, and ionic conductivity.

(IIc) Imidazolium salt

A preferred example is an imidazolium salt represented by the general formula (IIc):

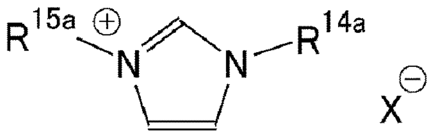 (IIc)

wherein $R^{14a}$ and $R^{15a}$ are the same as or different from each other, and each are an alkyl group having 1 to 6 carbon atoms; and $X^-$ is an anion. An imidazolium salt in which some or all of the hydrogen atoms of this imidazolium salt are substituted with a fluorine atom and/or a fluorine-containing alkyl group having 1 to 4 carbon atoms is also preferred in view of improvement in the oxidation resistance.

Preferred specific examples of the anion $X^-$ are the same as for (IIa).

Preferred specific examples thereof include a compound below.

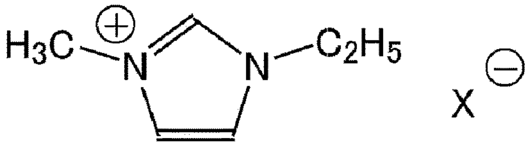

This imidazolium salt is excellent in view of a low viscosity and favorable solubility.

(IId): N-Alkylpyridinium salt

Preferred examples thereof include a N-alkylpyridinium salt represented by the general formula (IId):

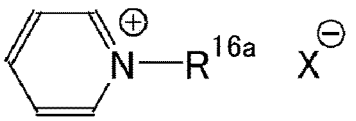

(IId)

wherein $R^{16a}$ is alkyl group having 1 to 6 carbon atoms; and $X^-$ is an anion. A N-alkylpyridinium salt in which some or all of the hydrogen atoms of this N-alkylpyridinium salt are substituted with a fluorine atom and/or a fluorine-containing alkyl group having 1 to 4 carbon atoms is also preferred in view of improvement in the oxidation resistance.

Preferred specific examples of the anion $X^-$ are the same as for (IIa).

Preferred specific examples thereof include compounds below.

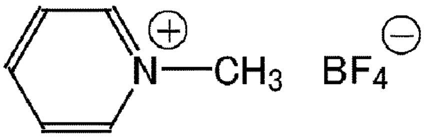
,
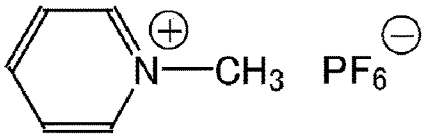
,

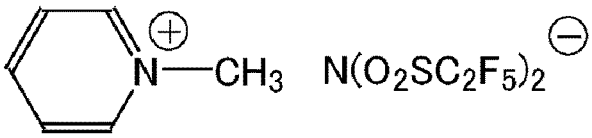
,

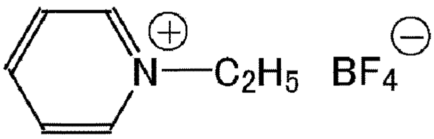
,
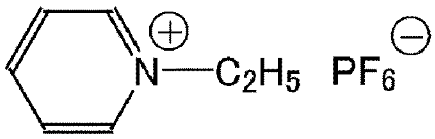
,

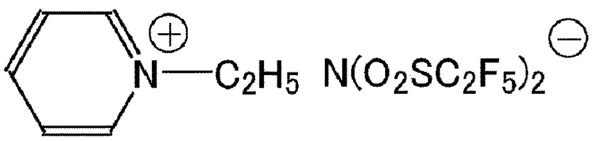
,

The N-alkylpyridinium salts are excellent in view of a low viscosity and favorable solubility.

(IIe) N,N-Dialkylpyrrolidinium salt

A preferred example is a N,N-dialkylpyrrolidinium salt represented by the general formula (IIe):

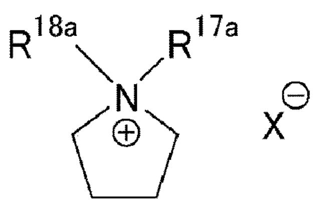

(IIe)

wherein $R^{17a}$ and $R^{18a}$ are the same as or different from each other, and each are an alkyl group having 1 to 6 carbon atoms; and $X^-$ is an anion. A N,N-dialkylpyrrolidinium salt in which some or all of the hydrogen atoms of this N,N-dialkylpyrrolidinium salt are substituted with a fluorine atom and/or a fluorine-containing alkyl group having 1 to 4 carbon

atoms is also preferred in view of improvement in the oxidation resistance.

Preferred specific examples of the anion $X^-$ are the same as for (IIa).

Preferred specific examples thereof include ones below.

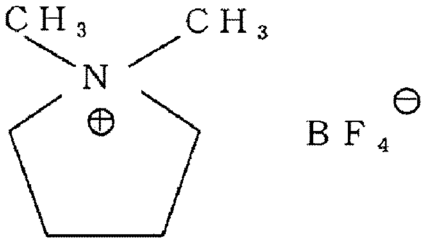
,
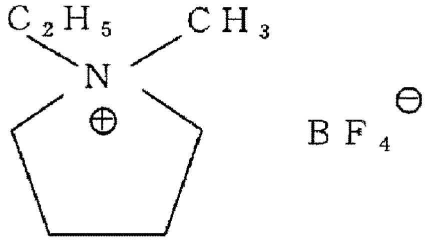
,
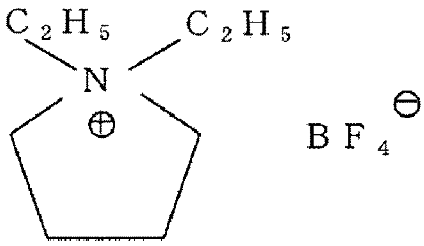
,
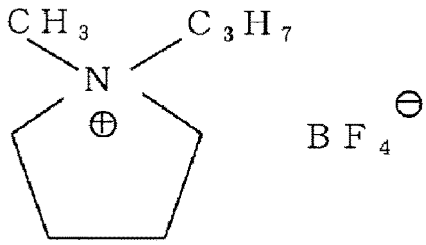
,
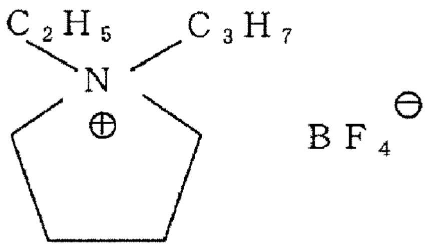
,
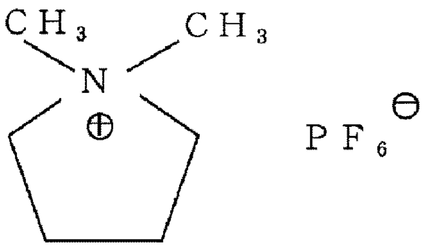
,
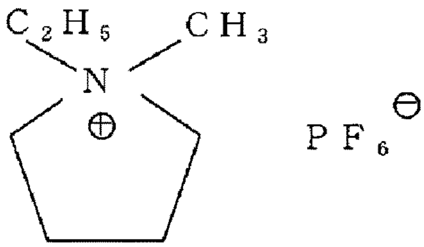
,
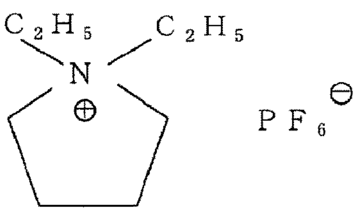
,
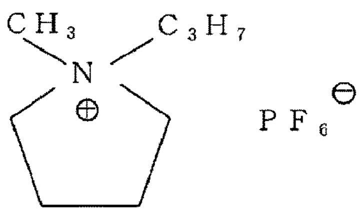
,
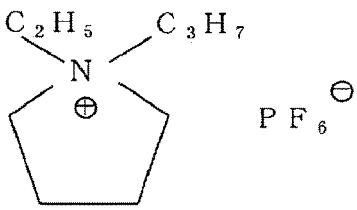
,

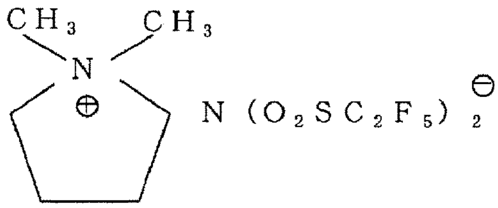

、

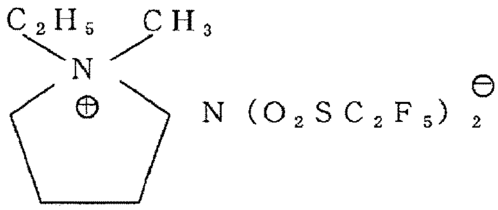

、

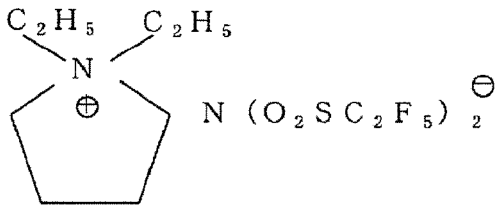

、

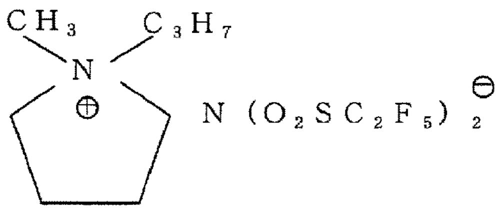

、

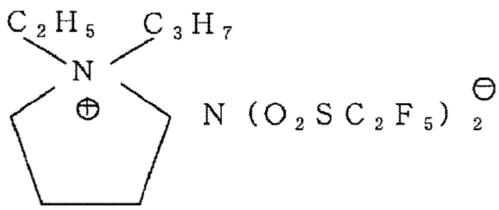

The N,N-dialkylpyrrolidinium salt are excellent in view of a low viscosity and favorable solubility.

Among these ammonium salts, (IIa), (IIb) and (IIc) are preferred in view of favorable solubility, oxidation resistance, and ion conductivity, and further,

$$(Me)_x(Et)_yN^{\oplus} X^{\ominus}$$

、

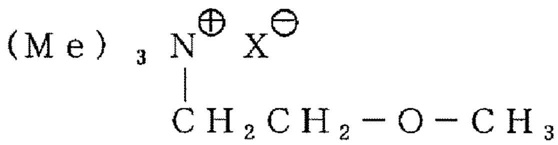

、

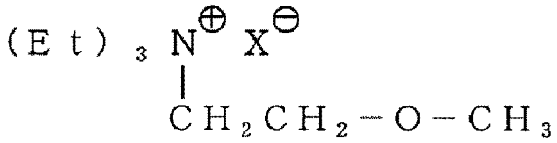

,

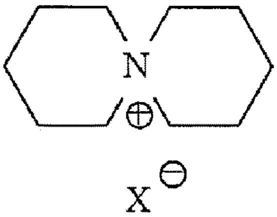

,

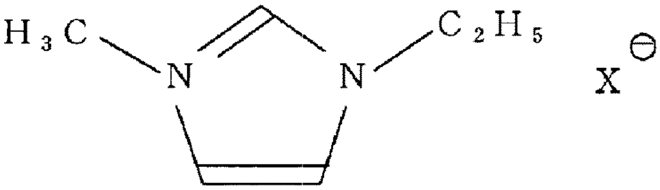

are preferred, wherein Me is a methyl group; Et is an ethyl group; and $X^-$, x, and y are the same as in the formula (IIa-1) .

As the electrolyte salt for an electric double-layer capacitor, a lithium salt may be employed. Preferred examples of the lithium salt include $LiPF_6$, $LiBF_4$, $LiN(FSO_2)_2$, $LiAsF_6$, $LiSbF_6$, and LiN $(SO_2C_2H_5)_2$. A magnesium salt may be used in order to further expand the capacity. Preferred examples of the magnesium salt include $Mg(ClO_4)_2$ and $Mg(OOC_2H_5)_2$.

When the electrolyte salt is the ammonium salt, the concentrate thereof is preferably 0.7 mol/l or more. When the concentration is less than 0.7 mol/l, low-temperature characteristics deteriorate and moreover, the initial internal resistance may increase. The concentration of the electrolyte salt is more preferably 0.9 mol/l or more.

The upper limit of the concentration is preferably 2.0 mol/l or less, more preferably 1.5 mol/l or less, in view of the low-temperature characteristics.

When the ammonium salt is triethylmethylammonium tetrafluoroborate ($TEMABF_4$), the concentration thereof is preferably 0.7 to 1.5 mol/l, in view of excellent low-temperature characteristics.

In the case of spirobipyrrolidinium tetrafluoroborate ($SBPBF_4$), the concentration is preferably 0.7 to 2.0 mol/l.

To the electrolytic solution used in the present disclosure, an additive may be added such that the capacity retention is more unlikely to decrease and the amount of gas to be generated can be further suppressed even when the electrolytic solution is stored at a high temperature.

In a preferred embodiment, the content of the additive in the electrolytic solution is preferably 10% by mass or less, more preferably 5% by mass or less, further preferably 1% by mass or less, particularly preferably 0.1% by mass or less, more especially 0% by mass, that is, no additive is contained. Further decrease in the amount of the additive enables the resistance of the electrolytic solution to be lower.

Examples of the additive preferably include a compound (2) represented by the general formula (2):

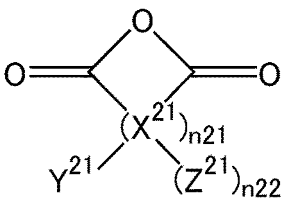

wherein $X^{21}$ is a group containing at least H or C, n21 is an integer of 1 to 3, $Y^{21}$ and $Z^{21}$ are the same as or different from each other, and are each a group containing at least H, C, O, or F, n22 is 0 or 1, and $Y^{21}$ and $Z^{21}$ optionally bind to each other to form a ring. The electrolytic solution containing the compound (2) makes the capacity retention unlikely to further decrease and makes the amount of gas generated unlikely to further increase even when stored at high temperature.

When n21 is 2 or 3, the two or three $X^{21}$'s may be the same as or different from each other.

When multiple $Y^{21}$'s and multiple $Z^{21}$'s are present, the multiple $Y^{21}$'s may be the same as or different from each other and the multiple $Z^{21}$'s may be the same as or different from each other.

$X^{21}$ is preferably a group represented by $-CY^{21}Z^{21}-$, wherein $Y^{21}$ and $Z^{21}$ are defined as described above, or a group represented by $-CY^{21}=CZ^{21}-$, wherein $Y^{21}$ and $Z^{21}$ are defined as described above.

$Y^{21}$ is preferably at least one selected from the group consisting of H-, F-, $CH_3$-, $CH_3CH_2$-, $CH_3CH_2CH_2$-, $CF_3$-, $CF_3CF_2$-, $CH_2FCH_2$-, and $CF_3CF_2CF_2$-.

$Z^{21}$ is preferably at least one selected from the group consisting of H-, F-, $CH_3$-, $CH_3CH_2$-, $CH_3CH_2CH_2$-, $CF_3$-, $CF_3CF_2$-, $CH_2FCH_2$-, and $CF_3CF_2CF_2$-.

Alternatively, $Y^{21}$ and $Z^{21}$ may bind to each other to form a carbon ring or heterocycle that may contain an unsaturated bond and may have aromaticity. The ring preferably has 3 to 20 carbon atoms.

Next, specific examples of the compound (2) will be described. In the following examples, the term "analog" means an acid anhydride obtainable by replacing part of the structure of an acid anhydride mentioned as an example by another structure without departing from the spirit of the present disclosure. Examples thereof include dimers, trimers, and tetramers each composed of a plurality of acid anhydrides, structural isomers such as those having a substituent that has the same number of carbon atoms but also has a branch, and those having a different site at which a substituent binds to the acid anhydride.

Specific examples of an acid anhydride having a 5-membered cyclic structure include succinic anhydride, methylsuccinic anhydride (4-methylsuccinic anhydride), dimethylsuccinic anhydride (e.g., 4,4-dimethylsuccinic anhydride, 4,5-dimethylsuccinic anhydride), 4,4,5-trimethylsuccinic anhydride, 4,4,5,5-tetramethylsuccinic anhydride, 4-vinylsuccinic anhydride, 4,5-divinylsuccinic anhydride, phenylsuccinic anhydride (4-phenylsuccinic anhydride), 4,5-diphenylsuccinic anhydride, 4,4-diphenylsuccinic anhydride, citraconic anhydride, maleic anhydride, methylmaleic anhydride (4-methylmaleic anhydride), 4,5-dimethylmaleic anhydride, phenylmaleic anhydride (4-phenylmaleic anhydride), 4,5-diphenylmaleic anhydride, itaconic anhydride, 5-methylitaconic anhydride, 5,5-dimethylitaconic anhydride, phthalic anhydride, 3,4,5,6-tetrahydrophthalic anhydride, and analogs thereof.

Specific examples of an acid anhydride having a 6-membered cyclic structure include cyclohexanedicarboxylic anhydride (e.g., cyclohexane-1,2-dicarboxylic anhydride), 4-cyclohexene-1,2-dicarboxylic anhydride, glutaric anhydride, glutaconic anhydride, 2-phenylglutaric anhydride, and analogs thereof.

Specific examples of an acid anhydride having other cyclic structures include 5-norbornene-2,3-dicarboxylic anhydride, cyclopentanetetracarboxylic dianhydride, pyromellitic anhydride, diglycolic anhydride, and analogs thereof.

Specific examples of an acid anhydride having a cyclic structure and substituted with a halogen atom include monofluorosuccinic anhydride (e.g., 4-fluorosuccinic anhydride), 4,4-difluorosuccinic anhydride, 4,5-difluorosuccinic anhydride, 4,4,5-trifluorosuccinic anhydride, trifluoromethylsuccinic anhydride, tetrafluorosuccinic anhydride (4,4,5,5-tetrafluorosuccinic anhydride), 4-fluoromaleic anhydride, 4,5-difluoromaleic anhydride, trifluoromethylmaleic anhydride, 5-fluoroitaconic anhydride, 5,5-difluoroitaconic anhydride, and analogs thereof.

Preferred among these as the compound (2) are glutaric anhydride, citraconic anhydride, glutaconic anhydride, itaconic anhydride, diglycolic anhydride, cyclohexanedicarboxylic anhydride, cyclopentanetetracarboxylic dianhydride, 4-cyclohexene-1,2-dicarboxylic anhydride, 3,4,5,6-tetrahydrophthalic anhydride, 5-norbornene-2,3-dicarboxylic anhydride, phenylsuccinic anhydride, 2-phenylglutaric anhydride, maleic anhydride, methylmaleic anhydride, trifluoromethylmaleic anhydride, phenylmaleic anhydride, succinic anhydride, methylsuccinic anhydride, dimethylsuccinic anhydride, trifluoromethylsuccinic anhydride, monofluorosuccinic anhydride, and tetrafluorosuccinic anhydride. More preferred are maleic anhydride, methylmaleic anhydride, trifluoromethylmaleic anhydride, succinic anhydride, methylsuccinic anhydride, trifluoromethylsuccinic anhydride, and tetrafluorosuccinic anhydride. Further preferred are maleic anhydride and succinic anhydride.

The compound (2) is preferably at least one selected from the group consisting of a compound (3) represented by the general formula (3):

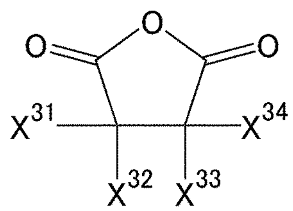

wherein $X^{31}$ to $X^{34}$ are the same as or different from each other, and are each a group containing at least H, C, O, or F, and a compound (4) represented by the general formula (4) :

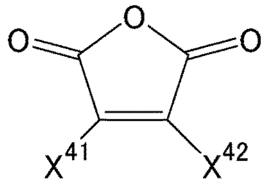

wherein $X^{41}$ and $X^{42}$ are the same as or different from each other, and are each a group containing at least H, C, O, or F.

$X^{31}$ to $X^{34}$ are the same as or different from each other, and each are preferably at least one selected from the group consisting of an alkyl group, a fluorinated alkyl group, an alkenyl group, and a fluorinated alkenyl group. $X^{31}$ to $X^{34}$ each have preferably 1 to 10 carbon atoms, more preferably 1 to 3 carbon atoms.

$X^{31}$ to $X^{34}$ are the same as or different from each other, and each are more preferably at least one selected from the group consisting of H-, F-, $CH_3$-, $CH_3CH_2$-, $CH_3CH_2CH_2$-, $CF_3$-, $CF_3CF_2$-, $CH_2FCH_2$-, and $CF_3CF_2CF_2$-.

$X^{41}$ and $X^{42}$ are the same as or different from each other, and each are preferably at least one selected from the group consisting of an alkyl group, a fluorinated alkyl group, an alkenyl group, and a fluorinated alkenyl group. $X^{41}$ and $X^{42}$ each have preferably 1 to 10 carbon atoms, more preferably 1 to 3 carbon atoms.

$X^{41}$ and $X^{42}$ are the same as or different from each other, and each are more preferably at least one selected from the group consisting of H-, F-, $CH_3$-, $CH_3CH_2$-, $CH_3CH_2CH_2$-, $CF_3$-, $CF_3CF_2$-, $CH_2FCH_2$-, and $CF_3CF_2CF_2$-.

The compound (3) is preferably any of the following compounds.

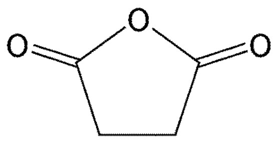
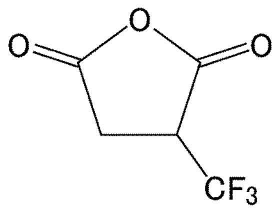

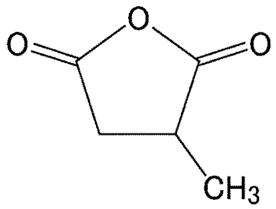
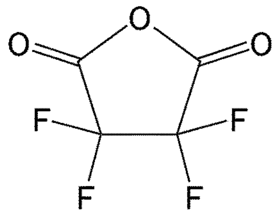

The compound (4) is preferably any of the following compounds.

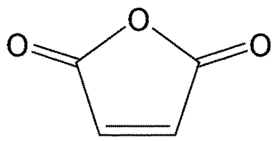
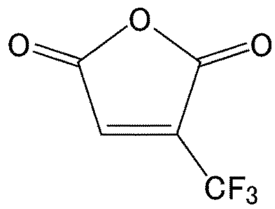

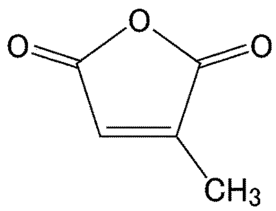

The electrolytic solution preferably contains 0.0001 to 15% by mass of the compound (2) because the capacity retention is unlikely to further decrease and the amount of gas generated is unlikely to further increase even when the electrolytic solution is stored at high temperature. The content of compound (2) is more preferably 0.01 to 10% by mass, further preferably 0.1 to 3% by mass, particularly preferably 0.1 to 1.0% by mass.

When the electrolytic solution contains both the compounds (3) and (4), the electrolytic solution preferably contains 0.08 to 2.50% by mass of the compound (3) and 0.02 to 1.50% by mass of the compound (4), more preferably 0.80 to 2.50% by mass of the compound (3) and 0.08 to 1.50% by mass of the compound (4) with respect to the electrolytic solution because the capacity retention is unlikely to further decrease and the amount of gas generated is unlikely to further increase even when the electrolytic solution is stored at high temperature.

The electrolytic solution used in the present disclosure may contain at least one selected from the group consisting of nitrile compounds represented by the following general formulas (1a), (1b), and (1c):

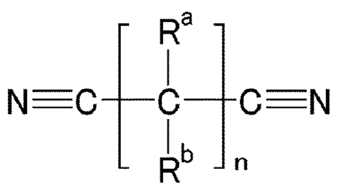 (1a)

wherein $R^a$ and $R^b$ each independently represent a hydrogen atom, a cyano group (CN), a halogen atom, an alkyl group, or a group obtainable by replacing at least one hydrogen atom of an alkyl group by a halogen atom; and n represents an integer of 1 to 10;

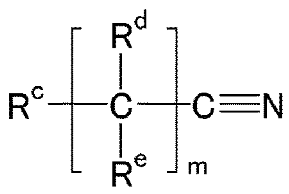 (1b)

wherein $R^c$ represents a hydrogen atom, a halogen atom, an alkyl group, a group obtainable by replacing at least one hydrogen atom of an alkyl group by a halogen atom, or a group represented by NC-$R^{c1}$-$x^{c1}$-, wherein $R^{c1}$ is an alkylene group, and $x^{c1}$ is an oxygen atom or a sulfur atom; $R^d$ and $R^e$ each independently represent a hydrogen atom, a halogen atom, an alkyl group, or a group obtainable by replacing at least one hydrogen atom of an alkyl group by a halogen atom; and m represents an integer of 1 to 10;

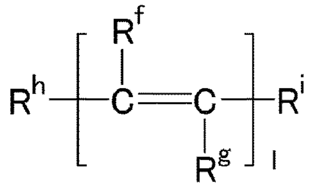 (1c)

wherein $R^f$, $R^g$, $R^h$, and $R^i$ each independently represent a group containing a cyano group (CN), a hydrogen atom (H), a halogen atom, an alkyl group, or a group obtainable by replacing at least one hydrogen atom of an alkyl group by a halogen atom; provided that at least one selected from $R^f$, $R^g$, $R^h$, and $R^i$ is a group containing a cyano group; and 1 represents an integer of 1 to 3.

This can improve the high-temperature storage characteristics of an electrochemical device. One of the nitrile compounds may be used alone, or two or more thereof may be used in any combination at any ratio.

In the general formula (1a), $R^a$ and $R^b$ are each independently a hydrogen atom, a cyano group (CN), a halogen atom, an alkyl group, or a group obtainable by replacing at least one hydrogen atom of an alkyl group by a halogen atom.

Examples of the halogen atom include a fluorine atom, a chlorine atom, a bromine atom, and an iodine atom. Preferred among these is a fluorine atom.

The alkyl group is preferably an alkyl group having 1 to 5 carbon atoms. Specific examples of the alkyl group include a methyl group, an ethyl group, a propyl group, an isopropyl group, a butyl group, an isobutyl group, and a tert-butyl group.

An example of the group obtainable by replacing at least one hydrogen atom of an alkyl group by a halogen atom includes a group obtainable by replacing at least one hydrogen atom of the aforementioned alkyl group by the aforementioned halogen atom.

When $R^a$ and $R^b$ are alkyl groups or groups each obtainable by replacing at least one hydrogen atom of an

alkyl group by a halogen atom, $R^a$ and $R^b$ may bind to each other to form a cyclic structure (e.g., a cyclohexane ring).

$R^a$ and $R^b$ are each preferably a hydrogen atom or an alkyl group.

In the general formula (1a), n is an integer of 1 to 10. When n is 2 or more, all of n $R^a$'s may be the same as each other, or at least one of them may be different from the others. The same applies to $R^b$. n is preferably an integer of 1 to 7, more preferably an integer of 2 to 5.

Preferred as the nitrile compound represented by the general formula (1a) are dinitriles and tricarbonitriles.

Specific examples of the dinitriles include malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, 2,3,3-trimethylsuccinonitrile, 2,2,3,3-tetramethylsuccinonitrile, 2,3-diethyl-2,3-dimethylsuccinonitrile, 2,2-diethyl-3,3-dimethylsuccinonitrile, bicyclohexyl-1,1-dicarbonitrile, bicyclohexyl-2,2-dicarbonitrile, bicyclohexyl-3,3-dicarbonitrile, 2,5-dimethyl-2,5-hexanedicarbonitrile, 2,3-diisobutyl-2,3-dimethylsuccinonitrile, 2,2-diisobutyl-3,3-dimethylsuccinonitrile, 2-methylglutaronitrile, 2,3-dimethylglutaronitrile, 2,4-dimethylglutaronitrile, 2,2,3,3-tetramethylglutaronitrile, 2,2,4,4-tetramethylglutaronitrile, 2,2,3,4-tetramethylglutaronitrile, 2,3,3,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy)dipropionitrile, 3,3'-(ethylenedithio)dipropionitrile, 3,9-bis(2-cyanoethyl)-2,4,8,10-tetraoxaspiro[5,5]undecane, butanenitrile, and phthalonitrile. Particularly preferred among these are succinonitrile, glutaronitrile, and adiponitrile.

Specific examples of the tricarbonitriles include pentanetricarbonitrile, propanetricarbonitrile, 1,3,5-hexanetricarbonitrile, 1,3,6-hexanetricarbonitrile, heptanetricarbonitrile, 1,2,3-propanetricarbonitrile, 1,3,5-pentanetricarbonitrile, cyclohexanetricarbonitrile, triscyanoethylamine, triscyanoethoxypropane, tricyanoethylene, and tris(2-cyanoethyl)amine. Particularly preferred are 1,3,6-hexanetricarbonitrile and cyclohexanetricarbonitrile, and most preferred is cyclohexanetricarbonitrile.

In the general formula (1b), $R^c$ is a hydrogen atom, a halogen atom, an alkyl group, a group obtainable by replacing at least one hydrogen atom of an alkyl group by a halogen atom, or a group represented by NC-$R^{c1}$-$X^{c1}$-, wherein $R^{c1}$ represents an alkylene group, and $x^{c1}$ represents an oxygen atom or a sulfur atom. $R^d$ and $R^e$ are each independently a hydrogen atom, a halogen atom, an alkyl group, or a group obtainable by replacing at least one hydrogen atom of an alkyl group by a halogen atom.

Examples of the halogen atom, the alkyl group, and the group obtainable by replacing at least one hydrogen atom of an alkyl group by a halogen atom include those mentioned as examples thereof for the general formula (1a).

$R^{c1}$ in the NC-$R^{c1}$-$X^{c1}$- is an alkylene group. The alkylene group is preferably an alkylene group having 1 to 3 carbon atoms.

$R^c$, $R^d$, and $R^e$ are each preferably independently a hydrogen atom, a halogen atom, an alkyl group, or a group obtainable by replacing at least one hydrogen atom of an alkyl group by a halogen atom.

At least one of $R^c$, $R^d$, and $R^e$ is preferably a halogen atom or a group obtainable by replacing at least one hydrogen atom of an alkyl group by a halogen atom, more preferably a fluorine atom, or a group obtainable by replacing at least one hydrogen atom of an alkyl group by a fluorine atom.

When $R^d$ and $R^e$ are alkyl groups or groups each obtainable by replacing at least one hydrogen atom of an alkyl group by a halogen atom, $R^d$ and $R^e$ may bind to each other to form a cyclic structure (e.g., a cyclohexane ring).

In the general formula (1b), m is an integer of 1 to 10. When m is 2 or greater, m $R^d$'s may be the same as each other, or at least one of them may be different from the others. The same applies to $R^e$. m is preferably an integer of 2 to 7, more preferably an integer of 2 to 5.

Examples of the nitrile compound represented by the general formula (1b) include acetonitrile, propionitrile, butyronitrile, isobutyronitrile, valeronitrile, isovaleronitrile, lauronitrile, 3-methoxypropionitrile, 2-methylbutyronitrile, trimethylacetonitrile, hexanenitrile, cyclopentanecarbonitrile, cyclohexanecarbonitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 3,3'-oxydipropionitrile, 3,3'-thiodipropionitrile, pentafluoropropionitrile, methoxyacetonitrile, and benzonitrile. Particularly preferred among these is 3,3,3-trifluoropropionitrile.

In the general formula (1c), $R^f$, $R^g$, $R^h$, and $R^i$ are each independently a group containing a cyano group (CN), a hydrogen atom, a halogen atom, an alkyl group, or a group obtainable by replacing at least one hydrogen atom of an alkyl group by a halogen atom.

Examples of the halogen atom, the alkyl group, and the group obtainable by replacing at least one hydrogen atom of an alkyl group by a halogen atom include those mentioned as examples thereof for the general formula (1a).

Examples of the group containing a cyano group include a cyano group and a group obtainable by replacing at least one hydrogen atom of an alkyl group by a cyano group. Examples of the alkyl group in this case include those mentioned as examples thereof for the general formula (1a).

At least one of $R^f$, $R^g$, $R^h$, and $R^i$ is a group containing a cyano group. Preferably, at least two of $R^f$, $R^g$, $R^h$,

and $R^i$ are each a group containing a cyano group. More preferably, $R^h$ and $R^i$ are each a group containing a cyano group. When $R^h$ and $R^i$ are each a group containing a cyano group, $R^f$ and $R^g$ are preferably hydrogen atoms.

In the general formula (1c), 1 is an integer of 1 to 3. When 1 is 2 or greater, 1 $R^f$s may be the same as each other, or at least one of them may be different from the others. The same applies to $R^g$. 1 is preferably an integer of 1 to 2.

Examples of the nitrile compound represented by the general formula (1c) include 3-hexenedinitrile, mucononitrile, maleonitrile, fumaronitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, and 2-hexenenitrile. Preferred are 3-hexenedinitrile and mucononitrile, and particularly preferred is 3-hexenedinitrile.

The content of the nitrile compound is preferably 0.2 to 7% by mass with respect to the electrolytic solution. This can further improve the high-temperature storage characteristics and safety of an electrochemical device at a high voltage. The lower limit of the total content of the nitrile compounds is more preferably 0.3% by mass, further preferably 0.5% by mass. The upper limit thereof is more preferably 5% by mass, further preferably 2% by mass, particularly preferably 0.5% by mass.

The electrolytic solution used in the present disclosure may contain a compound having an isocyanate group (hereinafter, also abbreviated as "isocyanate"). The isocyanate is not limited, and any isocyanate may be used. Examples of the isocyanate include monoisocyanates, diisocyanates, and triisocyanates.

Specific examples of the monoisocyanates include isocyanatomethane, isocyanatoethane, 1-isocyanatopropane, 1-isocyanatobutane, 1-isocyanatopentane, 1-isocyanatohexane, 1-isocyanatoheptane, 1-isocyanatooctane, 1-isocyanatononane, 1-isocyanatodecane, isocyanatocyclohexane, methoxycarbonyl isocyanate, ethoxycarbonyl isocyanate, propoxycarbonyl isocyanate, butoxycarbonyl isocyanate, methoxysulfonyl isocyanate, ethoxysulfonyl isocyanate, propoxysulfonyl isocyanate, butoxysulfonyl isocyanate, fluorosulfonyl isocyanate, methyl isocyanate, butyl isocyanate, phenyl isocyanate, 2-isocyanatoethyl acrylate, 2-isocyanatoethyl methacrylate, and ethyl isocyanate.

Specific examples of the diisocyanates include 1,4-diisocyanatobutane, 1,5-diisocyanatopentane, 1,6-diisocyanatohexane, 1,7-diisocyanatoheptane, 1,8-diisocyanatooctane, 1,9-diisocyanatononane, 1,10-diisocyanatodecane, 1,3-diisocyanatopropene, 1,4-diisocyanato-2-butene, 1,4-diisocyanato-2-fluorobutane, 1,4-diisocyanato-2,3-difluorobutane, 1,5-diisocyanato-2-pentene, 1,5-diisocyanato-2-methylpentane, 1,6-diisocyanato-2-hexene, 1,6-diisocyanato-3-hexene, 1,6-diisocyanato-3-fluorohexane, 1,6-diisocyanato-3,4-difluorohexane, toluene diisocyanate, xylene diisocyanate, tolylene diisocyanate, 1,2-bis(isocyanatomethyl)cyclohexane, 1,3-bis(isocyanatomethyl)cyclohexane, 1,4-bis(isocyanatomethyl)cyclohexane, 1,2-diisocyanatocyclohexane, 1,3-diisocyanatocyclohexane, 1,4-diisocyanatocyclohexane, dicyclohexylmethane-1,1'-diisocyanate, dicyclohexylmethane-2,2'-diisocyanate, dicyclohexylmethane-3,3'-diisocyanate, dicyclohexylmethane-4,4'-diisocyanate, isophorone diisocyanate, bicyclo[2.2.1]heptane-2,5-diylbis(methyl=isocyanate), bicyclo[2.2.1]heptane-2, 6-diylbis(methyl=isocyanate), 2,4,4-trimethylhexamethylene diisocyanate, 2,2,4-trimethylhexamethylene diisocyanate, hexamethylene diisocyanate, 1,4-phenylene diisocyanate, octamethylene diisocyanate, and tetramethylene diisocyanate.

Specific examples of the triisocyanates include 1,6,11-triisocyanatoundecane, 4-isocyanatomethyl-1,8-octamethylene diisocyanate, 1,3,5-triisocyanatomethylbenzene, 1,3,5-tris(6-isocyanatohex-1-yl)-1,3,5-triazine-2,4,6(1H,3H,5H)-trione, and 4-(isocyanatomethyl)octamethylene=diisocyanate.

Among these, 1,6-diisocyanatohexane, 1,3-bis(isocyanatomethyl)cyclohexane, 1,3,5-tris(6-isocyanatohex-l-yl)-1,3,5-triazine-2,4,6(1H,3H,5H)-trione, 2,4,4-trimethylhexamethylene diisocyanate, and 2,2,4-trimethylhexamethylene diisocyanate are industrially easily available, and preferred in view of holding down the production cost of an electrolytic solution. Also from the technical viewpoint, these isocyanates can contribute to formation of a stable film-like structure and thus are more suitably used.

The content of the isocyanate, which is not limited, is optional as long as the effects of the present disclosure are not significantly impaired, and is preferably 0.001% by mass or more and 1.0% by mass or less with respect to the electrolytic solution. A content of the isocyanate equivalent to or higher than this lower limit can give a sufficient effect of improving the cycle characteristics to a non-aqueous electrolytic solution secondary battery. A content thereof equivalent to or lower than this upper limit can avoid an initial increase in resistance of a non-aqueous electrolytic solution secondary battery. The content of the isocyanate is more preferably 0.01% by mass or more, further preferably 0.1% by mass or more, particularly preferably 0.2% by mass or more, while more preferably 0.8% by mass or less, further preferably 0.7% by mass or less, particularly preferably 0.6% by mass or less.

The electrolytic solution used in the present disclosure may contain a cyclic sulfonate. Examples of the cyclic sulfonate include a saturated cyclic sulfonate, an unsaturated cyclic sulfonate, a saturated cyclic disulfonate, and an unsaturated cyclic disulfonate.

Specific examples of the saturated cyclic sulfonate include 1,3-propanesultone, 1-fluoro-1,3-propanesultone, 2-fluoro-1,3-propanesultone, 3-fluoro-1,3-propanesultone, 1-methyl-1,3-propanesultone, 2-methyl-1,3-propanesultone, 3-methyl-1,3-propanesultone, 1,3-butanesultone, 1,4-butanesultone, 1-fluoro-1,4-butanesultone, 2-fluoro-1,4-butanesultone, 3-fluoro-1,4-butanesultone, 4-fluoro-1,4-butanesultone, 1-methyl-1,4-butanesultone, 2-methyl-1,4-butanesultone, 3-methyl-1,4-butanesultone, 4-methyl-1,4-butanesultone, and 2,4-butanesultone.

Specific examples of the unsaturated cyclic sulfonate include 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1-butene-1,4-sultone, 2-butene-1,4-sultone, 3-butene-1,4-sultone, 1-fluoro-1-butene-1,4-sultone, 2-fluoro-1-butene-1,4-sultone, 3-fluoro-1-butene-1,4-sultone, 4-fluoro-1-butene-1,4-sultone, 1-fluoro-2-butene-1,4-sultone, 2-fluoro-2-butene-1,4-sultone, 3-fluoro-2-butene-1,4-sultone, 4-fluoro-2-butene-1,4-sultone, 1,3-propenesultone, 1-fluoro-3-butene-1,4-sultone, 2-fluoro-3-butene-1,4-sultone, 3-fluoro-3-butene-1,4-sultone, 4-fluoro-3-butene-1,4-sultone, 1-methyl-1-butene-1,4-sultone, 2-methyl-1-butene-1,4-sultone, 3-methyl-1-butene-1,4-sultone, 4-methyl-1-butene-1,4-sultone, 1-methyl-2-butene-1,4-sultone, 2-methyl-2-butene-1,4-sultone, 3-methyl-2-butene-1,4-sultone, 4-methyl-2-butene-1,4-sultone, 1-methyl-3-butene-1,4-sultone, 2-methyl-3-butene-1,4-sultone, 3-methyl-3-butene-1,4-sultone, and 4-methyl-3-butene-14-sultone.

Among these, 1,3-propanesultone, 1-fluoro-1,3-propanesultone, 2-fluoro-1,3-propanesultone, 3-fluoro-1,3-propanesultone, and 1-propene-1,3-sultone are more suitably used in view of easy availability and ability to contribute to formation of a stable film-like structure. The content of the cyclic sulfonate, which is not limited, is optional as long as the effects of the present disclosure are not significantly impaired, and is preferably 0.001% by mass or more and 3.0% by mass or less with respect to the electrolytic solution.

A content of the cyclic sulfonate equivalent to or higher than this lower limit can give a sufficient effect of improving the cycle characteristics to a non-aqueous electrolytic solution secondary battery. A content thereof equivalent to or lower than this upper limit can avoid increase in the production cost of a non-aqueous electrolytic solution secondary battery. The content of the cyclic sulfonate is more preferably 0.01% by mass or more, further preferably 0.1% by mass or more, particularly preferably 0.2% by mass or more, while more preferably 2.5% by mass or less, further preferably 2.0% by mass or less, particularly preferably 1.8% by mass or less.

The electrolytic solution used in the present disclosure may further contain a polyethylene oxide that has a weight average molecular weight of 2,000 to 4,000 and has -OH, -OCOOH, or -COOH at an end. The electrolytic solution, when containing such a compound, can improve the stability at the electrode interfaces to thereby improve the characteristics of an electrochemical device.

Examples of the polyethylene oxide include polyethylene oxide monool, polyethylene oxide carboxylate, polyethylene oxide diol, polyethylene oxide dicarboxylate, polyethylene oxide triol, and polyethylene oxide tricarboxylate. One of these may be used singly, or two or more of these may be used in combination.

In view of more favorable characteristics of an electrochemical device, preferred among these are a mixture of polyethylene oxide monool and polyethylene oxide diol and a mixture of polyethylene carboxylate and polyethylene dicarboxylate.

The polyethylene oxide having an excessively small weight average molecular weight may be easily oxidatively decomposed. The weight average molecular weight is more preferably 3,000 to 4,000. The weight average molecular weight can be measured by gel permeation chromatography (GPC) in terms of polystyrene.

The content of the polyethylene oxide is preferably $1 \times 10^{-6}$ to $1 \times 10^{-2}$ mol/kg relative to electrolytic solution. An excessively large content of the polyethylene oxide may impair the characteristics of an electrochemical device. The content of the polyethylene oxide is more preferably $5 \times 10^{-6}$ mol/kg or more.

The electrolytic solution used in the present disclosure may further contain additives, such as a fluorinated saturated cyclic carbonate, an unsaturated cyclic carbonate, an overcharge inhibitor, and other known aids. This can suppress deterioration of the characteristics of an electrochemical device.

Examples of the fluorinated saturated cyclic carbonate include the compounds represented by the general formula (A) described above. Preferred among these are fluoroethylene carbonate, difluoroethylene carbonate, monofluoromethylethylene carbonate, trifluoromethylethylene carbonate, and 2,2,3,3,3-pentafluoropropylethylene carbonate (4-(2,2,3,3,3-pentafluoro-propyl)-[1,3]dioxolan-2-one). One of the fluorinated saturated cyclic carbonates may be used singly, or two or more thereof may be used in any combination at any ratio.

The content of the fluorinated saturated cyclic carbonate is preferably 0.001 to 10% by mass, more preferably 0.01 to 5% by mass, further preferably 0.1 to 3% by mass, with respect to the electrolytic solution.

Examples of the unsaturated cyclic carbonate include vinylene carbonates, ethylene carbonates substituted with a substituent that has an aromatic ring, a carbon-carbon double bond, or a carbon-carbon triple bond, phenyl carbonates, vinyl carbonates, allyl carbonates, and catechol carbonates.

Examples of the vinylene carbonates include vinylene carbonate, methylvinylene carbonate, 4,5-dimethylvinylene carbonate, phenylvinylene carbonate, 4,5-diphenylvinylene carbonate, vinylvinylene carbonate, 4,5-divinylvinylene carbonate, allylvinylene carbonate, 4,5-diallylvinylene carbonate, 4-fluorovinylene carbonate, 4-fluoro-5-methylvinylene carbonate, 4-fluoro-5-phenylvinylene carbonate, 4-fluoro-5-vinylvinylene carbonate, 4-allyl-5-fluorovinylene carbonate, ethynylethylene carbonate, propargylethylene carbonate, methylvinylene carbonate, and dimethylvinylene carbonate.

Specific examples of the ethylene carbonates substituted with a substituent that has an aromatic ring, a carbon-carbon double bond, or a carbon-carbon triple bond include vinylethylene carbonate, 4,5-divinylethylene carbonate, 4-methyl-5-vinylethylene carbonate, 4-allyl-5-vinylethylene carbonate, ethynylethylene carbonate, 4,5-diethynylethylene carbonate, 4-methyl-5-ethynylethylene carbonate, 4-vinyl-5-ethynylethylene carbonate, 4-allyl-5-ethynylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, 4-methyl-5-allylethylene carbonate, 4-methylene-1,3-dioxolan-2-one, 4,5-di methylene-1,3-dioxolan-2-one, and 4-methyl-5-allylethylene carbonate.

Among these, the unsaturated cyclic carbonate is preferably vinylene carbonate, methylvinylene carbonate, 4,5-dimethylvinylene carbonate, vinylvinylene carbonate, 4,5-vinylvinylene carbonate, allylvinylene carbonate, 4,5-diallylvinylene carbonate, vinylethylene carbonate, 4,5-divinylethylene carbonate, 4-methyl-5-vinylethylene carbonate, allylethylene carbonate, 4,5-diallylethylene carbonate, 4-methyl-5-allylethylene carbonate, 4-allyl-5-vinylethylene carbonate, ethynylethylene carbonate, 4,5-diethynylethylene carbonate, 4-methyl-5-ethynylethylene carbonate, and 4-vinyl-5-ethynylethylene carbonate. Particularly preferred are vinylene carbonate, vinylethylene carbonate, and ethynylethylene carbonate because of forming a more stable interface protecting film, and most preferred is vinylene carbonate.

The molecular weight of the unsaturated cyclic carbonate is not limited and is optional as long as the effects of the present disclosure are not significantly impaired. The molecular weight is preferably 50 or more and 250 or less. Within this range, the solubility of the unsaturated cyclic carbonate with respect to the electrolytic solution is likely to be ensured, and the effects of the present disclosure are likely to be sufficiently exhibited. The molecular weight of the unsaturated cyclic carbonate is more preferably 80 or more, and more preferably 150 or less.

A method for producing the unsaturated cyclic carbonate is not limited, and the unsaturated cyclic carbonate can be produced by a known method optionally selected.

One of the unsaturated cyclic carbonates may be used singly, or two or more thereof may be used in any combination at any ratio.

The content of the unsaturated cyclic carbonate is not limited and is optional as long as the effects of the present disclosure are not significantly impaired. The content of the unsaturated cyclic carbonate is preferably 0.001% by mass or more, more preferably 0.01% by mass or more, further preferably 0.1% by mass or more, based on 100% by mass of the electrolytic solution. The content is preferably 5% by mass or less, more preferably 4% by mass or less, further preferably 3% by mass or less. Within the range, an electrochemical device containing the electrolytic solution easily exhibits a sufficient effect of improving the cycle characteristics, and easily avoids a situation in which high-temperature storage characteristics deteriorate, a larger amount of gas is generated, and a discharge capacity retention decreases.

In addition to the non-fluorinated unsaturated cyclic carbonates mentioned above, a fluorinated unsaturated cyclic carbonate may also suitably be used as the unsaturated cyclic carbonate.

The fluorinated unsaturated cyclic carbonate is a cyclic carbonate having an unsaturated bond and a fluorine atom. The fluorinated unsaturated cyclic carbonate is not limited as long as the carbonate has one or more fluorine atoms. In particular, the fluorinated unsaturated cyclic carbonate has usually 6 or less fluorine atoms, preferably 4 or less fluorine atoms, most preferably 1 or 2 fluorine atoms.

Examples of the fluorinated unsaturated cyclic carbonate include a fluorinated vinylene carbonate derivative and a fluorinated ethylene carbonate derivative substituted with a substituent that has an aromatic ring or a carbon-carbon double bond.

Examples of the fluorinated vinylene carbonate derivative include 4-fluorovinylene carbonate, 4-fluoro-5-methylvinylene carbonate, 4-fluoro-5-phenylvinylene carbonate, 4-allyl-5-fluorovinylene carbonate, and 4-fluoro-5-vinylvinylene carbonate.

Examples of the fluorinated ethylene carbonate derivative substituted with a substituent that has an aromatic ring or a carbon-carbon double bond include 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate, 4,5-difluoro-4,5-diallylethylene carbonate, 4-fluoro-4-phenylethylene carbonate, 4-fluoro-5-phenylethylene carbonate, 4,4-difluoro-5-phenylethylene carbonate, and 4,5-difluoro-4-phenylethylene carbonate.

Among these, more suitably used as the fluorinated unsaturated cyclic carbonate are 4-fluorovinylene carbonate, 4-fluoro-5-methylvinylene carbonate, 4-fluoro-5-vinylvinylene carbonate, 4-allyl-5-fluorovinylene carbonate, 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate, and 4,5-difluoro-4,5-diallylethylene carbonate, because of forming a stable interface protecting film.

The molecular weight of the fluorinated unsaturated cyclic carbonate is not limited and is optional as long as the effects of the present disclosure are not significantly impaired. The molecular weight is preferably 50 or more and

500 or less. Within this range, the solubility of the fluorinated unsaturated cyclic carbonate with respect to the electrolytic solution is likely to be ensured.

A method for producing the fluorinated unsaturated cyclic carbonate is not limited, and the fluorinated unsaturated cyclic carbonate can be produced by a known method optionally selected. The molecular weight is more preferably 100 or more, while more preferably 200 or less.

One of the fluorinated unsaturated cyclic carbonates may be used singly, or two or more thereof may be used in any combination at any ratio. The content of the fluorinated unsaturated cyclic carbonate is not limited and is optional as long as the effects of the present disclosure are not significantly impaired. The content of the fluorinated unsaturated cyclic carbonate is usually preferably 0.001% by mass or more, more preferably 0.01% by mass or more, further preferably 0.1% by mass or more, while preferably 5% by mass or less, more preferably 4% by mass or less, further preferably 3% by mass or less, based on 100% by mass of the electrolytic solution. Within this range, an electrochemical device containing the electrolytic solution easily exhibits a sufficient effect of improving the cycle characteristics, and easily avoids a situation in which high-temperature storage characteristics deteriorate, a larger amount of gas is generated, and a discharge capacity retention decreases.

The electrolytic solution used in the present disclosure may contain a compound having a triple bond. The compound may be of any type as long as the compound has one or more triple bonds in the molecule.

Specific examples of the compound having a triple bond include the following compounds:

hydrocarbon compounds such as 1-pentyne, 2-pentyne, 1-hexyne, 2-hexyne, 3-hexyne, 1-heptyne, 2-heptyne, 3-heptyne, 1-octyne, 2-octyne, 3-octyne, 4-octyne, 1-nonyne, 2-nonyne, 3-nonyne, 4-nonyne, 1-dodecyne, 2-dodecyne, 3-dodecyne, 4-dodecyne, 5-dodecyne, phenyl acetylene, 1-phenyl-1-propyne, 1-phenyl-2-propyne, 1-phenyl-1-butyne, 4-phenyl-1-butyne, 4-phenyl-1-butyne, 1-phenyl-1-pentyne, 5-phenyl-1-pentyne, 1-phenyl-1-hexyne, 6-phenyl-1-hexyne, diphenyl acetylene, 4-ethynyl toluene, and dicyclohexyl acetylene;

monocarbonates such as 2-propynylmethyl carbonate, 2-propynylethyl carbonate, 2-propynylpropyl carbonate, 2-propynylbutyl carbonate, 2-propynylphenyl carbonate, 2-propynylcyclohexyl carbonate, di-2-propynylcarbonate, 1-methyl-2-propynylmethyl carbonate, 1,1-dimethyl-2-propynylmethyl carbonate, 2-butynylmethyl carbonate, 3-butynylmethyl carbonate, 2-pentynylmethyl carbonate, 3-pentynylmethyl carbonate, and 4-pentynylmethyl carbonate;

dicarbonates such as 2-butyne-1,4-diol dimethyl dicarbonate, 2-butyne-1,4-diol diethyl dicarbonate, 2-butyne-1,4-diol dipropyl dicarbonate, 2-butyne-1,4-diol dibutyl dicarbonate, 2-butyne-1,4-diol diphenyl dicarbonate, and 2-butyne-1,4-diol dicyclohexyl dicarbonate;

monocarboxylates such as 2-propynyl acetate, 2-propynyl propionate, 2-propynyl butyrate, 2-propynyl benzoate, 2-propynyl cyclohexylcarboxylate, 1,1-dimethyl-2-propynyl acetate, 1,1-dimethyl-2-propynyl propionate, 1,1-dimethyl-2-propynyl butyrate, 1,1-dimethyl-2-propynyl benzoate, 1,1-dimethyl-2-propynyl cyclohexylcarboxylate, 2-butynyl acetate, 3-butynyl acetate, 2-pentynyl acetate, 3-pentynyl acetate, 4-pentynyl acetate, methyl acrylate, ethyl acrylate, propyl acrylate, vinyl acrylate, 2-propenyl acrylate, 2-butenyl acrylate, 3-butenyl acrylate, methyl methacrylate, ethyl methacrylate, propyl methacrylate, vinyl methacrylate, 2-propenyl methacrylate, 2-butenyl methacrylate, 3-butenyl methacrylate, methyl 2-propynoate, ethyl 2-propynoate, propyl 2-propynoate, vinyl 2-propynoate, 2-propenyl 2-propynoate, 2-butenyl 2-propynoate, 3-butenyl 2-propynoate, methyl 2-butynoate, ethyl 2-butynoate, propyl 2-butynoate, vinyl 2-butynoate, 2-propenyl 2-butynoate, 2-butenyl 2-butynoate, 3-butenyl 2-butynoate, methyl 3-butynoate, ethyl 3-butynoate, propyl 3-butynoate, vinyl 3-butynoate, 2-propenyl 3-butynoate, 2-butenyl 3-butynoate, 3-butenyl 3-butynoate, methyl 2-pentynoate, ethyl 2-pentynoate, propyl 2-pentynoate, vinyl 2-pentynoate, 2-propenyl 2-pentynoate, 2-butenyl 2-pentynoate, 3-butenyl 2-pentynoate, methyl 3-pentynoate, ethyl 3-pentynoate, propyl 3-pentynoate, vinyl 3-pentynoate, 2-propenyl 3-pentynoate, 2-butenyl 3-pentynoate, 3-butenyl 3-pentynoate, methyl 4-pentynoate, ethyl 4-pentynoate, propyl 4-pentynoate, vinyl 4-pentynoate, 2-propenyl 4-pentynoate, 2-butenyl 4-pentynoate, and 3-butenyl 4-pentynoate, fumarates, methyl trimethylacetate, and ethyl trimethylacetate;

dicarboxylates such as 2-butyne-1,4-diol diacetate, 2-butyne-1,4-diol dipropionate, 2-butyne-1,4-diol dibutyrate, 2-butyne-1,4-diol dibenzoate, 2-butyne-1,4-diol dicyclohexanecarboxylate, hexahydrobenzo[1,3,2]dioxathiolane-2-oxide (1,2-cyclohexane diol, 2,2-dioxide-1,2-oxathiolan-4-yl acetate, and 2,2-dioxide-1,2-oxathiolan-4-yl acetate;

oxalic acid diesters such as methyl 2-propynyl oxalate, ethyl 2-propynyl oxalate, propyl 2-propynyl oxalate, 2-propynyl vinyl oxalate, allyl 2-propynyl oxalate, di-2-propynyl oxalate, 2-butynyl methyl oxalate, 2-butynyl ethyl oxalate, 2-butynyl propyl oxalate, 2-butynyl vinyl oxalate, allyl 2-butynyl oxalate, di-2-butynyl oxalate, 3-butynyl methyl oxalate, 3-butynyl ethyl oxalate, 3-butynyl propyl oxalate, 3-butynyl vinyl oxalate, allyl 3-butynyl oxalate, and di-3-butynyl oxalate;

phosphine oxides such as methyl(2-propynyl)(vinyl)phosphine oxide, divinyl(2-propynyl)phosphine oxide, di(2-propynyl)(vinyl)phosphine oxide, di(2-propenyl)2(-propynyl)phosphine oxide, di(2-propynyl)(2-propenyl)phosphine oxide, di(3-butenyl)(2-propynyl)phosphine oxide, and di(2-propynyl)(3-butenyl)phosphine oxide;

phosphinates such as 2-propynyl methyl(2-propenyl)phosphinate, 2-propynyl 2-butenyl(methyl)phosphinate, 2-propynyl di(2-propenyl)phosphinate, 2-propynyl di(3-butenyl)phosphinate, 1,1-dimethyl-2-propynyl methyl(2-propenyl)phosphinate, 1,1-dimethyl-2-propynyl 2-butenyl(methyl)phosphinate, 1,1-dimethyl-2-propynyl di(2-propenyl)phosphinate, 1,1-dimethyl-2-propynyl di(3-butenyl)phosphinate, 2-propenyl methyl(2-propynyl)phosphinate, 3-butenyl methyl(2-propynyl)phosphinate, 2-propenyl di(2-propynyl)phosphinate, 3-butenyl di(2-propynyl)phosphinate, 2-propenyl 2-propynyl(2-propenyl)phosphinate, and 3-butenyl 2-propynyl(2-propenyl)phosphinate;

phosphonates such as methyl 2-propynyl 2-propenylphosphonate, methyl(2-propynyl) 2-butenylphosphonate, (2-propynyl)(2-propenyl) 2-propenylphosphonate, (3-butenyl)(2-propynyl) 3-butenylphosphonate, (1,1-dimethyl-2-propynyl)(methyl) 2-propenylphosphonate, (1,1-dimethyl-2-propynyl)(methyl) 2-butenylphosphonate, (1,1-dimethyl-2-propynyl)(2-propenyl) 2-propenylphosphonate, (3-butenyl)(1,1-dimethyl-2-propynyl) 3-butenylphosphonate, (2-propynyl)(2-propenyl) methylphosphonate, (3-butenyl)(2-propynyl) methylphosphonate, (1,1-dimethyl-2-propynyl)(2-propenyl) methylphosphonate, (3-butenyl)(1,1-dimethyl-2-propynyl) methylphosphonate, (2-propynyl)(2-propenyl) ethylphosphonate, (3-butenyl)(2-propynyl) ethylphosphonate, (1,1-dimethyl-2-propynyl)(2-propenyl) ethylphosphonate, and (3-butenyl)(1,1-dimethyl-2-propynyl) ethylphosphonate; and

phosphates such as (methyl)(2-propenyl)(2-propynyl) phosphate, (ethyl)(2-propenyl)(2-propynyl) phosphate, (2-butenyl)(methyl)(2-propynyl) phosphate, (2-butenyl)(ethyl)(2-propynyl) phosphate, (1,1-dimethyl-2-propynyl)(methyl)(2-propenyl) phosphate, (1,1-dimethyl-2-propynyl)(ethyl)(2-propenyl) phosphate, (2-butenyl)(1,1-dimethyl-2-propynyl)(methyl) phosphate, and (2-butenyl)(ethyl)(1,1-dimethyl-2-propynyl) phosphate.

Preferred among these are compounds having an alkynyloxy group because of more stably forming a negative electrode film in the electrolytic solution.

Furthermore, particularly preferred are compounds such as 2-propynylmethyl carbonate, di-2-propynyl carbonate, 2-butyne-1,4-diol dimethyl dicarbonate, 2-propynyl acetate, 2-butyne-1,4-diol diacetate, methyl 2-propynyl oxalate, and di-2-propynyl oxalate, in view of improvement in the storage characteristics.

One of the compounds having a triple bond may be used singly, or two or more thereof may be used in any combination at any ratio. The amount of the compound having a triple bond to be blended with respect to the total electrolytic solution used in the present disclosure is not limited and is optional as long as the effects of the present disclosure are not significantly impaired. The compound is usually contained at a concentration of 0.01% by mass or more, preferably 0.05% by mass or more, more preferably 0.1% by mass or more, while usually 5% by mass or less, preferably 3% by mass or less, more preferably 1% by mass or less, with respect to the electrolytic solution used in the present disclosure. When satisfying the above range, the compound further improves the effects such as output characteristics, load characteristics, cycle characteristics, and high-temperature storage characteristics.

In the electrolytic solution used in the present disclosure, an overcharge inhibitor may be used, in order to effectively suppress burst or ignition of a battery in case of falling in a state of overcharge or the like of an electrochemical device including the electrolytic solution.

Examples of the overcharge inhibitor include aromatic compounds, including biphenyl, unsubstituted or alkyl-substituted terphenyl derivatives such as o-terphenyl, m-terphenyl, and p-terphenyl, partially hydrogenated products of unsubstituted or alkyl-substituted terphenyl derivatives, cyclohexylbenzene, t-butylbenzene, t-amylbenzene, diphenyl ether, dibenzofuran, diphenyl cyclohexane, 1,1,3-trimethyl-3-phenylindan, cyclopentylbenzene, cyclohexylbenzene, cumene, 1,3-diisopropylbenzene, 1,4-diisopropylbenzene, t-butylbenzene, t-amylbenzene, t-hexylbenzene, and anisole; partially fluorinated products of the aromatic compounds such as 2-fluorobiphenyl, 4-fluorobiphenyl, o-cyclohexylfluorobenzene, p-cyclohexylfluorobenzene, o-cyclohexylfluorobenzene, p-cyclohexylfluorobenzenefluorobenzene, fluorotoluene, and benzotrifluoride; fluorine-containing anisole compounds such as 2,4-difluoroanisole, 2,5-difluoroanisole, 1,6-difluoroanisole, 2,6-difluoroanisole, and 3,5-difluoroanisole; aromatic acetates such as 3-propylphenyl acetate, 2-ethylphenyl acetate, benzylphenyl acetate, methylphenyl acetate, benzyl acetate, and phenethylphenyl acetate; aromatic carbonates such as diphenyl carbonate and methylphenyl carbonate; toluene derivatives such as toluene and xylene, and unsubstituted or alkyl-substituted biphenyl derivatives such as 2-methylbiphenyl, 3-methylbiphenyl, 4-methylbiphenyl, and o-cyclohexylbiphenyl. Preferred among these are aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran, diphenyl cyclohexane, 1,1,3-trimethyl-3-phenylindan, 3-propylphenyl acetate, 2-ethylphenyl acetate, benzylphenyl acetate, methylphenyl acetate, benzyl acetate, diphenyl carbonate, and methylphenyl carbonate. One of these may be used singly, or two or more of these may be used in combination. When two or more of these are used in combination, particularly preferred is a combination of cyclohexylbenzene and t-butylbenzene or t-amylbenzene, or a combination of at least one oxygen-free aromatic compound selected from biphenyl, alkylbiphenyl, terphenyl, partially hydrogenated terphenyl, cyclohexylbenzene, t-butylbenzene, t-amylbenzene, and the like and at least one oxygen-containing aromatic compound selected from diphenyl ether, dibenzofuran, and the like, in view of a balance between the overcharge inhibiting characteristics and the high-temperature storage characteristics with a combination use of two or more thereof.

The electrolytic solution used in the present disclosure may contain a carboxylic anhydride (provided that the compound (2) is excluded). Preferred is a compound represented by the following general formula (6). A method for producing the carboxylic anhydride is not limited, and the carboxylic anhydride can be produced by a known method

optionally selected.

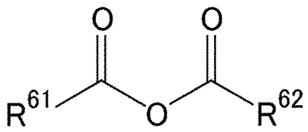

wherein $R^{61}$ and $R^{62}$ each independently represent a hydrocarbon group having 1 or more and 15 or less carbon atoms and optionally having a substituent.

The type of $R^{61}$ and $R^{62}$ is not limited as long as $R^{61}$ and $R^{62}$ each are a monovalent hydrocarbon group. For example, $R^{61}$ and $R^{62}$ may be an aliphatic hydrocarbon group or an aromatic hydrocarbon group, or may be a group having an aliphatic hydrocarbon group and an aromatic hydrocarbon group bonded. The aliphatic hydrocarbon group may be a saturated hydrocarbon group or may contain an unsaturated bond (carbon-carbon double bond or carbon-carbon triple bond). The aliphatic hydrocarbon group may be chain or cyclic. In the case of a chain group, it may be linear or branched chain. Further, the group may be a group having a chain group and a cyclic group bonded. $R^{61}$ and $R^{62}$ may be the same as or different from each other.

When the hydrocarbon group for $R^{61}$ and $R^{62}$ has a substituent, the type of the substituent is not limited unless not departing from the spirit of the present disclosure. Examples thereof include halogen atoms such as a fluorine atom, a chlorine atom, a bromine atom, and an iodine atom, and preferred is a fluorine atom. Alternatively, examples of the substituent other than the halogen atoms also include substituents having a functional group such as an ester group, a cyano group, a carbonyl group, or an ether group. Preferred are a cyano group and a carbonyl group. The hydrocarbon group for $R^{61}$ and $R^{62}$ may have only one of these substituents or may have two or more thereof. When $R^{61}$ and $R^{62}$ have two or more of the substituent, these substituents may be the same as or different from each other.

The hydrocarbon group for $R^{61}$ and $R^{62}$ each has usually one or more and usually 15 or less carbon atoms, preferably 12 or less carbon atoms, more preferably 10 or less carbon atoms, further preferably 9 or less carbon atoms. When $R^1$ and $R^2$ bind to each other to form a divalent hydrocarbon group, the divalent hydrocarbon group has usually 1 or more and usually 15 or less carbon atoms, preferably 13 or less carbon atoms, more preferably 10 or less carbon atoms, further preferably 8 or less carbon atoms. When the hydrocarbon group for $R^{61}$ and $R^{62}$ has a substituent containing a carbon atom, the total number of carbon atoms of the $R^{61}$ or $R^{62}$ including the substituent preferably satisfies the above range.

Next, specific examples of the acid anhydride represented by the general formula (6) will be described. In the following examples, the term "analog" refers to an acid anhydride obtainable by replacing part of the structure of an acid anhydride mentioned as an example by another structure without departing from the spirit of the present disclosure. Examples thereof include dimers, trimers, and tetramers each composed of a plurality of acid anhydrides, structural isomers such as those having a substituent that has the same number of carbon atoms but also has a branch, and those having a different site at which a substituent binds to the acid anhydride.

First, specific examples of an acid anhydride in which $R^{61}$ and $R^{62}$ are the same as each other will be described below.

Specific examples of an acid anhydride in which $R^{61}$ and $R^{62}$ are chain alkyl groups include acetic anhydride, propionic anhydride, butanoic anhydride, 2-methylpropionic anhydride, 2,2-dimethylpropionic anhydride, 2-methylbutanoic anhydride, 3-methylbutanoic anhydride, 2,2-dimethylbutanoic anhydride, 2,3-dimethylbutanoic anhydride, 3,3-dimethylbutanoic anhydride, 2,2,3-trimethylbutanoic anhydride, 2,3,3-trimethylbutanoic anhydride, 2,2,3,3-tetramethylbutanoic anhydride, 2-ethylbutanoic anhydride, and analogs thereof.

Specific examples of an acid anhydride in which $R^{61}$ and $R^{62}$ are cyclic alkyl groups include cyclopropanecarboxylic anhydride, cyclopentanecarboxylic anhydride, cyclohexanecarboxylic anhydride, and analogs thereof.

Specific examples of an acid anhydride in which $R^{61}$ and $R^{62}$ are alkenyl groups include acrylic anhydride, 2-methylacrylic anhydride, 3-methylacrylic anhydride, 2,3-dimethylacrylic anhydride, 3,3-dimethylacrylic anhydride, 2,3,3-trimethylacrylic anhydride, 2-phenylacrylic anhydride, 3-phenylacrylic anhydride, 2,3-diphenylacrylic anhydride, 3,3-diphenylacrylic anhydride, 3-butenoic anhydride, 2-methyl-3-butenoic anhydride, 2,2-dimethyl-3-butenoic anhydride, 3-methyl-3-butenoic anhydride, 2-methyl-3-methyl-3-butenoic anhydride, 2,2-dimethyl-3-methyl-3-butenoic anhydride, 3-pentenoic anhydride, 4-pentenoic anhydride, 2-cyclopentenecarboxylic anhydride, 3-cyclopentenecarboxylic anhydride, 4-cyclopentenecarboxylic anhydride, and analogs thereof.

Specific examples of an acid anhydride in which $R^{61}$ and $R^{62}$ are alkynyl groups include propynoic anhydride, 3-phenylpropynoic anhydride, 2-butynoic anhydride, 2-penthynoic anhydride, 3-butynoic anhydride, 3-penthynoic anhydride, 4-penthynoic anhydride, and analogs thereof.

Specific examples of an acid anhydride in which $R^{61}$ and $R^{62}$ are aryl groups include benzoic anhydride, 4-methylbenzoic anhydride, 4-ethylbenzoic anhydride, 4-tert-butylbenzoic anhydride, 2-methylbenzoic anhydride, 2,4,6-trimethylbenzoic anhydride, 1-naphthalenecarboxylic anhydride, 2-naphthalenecarboxylic anhydride, and analogs thereof.

Examples of an acid anhydride substituted with a fluorine atom are mainly listed below as examples of the acid anhydride in which $R^{61}$ and $R^{62}$ are substituted with a halogen atom. Acid anhydrides obtainable by replacing any or all of the fluorine atoms thereof with a chlorine atom, a bromine atom, or an iodine atom are also included in the exemplary compounds.

Examples of an acid anhydride in which $R^{61}$ and $R^{62}$ are halogen-substituted chain alkyl groups include fluoroacetic anhydride, difluoroacetic anhydride, trifluoroacetic anhydride, 2-fluoropropionic anhydride, 2,2-difluoropropionic anhydride, 2,3-difluoropropionic anhydride, 2,2,3-trifluoropropionic anhydride, 2,3,3-trifluoropropionic anhydride, 2,2,3,3-tetrapropionic anhydride, 2,3,3,3-tetrapropionic anhydride, 3-fluoropropionic anhydride, 3,3-difluoropropionic anhydride, 3,3,3-trifluoropropionic anhydride, perfluoropropionic anhydride, and analogs thereof.

Examples of an acid anhydride in which $R^{61}$ and $R^{62}$ are halogen-substituted cyclic alkyl groups include 2-fluorocyclopentanecarboxylic anhydride, 3-fluorocyclopentanecarboxylic anhydride, 4-fluorocyclopentanecarboxylic anhydride, and analogs thereof.

Examples of an acid anhydride in which $R^{61}$ and $R^{62}$ are halogen-substituted alkenyl groups include 2-fluoroacrylic anhydride, 3-fluoroacrylic anhydride, 2,3-difluoroacrylic anhydride, 3,3-difluoroacrylic anhydride, 2,3,3-trifluoroacrylic anhydride, 2-(trifluoromethyl)acrylic anhydride, 3-(trifluoromethyl)acrylic anhydride, 2,3-bis(trifluoromethyl)acrylic anhydride, 2,3,3-tris(trifluoromethyl)acrylic anhydride, 2-(4-fluorophenyl)acrylic anhydride, 3-(4-fluorophenyl)acrylic anhydride, 2,3-bis(4-fluorophenyl)acrylic anhydride, 3,3-bis(4-fluorophenyl)acrylic anhydride, 2-fluoro-3-butenoic anhydride, 2,2-difluoro-3-butenoic anhydride, 3-fluoro-2-butenoic anhydride, 4-fluoro-3-butenoic anhydride, 3,4-difluoro-3-butenoic anhydride, 3,3,4-trifluoro-3-butenoic anhydride, and analogs thereof.

Examples of an acid anhydride in which $R^{61}$ and $R^{62}$ are halogen-substituted alkynyl groups include 3-fluoro-2-propynoic anhydride, 3-(4-fluorophenyl)-2-propynoic anhydride, 3-(2,3,4,5,6-pentafluorophenyl)-2-propynoic anhydride, 4-fluoro-2-butynoic anhydride, 4,4-difluoro-2-butynoic anhydride, 4,4,4-trifluoro-2-butynoic anhydride, and analogs thereof.

Examples of an acid anhydride in which $R^{61}$ and $R^{62}$ are halogen-substituted aryl groups include 4-fluorobenzoic anhydride, 2,3,4,5,6-pentafluorobenzoic anhydride, 4-trifluoromethylbenzoic anhydride, and analogs thereof.

Examples of an acid anhydride in which $R^{61}$ and $R^{62}$ each has a substituent having a functional group such as an ester, a nitrile, a ketone, or an ether include methoxyformic anhydride, ethoxyformic anhydride, methyloxalic anhydride, ethyloxalic anhydride, 2-cyanoacetic anhydride, 2-oxopropionic anhydride, 3-oxobutanoic anhydride, 4-acetylbenzoic anhydride, methoxyacetic anhydride, 4-methoxybenzoic anhydride, and analogs thereof.

Subsequently, specific examples of an acid anhydride in which $R^{61}$ and $R^{62}$ are different from each other will be described below.

$R^{61}$ and $R^{62}$ may be in any combination of examples mentioned above and analogs thereof. The following gives representative examples.

Examples of a combination of chain alkyl groups include acetic propionic anhydride, acetic butanoic anhydride, butanoic propionic anhydride, and acetic 2-methylpropionic anhydride.

Examples of a combination of a chain alkyl group and a cyclic alkyl group include acetic cyclopentanoic anhydride, acetic cyclohexanoic anhydride, and cyclopentanoic propionic anhydride.

Examples of a combination of a chain alkyl group and an alkenyl group include acetic acrylic anhydride, acetic 3-methylacrylic anhydride, acetic 3-butenoic anhydride, and acrylic propionic anhydride.

Examples of a combination of a chain alkyl group and an alkynyl group include acetic propynoic anhydride, acetic 2-butynoic anhydride, acetic 3-butynoic anhydride, acetic 3-phenyl propynoic anhydride, and propionic propynoic anhydride.

Examples of a combination of a chain alkyl group and an aryl group include acetic benzoic anhydride, acetic 4-methylbenzoic anhydride, acetic 1-naphthalenecarboxylic anhydride, and benzoic propionic anhydride.

Examples of a combination of a chain alkyl group and a hydrocarbon group having a functional group include acetic fluoroacetic anhydride, acetic trifluoroacetic anhydride, acetic 4-fluorobenzoic anhydride, fluoroacetic propionic anhydride, acetic alkyloxalic anhydride, acetic 2-cyanoacetic anhydride, acetic 2-oxopropionic anhydride, acetic methoxyacetic anhydride, and methoxyacetic propionic anhydride.

Examples of a combination of cyclic alkyl groups include cyclopentanoic cyclohexanoic anhydride.

Examples of a combination of a cyclic alkyl group and an alkenyl group include acrylic cyclopentanoic anhydride, 3-methylacrylic cyclopentanoic anhydride, 3-butenoic cyclopentanoic anhydride, and acrylic cyclohexanoic anhydride.

Examples of a combination of a cyclic alkyl group and an alkynyl group include propynoic cyclopentanoic anhydride, 2-butynoic cyclopentanoic anhydride, and propynoic cyclohexanoic anhydride.

Examples of a combination of a cyclic alkyl group and an aryl group include benzoic cyclopentanoic anhydride, 4-methylbenzoic cyclopentanoic anhydride, and benzoic cyclohexanoic anhydride.

Examples of a combination of a cyclic alkyl group and a hydrocarbon group having a functional group include

fluoroacetic cyclopentanoic anhydride, cyclopentanoic trifluoroacetic anhydride, cyclopentanoic 2-cyanoacetic anhydride, cyclopentanoic methoxyacetic anhydride, and cyclohexanoic fluoroacetic anhydride.

Examples of a combination of alkenyl groups include acrylic 2-methylacrylic anhydride, acrylic 3-methylacrylic anhydride, acrylic 3-butenoic anhydride, and 2-methylacrylic 3-methylacrylic anhydride.

Examples of a combination of an alkenyl group and an alkynyl group include acrylic propynoic anhydride, acrylic 2-butynoic anhydride, and 2-methylacrylic propynoic anhydride.

Examples of a combination of an alkenyl group and an aryl group include acrylic benzoic anhydride, acrylic 4-methylbenzoic anhydride, and 2-methylacrylic benzoic anhydride.

Examples of a combination of an alkenyl group and a hydrocarbon group having a functional group include acrylic fluoroacetic anhydride, acrylic trifluoroacetic anhydride, acrylic 2-cyanoacetic anhydride, acrylic methoxyacetic anhydride, and 2-methylacrylic fluoroacetic anhydride.

Examples of a combination of alkynyl groups include propynoic 2-butynoic anhydride, propynoic 3-butynoic anhydride, and 2-butynoic 3-butynoic anhydride.

Examples of a combination of an alkynyl group and an aryl group include benzoic propynoic anhydride, 4-methylbenzoic propynoic anhydride, and benzoic 2-butynoic anhydride.

Examples of a combination of an alkynyl group and a hydrocarbon group having a functional group include propynoic fluoroacetic anhydride, propynoic trifluoroacetic anhydride, propynoic 2-cyanoacetic anhydride, propynoic methoxyacetic anhydride, and 2-butynoic fluoroacetic anhydride.

Examples of a combination of aryl groups include benzoic 4-methylbenzoic anhydride, benzoic 1-naphthalenecarboxylic anhydride, and 4-methylbenzoic 1-naphthalenecarboxylic anhydride.

Examples of a combination of an aryl group and a hydrocarbon group having a functional group include benzoic fluoroacetic anhydride, benzoic trifluoroacetic anhydride, benzoic 2-cyanoacetic anhydride, benzoic methoxyacetic anhydride, and 4-methylbenzoic fluoroacetic anhydride.

Examples of a combination of hydrocarbon groups each having a functional group include fluoroacetic trifluoroacetic anhydride, fluoroacetic 2-cyanoacetic anhydride, fluoroacetic methoxyacetic anhydride, and trifluoroacetic 2-cyanoacetic anhydride.

Preferred among the acid anhydrides forming the above chain structures are acetic anhydride, propionic anhydride, 2-methylpropionic anhydride, cyclopentanecarboxylic anhydride, cyclohexanecarboxylic anhydride, acrylic anhydride, 2-methylacrylic anhydride, 3-methylacrylic anhydride, 2,3-dimethylacrylic anhydride, 3,3-dimethylacrylic anhydride, 3-butenoic anhydride, 2-methyl-3-butenoic anhydride, propynoic anhydride, 2-butynoic anhydride, benzoic anhydride, 2-methylbenzoic anhydride, 4-methylbenzoic anhydride, 4-tert-butylbenzoic anhydride, trifluoroacetic anhydride, 3,3,3-trifluoropropionic anhydride, 2-(trifluoromethyl)acrylic anhydride, 2-(4-fluorophenyl)acrylic anhydride, 4-fluorobenzoic anhydride, 2,3,4,5,6-pentafluorobenzoic anhydride, methoxyformic anhydride, and ethoxyformic anhydride. More preferred are acrylic anhydride, 2-methylacrylic anhydride, 3-methylacrylic anhydride, benzoic anhydride, 2-methylbenzoic anhydride, 4-methylbenzoic anhydride, 4-tert-butylbenzoic anhydride, 4-fluorobenzoic anhydride, 2,3,4,5,6-pentafluorobenzoic anhydride, methoxyformic anhydride, and ethoxyformic anhydride.

These compounds are preferred because these compounds can appropriately form a bond with lithium oxalate to form a film having excellent durability, thereby improving especially the charge and discharge rate characteristics after a durability test, input and output characteristics, and impedance characteristics.

The molecular weight of the carboxylic anhydride is not limited and is optional as long as the effects of the present disclosure are not significantly impaired. The molecular weight is usually 90 or more, preferably 95 or more, while usually 300 or less, preferably 200 or less. The carboxylic anhydride, when having a molecular weight within the above range, can suppress increase in a viscosity of an electrolytic solution and can appropriately improve the durability due to optimization of the film density.

A method for producing the carboxylic anhydride is also not limited, and the carboxylic anhydride can be produced by a known method optionally selected. Any one of the carboxylic anhydrides described above may be contained singly in the non-aqueous electrolytic solution of the present disclosure, or two or more thereof may be contained in any combination at any ratio.

The content of the carboxylic anhydride with respect to the electrolytic solution used in the present disclosure is not limited, and is optional as long as the effects of the present disclosure are not significantly impaired. The carboxylic anhydride is desirably contained at a concentration of usually 0.01% by mass or more, preferably 0.1% by mass or more, while usually 5% by mass or less, preferably 3% by mass or less with respect to the electrolytic solution used in the present disclosure. When the content of the carboxylic anhydride is within the above range, the electrolytic solution easily exhibits an effect of improving the cycle characteristics and easily improves the battery characteristics because of having a suitable reactivity.

In the electrolytic solution used in the present disclosure, known other aids may be used. Examples of the other aids include hydrocarbon compounds such as pentane, heptane, octane, nonane, decane, cycloheptane, benzene, furan, naphthalene, 2-phenylbicyclohexyl, cyclohexane, 2,4,8,10-tetraoxaspiro[5.5]undecane, and 3,9-divinyl-2,4,8,10-tetraoxaspiro[5.5]undecane;

fluorine-containing aromatic compounds such as fluorobenzene, difluorobenzene, hexafluorobenzene, benzotrifluoride, monofluorobenzene, 1-fluoro-2-cyclohexylbenzene, 1-fluoro-4-tert-butylbenzene, 1-fluoro-3-cyclohexylbenzene, 1-fluoro-2-cyclohexylbenzene, and fluorinated biphenyl;
carbonate compounds such as erythritan carbonate, spiro-bis-dimethylene carbonate, and methoxyethyl-methyl carbonate;
ether-based compounds such as dioxolane, dioxane, 2,5,8,11-tetraoxadodecane, 2,5,8,11,14-pentaoxapentadecane, ethoxymethoxyethane, trimethoxymethane, glyme, and ethylmonoglyme;
ketone-based compounds such as dimethyl ketone, diethyl ketone, and 3-pentanone;
acid anhydrides such as 2-allyl succinic anhydride;
ester compounds such as dimethyl oxalate, diethyl oxalate, ethyl methyl oxalate, di(2-propynyl)oxalate, methyl 2-propynyl oxalate, dimethyl succinate, di(2-propynyl)glutarate, methyl formate, ethyl formate, 2-propynyl formate, 2-butyne-1,4-diyl diformate, 2-propynyl methacrylate, and dimethyl malonate;
amide-based compounds such as acetamide, N-methyl formamide, N,N-dimethyl formamide, and N,N-dimethyl acetamide;
sulfur-containing compounds such as ethylene sulfate, vinylene sulfate, ethylene sulfite, methyl fluorosulfonate, ethyl fluorosulfonate, methyl methanesulfonate, ethyl methanesulfonate, busulfan, sulfolene, diphenyl sulfone, N,N-dimethylmethanesulfonamide, N,N-diethylmethanesulfonamide, methyl vinyl sulfonate, ethyl vinyl sulfonate, allyl vinyl sulfonate, propargyl vinyl sulfonate, methyl allyl sulfonate, ethyl allyl sulfonate, allyl allyl sulfonate, propargyl allyl sulfonate, 1,2-bis(vinylsulfonyloxy)ethane, propanedisulfonic anhydride, sulfobutyric anhydride, sulfobenzoic anhydride, sulfopropionic anhydride, ethanedisulfonic anhydride, methylene methanedisulfonate, 2-propynyl methanesulfonate, pentene sulfite, pentafluorophenyl methanesulfonate, propylene sulfate, propylene sulfite, propane sultone, butylene sulfite, butane-2,3-diyl dimethanesulfonate, 2-butyne-1,4-diyl dimethanesulfonate, 2-propynyl vinyl sulfonate, bis(2-vinylsulfonylethyl)ether, 5-vinyl-hexahydro-1,3,2-benzodioxathiol-2-oxide, 2-propynyl 2-(methanesulfonyloxy)propionate, 5,5-dimethyl-1,2-oxathiolan-4-one 2,2-dioxide, 3-sulfo-propionic anhydride, trimethylene methanedisulfonate, 2-methyl tetrahydrofuran, trimethylene methanedisulfonate, tetramethylene sulfoxide, dimethylene methanedisulfonate, difluoroethyl methyl sulfone, divinyl sulfone, 1,2-bis(vinylsulfonyl)ethane, methyl ethylenebissulfonate, ethyl ethylenebissulfonate, ethylene sulfate, and thiophene 1-oxide;
nitrogen-containing compounds such as 1-methyl-2-pyrrolidinone, 1-methyl-2-piperidone, 3-methyl-2-oxazolidinone, 1,3-dimethyl-2-imidazolidinone, N-methylsuccinimide, nitromethane, nitroethane, and ethylene diamine;
phosphorus-containing compounds such as trimethyl phosphite, triethyl phosphite, triphenyl phosphite, trimethyl phosphate, triethyl phosphate, triphenyl phosphate, dimethyl methyl phosphonate, diethyl ethyl phosphonate, dimethyl vinyl phosphonate, diethyl vinyl phosphonate, ethyl diethyl phosphonoacetate, methyl dimethyl phosphinate, ethyl diethyl phosphinate, trimethylphosphine oxide, triethylphosphine oxide, bis(2,2-difluoroethyl)2,2,2-trifluoroethyl phosphate, bis(2,2,3,3-tetrafluoropropyl)2,2,2-trifluoroethyl phosphate, bis(2,2,2-trifluoroethyl)methyl phosphate, bis(2,2,2-trifluoroethyl)ethyl phosphate, bis(2,2,2-trifluoroethyl)2,2-difluoroethyl phosphate, bis(2,2,2-trifluoroethyl)2,2,3,3-tetrafluoropropyl phosphate, tributyl phosphate, tris(2,2,2-trifluoroethyl)phosphate, tris(1,1,1,3,3,3-hexafluoropropan-2-yl) phosphate, trioctyl phosphate, 2-phenylphenyldimethyl phosphate, 2-phenylphenyldiethyl phosphate, (2,2,2-trifluoroethyl)(2,2,3,3-tetrafluoropropyl)methyl phosphate, methyl 2-(dimethoxyphosphoryl)acetate, methyl 2-(dimethylphosphoryl)acetate, methyl 2-(diethoxyphosphoryl)acetate, methyl 2-(diethylphosphoryl)acetate, methyl methylenebisphosphonate, ethyl methylenebisphosphonte, methyl ethylenebisphosphonate, ethyl ethylenebisphosphonate, methyl butylenebisphosphonate, ethyl butylenebisphosphonate, 2-propynyl 2-(dimethoxyphosphoryl)acetate, 2-propynyl 2-(dimethylphosphoryl)acetate, 2-propynyl 2-(diethoxyphosphoryl)acetate, 2-propynyl 2-(diethylphosphoryl)acetate, tris(trimethylsilyl)phosphate, tris(triethylsilyl)phosphate, tris(trimethoxysilyl)phosphate, tris(trimethylsilyl)phosphite, tris(triethylsilyl)phosphite, tris(trimethoxysilyl)phosphite, and trimethylsilyl polyphosphate;
boron-containing compounds such as tris(trimethylsilyl) borate and tris(trimethoxysilyl) borate; and
silane compounds such as dimethoxyaluminoxytrimethoxysilane, diethoxyaluminoxytriethoxysilane, dipropoxyaluminoxytriethoxysilane, dibutoxyaluminoxytrimethoxysilane, dibutoxyaluminoxytriethoxysilane, titanium tetrakis(trimethylsiloxide), titanium tetrakis(triethylsiloxide), and tetramethylsilane. One of these may be used singly, or two or more of these may be used in combination. Addition of these aids can improve the capacity retention characteristics and the cycle characteristics after high-temperature storage.

Preferred among these as the above other aids are phosphorus-containing compounds, and preferred are tris(trimethylsilyl)phosphate and tris(trimethylsilyl)phosphite.
The amount of the other aids to be blended is not limited, and is optional as long as the effects of the present disclosure are not significantly impaired. The amount of the other aids to be blended is preferably 0.01% by mass or

more and 5% by mass or less based on 100% by mass of the electrolytic solution. The other aids, when the amount is within this range, can easily sufficiently exhibit the effects thereof and can easily avoid a situation in which the battery characteristics deteriorate, such as high-load discharge characteristics. The amount of the other aids to be blended is more preferably 0.1% by mass or more, further preferably 0.2% by mass or more, while more preferably 3% by mass or less, further preferably 1% by mass or less.

The electrolytic solution used in the present disclosure may further contain, as an additive, any of a cyclic carboxylate, a chain carboxylate, an ether compound, a nitrogen-containing compound, a boron-containing compound, an organosilicon-containing compound, a fireproof agent (flame retardant), a surfactant, an additive for increasing the permittivity, an improver for cycle characteristics and rate characteristics, and a sulfone-based compound to the extent that the effects of the present disclosure are not impaired.

Examples of the cyclic carboxylate include those having 3 to 12 carbon atoms in total in the structural formula. Specific examples thereof include gamma-butyrolactone, gamma-valerolactone, gamma-caprolactone, epsilon-caprolactone, and 3-methyl-γ-butyrolactone. Particularly preferred among these is gamma-butyrolactone in view of improvement in the characteristics of an electrochemical device derived from improvement in the degree of dissociation of lithium ions.

The amount of the cyclic carboxylate to be blended as an additive is usually preferably 0.1% by mass or more, more preferably 1% by mass or more, based on 100% by mass of the solvent. When the amount is within this range, the cyclic carboxylate can improve the electric conductivity of the electrolytic solution and thus easily improve the large-current discharge characteristics of an electrochemical device. The amount of the cyclic carboxylate to be blended is preferably 10% by mass or less, more preferably 5% by mass or less. Setting such an upper limit may in this way allow the electrolytic solution to have a viscosity within an appropriate range, may enable reduction in the electric conductivity to be avoided, may suppress increase in the resistance of the negative electrode, and may allow an electrochemical device to have large-current discharge characteristics within a favorable range.

The cyclic carboxylate to be suitably used may also be a fluorinated cyclic carboxylate (fluorine-containing lactone). Examples of the fluorine-containing lactone include fluorine-containing lactones represented by the following formula (C):

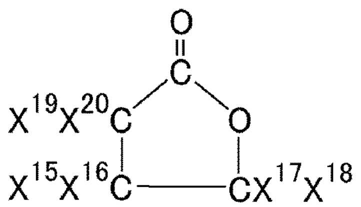

(C)

wherein $X^{15}$ to $X^{20}$ are the same as or different from each other, and are each -H, -F, -Cl, $-CH_3$, or a fluorinated alkyl group; provided that at least one of $X^{15}$ to $X^{20}$ is a fluorinated alkyl group.

Examples of the fluorinated alkyl group for $X^{15}$ to $X^{20}$ include $-CFH_2$, $-CF_2H$, $-CF_3$, $-CH_2CF_3$, $-CF_2CF_3$, $-CH_2CF_2CF_3$, and-$CF(CF_3)_2$. Preferred are $-CH_2CF_3$ and $-CH_2CF_2CF_3$ in view of high oxidation resistance and having an effect of improving the safety.

As long as at least one of $X^{15}$ to $X^{20}$ is a fluorinated alkyl group, only one site of $X^{15}$ to $X^{20}$ or a plurality of sites thereof may be replaced by -H, -F, -Cl, $-CH_3$, or a fluorinated alkyl group. In view of favorable solubility of an electrolyte salt, one to three sites of $X^{15}$ to $X^{20}$ are preferably substituted, one or two sites thereof are more preferably substituted.

The substituted site of the fluorinated alkyl group is not limited. In view of a favorable synthesizing yield, it is preferred that $X^{17}$ and/or $X^{18}$, in particular, $X^{17}$ or $X^{18}$ be a fluorinated alkyl group, especially $-CH_2CF_3$ or $-CH_2CF_2CF_3$. $X^{15}$ to $X^{20}$ other than the fluorinated alkyl group is -H, -F, -Cl, or $CH_3$. In view of favorable solubility of an electrolyte salt, -H is preferred.

In addition to those represented by the formula, examples of the fluorine-containing lactone include fluorine-containing lactones represented by the following formula (D):

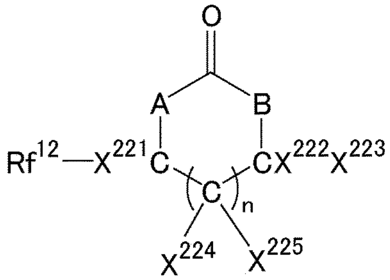

(D)

wherein either one of A or B is $CX^{226}X^{227}$, wherein $X^{226}$ and $X^{227}$ are the same as or different from each other, and are each -H, -F, -Cl, $-CF_3$, $-CH_3$, or an alkylene group in which a hydrogen atom is optionally replaced by a halogen atom and which optionally contains a hetero atom in the chain, and the other is an oxygen atom; $Rf^{12}$ is a fluorinated alkyl group or fluorinated alkoxy group optionally having an ether bond; $X^{221}$ and $X^{222}$ are the same as or different from each other, and are each -H, -F, -Cl, $-CF_3$, or $CH_3$; $X^{223}$ to $X^{225}$ are the same as or different from each other, and are each -H, -F, -Cl, or an alkyl group in which a hydrogen atom is optionally replaced by a halogen atom and which optionally contains a hetero atom in the chain; and n=0 or 1.

A preferred example of the fluorine-containing lactone represented by the formula (D) includes a 5-membered ring structure represented by the following formula (E):

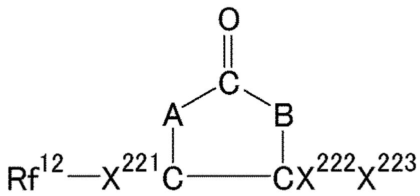

(E)

wherein A, B, $Rf^{12}$, $X^{221}$, $X^{222}$, and $X^{223}$ are defined as in the formula (D), in view of easily synthesized and having favorable chemical stability. Further, in accordance with the combination of A and B, fluorine-containing lactones represented by the following formula (F):

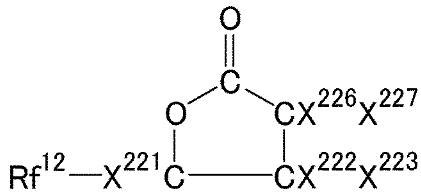

(F)

wherein $Rf^{12}$, $X^{221}$, $X^{222}$, $X^{223}$, $X^{226}$, and $X^{227}$ are defined as in the formula (D); and fluorine-containing lactones represented by the following formula (G):

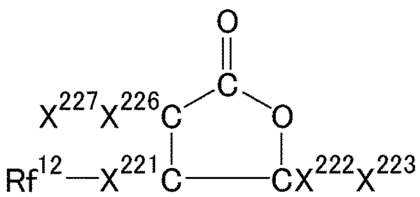

(G)

wherein $Rf^{12}$, $X^{221}$, $X^{222}$, $X^{223}$, $X^{226}$, and $X^{227}$ are defined as in the formula (D) may be mentioned.

Among these, those represented by the following formulas:

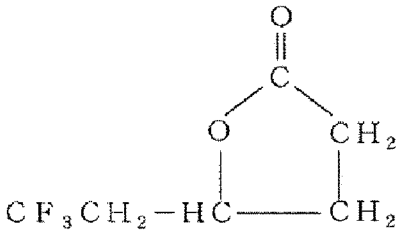
,
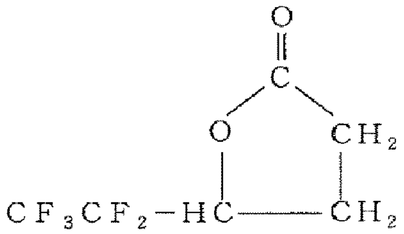
,
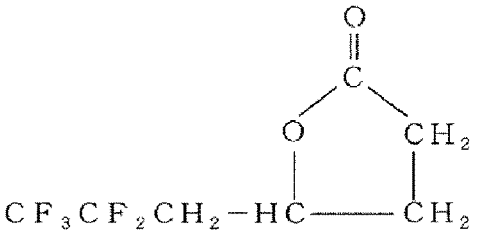
,
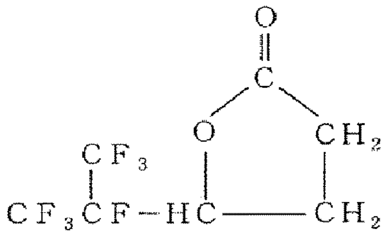

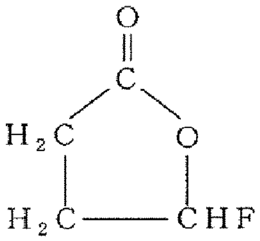
,
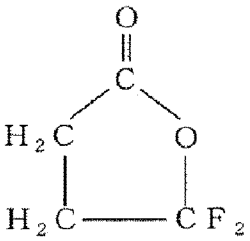
,
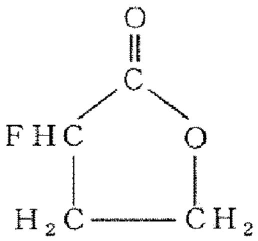
,

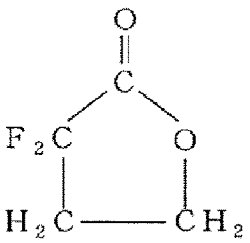
,
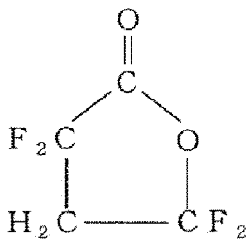

may be mentioned, because excellent characteristics such as high permittivity and high withstand voltage are particularly exerted, and other characteristics of the electrolytic solution in the present disclosure are improved, for example, good solubility of an electrolyte salt and reduction in the internal resistance.

Incorporation of a fluorinated cyclic carboxylate can result in effects of improving the ion conductivity, improving the safety, improving the stability at high temperature, and the like.

Examples of the chain carboxylate include those having 3 to 7 carbon atoms in total in the structural formula thereof. Specific examples thereof include methyl acetate, ethyl acetate, n-propyl acetate, isopropyl acetate, n-butyl acetate, isobutyl acetate, t-butyl acetate, methyl propionate, ethyl propionate, n-propyl propionate, isobutyl propionate, n-butyl propionate, methyl butyrate, isobutyl propionate, t-butyl propionate, methyl butyrate, ethyl butyrate, n-propyl butyrate, isopropyl butyrate, methyl isobutyrate, ethyl isobutyrate, n-propyl isobutyrate, and isopropyl isobutyrate.

Preferred among these are methyl acetate, ethyl acetate, n-propyl acetate, n-butyl acetate, methyl propionate, ethyl propionate, n-propyl propionate, isopropyl propionate, methyl butyrate, ethyl butyrate, and the like, in view of improvement in the ion conductivity owing to viscosity reduction.

The ether compound is preferably a chain ether having 2 to 10 carbon atoms and a cyclic ether having 3 to 6 carbon atoms.

Examples of the chain ether having 2 to 10 carbon atoms include dimethyl ether, diethyl ether, di-n-butyl ether, dimethoxymethane, methoxyethoxymethane, diethoxymethane, dimethoxyethane, methoxyethoxyethane, diethoxyethane, ethylene glycol di-n-propyl ether, ethylene glycol di-n-butyl ether, diethylene glycol, diethylene glycol dimethyl ether, pentaethylene glycol, triethylene glycol dimethyl ether, triethylene glycol, tetraethylene glycol, tetraethylene glycol dimethyl ether, and diisopropyl ether.

As the ether compound, a fluorinated ether also may be suitably used.

An example of the fluorinated ether is a fluorinated ether (I) represented by the following general formula (I):

$$Rf^3\text{-O-}Rf^4 \qquad (I)$$

wherein $Rf^3$ and $Rf^4$ are the same as or different from each other, and each are an alkyl group having 1 to 10 carbon atoms or a fluorinated alkyl group having 1 to 10 carbon atoms; provided that at least one of $Rf^3$ and $Rf^4$ is a fluorinated alkyl group. When the fluorinated ether (I) is contained, the flame retardancy of the electrolytic solution is improved, and additionally, the stability and safety thereof at a high temperature and at a high voltage are improved.

In the general formula (I), at least one of $Rf^3$ and $Rf^4$ is a fluorinated alkyl group having 1 to 10 carbon atoms. From the viewpoint of further improvement in the flame retardancy of the electrolytic solution and the stability and safety thereof at a high temperature and at a high voltage, both $Rf^3$ and $Rf^4$ are preferably fluorinated alkyl groups having 1 to 10 carbon atoms. In this case, $Rf^3$ and $Rf^4$ may be the same as or different from each other.

In particular, it is more preferred that $Rf^3$ and $Rf^4$ be the same as or different from each other, $Rf^3$ be a fluorinated alkyl group having 3 to 6 carbon atoms, and $Rf^4$ be a fluorinated alkyl group having 2 to 6 carbon atoms.

If the total number of the carbon atoms of $Rf^3$ and $Rf^4$ is excessively small, the fluorinated ether may have an excessively low boiling point. If the number of the carbon atoms of $Rf^3$ or $Rf^4$ is excessively large, the solubility of an electrolyte salt may decrease, the miscibility with the other solvent may begin to be adversely affected, and the rate characteristics may deteriorate due to increase in the viscosity. A case where $Rf^3$ has 3 or 4 carbon atoms and $Rf^4$ has 2 or 3 carbon atoms is advantageous, in view of an excellent boiling point and excellent rate characteristics.

The fluorinated ether (I) preferably has a fluorine content of 40 to 75% by mass. When having a fluorine content in this range, the fluorinated ether (I) has a particularly excellent balance between non-flammability and miscibility. Having the above range is also preferred in view of favorable oxidation resistance and safety.

The lower limit of the fluorine content is more preferably 45% by mass, further preferably 50% by mass, particularly preferably 55% by mass. The upper limit is more preferably 70% by mass, further preferably 66% by mass.

The fluorine content in the fluorinated ether (I) is a value calculated based on the structural formula of the fluorinated ether (I) by:

$$[(\text{Number of fluorine atoms} \times 19)/\text{Molecular weight of fluorinated ether (I)}] \times 100\ (\%).$$

Examples of $Rf^3$ include $CF_3CF_2CH_2$-, $CF_3CFHCF_2$-, $HCF_2CF_2CF_2$-, $HCF_2CF_2CH_2$-, $CF_3CF_2CH_2CH_2$-, $CF_3CFHCF_2CH_2$-, $HCF_2CF_2CF_2CF_2$-, $HCF_2CF_2CF_2CH_2$-, $HCF_2CF_2CH_2CH_2$-, and $HCF_2CF(CF_3)CH_2$-. Examples of $Rf^4$ include $-CH_2CF_2CF_3$,$-CF_2CFHCF_3$, $-CF_2CF_2CF_2H$, $-CH_2CF_2CF_2H$, $-CH_2CH_2CF_2CF_3$, $-CH_2CF_2CFHCF_3$, $-CF_2CF_2CF_2CF_2H$, $-CH_2CF_2CF_2CF_2H$, $-CH_2CH_2CF_2CF_2H$, $-CH_2CF(CF_3)CF_2H$, $-CF_2CF_2H$, $-CH_2CF_2H$, and $-CF_2CH_3$.

Specific examples of the fluorinated ether (I) include $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $C_6F_{13}OCH_3$, $C_6F_{13}OC_2H_5$, $C_8F_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH(C_2H_5)_2$, and $HCF_2CF_2OCH_2CH(CH_3)_2$.

In particular, those having $HCF_2$- or $CF_3CFH$- at one or each end can provide a fluorinated ether (I) having excellent polarizability and a high boiling point. The boiling point of the fluorinated ether (I) is preferably 67 to 120°C, more preferably 80°C or more, further preferably 90°C or more.

Examples of such a fluorinated ether (I) include one or two or more of $CF_3CH_2OCF_2CFHCF_3$, $CF_3CF_2CH_2OCF_2CFHCF_3$, $HCF_2CF_2CH_2OCF_2CFHCF_3$, $HCF_2CF_2CH_2OCH_2CF_2CF_2H$, $CF_3CFHCF_2CH_2OCF_2CFHCF_3$, $HCF_2CF_2CH_2OCF_2CF_2H$, and $CF_3CF_2CH_2OCF_2CF_2H$.

Among these, the fluorinated ether (I) is preferably at least one selected from the group consisting of $HCF_2CF_2CH_2OCF_2CFHCF_3$ (boiling point: 106°C), $CF_3CF_2CH_2OCF_2CFHCF_3$ (boiling point: 82°C), $HCF_2CF_2CH_2OCF_2CF_2H$ (boiling point: 92°C), and $CF_3CF_2CH_2OCF_2CF_2H$ (boiling point: 68°C), more preferably at least one selected from the group consisting of $HCF_2CF_2CH_2OCF_2CFHCF_3$ (boiling point: 106°C) and $HCF_2CF_2CH_2OCF_2CF_2H$ (boiling point: 92°C), because of being advantageous in view of a high boiling point and favorable miscibility with other solvent and solubility of an electrolyte salt.

Examples of the cyclic ether having 3 to 6 carbon atoms include 1,2-dioxane, 1,3-dioxane, 2-methyl-1,3-dioxane, 4-methyl-1,3-dioxane, 1,4-dioxane, metaformaldehyde, 2-methyl-1,3-dioxolane, 1,3-dioxolane, 4-methyl-1,3-dioxolane, 2-(trifluoroethyl)dioxolane, 2,2,-bis(trifluoromethyl)-1,3-dioxolane, and fluorinated compounds thereof. Preferred among these are dimethoxymethane, diethoxymethane, ethoxymethoxymethane, ethylene glycol n-propyl ether, ethylene glycol di-n-butyl ether, diethylene glycol dimethyl ether, and crown ethers, in view of high ability to solvate with lithium ions and

improvement in the degree of ion dissociation, particularly preferred are dimethoxymethane, diethoxymethane, and ethoxymethoxymethane because of giving a low viscosity and a high ion conductivity.

Examples of the nitrogen-containing compound to be used include nitrile, fluorine-containing nitrile, carboxylic acid amide, fluorine-containing carboxylic acid amide, sulfonic acid amide and fluorine-containing sulfonic acid amide, acetamide, and formamide. 1-methyl-2-pyrrolidinone, 1-methyl-2-piperidone, 3-methyl-2-oxazilidinone, 1,3-dimethyl-2-imidazolidinone, and N-methylsuccinimide, and the like also may be used. However, the nitrile compounds represented by the general formulas (1a), (1b), and (1c) are not included in the above nitrogen-containing compounds.

Examples of the boron-containing compound include borates such as trimethyl borate and triethyl borate, boric acid ethers, and alkyl borates.

Examples of the organosilicon-containing compound include $(CH_3)_4$-Si, $(CH_3)_3$-Si-Si $(CH_3)_3$, and silicon oil.

Examples of the fireproof agent (flame retardant) include phosphates and phosphazene-based compounds. Examples of the phosphates include fluorine-containing alkyl phosphates, non-fluorine-containing alkyl phosphates, and aryl phosphates. Fluorine-containing alkyl phosphates are preferred among these because such phosphates can achieve a non-flammable effect in a small amount.

Examples of the phosphazene-based compounds include methoxypentafluorocyclotriphosphazene, phenoxypentafluorocyclotriphosphazene, dimethylaminopentafluorocyclotriphosphazene, diethylaminopentafluorocyclotriphosphazene, ethoxypentafluorocyclotriphosphazene, and ethoxyheptafluorocyclotetraphosphazene.

Specific examples of the fluorine-containing alkyl phosphates include fluorine-containing dialkyl phosphates disclosed in Japanese Patent Laid-Open No. 11-233141, cyclic alkyl phosphates disclosed in Japanese Patent Laid-Open No. 11-283669, and fluorine-containing trialkyl phosphates.

Preferred examples of the fireproof agent (flame retardant) include $(CH_3O)_3P=O$, $(CF_3CH_2O)_3P=O$, $(HCF_2CH_2O)_3P=O$, $(CF_3CF_2CH_2)_3P=O$, and $(HCF_2CF_2CH_2)_3P=O$.

The surfactant may be any of cationic surfactants, anionic surfactants, nonionic surfactants, and amphoteric surfactants. The surfactant preferably contains a fluorine atom because of giving favorable cycle characteristics and rate characteristics.

Preferred examples of such a surfactant containing a fluorine atom include fluorine-containing carboxylic acid salts represented by the following formula (30):

$$Rf^5COO^-M^+ \qquad (30)$$

wherein $Rf^5$ is a fluorine-containing alkyl group having 3 to 10 carbon atoms and optionally containing an ether bond; $M^+$ is $Li^+$, $Na^+$, $K^+$, or $NHR'_3{}^+$, wherein R's are the same as or different from each other, and are each H or an alkyl group having 1 to 3 carbon atoms, and fluorine-containing sulfonic acid salts represented by the following formula (40):

$$Rf^6SO_3^-M^+ \qquad (40)$$

wherein $Rf^6$ is a fluorine-containing alkyl group having 3 to 10 carbon atoms and optionally containing an ether bond; $M^+$ is $Li^+$, $Na^+$, $K^+$, or $NHR'_3{}^+$, wherein R' are the same as or different from each other, and are each H or an alkyl group having 1 to 3 carbon atoms.

The content of the surfactant is preferably 0.01 to 2% by mass relative to the electrolytic solution because the surface tension of the electrolytic solution can be reduced without deterioration in the charge and discharge cycle characteristics.

Examples of the additive for increasing the permittivity include sulfolane, methylsulfolane, $\gamma$-butyrolactone, and $\gamma$-valerolactone.

Examples of the improver for cycle characteristics and rate characteristics include methyl acetate, ethyl acetate, tetrahydrofuran, and 1,4-dioxane.

The electrolytic solution used in the present disclosure may be combined with a polymer material and thereby formed into a gel-like (plasticized) gel electrolytic solution.

Examples of such a polymer material include conventionally known polyethylene oxide and polypropylene oxide, and modified products thereof (Japanese Patent Laid-Open Nos. 8-222270 and 2002-100405); polyacrylate-based polymers, polyacrylonitrile, and fluororesins such as polyvinylidene fluoride and vinylidene fluoride-hexafluoropropylene copolymers (Japanese Translation of PCT International Application Publication Nos. 4-506726 and 8-507407, and Japanese Patent Laid-Open No. 10-294131); and composites of any of these fluororesins and any hydrocarbon resin (Japanese Patent Laid-Open Nos. 11-35765 and 11-86630). In particular, polyvinylidene fluoride or a vinylidene fluoride-hexafluoropropylene copolymer is desirably used as a polymer material for a gel electrolyte.

The electrolytic solution used in the present disclosure may also contain an ion conductive compound disclosed in JP 2004-301934A.

This ion conductive compound is an amorphous fluorine-containing polyether compound having a fluorine-containing group at a side chain and is represented by the formula (101) :

A-(D)-B (101)

wherein D is represented by the formula (201):

$-(D1)_n-(FAE)_m-(AE)_p-(Y)_q-$ (201)

wherein D1 is an ether unit having a fluorine-containing ether group at a side chain and is represented by the formula (2a) :

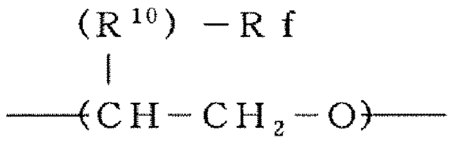
(2a)

wherein Rf is a fluorine-containing ether group optionally having a crosslinkable functional group; and $R^{10}$ is a group or a bond that bonds Rf and the main chain;
FAE is an ether unit having a fluorinated alkyl group at a side chain and is represented by the formula (2b):

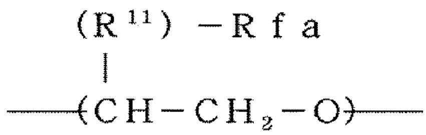
(2b)

wherein Rfa is a hydrogen atom or a fluorinated alkyl group optionally having a crosslinkable functional group; and $R^{11}$ is a group or a bond that bonds Rfa and the main chain;

AE is an ether unit represented by the formula (2c):

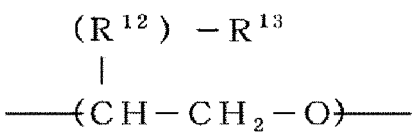
(2c)

wherein $R^{13}$ is a hydrogen atom, an alkyl group optionally having a crosslinkable functional group, an aliphatic cyclic hydrocarbon group optionally having a crosslinkable functional group, or an aromatic hydrocarbon group optionally having a crosslinkable functional group; and $R^{12}$ is a group or a bond that bonds $R^{13}$ and the main chain;
Y is a unit containing at least one of the formulas (2d-1) to (2d-3):

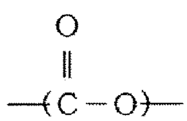
(2d-1) 、

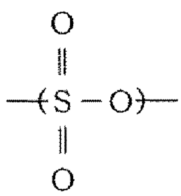
(2d-2) 、

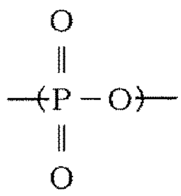

(2d-3)

;

n is an integer of 0 to 200; m is an integer of 0 to 200; p is an integer of 0 to 10,000; q is an integer of 1 to 100; provided that n + m is not 0, and the bonding order of D1, FAE, AE, and Y is not specified;

A and B are the same as or different from each other, and are each a hydrogen atom, an alkyl group optionally containing a fluorine atom and/or a crosslinkable functional group, a phenyl group optionally containing a fluorine atom and/or a crosslinkable functional group, a -COOH group, -OR (wherein R is a hydrogen atom or an alkyl group optionally containing a fluorine atom and/or a crosslinkable functional group), an ester group, or a carbonate group (provided that, when an end of D is an oxygen atom, A and B are each none of a -COOH group, -OR, an ester group, and a carbonate group).

The electrolytic solution used in the present disclosure may contain a sulfone-based compound. Preferred as the sulfone-based compound are a cyclic sulfone having 3 to 6 carbon atoms and a chain sulfone having 2 to 6 carbon atoms. The number of sulfonyl groups in one molecule is preferably 1 or 2.

Examples of the cyclic sulfone include monosulfone compounds such as trimethylene sulfones, tetramethylene sulfones, and hexamethylene sulfones; disulfone compounds such as trimethylene disulfones, tetramethylene disulfones, and hexamethylene disulfones. More preferred among these are tetramethylene sulfones, tetramethylene disulfones, hexamethylene sulfones, and hexamethylene disulfones, particularly preferred are tetramethylene sulfones (sulfolanes), from the viewpoint of permittivity and viscosity.

The sulfolanes are preferably sulfolane and/or sulfolane derivatives (hereinafter, optionally abbreviated as "sulfolanes" including sulfolane). The sulfolane derivatives are preferably those in which one or more hydrogen atoms binding to any carbon atom constituting the sulfolane ring is replaced by a fluorine atom or an alkyl group.

Preferred among these are 2-methylsulfolane, 3-methylsulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methylsulfolane, 2-fluoro-2-methylsulfolane, 3-fluoro-3-methylsulfolane, 3-fluoro-2-methylsulfolane, 4-fluoro-3-methylsulfolane, 4-fluoro-2-methylsulfolane, 5-fluoro-3-methylsulfolane, 5-fluoro-2-methylsulfolane, 2-fluoromethylsulfolane, 3-fluoromethylsulfolane, 2-difluoromethylsulfolane, 3-difluoromethylsulfolane, 2-trifluoromethylsulfolane, 3-trifluoromethylsulfolane, 2-fluoro-3-(trifluoromethyl)sulfolane, 3-fluoro-3-(trifluoromethyl)sulfolane, 4-fluoro-3-(trifluoromethyl)sulfolane, 3-sulfolene, 5-fluoro-3-(trifluoromethyl)sulfolane, and the like, in view of high ion conductivity and high input and output.

Examples of the chain sulfone include dimethyl sulfone, ethyl methyl sulfone, diethyl sulfone, n-propyl methyl sulfone, n-propyl ethyl sulfone, di-n-propyl sulfone, isopropyl methyl sulfone, isopropyl ethyl sulfone, diisopropyl sulfone, n-butyl methyl sulfone, n-butyl ethyl sulfone, t-butyl methyl sulfone, t-butyl ethyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, perfluoroethyl methyl sulfone, ethyl trifluoroethyl sulfone, ethyl pentafluoroethyl sulfone, di(trifluoroethyl) sulfone, perfluorodiethyl sulfone, fluoromethyl-n-propyl sulfone, difluoromethyl-n-propyl sulfone, trifluoromethyl-n-propyl sulfone, fluoromethyl isopropyl sulfone, difluoromethyl isopropyl sulfone, trifluoromethyl isopropyl sulfone, trifluoroethyl-n-propyl sulfone, trifluoroethyl isopropyl sulfone, pentafluoroethyl-n-propyl sulfone, pentafluoroethyl isopropyl sulfone, trifluoroethyl-n-butyl sulfone, trifluoroethyl-t-butyl sulfone, pentafluoroethyl-n-butyl sulfone, and pentafluoroethyl-t-butyl sulfone.

Preferred among these are dimethyl sulfone, ethyl methyl sulfone, diethyl sulfone, n-propylmethyl sulfone, isopropylmethyl sulfone, n-butyl methyl sulfone, t-butyl methyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, ethyl trifluoroethyl sulfone, ethyl pentafluoroethyl sulfone, trifluoromethyl-n-propyl sulfone, trifluoromethyl isopropyl sulfone, trifluoroethyl-n-butyl sulfone, trifluoroethyl-t-butyl sulfone, trifluoromethyl-n-butyl sulfone, trifluoromethyl-t-butyl sulfone, and the like, in view of high ion conductivity and high input and output.

The content of the sulfone-based compound is not limited, and is optional as long as the effects of the present disclosure are not significantly impaired. The content thereof is usually 0.3% by volume or more, preferably 0.5% by volume or more, more preferably 1% by volume or more, while usually 40% by volume or less, preferably 35% by volume

or less, more preferably 30% by volume or less based on 100% by volume of the above solvent. When the content thereof is within the range, the sulfone-based compound easily achieves an effect of improving the cycle characteristics and the durability such as storage characteristics, brings the viscosity of a non-aqueous electrolytic solution within an appropriate range, can avoid decrease in the electric conductivity, and can bring the input and output characteristics and charge and discharge rate characteristics of a non-aqueous electrolytic solution secondary battery within appropriate ranges.

The electrolytic solution used in the present disclosure also preferably contains, as an additive, at least one compound (7) selected from the group consisting of lithium fluorophosphates (provided that excluding $LiPF_6$) and lithium salts having a S=O group, from the viewpoint of improvement in the output characteristics.

When the compound (7) is used as an additive, a compound other than the compound (7) is preferably used as the electrolyte salt mentioned above.

Examples of the lithium fluorophosphates include lithium monofluorophosphate ($LiPO_3F$) and lithium difluorophosphate ($LiPO_2F_2$).

Examples of the lithium salt having a S=O group include lithium monofluorosulfonate ($FSO_3Li$), lithium methyl sulfate ($CH_3OSO_3Li$), lithium ethyl sulfate ($C_2H_5OSO_3Li$), and lithium 2,2,2-trifluoroethyl sulfate.

Preferred among these as the compound (7) are $LiPO_2F_2$, $FSO_3Li$, and $C_2H_5OSO_3Li$.

The content of the compound (7) is preferably 0.001 to 20% by mass, more preferably 0.01 to 15% by mass, further preferably, 0.1 to 10% by mass, particularly preferably 0.1 to 7% by mass, with respect to the electrolytic solution.

To the electrolytic solution used in the present disclosure, other additive may be further added, as required. Examples of the further additive include metal oxides and glass.

The electrolytic solution used in the present disclosure preferably contains 5 to 200 ppm of hydrogen fluoride (HF). Incorporation of HF can promote formation of a film of the additive mentioned above. If the content of HF is excessively small, the ability to form a film on the negative electrode tends to decrease, and the characteristics of an electrochemical device tend to deteriorate. If the content of HF is excessively large, the oxidation resistance of the electrolytic solution tends to decrease due to the influence of HF. The electrolytic solution used in the present disclosure, even when containing HF in the content within the above range, causes no reduction in the recovery capacity ratio after high-temperature storage of an electrochemical device.

The content of HF is more preferably 10 ppm or more, further preferably 20 ppm or more. The content of HF is more preferably 100 ppm or less, further preferably 80 ppm or less, particularly preferably 50 ppm or less.

The content of HF can be measured by neutralization titration.

The electrolytic solution used in the present disclosure is preferably prepared by any method using the components mentioned above.

The electrolytic solution used in the present disclosure can be suitably applied to, for example, an electrochemical device such as a lithium ion secondary battery, a lithium ion capacitor, a hybrid capacitor, and an electric double-layer capacitor. Hereinafter, a non-aqueous electrolytic solution battery including the electrolytic solution used in the present disclosure will be described.

The non-aqueous electrolytic solution battery can take a known structure and typically comprises a positive electrode that can occlude and release ions (e.g., lithium ions) and a positive electrode, and the electrolytic solution used in the present disclosure. An electrochemical device comprising such an electrolytic solution used in the present disclosure is also one of aspects of the present disclosure.

Examples of the electrochemical device include a lithium ion secondary battery, a lithium ion capacitor, a capacitor (a hybrid capacitor, an electric double-layer capacitor), a radical battery, a solar cell (particularly a dye-sensitized solar cell), a lithium ion primary battery, a fuel cell, various electrochemical sensors, an electrochromic element, an electrochemical switching element, an aluminum electrolysis condenser, and a tantalum electrolysis condenser, and a lithium ion secondary battery, a lithium ion capacitor, and an electric double-layer capacitor are suitable. A module comprising the electrochemical device is also one of aspects of the present disclosure.

<Lithium Ion Secondary Battery>

The electrochemical device of the present disclosure may be a lithium ion secondary battery. The lithium ion secondary battery preferably comprises a positive electrode, a negative electrode, and the electrolytic solution mentioned above.

<Positive Electrode>

The positive electrode is composed of a positive electrode active material layer containing a positive electrode active material, and a current collector. The positive electrode as described above may contain a fluoropolyether group-containing compound on the surface thereof.

The positive electrode active material is not limited as long as the material can electrochemically occlude and release lithium ions. Examples thereof include a lithium-containing transition metal composite oxide, a lithium-containing transition metal phosphoric acid compound, a sulfide (a sulfur-based material), and a conductive polymer. Preferred among these as the positive electrode active material are a lithium-containing transition metal composite oxide and a lithium-containing transition metal phosphoric acid compound. Particularly preferred is a lithium-containing transition metal composite oxide that generates a high voltage.

The transition metal of the lithium-containing transition metal composite oxide is preferably V, Ti, Cr, Mn, Fe, Co, Ni, Cu, and the like. Specific examples thereof include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_4$, and those obtained by substituting some of transition metal atoms as main components of these lithium transition metal composite oxides with another element such as Na, K, B, F, Al, Ti, V, Cr, Mn, Fe, Co, Li, Ni, Cu, Zn, Mg, Ga, Zr, Si, Nb, Mo, Sn, or W. Specific examples of those obtained by substitution include $LiNi_{0.5}Mn_{0.5}O_2$, $LiNi_{0.85}Co_{0.10}Al_{0.05}O_2$, $LiNi_{0.5}Co_{0.2}Mn_{0.3}O_2$, $LiNi_{0.6}Co_{0.2}Mn_{0.2}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, and $LiMn_{1.5}Ni_{0.5}O_4$.

Among these, as the lithium-containing transition metal composite oxide, preferred are $LiMn_{1.5}Ni_{0.5}O_4$, $LiNi_{0.5}Co_{0.2}Mn_{0.3}O_2$, and $LiNi_{0.6}Co_{0.2}Mn_{0.2}O_2$, which have a high energy density even at a high voltage. Among these, in the case of a high voltage of 4.4 V or more, $LiMn_{1.5}Ni_{0.5}O_4$ is preferred.

The transition metal of the lithium-containing transition metal phosphate compound is preferably V, Ti, Cr, Mn, Fe, Co, Ni, Cu, and the like. Specific examples thereof include iron phosphates such as $LiFePO_4$, $Li_3Fe_2(PO_4)_3$, and $LiFeP_2O_7$, cobalt phosphates such as $LiCoPO_4$, and those obtained by substituting some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si.

Examples of the lithium-containing transition metal composite oxide include:

lithium-manganese spinel composite oxides represented by the formula: $Li_aMn_{2-b}M^1_bO_4$, wherein $0.9 \leq a$; $0 \leq b \leq 1.5$; $M^1$ is at least one metal selected from the group consisting of Fe, Co, Ni, Cu, Zn, Al, Sn, Cr, V, Ti, Mg, Ca, Sr, B, Ga, In, Si, and Ge,

lithium-nickel composite oxides represented by the formula: $LiNi_{1-c}M^2_cO_2$, wherein $0 \leq c \leq 0.5$; $M^2$ is at least one metal selected from the group consisting of Fe, Co, Mn, Cu, Zn, Al, Sn, Cr, V, Ti, Mg, Ca, Sr, B, Ga, In, Si, and Ge, or

lithium-cobalt composite oxides represented by the formula: $LiCo_{1-d}M^3_dO_2$, wherein $0 \leq d \leq 0.5$; $M^3$ is at least one metal selected from the group consisting of Fe, Ni, Mn, Cu, Zn, Al, Sn, Cr, V, Ti, Mg, Ca, Sr, B, Ga, In, Si, and Ge.

In view of enabling a high-output lithium ion secondary battery having a high energy density to be provided, preferred among these is $LiCoO_2$, $LiMnO_2$, $LiNiO_2$, $LiMn_2O_4$, $LiNi_{0.8}Co_{0.15}Al_{0.05}O_2$, or $LiNi_{1/3}Co_{1/3}Mn_{1/3}O_2$.

Other examples of the positive electrode active material described above include $LiFePO_4$, $LiNi_{0.8}Co_{0.2}O_2$, $Li_{1.2}Fe_{0.4}Mn_{0.4}O_2$, $LiNi_{0.5}Mn_{0.5}O_2$, $LiV_3O_6$, and $Li_2MnO_3$.

Examples of the above sulfur-based material may include materials containing a sulfur atom. At least one selected from the group consisting of simple sulfur, a metal sulfide, and an organosulfur compound is preferred, and simple sulfur is more preferred. The above metal sulfide may be a metal polysulfide. The above organosulfur compound may be an organic polysulfide.

Examples of the metal sulfide include a compound represented by $LiS_x$ ($0 < x \leq 8$); a compound represented by $Li_2S_x$ ($0 < x \leq 8$); a compound having a two-dimensional layered structure such as $TiS_2$ or $MoS_2$; and a Chevrel compound represented by the general formula $Me_xMo_6S_8$ (Me represents a transition metal, such as Pb, Ag, or Cu), which has a strong three-dimensional skeleton structure.

Examples of the above organosulfur compound include a carbon sulfide compound.

The organosulfur compound may be supported on a porous material such as carbon and thereby may be used as a carbon composite material. The content of sulfur contained in the carbon composite material is preferably 10 to 99% by mass, more preferably 20% by mass or more, further preferably 30% by mass or more, particularly preferably 40% by mass or more, while preferably 85% by mass or less, with respect to the carbon composite material, in view of further excellent cycle characteristics and further reduced overvoltage.

When the positive electrode active material is the above simple sulfur, the content of sulfur contained in the positive electrode active material is equivalent to the content of the simple sulfur.

Examples of the conductive polymer include a p-doped conductive polymer and an n-doped conductive polymer. Examples of the conductive polymer include a polyacetylene-based polymer, a polyphenylene-based polymer, a heterocyclic polymer, an ionic polymer, a ladder-shaped polymer, and a network polymer.

Incorporation of lithium phosphate in the positive electrode active material is preferred because continuous charge characteristics are improved. Use of lithium phosphate is not limited, and the positive electrode active material and the lithium phosphate are preferably mixed for use. The lower limit of the amount of lithium phosphate to be used

is preferably 0.1% by mass or more, more preferably 0.3% by mass or more, further preferably 0.5% by mass or more, and the upper limit thereof is preferably 10% by mass or less, more preferably 8% by mass or less, further preferably 5% by mass or less, with respect to the total of the positive electrode active material and lithium phosphate.

One with a substance having a compositional feature different from that of the positive electrode active material attached to a surface of the positive electrode active material may be used. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance attached to the surface may be attached to a surface of the positive electrode active material by, for example, a method of dissolving or suspending the substance in a solvent, impregnating and adding the solution or suspension into the positive electrode active material, and drying the material; a method of dissolving or suspending a precursor of the substance attached to the surface in a solvent, impregnating and adding the solution or suspension into the positive electrode active material, and cause a reaction between the material and the precursor by heating or the like; a method of adding the substance to a precursor of the positive electrode active material and simultaneously sintering the materials; or the like. In the case of attaching carbon, for example, a carbonaceous material in the form of activated carbon may be mechanically attached to the surface afterward.

The lower limit of the amount of the substance attached to the surface is preferably 0.1 ppm or more, more preferably 1 ppm or more, further preferably 10 ppm or more, and the upper limit thereof is preferably 20% or less, more preferably 10% or less, further preferably 5% or less, in terms of mass, with respect to the positive electrode active material. The substance attached to the surface can suppress oxidation reaction of the electrolytic solution on the surface of the positive electrode active material, improving the battery life. However, an excessively small amount of the substance attached may fail to sufficiently provide this effect, and an excessively large amount thereof may hinder the entrance and exit of lithium ions, thereby increasing the resistance.

Examples of the shape of particles of the positive electrode active material include a bulky shape, a polyhedral shape, a spherical shape, an ellipsoidal shape, a plate shape, a needle shape, and a pillar shape, as conventionally used. Primary particles may agglomerate to form secondary particles.

The tap density of the positive electrode active material is preferably 0.5 g/$cm^3$ or more, more preferably 0.8 g/$cm^3$ or more, further preferably 1.0 g/$cm^3$ or more. If the positive electrode active material has a tap density falling below the lower limit, the amount of a dispersion medium required may increase as well as the amounts of a conductive material and a binder required may increase in formation of the positive electrode active material layer. Then, the packing ratio of the positive electrode active material in the positive electrode active material layer is limited to result in limitation on the battery capacity in some cases. Use of a composite oxide powder having a high tap density enables a positive electrode active material layer having a high density to be formed. Generally the tap density is preferably as high as possible and has no particular upper limit. An excessively high tap density may cause diffusion of lithium ions through the electrolytic solution as the medium in the positive electrode active material layer to be a rate-controlling factor, and then, the load characteristics may be more likely to deteriorate. Accordingly, the upper limit thereof is preferably 4.0 g/$cm^3$ or less, more preferably 3.7 g/$cm^3$ or less, further preferably 3.5 g/$cm^3$ or less.

In the present disclosure, the tap density is determined as a powder packing density (tap density) g/$cm^3$ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size when the primary particles agglomerate to form secondary particles) of preferably 0.3 $\mu$m or more, more preferably 0.5 $\mu$m or more, further preferably 0.8 $\mu$m or more, most preferably 1.0 $\mu$m or more, while preferably 30 $\mu$m or less, more preferably 27 $\mu$m or less, further preferably 25 $\mu$m or less, most preferably 22 $\mu$m or less. The median size falling below the lower limit may fail to provide a product having a high tap density. The median size greater than the upper limit may prolong diffusion of lithium in the particles. Thus, the battery performance may deteriorate, or in formation of the positive electrode for a battery, i.e., when the active material and components such as a conductive material and a binder are formed into slurry by adding a solvent and the slurry is applied in the form of a thin film, there occur problems such as generation of streaks. Mixing two or more positive electrode active materials having different median sizes d50 can further improve packability in formation of the positive electrode.

In the present disclosure, the median size d50 is measured using a known laser diffraction/scattering particle size distribution measurement apparatus. In the case of using LA-920 manufactured by Horiba, Ltd. as the particle size distribution analyzer, the dispersion medium used in the measurement is a 0.1% by mass sodium hexametaphosphate aqueous solution, the measurement refractive index is set to 1.24 after 5-minute ultrasonic dispersion, and then measurement is performed.

When the primary particles agglomerate to form secondary particles, the average primary particle size of the positive electrode active material is preferably 0.05 $\mu$m or more, more preferably 0.1 $\mu$m or more, further preferably 0.2

μm or more. The upper limit thereof is preferably 5 μm or less, more preferably 4 μm or less, further preferably 3 μm or less, most preferably 2 μm or less. When the average primary particle size is larger than the upper limit, it is difficult to form spherical secondary particles. Then, the powder packability may be adversely affected, the specific surface area may significantly decrease, and thus the battery performance such as output characteristics is highly likely to deteriorate. In contrast, when the average primary particle size falls below the lower limit, crystals are usually insufficiently grown, causing problems such as poor charge and discharge reversibility in some cases.

In the present disclosure, the primary particle size is measured by scanning electron microscopic (SEM) observation. Specifically, the primary particle size is determined by selecting 50 primary particles in a photograph at a magnification of 10,000×, measuring the maximum length between the left and right boundary lines of each primary particle along the horizontal line, and then, calculating the average value of the maximum lengths.

The BET specific surface area of the positive electrode active material is preferably 0.1 $m^2/g$ or more, more preferably 0.2 $m^2/g$ or more, further preferably 0.3 $m^2/g$ or more. The upper limit thereof is preferably 50 $m^2/g$ or less, more preferably 40 $m^2/g$ or less, further preferably 30 $m^2/g$ or less. If the BET specific surface area is smaller than this range, the battery performance is likely to deteriorate. If the BET specific surface area is larger than this range, the tap density is less likely to increase, and a problem may be likely to occur in the coating property in formation of the positive electrode active material layer.

In the present disclosure, the BET specific surface area is defined by a value measured by single point BET nitrogen adsorption method by a gas flow method using a surface area analyzer (e.g., fully automatic surface area measurement device, Ohkura Riken Co., Ltd.), a sample predried in nitrogen stream at 150°C for 30 minutes, and then a nitrogen-helium gas mixture with the nitrogen pressure relative to the atmospheric pressure being accurately adjusted to 0.3.

When the lithium ion secondary battery of the present disclosure is used as a large-size lithium ion secondary battery for hybrid vehicles or distributed generation, high output is required. Thus, the particles of the positive electrode active material are preferably mainly composed of secondary particles.

The particles of the positive electrode active material preferably include 0.5 to 7.0% by volume of fine particles having an average secondary particle size of 40 μm or less and having an average primary particle size of 1 μm or less. Incorporation of fine particles having an average primary particle size of 1 μm or less enlarges the contact area with the electrolytic solution and can accelerate diffusion of lithium ions between the electrode and the electrolytic solution, resulting in improvement in the output performance of the battery.

A method for producing the positive electrode active material to be used is a common method as a method for producing an inorganic compound. In particular, for production of a spherical or ellipsoidal active material, various methods can be contemplated. Such a method is exemplified in which a raw material substance of transition metal is dissolved or crushed and dispersed in a solvent such as water, the pH of the solution or dispersion is adjusted under stirring to form a spherical precursor, the precursor is recovered and, if necessary, dried, then, a Li source such as LiOH, $Li_2CO_3$, or $LiNO_3$ is added thereto, and the mixture is sintered at a high temperature, thereby providing an active material.

For production of the positive electrode, one of the positive electrode active materials described above may be used singly, or two or more such materials each having a different compositional feature may be used in any combination at any ratio. Preferred examples of the combination in this case include a combination of $LiCoO_2$ and $LiMn_2O_4$ or one in which part of Mn may be replaced by a different transition metal or the like, such as $LiNi_{0.33}Co_{0.33}Mn_{0.33}O_2$, and a combination with $LiCoO_2$ or one in which part of Co may be replaced by a different transition metal.

The content of the positive electrode active material is preferably 50 to 99.5% by mass, more preferably 80 to 99% by mass with respect to positive electrode mixture, in view of a high battery capacity. The content of the positive electrode active material in the positive electrode active material layer is preferably 80% by mass or more, more preferably 82% by mass or more, particularly preferably 84% by mass or more. The upper limit is preferably 99% by mass or less, more preferably 98% by mass or less. An excessively small content of the positive electrode active material in the positive electrode active material layer may cause an insufficient electric capacity. In contrast, an excessively large content thereof may cause insufficient strength of the positive electrode.

The positive electrode mixture preferably further contains a binder, a thickening agent, and a conductive material.

The binder to be used may be any material that is safe against a solvent to be used in production of the electrode and the electrolytic solution. Examples thereof include resin polymers such as polyethylene, polypropylene, polyethylene terephthalate, polymethyl methacrylate, aromatic polyamide, chitosan, alginic acid, polyacrylic acid, polyimide, cellulose, and nitro cellulose; rubbery polymers such as SBR (styrene-butadiene rubber), isoprene rubber, butadiene rubber, fluoroelastomers, NBR (acrylonitrile-butadiene rubber), and ethylene-propylene rubber; styrene-butadiene-styrene block copolymers and hydrogenated products thereof; thermoplastic elastomeric polymers such as EPDM (ethylene-propylene-diene terpolymers), styrene-ethylene-butadiene-styrene copolymers, and styrene-isoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, polytetrafluoroethylene, vinylidene fluoride copolymer, and tetrafluoroethylene-ethylene copolymers; and polymer compositional features having ion conductivity of alkali metal ions (especially, lithium ions). One of these may be used singly, or two or more thereof may be used in any combination at any ratio.

The content of the binder, as the proportion of the binder in the positive electrode active material layer, is usually 0.1% by mass or more, preferably 1% by mass or more, further preferably 1.5% by mass or more, while usually 80% by mass or less, preferably 60% by mass or less, further preferably 40% by mass or less, most preferably 10% by mass or less. An excessively low proportion of the binder may fail to sufficiently hold the positive electrode active material and cause insufficient mechanical strength of the positive electrode, and the battery performance such as cycle characteristics may deteriorate. In contrast, an excessively high proportion thereof may cause reduction in battery capacity and conductivity.

Examples of the thickening agent include carboxymethyl cellulose, methyl cellulose, hydroxymethyl cellulose, ethyl cellulose, polyvinyl alcohol, oxidized starch, monostarch phosphate, casein, polyvinylpyrrolidone, and salts thereof. One of these may be used singly, or two or more thereof may be used in any combination at any ratio.

The proportion of the thickening agent with respect to the active material is in the range of usually 0.1% by mass or more, preferably 0.2% by mass or more, more preferably 0.3% by mass or more, while usually 5% by mass or less, preferably 3% by mass or less, more preferably 2% by mass or less. If the proportion falls below this range, the coating property may significantly deteriorate. If the proportion exceeds this range, the proportion of the active material in the positive electrode active material layer decreases, and there may be problems such as decrease in the capacity of the battery and increase in the resistance between the positive electrode active materials.

The conductive material to be used may be any known conductive material. Specific examples thereof include metal materials such as copper and nickel, and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used singly, or two or more thereof may be used in any combination at any ratio. The conductive material to be used is contained in an amount of usually 0.01% by mass or more, preferably 0.1% by mass or more, more preferably 1% by mass or more, while usually 50% by mass or less, preferably 30% by mass or less, more preferably 15% by mass or less, in positive electrode active material layer. If the content thereof is smaller than this range, the electrical conductivity may become insufficient. In contrast, if the content thereof is larger than this range, the battery capacity may decrease.

The type of solvent for forming a slurry is not limited as long as the solvent can dissolve or disperse therein the positive electrode active material, the conductive material, and the binder, as well as a thickening agent used as appropriate. The solvent may be either an aqueous solvent or an organic solvent. Examples of the aqueous solvent include water and solvent mixtures of an alcohol and water. Examples of the organic solvent include aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine and N,N-dimethylaminopropylamine; ethers such as diethyl ether, propylene oxide, and tetrahydrofuran (THF); amides such as N-methylpyrrolidone (NMP), dimethyl formamide, and dimethyl acetamide; and aprotic polar solvents such as hexamethylphospharamide and dimethyl sulfoxide.

Examples of the material of the current collector for a positive electrode include metal materials including metals such as aluminum, titanium, tantalum, stainless steel, and nickel, and alloys thereof; and carbon materials such as carbon cloth and carbon paper. Preferred among these are metal materials, especially aluminum or an alloy thereof.

In the case of a metal material, the current collector may be in the form of metal foil, metal cylinder, metal coil, metal plate, metal thin film, expanded metal, punched metal, metal foam, or the like. In the case of a carbon material, the current collector may be in the form of carbon plate, carbon thin film, carbon cylinder, or the like. Preferred among these is a metal thin film. The thin film may be in the form of mesh, as appropriate. The thin film may have any thickness, and the thickness is usually 1 μm or more, preferably 3 μm or more, more preferably 5 μm or more, while usually 1 mm or less, preferably 100 μm or less, more preferably 50 μm or less. If the thin film is thinner than the above range, the strength thereof may become insufficient required for a current collector. In contrast, if the thin film is thicker than this range, the handleability may be impaired.

Application of a conductive aid on the surface of the current collector is also preferred from the viewpoint of reduction in the electric contact resistance between the current collector and the positive electrode active material layer. Examples of the conductive aid include carbon and noble metals such as gold, platinum, and silver.

The ratio between the thicknesses of the current collector and the positive electrode active material layer is not limited. The value (thickness of positive electrode active material layer on one side immediately before injection of electrolytic solution)/(thickness of current collector) is in the range of preferably 20 or less, more preferably 15 or less, most preferably 10 or less, while preferably 0.5 or more, more preferably 0.8 or more, most preferably 1 or more. If the value exceeds this range, the current collector may generate heat due to Joule heating during high-current-density charge and discharge. If the value falls below this range, the ratio by volume of the current collector to the positive electrode active material increases, and the battery capacity may decrease.

The positive electrode may be produced by a usual method. An example of the production method includes a method in which the positive electrode active material is mixed with the above binder, thickening agent, conductive material, solvent, and the like to form a slurry-like positive electrode mixture, and then this mixture is applied to a current collector, dried, and pressed so as to enhance the density.

The density can be enhanced with a manual press, a roll press, or the like. The density of the positive electrode active material layer is in the range of preferably 1.5 g/$cm^3$ or more, more preferably 2 g/$cm^3$ or more, further preferably 2.2 g/$cm^3$ or more, while preferably 5 g/$cm^3$ or less, more preferably 4.5 g/$cm^3$ or less, further preferably 4 g/$cm^3$ or less. If the density exceeds this range, the permeability of the electrolytic solution toward the vicinity of the interface between the current collector and the active material decreases, charge and discharge characteristics deteriorate particularly at a high current density, and thus, high output may not be provided. If the density falls below the range, the electrical conductivity between the active materials may decrease, the battery resistance may increase, and thus, high output may not be provided.

In use of the electrolytic solution used in the present disclosure, from the viewpoint of improvement in the stability at high output and high temperature, the area of the positive electrode active material layer is preferably large relative to the outer surface area of an external case of the battery. Specifically, the sum of the electrode areas of the positive electrode is preferably 15 times or more, more preferably 40 times or more, larger than the surface area of the external case of the secondary battery. The outer surface area of an external case of the battery herein, for a bottomed square shape, refers to the total area calculated from the dimensions of length, width, and thickness of the case portion into which a power-generating element is packed except for a protruding portion of a terminal. The outer surface area of an external case of the battery herein, for a bottomed cylindrical shape, refers to the geometric surface area of an approximated cylinder of the case portion into which a power-generating element is packed except for a protruding portion of a terminal. The sum of the electrode areas of the positive electrode herein is the geometric surface area of the positive electrode mixture layer opposite to a mixture layer including the negative electrode active material. For structures including positive electrode mixture layers formed on both sides with a current collector foil interposed therebetween, the sum of electrode areas of the positive electrode is the sum of the areas calculated on the respective sides.

The thickness of the positive electrode plate is not limited. From the viewpoint of a high capacity and high output, the thickness of the mixture layer on one side of the current collector excluding the thickness of the metal foil of the core material is, as the lower limit, preferably 10 μm or more, more preferably 20 μm or more, while preferably 500 μm or less, more preferably 450 μm or less.

There may be used a positive electrode plate onto a surface of which a substance having a compositional feature different from the positive electrode plate is attached. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

<Negative Electrode>

The negative electrode is composed of a negative electrode active material layer containing a negative electrode active material, and a current collector. The negative electrode, as described above, may contain a fluoropolyether group-containing compound on the surface thereof.

The negative electrode material is not limited as long as the negative electrode material can electrochemically occlude and release lithium ions. Specific examples thereof include a carbon material, an alloy-based material, a lithium-containing metal composite oxide material, and a conductive polymer. One of these may be used singly, or two or more thereof may be used in any combination.

Examples of the negative electrode active material include carbonaceous materials that can occlude and release lithium, such as pyrolysates of organic matter under various pyrolysis conditions, artificial graphite, and natural graphite; metal oxide materials that can occlude and release lithium, such as tin oxide and silicon oxide; lithium metal; various lithium alloys; and lithium-containing metal composite oxide materials. Two or more of these negative electrode active materials may be used in admixture.

The carbonaceous material that can occlude and release lithium is preferably artificial graphite produced by high-temperature treatment of easily graphitizable pitch from various materials, purified natural graphite, or a material provided by surface treatment on such graphite with pitch or other organic matter and then carbonization of the surface-treated graphite. The carbonaceous material is more preferably selected from carbonaceous materials provided by heat-treating natural graphite, artificial graphite, artificial carbonaceous substances, or artificial graphite substances at 400 to 3,200°C once or more; carbonaceous materials of which the negative electrode active material layer includes at least two or more carbonaceous matters having different crystallinities and/or has an interface between the carbonaceous matters having the different crystallinities; and carbonaceous materials of which the negative electrode active material

layer has an interface between at least two or more carbonaceous matters having different orientations, because of a favorable balance between the initial irreversible capacity and the high-current-density charge and discharge characteristics. One of these carbon materials may be used singly, or two or more thereof may be used in any combination at any ratio.

Examples of the carbonaceous materials provided by heat-treating artificial carbonaceous substances or artificial graphite substances at 400°C to 3,200°C once or more include coal-based coke, petroleum-based coke, coal-based pitch, petroleum-based pitch, and products provided by oxidizing these pitches; needle coke, pitch coke, and carbon agents provided by partially graphitizing these cokes; pyrolysates of organic matter such as furnace black, acetylene black, and pitch-based carbon fibers; carbonizable organic matter and carbides thereof; or solutions provided by dissolving carbonizable organic matter in a low-molecular-weight organic solvent such as benzene, toluene, xylene, quinoline, or n-hexane, and carbides thereof.

A metal material used as the negative electrode active material (provided that lithium-titanium composite oxides are excluded) may be any of simple lithium, simple metals and alloys that form lithium alloy, or compounds such as oxides, carbides, nitrides, silicates, sulfides, or phosphates thereof, and is not limited as long as the metal material can occlude and release lithium. The simple metals and alloys that form lithium alloys are preferably materials containing any of metal and semi-metal elements in group 13 and group 14, more preferably simple metals of aluminum, silicon, and tin (hereinafter, also abbreviated as "specific metal elements"), and alloys or compounds containing any of these atoms. One of these may be used singly, or two or more thereof may be used in any combination at any ratio.

Examples of the negative electrode active material having at least one atom selected from specific metal elements include simple metals of any one of specific metal elements, alloys made of two or more specific metal elements, alloys made of one or two or more of specific metal elements and one or two or more of other metal elements, and compounds containing one or two or more specific metal elements, and composite compounds such as oxides, carbides, nitrides, silicates, sulfides, or phosphates of the compounds. Use of any of these simple metals, alloys, or metal compounds as the negative electrode active material enables the battery to have a larger capacity.

Examples also include compounds in which any of these composite compounds is complicatedly bonded to several types of elements such as simple metals, alloys, or non-metallic elements. Specifically, in the case of silicon or tin, an alloy of these elements and a metal that does not act as a negative electrode can be used. For example, in the case of tin, also can be used a complicated compound including a combination of 5 to 6 elements: a metal (s) that act(s) as the negative electrode other than tin and silicon; an additional metal(s) that does/do not act as the negative electrode; and a non-metallic element(s).

Specific examples include simple Si, $SiB_4$, $SiB_6$, $Mg_2Si$, $Ni_2Si$, $TiSi_2$, $MoSi_2$, $CoSi_2$, $NiSi_2$, $CaSi_2$, $CrSi_2$, $Cu_6Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, and $SiO_v$ ($0 < v \leq 2$), LiSiO, or simple tin, $SnSiO_3$, LiSnO, $Mg_2Sn$, and $SnO_w$ ($0 < w \leq 2$).

Examples thereof further include composite materials of Si or Sn used as a first constitutional element, and second and third constitutional elements. The second constitutional element is at least one of cobalt, iron, magnesium, titanium, vanadium, chromium, manganese, nickel, copper, zinc, gallium, and zirconium, for example. The third constitutional element is at least one of boron, carbon, aluminum, and phosphorus, for example.

The metal material is preferably simple silicon or tin (which may contain trace impurities), $SiO_v$ ($0 < v \leq 2$), $SnO_w$ ($0 \leq w \leq 2$), a Si-Co-C composite material, a Si-Ni-C composite material, a Sn-Co-C composite material, or a Sn-Ni-C composite material, because a high battery capacity and excellent battery characteristics can be achieved.

The lithium-containing metal composite oxide material to be used as the negative electrode active material is not limited as long as the material can occlude and release lithium. In respect of high-current-density charge and discharge characteristics, materials containing titanium and lithium are preferred, lithium-containing composite metal oxide materials containing titanium are more preferred, and composite oxides of lithium and titanium (hereinafter, abbreviated as "lithium titanium composite oxides") are further preferred. In other words, use of a spinel-structured lithium titanium composite oxide contained in the negative electrode active material for an electrolytic solution battery is particularly preferred because this can markedly reduce the output resistance.

The lithium titanium composite oxide is preferably a compound represented by the general formula:

$$Li_xTi_yM_zO_4$$

wherein M represents at least one element selected from the group consisting of Na, K, Co, Al, Fe, Ti, Mg, Cr, Ga, Cu, Zn, and Nb.

Particularly preferred among the above compositional features are structures satisfying the following:

(i) $1.2 \leq x \leq 1.4$, $1.5 \leq y \leq 1.7$, $z = 0$
(ii) $0.9 \leq x \leq 1.1$, $1.9 \leq y \leq 2.1$, $z = 0$
(iii) $0.7 \leq x \leq 0.9$, $2.1 \leq y \leq 2.3$, $z = 0$

because of a favorable balance of the battery performance.

Particularly preferred typical compositional features of the compounds are $Li_{4/3}Ti_{5/3}O_4$ for (i), $Li_1Ti_2O_4$ for (ii), and $Li_{4/5}Ti_{11/5}O_4$ for (iii). A preferred example of the structure satisfying Z≠0 includes $Li_{4/3}Ti_{4/3}Al_{1/3}O_4$.

The above negative electrode mixture preferably further contains a binder, a thickening agent, and a conductive material.

Examples of the binder include the same as the binders that can be used for the positive electrode. The proportion of the binder is preferably 0.1% by mass or more, further preferably 0.5% by mass or more, particularly preferably 0.6% by mass or more, while preferably 20% by mass or less, more preferably 15% by mass or less, further preferably 10% by mass or less, particularly preferably 8% by mass or less, with respect to the negative electrode active material. If the proportion of the binder with respect to the negative electrode active material exceeds the above range, the proportion of the binder where the amount of the binder does not contribute to the battery capacity may increase to thereby lead to decrease in the battery capacity. A proportion thereof that falls below the above range may lead to decrease in the strength of the negative electrode.

Particularly, in the case where a rubbery polymer typified by SBR is contained as a main component, the proportion of the binder with respect to the negative electrode active material is usually 0.1% by mass or more, preferably 0.5% by mass or more, further preferably 0.6% by mass or more, while usually 5% by mass or less, preferably 3% by mass or less, further preferably 2% by mass or less. In the case where a fluoropolymer typified by polyvinylidene fluoride is contained as a main component, the proportion of the binder with respect to the negative electrode active material is usually 1% by mass or more, preferably 2% by mass or more, further preferably 3% by mass or more, while usually 15% by mass or less, preferably 10% by mass or less, further preferably 8% by mass or less.

Examples of the thickening agent include the same as the above-mentioned thickening agents that can be used for the positive electrode. The proportion of the thickening agent with respect to the negative electrode active material is usually 0.1% by mass or more, preferably 0.5% by mass or more, further preferably 0.6% by mass or more, while usually 5% by mass or less, preferably 3% by mass or less, further preferably 2% by mass or less. If the proportion of the thickening agent with respect to the negative electrode active material falls below the above range, the coating property may significantly deteriorate. If the proportion thereof exceeds the above range, the proportion of the negative electrode active material in the negative electrode active material layer decreases, and there may be a problem such as decrease in the capacity of the battery, or the resistance between the negative electrode active materials may increase.

Examples of the conductive material of the negative electrode include metal materials such as copper and nickel; and carbon materials such as graphite and carbon black.

The type of solvent for forming a slurry is not limited as long as the solvent can dissolve or disperse therein the negative electrode active material and the binder, as well as a thickening agent and a conductive material used as appropriate. The solvent to be used may be either an aqueous solvent or an organic solvent.

Examples of the aqueous solvent include water and alcohols. Examples of the organic solvent include N-methylpyrrolidone (NMP), dimethyl formamide, dimethyl acetamide, methyl ethyl ketone, cyclohexanone, methyl acetate, methyl acrylate, diethyl triamine, N,N-dimethyl aminopropyl amine, tetrahydrofuran (THF), toluene, acetone, diethyl ether, dimethyl acetamide, hexamethyl phospharamide, dimethyl sulfoxide, benzene, xylene, quinoline, pyridine, methyl naphthalene, and hexane.

Examples of the material of the current collector for a negative electrode include copper, nickel, and stainless steel. Preferred among these is copper foil in view of ease of processing into a thin film and the cost.

The thickness of the current collector is usually 1 $\mu$m or more, preferably 5 $\mu$m or more, while usually 100 $\mu$m or less, preferably 50 $\mu$m or less. If the negative electrode current collector is excessively thick, the capacity of the whole battery may excessively decrease. In contrast, if the collector is excessively thin, the collector may be difficult to handle.

The negative electrode may be produced by a usual method. An example of the production method includes a method in which the negative electrode material is mixed with the above binder, thickening agent, conductive material, solvent, and the like into a slurry state, and then this slurry is applied to a current collector, dried, and pressed so as to enhance the density. When an alloyed material is employed, also used is a method for forming a thin film layer containing the above negative electrode active material (negative electrode active material layer) by approaches such as vapor deposition, sputtering, and plating.

The electrode structure when an electrode is formed from the negative electrode active material is not limited. The density of the negative electrode active material existing on the current collector is preferably 1 $g \cdot cm^{-3}$ or more, further preferably 1.2 $g \cdot cm^{-3}$ or more, particularly preferably 1.3 $g \cdot cm^{-3}$ or more, while preferably 2.2 $g \cdot cm^{-3}$ or less, more preferably 2.1 $g \cdot cm^{-3}$ or less, further preferably 2.0 $g \cdot cm^{-3}$ or less, particularly preferably 1.9 $g \cdot cm^{-3}$ or less. If the density of the negative electrode active material existing on the current collector exceeds the above range, negative electrode active material particles may be broken. This leads to increase in the initial irreversible capacity, or deterioration in the high-current-density charge and discharge characteristics due to reduction in permeability of the electrolytic solution toward the vicinity of the interface between the current collector and the negative electrode active material. If the density thereof falls below the above range, the electrical conductivity between the negative electrode active materials may

decrease, the battery resistance may increase, and thus, the capacity per unit volume may decrease.

The thickness of the negative electrode plate is designed in accordance with the positive electrode plate used and is not limited. The thickness of the mixture layer excluding the thickness of the metal foil of the core material is desirably usually 15 μm or more, preferably 20 μm or more, more preferably 30 μm or more, while usually 300 μm or less, preferably 280 μm or less, more preferably 250 μm or less.

There may be used a negative electrode plate onto a surface of which a substance having a compositional feature different from the negative electrode plate is attached. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; and carbonates such as lithium carbonate, calcium carbonate, and magnesium carbonate.

Such a substance attached to the surface may be attached to a surface of the positive electrode active material by, for example, a method of dissolving or suspending the substance in a solvent, impregnating and adding the solution or suspension into the positive electrode active material, and drying the material; a method of dissolving or suspending a precursor of the substance attached to the surface in a solvent, impregnating and adding the solution or suspension into the positive electrode active material, and causing a reaction between the material and the precursor by heating or the like; a method of adding the substance to a precursor of the positive electrode active material and simultaneously sintering the materials; or the like. In the case of attaching carbon, for example, a carbonaceous material in the form of activated carbon may be mechanically attached to the surface afterward.

The lower limit of the amount of the substance attached to the surface is preferably 0.1 ppm or more, more preferably 1 ppm or more, further preferably 10 ppm or more, and the upper limit thereof is preferably 20% or less, more preferably 10% or less, further preferably 5% or less, in terms of mass, with respect to the positive electrode active material. The substance attached to the surface can suppress oxidation reaction of the electrolytic solution on the surface of the positive electrode active material, improving the battery life. However, an excessively small amount of the substance attached may fail to sufficiently provide this effect, and an excessively large amount thereof may hinder the entrance and exit of lithium ions, thereby increasing the resistance.

Examples of the shape of particles of the positive electrode active material include a bulky shape, a polyhedral shape, a spherical shape, an ellipsoidal shape, a plate shape, a needle shape, and a pillar shape, as conventionally used. Primary particles may agglomerate to form secondary particles.

The tap density of the positive electrode active material is preferably 0.5 $g/cm^3$ or more, more preferably 0.8 $g/cm^3$ or more, further preferably 1.0 $g/cm^3$ or more. If the positive electrode active material has a tap density falling below the lower limit, the amount of a dispersion medium required may increase as well as the amounts of a conductive material and a binder required may increase in formation of the positive electrode active material layer. Then, the packing ratio of the positive electrode active material in the positive electrode active material layer is limited to result in limitation on the battery capacity in some cases. Use of a composite oxide powder having a high tap density enables a positive electrode active material layer having a high density to be formed. Generally the tap density is preferably as high as possible and has no particular upper limit. An excessively high tap density may cause diffusion of lithium ions through the electrolytic solution as the medium in the positive electrode active material layer to be a rate-controlling factor, and then, the load characteristics may be more likely to deteriorate. Accordingly, the upper limit thereof is preferably 4.0 $g/cm^3$ or less, more preferably 3.7 $g/cm^3$ or less, further preferably 3.5 $g/cm^3$ or less.

In the present disclosure, the tap density is determined as a powder packing density (tap density) $g/cm^3$ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size when the primary particles agglomerate to form secondary particles) of preferably 0.3 μm or more, more preferably 0.5 μm or more, further preferably 0.8 μm or more, most preferably 1.0 μm or more, while preferably 30 μm or less, more preferably 27 μm or less, further preferably 25 μm or less, most preferably 22 μm or less. The median size falling below the lower limit may fail to provide a product having a high tap density. The median size greater than the upper limit may prolong diffusion of lithium in the particles. Thus, the battery performance may deteriorate, or in formation of the positive electrode for a battery, i.e., when the active material and components such as a conductive material and a binder are formed into slurry by adding a solvent and the slurry is applied in the form of a thin film, there occur problems such as generation of streaks. Mixing two or more positive electrode active materials having different median sizes d50 can further improve packability in formation of the positive electrode.

In the present disclosure, the median size d50 is measured using a known laser diffraction/scattering particle size distribution measurement apparatus. In the case of using LA-920 manufactured by Horiba, Ltd. as the particle size distribution analyzer, the dispersion medium used in the measurement is a 0.1% by mass sodium hexametaphosphate aqueous solution, the measurement refractive index is set to 1.24 after 5-minute ultrasonic dispersion, and then measurement is performed.

When the primary particles agglomerate to form secondary particles, the average primary particle size of the positive electrode active material is preferably 0.05 μm or more, more preferably 0.1 μm or more, further preferably 0.2 μm or more. The upper limit thereof is preferably 5 μm or less, more preferably 4 μm or less, further preferably 3 μm or less, most preferably 2 μm or less. When the average primary particle size is larger than the upper limit, it is difficult to form spherical secondary particles. Then, the powder packability may be adversely affected, the specific surface area may significantly decrease, and thus the battery performance such as output characteristics is highly likely to deteriorate. In contrast, when the average primary particle size falls below the lower limit, crystals are usually insufficiently grown, causing problems such as poor charge and discharge reversibility in some cases.

In the present disclosure, the primary particle size is measured by scanning electron microscopic (SEM) observation. Specifically, the primary particle size is determined by selecting 50 primary particles in a photograph at a magnification of 10,000×, measuring the maximum length between the left and right boundary lines of each primary particle along the horizontal line, and then, calculating the average value of the maximum lengths.

The BET specific surface area of the positive electrode active material is preferably 0.1 $m^2/g$ or more, more preferably 0.2 $m^2/g$ or more, further preferably 0.3 $m^2/g$ or more. The upper limit thereof is preferably 50 $m^2/g$ or less, more preferably 40 $m^2/g$ or less, further preferably 30 $m^2/g$ or less. If the BET specific surface area is smaller than this range, the battery performance is likely to deteriorate. If the BET specific surface area is larger than this range, the tap density is less likely to increase, and a problem may be likely to occur in the coating property in formation of the positive electrode active material layer.

In the present disclosure, the BET specific surface area is defined by a value determined by single point BET nitrogen adsorption method by a gas flow method using a surface area analyzer (e.g., fully automatic surface area measurement device, Ohkura Riken Co., Ltd.), a sample predried in nitrogen stream at 150°C for 30 minutes, and a nitrogen-helium gas mixture with the nitrogen pressure relative to the atmospheric pressure being accurately adjusted to 0.3.

When the lithium ion secondary battery of the present disclosure is used as a large-size lithium ion secondary battery for hybrid vehicles or distributed generation, high output is required. Thus, the particles of the positive electrode active material are preferably mainly composed of secondary particles.

The particles of the positive electrode active material preferably include 0.5 to 7.0% by volume of fine particles having an average secondary particle size of 40 μm or less and having an average primary particle size of 1 μm or less. Incorporation of fine particles having an average primary particle size of 1 μm or less enlarges the contact area with the electrolytic solution and can accelerate diffusion of lithium ions between the electrode and the electrolytic solution, resulting in improvement in the output performance of the battery.

A method for producing the positive electrode active material to be used is a common method as a method for producing an inorganic compound. In particular, for production of a spherical or ellipsoidal active material, various methods can be contemplated. Such a method is exemplified in which a raw material substance of transition metal is dissolved or crushed and dispersed in a solvent such as water, the pH of the solution or dispersion is adjusted under stirring to form a spherical precursor, the precursor is recovered and, if necessary, dried, then, a Li source such as LiOH, $Li_2CO_3$, or $LiNO_3$ is added thereto, and the mixture is sintered at a high temperature, thereby providing an active material.

For production of the positive electrode, one of the positive electrode active materials described above may be used singly, or two or more such materials each having a different compositional feature may be used in any combination at any ratio. Preferred examples of the combination in this case include a combination of $LiCoO_2$ and $LiMn_2O_4$ or one in which part of Mn may be replaced by a different transition metal or the like, such as $LiNi_{0.33}Co_{0.33}Mn_{0.33}O_2$, and a combination with $LiCoO_2$ or one in which part of Co may be replaced by a different transition metal.

The content of the positive electrode active material is preferably 50 to 99.5% by mass, more preferably 80 to 99% by mass with respect to the a positive electrode mixture, in view of a high battery capacity. The content of the positive electrode active material in the positive electrode active material layer is preferably 80% by mass or more, more preferably 82% by mass or more, particularly preferably 84% by mass or more. The upper limit is preferably 99% by mass or less, more preferably 98% by mass or less. An excessively small content of the positive electrode active material in the positive electrode active material layer may cause an insufficient electric capacity. In contrast, an excessively large content thereof may cause insufficient strength of the positive electrode.

The positive electrode mixture preferably further contains a binder, a thickening agent, and a conductive material.

The binder to be used may be any material that is safe against a solvent to be used in production of the electrode and the electrolytic solution. Examples thereof include resin polymers such as polyethylene, polypropylene, polyethylene terephthalate, polymethyl methacrylate, aromatic polyamide, chitosan, alginic acid, polyacrylic acid, polyimide, cellulose, and nitro cellulose; rubbery polymers such as SBR (styrene-butadiene rubber), isoprene rubber, butadiene rubber, fluoroelastomers, NBR (acrylonitrile-butadiene rubber), and ethylene-propylene rubber; styrene-butadiene-styrene block copolymers and hydrogenated products thereof; thermoplastic elastomeric polymers such as EPDM (ethylene-propylene-diene terpolymers), styrene-ethylene-butadiene-styrene copolymers, and styrene-isoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, polytetrafluoroethylene, vinylidene fluoride copolymer, and tetrafluoroethylene-ethylene copolymers; and polymer compositional features having ion conductivity of alkali metal ions (especially, lithium ions). One of these may be used singly, or two or more thereof may be used in any combination at any ratio.

The content of the binder, as the proportion of the binder in the positive electrode active material layer, is usually 0.1% by mass or more, preferably 1% by mass or more, further preferably 1.5% by mass or more, while usually 80% by mass or less, preferably 60% by mass or less, further preferably 40% by mass or less, most preferably 10% by mass or less. An excessively low proportion of the binder may fail to sufficiently hold the positive electrode active material and cause insufficient mechanical strength of the positive electrode, and the battery performance such as cycle characteristics may deteriorate. In contrast, an excessively high proportion thereof may cause reduction in battery capacity and conductivity.

Examples of the thickening agent include carboxymethyl cellulose, methyl cellulose, hydroxymethyl cellulose, ethyl cellulose, polyvinyl alcohol, oxidized starch, monostarch phosphate, casein, polyvinylpyrrolidone, and salts thereof. One of these may be used singly, or two or more thereof may be used in any combination at any ratio.

The proportion of the thickening agent with respect to the active material is in the range of usually 0.1% by mass or more, preferably 0.2% by mass or more, more preferably 0.3% by mass or more, while usually 5% by mass or less, preferably 3% by mass or less, more preferably 2% by mass or less. If the proportion falls below this range, the coating property may significantly deteriorate. If the proportion exceeds this range, the proportion of the active material in the positive electrode active material layer decreases, and there may be problems such as decrease in the capacity of the battery and increase in the resistance between the positive electrode active materials.

The conductive material to be used may be any known conductive material. Specific examples thereof include metal materials such as copper and nickel, and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used singly, or two or more thereof may be used in any combination at any ratio. The conductive material to be used is contained in an amount of usually 0.01% by mass or more, preferably 0.1% by mass or more, more preferably 1% by mass or more, while usually 50% by mass or less, preferably 30% by mass or less, more preferably 15% by mass or less, in positive electrode active material layer. If the content thereof is smaller than this range, the electrical conductivity may become insufficient. In contrast, if the content thereof is larger than this range, the battery capacity may decrease.

The type of solvent for forming a slurry is not limited as long as the solvent can dissolve or disperse therein the positive electrode active material, the conductive material, and the binder, as well as a thickening agent used as appropriate. The solvent may be either an aqueous solvent or an organic solvent. Examples of the aqueous solvent include water and solvent mixtures of an alcohol and water. Examples of the organic solvent include aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine and N,N-dimethylaminopropylamine; ethers such as diethyl ether, propylene oxide, and tetrahydrofuran (THF); amides such as N-methylpyrrolidone (NMP), dimethyl formamide, and dimethyl acetamide; and aprotic polar solvents such as hexamethylphospharamide and dimethyl sulfoxide.

Examples of the material of the current collector for a positive electrode include metal materials including metals such as aluminum, titanium, tantalum, stainless steel, and nickel, and alloys thereof; and carbon materials such as carbon cloth and carbon paper. Preferred among these are metal materials, especially aluminum or an alloy thereof.

In the case of a metal material, the current collector may be in the form of metal foil, metal cylinder, metal coil, metal plate, metal thin film, expanded metal, punched metal, metal foam, or the like. In the case of a carbon material, the current collector may be in the form of carbon plate, carbon thin film, carbon cylinder, or the like. Preferred among these is a metal thin film. The thin film may be in the form of mesh, as appropriate. The thin film may have any thickness, and the thickness is usually 1 μm or more, preferably 3 μm or more, more preferably 5 μm or more, while usually 1 mm or less, preferably 100 μm or less, more preferably 50 μm or less. If the thin film is thinner than the above range, the strength thereof may become insufficient required for a current collector. In contrast, if the thin film is thicker than this range, the handleability may be impaired.

Application of a conductive aid on the surface of the current collector is also preferred from the viewpoint of reduction in the electric contact resistance between the current collector and the positive electrode active material layer. Examples of the conductive aid include carbon and noble metals such as gold, platinum, and silver.

The ratio between the thicknesses of the current collector and the positive electrode active material layer is not limited. The value (thickness of positive electrode active material layer on one side immediately before injection of electrolytic solution)/(thickness of current collector) is in the range of preferably 20 or less, more preferably 15 or less, most preferably 10 or less, while preferably 0.5 or more, more preferably 0.8 or more, most preferably 1 or more. If the value exceeds this range, the current collector may generate heat due to Joule heating during high-current-density

charge and discharge. If the value falls below this range, the ratio by volume of the current collector to the positive electrode active material increases, and the battery capacity may decrease.

The positive electrode may be produced by a usual method. An example of the production method includes a method in which the positive electrode active material is mixed with the above binder, thickening agent, conductive material, solvent, and the like to form a slurry-like positive electrode mixture, and then this mixture is applied to a current collector, dried, and pressed so as to enhance the density.

The density can be enhanced with a manual press, a roll press, or the like. The density of the positive electrode active material layer is in the range of preferably 1.5 g/cm$^3$ or more, more preferably 2 g/cm$^3$ or more, further preferably 2.2 g/cm$^3$ or more, while preferably 5 g/cm$^3$ or less, more preferably 4.5 g/cm$^3$ or less, further preferably 4 g/cm$^3$ or less. If the density exceeds this range, the permeability of the electrolytic solution toward the vicinity of the interface between the current collector and the active material decreases, charge and discharge characteristics deteriorate particularly at a high current density, and thus, high output may not be provided. If the density falls below the range, the electrical conductivity between the active materials may decrease, the battery resistance may increase, and thus, high output may not be provided.

In use of the electrolytic solution used in the present disclosure, from the viewpoint of improvement in the stability at high output and high temperature, the area of the positive electrode active material layer is preferably large relative to the outer surface area of an external case of the battery. Specifically, the sum of the electrode areas of the positive electrode is preferably 15 times or more, more preferably 40 times or more, larger than the surface area of the external case of the secondary battery. The outer surface area of an external case of the battery herein, for a bottomed square shape, refers to the total area calculated from the dimensions of length, width, and thickness of the case portion into which a power-generating element is packed except for a protruding portion of a terminal. The outer surface area of an external case of the battery herein, for a bottomed cylindrical shape, refers to the geometric surface area of an approximated cylinder of the case portion into which a power-generating element is packed except for a protruding portion of a terminal. The sum of the electrode areas of the positive electrode herein is the geometric surface area of the positive electrode mixture layer opposite to a mixture layer including the negative electrode active material. For structures including positive electrode mixture layers formed on both sides with a current collector foil interposed therebetween, the sum of electrode areas of the positive electrode is the sum of the areas calculated on the respective sides.

The thickness of the positive electrode plate is not limited. From the viewpoint of a high capacity and high output, the thickness of the mixture layer on one side of the current collector excluding the thickness of the metal foil of the core material is, as the lower limit, preferably 10 μm or more, more preferably 20 μm or more, while preferably 500 μm or less, more preferably 450 μm or less.

There may be used a positive electrode plate onto a surface of which a substance having a compositional feature different from the positive electrode plate is attached. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

<Negative Electrode>

The negative electrode is composed of a negative electrode active material layer containing a negative electrode active material, and a current collector. The negative electrode as described above may contain a fluoropolyether group-containing compound on the surface thereof.

The negative electrode material is not limited as long as the negative electrode material can electrochemically occlude and release lithium ions. Specific examples thereof include a carbon material, an alloy-based material, a lithium-containing metal composite oxide material, and a conductive polymer. One of these may be used singly, or two or more thereof may be used in any combination.

Examples of the negative electrode active material may include carbonaceous materials that can occlude and release lithium, such as pyrolysates of organic matter under various pyrolysis conditions, artificial graphite, and natural graphite; metal oxide materials that can occlude and release lithium, such as tin oxide and silicon oxide; lithium metal; various lithium alloys; and lithium-containing metal composite oxide materials. Two or more of these negative electrode active materials may be used in admixture.

The carbonaceous material that can occlude and release lithium is preferably artificial graphite produced by high-temperature treatment of easily graphitizable pitch from various materials, purified natural graphite, or a material provided by surface treatment on such graphite with pitch or other organic matter and then carbonization of the surface-treated graphite. The carbonaceous material is more preferably selected from carbonaceous materials provided by heat-treating natural graphite, artificial graphite, artificial carbonaceous substances, or artificial graphite substances at 400 to 3,200°C once or more; carbonaceous materials of which the negative electrode active material layer includes at least

two or more carbonaceous matters having different crystallinities and/or has an interface between the carbonaceous matters having the different crystallinities; and carbonaceous materials of which the negative electrode active material layer has an interface between at least two or more carbonaceous matters having different orientations, because of a favorable balance between the initial irreversible capacity and the high-current-density charge and discharge characteristics. One of these carbon materials may be used singly, or two or more thereof may be used in any combination at any ratio.

Examples of the carbonaceous materials provided by heat-treating artificial carbonaceous substances or artificial graphite substances at 400 to 3,200°C once or more include coal-based coke, petroleum-based coke, coal-based pitch, petroleum-based pitch, and products provided by oxidizing these pitches; needle coke, pitch coke, and carbon agents provided by partially graphitizing these cokes; pyrolysates of organic matter such as furnace black, acetylene black, and pitch-based carbon fibers; carbonizable organic matter and carbides thereof; or solutions provided by dissolving carbonizable organic matter in a low-molecular-weight organic solvent such as benzene, toluene, xylene, quinoline, or n-hexane, and carbides thereof.

A metal material used as the negative electrode active material (provided that lithium-titanium composite oxides are excluded) may be any of simple lithium, simple metals and alloys that form lithium alloys, or compounds such as oxides, carbides, nitrides, silicates, sulfides, or phosphates thereof and is not limited as long as the metal material can occlude and release lithium. The simple metals and alloys that form lithium alloys are preferably materials containing any of metal and semi-metal elements in the group 13 and group 14, more preferably simple metals of aluminum, silicon, and tin (hereinafter, also abbreviated as "specific metal elements"), and alloys or compounds containing any of these atoms. One of these may be used singly, or two or more thereof may be used in any combination at any ratio.

Examples of the negative electrode active material having at least one atom selected from the specific metal elements include simple metals of any one of the specific metal elements, alloys made of two or more of the specific metal elements, alloys made of one or two or more of the specific metal elements and one or two or more of other metal elements, and compounds containing one or two or more of the specific metal elements, and composite compounds such as oxides, carbides, nitrides, silicates, sulfides, or phosphates of the compounds. Use of any of these simple metals, alloys, or metal compounds as the negative electrode active material enables the battery to have a larger capacity.

Examples also include compounds in which any of these composite compounds is complicatedly bonded to several types of elements such as simple metals, alloys, or non-metallic elements. Specifically, in the case of silicon or tin, an alloy of these elements and a metal that does not act as a negative electrode can be used. For example, in the case of tin, also can be used a complicated compound including a combination of 5 to 6 elements: a metal (s) that act (s) as the negative electrode other than tin and silicon; an additional metal (s) that does/do not act as the negative electrode; and a non-metallic element(s).

Specific examples thereof include simple Si, $SiB_4$, $SiB_6$, $Mg_2Si$, $Ni_2Si$, $TiSi_2$, $MoSi_2$, $CoSi_2$, $NiSi_2$, $CaSi_2$, $CrSi_2$, $Cu_6Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, $SiO_v$ ($0 < v \leq 2$), LiSiO, or simple tin, $SnSiO_3$, LiSnO, $Mg_2Sn$, and $SnO_w$ ($0 < w \leq 2$).

Examples thereof further include composite materials of Si or Sn used as a first constitutional element, and second and third constitutional elements. The second constitutional element is at least one of cobalt, iron, magnesium, titanium, vanadium, chromium, manganese, nickel, copper, zinc, gallium, and zirconium, for example. The third constitutional element is at least one of boron, carbon, aluminum, and phosphorus, for example.

The metal material is preferably simple silicon or tin (which may contain trace impurities), $SiO_v$ ($0 < v \leq 2$), $SnO_w$ ($0 \leq w \leq 2$), a Si-Co-C composite material, a Si-Ni-C composite material, a Sn-Co-C composite material, or a Sn-Ni-C composite material, because a high battery capacity and excellent battery characteristics can be achieved.

The lithium-containing metal composite oxide material to be used as the negative electrode active material is not limited as long as the material can occlude and release lithium. In respect of high-current-density charge and discharge characteristics, materials containing titanium and lithium are preferred, lithium-containing composite metal oxide materials containing titanium are more preferred, and composite oxides of lithium and titanium (hereinafter, abbreviated as "lithium titanium composite oxides") are further preferred. In other words, use of a spinel-structured lithium titanium composite oxide contained in the negative electrode active material for an electrolytic solution battery is particularly preferred because this can markedly reduce the output resistance.

The lithium titanium composite oxide is preferably a compound represented by the general formula:

$$Li_xTi_yM_zO_4$$

wherein M represents at least one element selected from the group consisting of Na, K, Co, Al, Fe, Ti, Mg, Cr, Ga, Cu, Zn, and Nb.

Particularly preferred among the above compositional features are structures satisfying the following:

(i) $1.2 \leq x \leq 1.4$, $1.5 \leq y \leq 1.7$, $z = 0$

(ii) $0.9 \leq x \leq 1.1$, $1.9 \leq y \leq 2.1$, $z = 0$
(iii) $0.7 \leq x \leq 0.9$, $2.1 \leq y \leq 2.3$, $z = 0$

because of a favorable balance of the battery performance.

Particularly preferred typical compositional features of the compounds are $Li_{4/3}Ti_{5/3}O_4$ for (i), $Li_1Ti_2O_4$ for (ii), and $Li_{4/5}Ti_{n/5}O_4$ for (iii). A preferred example of the structure satisfying $Z \neq 0$ is $Li_{4/3}Ti_{4/3}Al_{1/3}O_4$.

The above negative electrode mixture preferably further contains a binder, a thickening agent, and a conductive material.

Examples of the binder include the same as the binders that can be used for the positive electrode. The proportion of the binder is preferably 0.1% by mass or more, further preferably 0.5% by mass or more, particularly preferably 0.6% by mass or more, while preferably 20% by mass or less, more preferably 15% by mass or less, further preferably 10% by mass or less, particularly preferably 8% by mass or less, with respect to the negative electrode active material. If the proportion of the binder with respect to the negative electrode active material exceeds the above range, the proportion of the binder where the amount of the binder does not contribute to the battery capacity may increase to thereby lead to decrease in the battery capacity. A proportion thereof that falls below the above range may lead to decrease in the strength of the negative electrode.

Particularly, in the case where a rubbery polymer typified by SBR is contained as a main component, the proportion of the binder with respect to the negative electrode active material is usually 0.1% by mass or more, preferably 0.5% by mass or more, further preferably 0.6% by mass or more, while usually 5% by mass or less, preferably 3% by mass or less, further preferably 2% by mass or less. In the case where a fluoropolymer typified by polyvinylidene fluoride is contained as a main component, the proportion of the binder with respect to the negative electrode active material is usually 1% by mass or more, preferably 2% by mass or more, further preferably 3% by mass or more, while usually 15% by mass or less, preferably 10% by mass or less, further preferably 8% by mass or less.

Examples of the thickening agent include the same as the above-mentioned thickening agents that can be used for the positive electrode. The proportion of the thickening agent with respect to the negative electrode active material is usually 0.1% by mass or more, preferably 0.5% by mass or more, further preferably 0.6% by mass or more, while usually 5% by mass or less, preferably 3% by mass or less, further preferably 2% by mass or less. If the proportion of the thickening agent with respect to the negative electrode active material falls below the above range, the coating property may significantly deteriorate. If the proportion thereof exceeds the above range, the proportion of the negative electrode active material in the negative electrode active material layer decreases, and there may be a problem such as decrease in the capacity of the battery, or the resistance between the negative electrode active materials may increase.

Examples of the conductive material of the negative electrode include metal materials such as copper and nickel; and carbon materials such as graphite and carbon black.

The type of solvent for forming a slurry is not limited as long as the solvent can dissolve or disperse therein the negative electrode active material and the binder, as well as a thickening agent and a conductive material used as appropriate. The solvent to be used may be either an aqueous solvent or an organic solvent.

Examples of the aqueous solvent include water and alcohols. Examples of the organic solvent include N-methylpyrrolidone (NMP), dimethyl formamide, dimethyl acetamide, methyl ethyl ketone, cyclohexanone, methyl acetate, methyl acrylate, diethyl triamine, N,N-dimethyl aminopropyl amine, tetrahydrofuran (THF), toluene, acetone, diethyl ether, dimethyl acetamide, hexamethyl phospharamide, dimethyl sulfoxide, benzene, xylene, quinoline, pyridine, methyl naphthalene, and hexane.

Examples of the material of the current collector for a negative electrode include copper, nickel, and stainless steel. Preferred among these is copper foil in view of ease of processing into a thin film and the cost.

The thickness of the current collector is usually 1 $\mu$m or more, preferably 5 $\mu$m or more, while usually 100 $\mu$m or less, preferably 50 $\mu$m or less. If the negative electrode current collector is excessively thick, the capacity of the whole battery may excessively decrease. In contrast, if the collector is excessively thin, the collector may be difficult to handle.

The negative electrode may be produced by a usual method. An example of the production method includes a method in which the negative electrode material is mixed with the above binder, thickening agent, conductive material, solvent, and the like into a slurry state, and then this slurry is applied to a current collector, dried, and pressed so as to enhance the density. When an alloyed material is employed, also used is a method for forming a thin film layer containing the above negative electrode active material (negative electrode active material layer) by approaches such as vapor deposition, sputtering, and plating.

The electrode structure when an electrode is formed from the negative electrode active material is not limited. The density of the negative electrode active material existing on the current collector is preferably 1 $g \cdot cm^{-3}$ or more, further preferably 1.2 $g \cdot cm^{-3}$ or more, particularly preferably 1.3 $g \cdot cm^{-3}$ or more, while preferably 2.2 $g \cdot cm^{-3}$ or less, more preferably 2.1 $g \cdot cm^{-3}$ or less, further preferably 2.0 $g \cdot cm^{-3}$ or less, particularly preferably 1.9 $g \cdot cm^{-3}$ or less. If the density of the negative electrode active material existing on the current collector exceeds the above range, negative electrode active material particles may be broken. This leads to increase in the initial irreversible capacity, or deterioration in the

high-current-density charge and discharge characteristics due to reduction in permeability of the electrolytic solution toward the vicinity of the interface between the current collector and the negative electrode active material. If the density thereof falls below the above range, the electrical conductivity between the negative electrode active materials may decrease, the battery resistance may increase, and thus, the capacity per unit volume may decrease.

The thickness of the negative electrode plate is designed in accordance with the positive electrode plate used and is not limited. The thickness of the mixture layer excluding the thickness of the metal foil of the core material is desirably usually 15 μm or more, preferably 20 μm or more, more preferably 30 μm or more, while usually 300 μm or less, preferably 280 μm or less, more preferably 250 μm or less.

There may be used a negative electrode plate onto a surface of which a substance having a compositional feature different from the negative electrode plate is attached. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; and carbonates such as lithium carbonate, calcium carbonate, and magnesium carbonate.

<Separator>

The lithium ion secondary battery of the present disclosure preferably further comprises a separator.

The material and shape of the separator is not limited and known one may be used as long as the separator is stable to the electrolytic solution and excellent in a liquid-retaining ability. In particular, it is preferred to use a separator in the form of a porous sheet or a nonwoven fabric for which a resin, a glass fiber, inorganic matter, or the like formed of a material stable to the electrolytic solution used in the present disclosure is employed and which has excellent liquid-retaining ability.

Examples of the material of a resin or glass-fiber separator that can be used include polyolefins such as polyethylene and polypropylene, aromatic polyamide, polytetrafluoroethylene, polyether sulfone, and glass filters. One of these materials may be used singly or two or more of these may be used in any combination at any ratio, for example, in the form of a polypropylene/polyethylene bilayer film or a polypropylene/polyethylene/polypropylene trilayer film. Among these, the above separator is preferably a porous sheet or a nonwoven fabric formed from a polyolefin such as polyethylene or polypropylene as the raw material, in view of favorable permeability of the electrolytic solution and a favorable shut-down effect.

The separator may have any thickness, and the thickness is usually 1 μm or more, preferably 5 μm or more, further preferably 8 μm or more, while usually 50 μm or less, preferably 40 μm or less, further preferably 30 μm or less. If the separator is excessively thinner than the above range, the insulation and mechanical strength may decrease. If the separator is excessively thicker than the above range, not only the battery performance such as rate characteristics may deteriorate but also a low energy density of the whole electrolytic solution battery may decrease.

When a separator which is a porous one such as a porous sheet or a nonwoven fabric is used, the separator may have any porosity. The porosity is usually 20% or more, preferably 35% or more, further preferably 45% or more, while usually 90% or less, preferably 85% or less, more preferably 75% or less. If the porosity is excessively smaller than the above range, the film resistance may increase, and the rate characteristics tends to deteriorate. If the porosity is excessively larger than the above range, the mechanical strength of the separator may decrease, and the insulation tends to decrease.

The separator may have any average pore size, and the average pore size is usually 0.5 μm or less, preferably 0.2 μm or less, while usually 0.05 μm or more. If the average pore size exceeds the above range, short circuits easily occur. If the average pore size falls below the above range, the film resistance may increase, and the rate characteristics may deteriorate.

Meanwhile, examples of the inorganic matter to be used include oxides such as alumina and silicon dioxide, nitrides such as aluminum nitride and silicon nitride, and sulfates such as barium sulfate and calcium sulfate, each in the form of particles or fibers.

The separator is used in the form of a thin film such as a nonwoven fabric, a woven fabric, or a microporous film. The thin film form to be used suitably has a pore size of 0.01 to 1 μm and a thickness of 5 to 50 μm. Other than the above separate thin film form, a separator may be used in which a composite porous layer containing particles of the above inorganic matter is formed on a surface layer of the positive electrode and/or negative electrode using a resin binder. For example, alumina particles having a 90% particle size of smaller than 1 μm may be employed to form a porous layer on both the surfaces of the positive electrode using fluororesin as a binder.

<Battery Design>

The electrode group may have either a laminate structure including the above positive electrode plate and

negative electrode plate with the above separator interposed therebetween, or a wound structure including the above positive electrode plate and negative electrode plate wound in a spiral form with the above separator interposed therebetween. The proportion of the volume of the electrode group in the battery internal volume (hereinafter, referred to as an electrode group occupancy) is usually 40% or more, preferably 50% or more, while usually 90% or less, preferably 80% or less.

If the electrode group occupancy falls below the above range, the battery capacity is lowered. If the electrode group occupancy exceeds the above range, the void space is small, and the battery temperature elevates. Thereby the members expand and the vapor pressure of the liquid component of the electrolyte increases to raise the internal pressure. This may deteriorate characteristics of the battery such as charge and discharge repeatability and high-temperature storage and may further actuate a gas-releasing valve for releasing the internal pressure to the outside.

The current collecting structure is not limited. In order to more effectively improve the high-current-density charge and discharge characteristics by the electrolytic solution used in the disclosure, the current collecting structure is preferably configured to reduce the resistance at wiring portions and joint portions. When the internal resistance is reduced in this manner, effects due to use of the electrolytic solution used in the present disclosure are particularly favorably exerted.

In an electrode group having the above laminate structure, suitably used is a structure formed by bundling the metal core portions of the respective electrode layers to weld the bundled portions to a terminal. When an electrode has a large area, the internal resistance increases. Thus, a plurality of terminals may be suitably provided in the electrode so as to reduce the resistance. In an electrode group having the wound structure, a plurality of lead structures may be provided on each of the positive electrode and the negative electrode and bundled to a terminal to thereby reduce the internal resistance.

The material of the external case is not limited as long as the material is stable to an electrolytic solution to be used. Specific examples thereof include metals such as nickel-plated steel plates, stainless steel, aluminum and aluminum alloys, and magnesium alloys, or a layered film (laminate film) of a resin and aluminum foil. From the viewpoint of weight reduction, a metal such as aluminum or an aluminum alloy or a laminate film is suitably used.

Examples of an external case including metal include one having a sealed-up structure formed by welding the metal by laser welding, resistance welding, or ultrasonic welding, or one having a caulking structure provided using the metal via a resin gasket. Examples of an external case including a laminate film include ones having a sealed-up structure formed by hot-melting resin layers. A resin different from the resin of the laminate film may be interposed between the resin layers in order to improve the sealability. In particular, in the case of forming a sealed-up structure by hot-melting the resin layers with current collecting terminals interposed therebetween, metal and resin are to be bonded. Thus, the resin to be interposed between the resin layers to be used is suitably a resin having a polar group or a modified resin having a polar group introduced therein.

The lithium ion secondary battery of the present disclosure may have any shape and examples thereof include a cylindrical shape, a square shape, a laminate shape, a coin shape, and a large-size shape. The shapes and the constitutions of the positive electrode, the negative electrode, and the separator may be changed for use in accordance with the shape of each of the battery.

A module comprising the lithium ion secondary battery of the present disclosure is also an aspect of the present disclosure.

Also an aspect of the preferred embodiment is a lithium ion secondary battery comprising a positive electrode, a negative electrode, and the electrolytic solution mentioned above, wherein the positive electrode comprises a positive electrode current collector and a positive electrode active material layer including a positive electrode active material, and the positive electrode active material contains Mn. The lithium ion secondary battery is further excellent in high-temperature storage characteristics because of comprising the positive electrode active material layer including a positive electrode active material containing Mn.

The positive electrode active material containing Mn is preferably $LiMn_{1.5}Ni_{0.5}O_4$, $LiNi_{0.5}CO_{0.2}Mn_{0.3}O_2$, or $LiNi_{0.6}Co_{0.2}Mn_{0.2}O_2$, in view of enabling a high-output lithium ion secondary battery having a high energy density to be provided.

The content of the positive electrode active material in the positive electrode active material layer is preferably 80% by mass or more, more preferably 82% by mass or more, particularly preferably 84% by mass or more. The upper limit is preferably 99% by mass or less, more preferably 98% by mass or less. An excessively small content of the positive electrode active material in the positive electrode active material layer may cause an insufficient electric capacity. In contrast, an excessively large content thereof may cause insufficient strength of the positive electrode.

The positive electrode active material layer may further contain a conductive material, a thickening agent, and a binder.

The binder to be used may be any material that is safe against a solvent to be used in production of the electrode and the electrolytic solution. Examples thereof include polyvinylidene fluoride, polytetrafluoroethylene, polyethylene, polypropylene, SBR (styrene-butadiene rubber), isoprene rubber, butadiene rubber, ethylene-acrylic acid copolymers,

ethylene-methacrylic acid copolymers, polyethylene terephthalate, polymethyl methacrylate, polyimide, aromatic polyamide, cellulose, nitro cellulose, NBR (acrylonitrile-butadiene rubber), fluoroelastomer, ethylene-propylene rubber, styrene-butadiene-styrene block copolymers and hydrogenated products thereof, EPDM (ethylene-propylene-diene terpolymers), styrene-ethylene-butadiene-ethylene copolymers, styrene-isoprene-styrene block copolymers and hydrogenated products thereof, syndiotactic-1,2-polybutadiene, polyvinyl acetate, ethylene-vinyl acetate copolymers, propylene-$\alpha$-olefin copolymers, fluorinated polyvinylidene fluoride, tetrafluoroethylene-ethylene copolymers, and polymer compositional features having ion conductivity of alkali metal ions (especially, lithium ions). One of these substances may be used singly, or two or more thereof may be used in any combination at any ratio.

The content of the binder, as the proportion of the binder in the positive electrode active material layer, is usually 0.1% by mass or more, preferably 1% by mass or more, further preferably 1.5% by mass or more, while usually 80% by mass or less, preferably 60% by mass or less, further preferably 40% by mass or less, most preferably 10% by mass or less. An excessively low proportion of the binder may fail to sufficiently hold the positive electrode active material and cause insufficient mechanical strength of the positive electrode, and the battery performance such as cycle characteristics may deteriorate. In contrast, an excessively high proportion thereof may cause reduction in battery capacity and conductivity.

Examples of the thickening agent include carboxymethyl cellulose, methyl cellulose, hydroxymethyl cellulose, ethyl cellulose, polyvinyl alcohol, oxidized starch, monostarch phosphate, casein, and salts thereof. One of these may be used singly, or two or more thereof may be used in any combination at any ratio.

The proportion of the thickening agent with respect to the active material is in the range of usually 0.1% by mass or more, preferably 0.2% by mass or more, more preferably 0.3% by mass or more, while usually 5% by mass or less, preferably 3% by mass or less, more preferably 2% by mass or less. If the proportion falls below this range, the coating property may significantly deteriorate. If the proportion exceeds this range, the proportion of the active material in the positive electrode active material layer decreases, and there may be problems such as decrease in the capacity of the battery and increase in the resistance between the positive electrode active materials.

The conductive material to be used may be any known conductive material. Specific examples thereof include metal materials such as copper and nickel, and carbon materials such as graphite, including natural graphite and artificial graphite, carbon black including acetylene black, and amorphous carbon including needle coke. One of these may be used singly, or two or more thereof may be used in any combination at any ratio. The conductive material to be used is contained in an amount of usually 0.01% by mass or more, preferably 0.1% by mass or more, more preferably 1% by mass or more, while usually 50% by mass or less, preferably 30% by mass or less, more preferably 15% by mass or less, in positive electrode active material layer. If the content thereof is smaller than this range, the electrical conductivity may become insufficient. In contrast, if the content thereof is larger than this range, the battery capacity may decrease.

The positive electrode current collector is preferably composed of a valve metal or an alloy of valve metals because the high-temperature storage characteristics are further improved. Examples of the valve metals include aluminum, titanium, tantalum, and chromium. The positive electrode current collector is more preferably composed of aluminum or an aluminum alloy.

In the lithium ion secondary battery, portions to be in contact with the electrolytic solution among the portions electrically connected to the positive electrode current collector are also preferably composed of a valve metal or an alloy of valve metals because the high-temperature storage characteristics are further improved. Particularly, among the external case of the battery, and the lead wire, safety valve, and the like housed in the external case of the battery, portions that are electrically connected to the positive electrode current collector and to be in contact with the non-aqueous electrolytic solution are preferably composed of a valve metal or an alloy of valve metals. Stainless steel coated with a valve metal or an alloy of valve metals may be used.

The method for producing the positive electrode is as described above. An example thereof includes a method in which the positive electrode active material is mixed with the above binder, thickening agent, conductive material, solvent, and the like to form a slurry-like positive electrode mixture, and then this mixture is applied to the positive electrode current collector, dried, and pressed so as to enhance the density.

The negative electrode is configured as mentioned above.

The electric double-layer capacitor may comprise a positive electrode, a negative electrode, and the electrolytic solution mentioned above.

In the electric double-layer capacitor, at least one of the positive electrode and the negative electrode is a polarizable electrode. As the polarizable electrode and non-polarizable electrode, the following electrodes described in detail in JP 9-7896A may be used.

A polarizable electrode mainly based on activated carbon used in the present disclosure preferably includes inactive carbon having a large specific surface area and a conductive agent to impart electron conductivity such as carbon black. The polarizable electrode can be formed by various methods. For example, activated carbon powder, carbon black, and a phenolic resin are mixed, press-molded, and then calcined and activated in an inert gas atmosphere and a water vapor atmosphere. Thereby, a polarizable electrode comprising activated carbon and carbon black can be

formed. This polarizable electrode is preferably bonded to the current collector with a conductive adhesive or the like.

Alternatively, activated carbon powder, carbon black, and a binder are kneaded in the presence of alcohol and molded into a sheet. This sheet can be dried to give a polarizable electrode. As this binder, polytetrafluoroethylene is employed, for example. Alternatively, activated carbon powder, carbon black, a binder, and a solvent are mixed to give a slurry. This slurry also can be coated onto the metal foil of the current collector and dried to give a polarizable electrode integrated with the current collector.

Polarizable electrodes mainly based on activated carbon may be employed as both the electrodes to form the electric double-layer capacitor. Alternatively, the electric double-layer capacitor can be also configured to include a non-polarizable electrode on one side, for example, configured such that a positive electrode mainly based on a battery active material such as a metal oxide is combined with a negative electrode as a polarizable electrode mainly based on activated carbon, or configured such that a negative electrode mainly based on a carbon material that may reversibly occlude and remove lithium ions or a negative electrode made of lithium metal or a lithium alloy is combined with a polarizable positive electrode mainly based on activated carbon.

Instead of or in combination with activated carbon, a carbonaceous material such as carbon black, graphite, expanded graphite, porous carbon, carbon nanotubes, carbon nanohorns, or Ketjen black may be employed.

The non-polarizable electrode is preferably based on a carbon material that may reversibly occlude and remove lithium ions. This carbon material is caused to occlude lithium ions and used for the electrode. In this case, a lithium salt is used as the electrolyte. An electric double-layer capacitor of this configuration can achieve a further higher withstand voltage of more than 4 V.

The solvent to be employed to prepare a slurry in production of the electrode preferably dissolves the binder, and is appropriately selected from N-methylpyrrolidone, dimethylformamide, toluene, xylene, isophorone, methyl ethyl ketone, ethyl acetate, methyl acetate, dimethyl phthalate, ethanol, methanol, butanol, or water in accordance with the type of binder.

Examples of activated carbon used in the polarizable electrode include phenol resin-based activated carbon, coconut shell-based activated carbon, and petroleum coke-based activated carbon. Petroleum coke-based activated carbon or phenol resin-based activated carbon among these is preferably used because a large capacity can be provided. Examples of methods for activating activated carbon include steam activation and molten KOH activation methods, and use of activated carbon by the molten KOH activation method is preferred because a larger capacity can be provided.

Examples of a preferred conductive agent used in the polarizable electrode include carbon black, Ketjen black, acetylene black, natural graphite, artificial graphite, metal fiber, conductive titanium oxide, and ruthenium oxide. The amount of the conductive agent such as carbon black to be mixed for use in the polarizable electrode is preferably 1 to 50% by mass based on the total amount of the conductive agent and activated carbon so as to provide favorable conductivity (low internal resistance) and because an excessive amount thereof reduces the capacity of a product.

Activated carbon having an average grain size of 20 μm or less and a specific surface area of 1,500 to 3,000 $m^2/g$ is preferably used as the activated carbon used in the polarizable electrode so as to provide an electric double-layer capacitor having a large capacity and low internal resistance. Preferred examples of the carbon material for constituting an electrode mainly based on a carbon material that may reversibly occlude and remove lithium ions include natural graphite, artificial graphite, graphitized mesocarbon microspheres, graphitized whisker, vapor-grown carbon fiber, sintered furfuryl alcohol resin, and sintered novolak resin.

The current collector is only required to be chemically and electrochemically corrosion-resistant. As the current collector for the polarizable electrode mainly based on activated carbon, stainless steel, aluminum, titanium, or tantalum is preferably used. Particularly preferred materials among these are stainless steel or aluminum in terms of both the characteristics and cost of the resulting electric double-layer capacitor. As the current collector of the electrode mainly based on a carbon material that may reversibly occlude and remove lithium ions, stainless steel, copper, or nickel is preferably used.

Examples of a method for causing the carbon material that may reversibly occlude and remove lithium ions to occlude lithium ions preliminarily include: (1) a method in which lithium powder is preliminarily mixed with the carbon material that may reversibly occlude and remove lithium ions; (2) a method in which a lithium foil is placed on an electrode formed of the carbon material that may reversibly occlude and remove lithium ions and a binder, and the electrode is dipped in an electrolytic solution containing a lithium salt dissolved therein while the lithium foil is in electrical contact with the electrode such that lithium is ionized and taken into the carbon material; and (3) a method in which an electrode formed of the carbon material that may reversibly occlude and remove lithium ions and a binder, which electrode is placed on the negative side, and lithium metal placed on the positive side are dipped in a non-aqueous electrolytic solution containing a lithium salt as an electrolyte, and a current is applied such that lithium is electrochemically taken into the carbon material, in an ionized form.

Examples of commonly known electric double-layer capacitors include a wound electric double-layer capacitor, a laminated electric double-layer capacitor, and a coin-type electric double-layer capacitor. The electric double-layer capacitor may also be any of these types.

For example, a wound electric double-layer capacitor may be assembled by winding a positive electrode and a negative electrode each of which includes a laminate (electrode) of a current collector and an electrode layer with a separator in between to produce a wound element, placing this wound element into a case made of aluminum or the like, filling the case with an electrolyte solution, preferably a non-aqueous electrolyte solution, and sealing tightly the case with a rubber sealant.

A separator formed from a conventionally known material and having a conventionally known structure may be used. Examples thereof include a polyethylene porous membrane, and nonwoven fabric of polytetrafluoroethylene, polypropylene fiber, glass fiber, or cellulose fiber.

In accordance with any known method, the electric double-layer capacitor may be prepared in the form of a laminated electric double-layer capacitor in which sheet-like positive electrodes and negative electrodes are stacked with an electrolyte solution and a separator in between or a coin-type electric double-layer capacitor in which positive electrodes and negative electrodes are fixed by a gasket with an electrolyte solution and a separator in between to thereby be configured in a coin shape.

The electrolyte solution used in the present disclosure is useful as an electrolyte solution for large-size lithium-ion secondary batteries for hybrid vehicles or distributed generation, and for electric double-layer capacitors.

Examples

Next, the present disclosure will be described with reference to Examples, but the present disclosure is not intended to be limited to these Examples.

• Fluoropolyether group-containing compound

As a fluoropolyether group-containing compound, Compounds 1 to 6 below were provided.

Compound 1 $CF_3O\ (CF_2CF_2O)_m\ (CF_2O)_n\ CF_2CH_2OCH_2CH_2CH_2Si(CH_2CH_2CH_2Si(OCH_3)_3)_3$

m = 15, n = 16

Compound 2 $CF_3O\ (CF_2CF_2O)_m\ (CF_2O)_n\ CF_2CH_2CH_2CH_2Si\ (CH_2CH_2Si(OCH_3)_3)_3$

m = 15, n = 16

Compound 3 $CF_3CF_2CF_{20}(CF(CF_3)CF_2O)_nCF(CF_3)Si(OCH_2CH_2CH_2Si(OCH_3)_3(CHX_2H_2CH_2Si(OCH_3)_3)_2$ n = 20

Compound 4

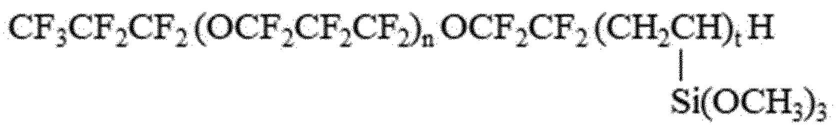

n = 20, t = 1 to 6

Compound 5 $CF_3O\ (CF_2CF_2O)_m\ (CF_2O)_n\ CF_2COOH$

m = 15, n = 16

Compound 6 **$CF_3O\ (CF_2CF_2O)_m\ (CF_2O)_n\ CF_2COOCH_3$**

m = 15, n = 16

•Fluorine-containing oil

As the fluorine-containing oil, Compound A below was provided.

Compound A $CF_3O\ (CF_2CF_2O)_m\ (CF_2O)_n\ CF_3$

m = 15, n = 16

Example A

•Electrolytic solution

Ethylene carbonate and ethylmethyl carbonate were mixed at a volume ratio of 30:70 to produce an electrolytic solution.

• Electrode

In a N-methylpyrrolidone solvent, 90% by mass of $Li\ (Ni_{1/3}Mn_{1/3}Co_{1/3})\ O_2$ as a positive electrode active material, 5% by mass of acetylene black as a conductive material, and 5% by mass of polyvinylidene fluoride (PVdF) as a binder were mixed to form a slurry. The resulting slurry was applied to one surface of 15-μm-thick aluminum foil with a conductive aid applied thereto in advance, and dried. The foil was then roll-pressed using a press and cut out into a shape including an active material layer having a width of 50 mm and a length of 30 mm and an uncoated portion having a width of 5 mm and a length of 9 mm, which was used as a positive electrode material.

To 98 parts by mass of a carbonaceous material (graphite) as a negative electrode active material, 1 part by mass of an aqueous dispersion of sodium carboxymethyl cellulose (concentration of sodium carboxymethyl cellulose: 1% by mass), and 1 part by mass of an aqueous dispersion of styrene-butadiene rubber (concentration of styrene-butadiene rubber: 50% by mass) were added respectively as a thickening agent and a binder. The components were mixed using a disperser to form a slurry. The resulting slurry was applied to 10 μm-thick copper foil, dried, rolled using a press, and cut out into a shape including an active material layer having a width of 52 mm and a length of 32 mm and an uncoated portion having a width of 5 mm and a length of 9 mm, which was used as a negative electrode material.

The positive electrode material and the negative electrode material provided above were treated with each of compositions for coating and by each of coating methods shown in Table 1 below.

Spray method

The following compositions for coating were each dissolved in hydrofluoroether (HFE7200 manufactured by Sumitomo 3M Limited.) so as to achieve a concentration of the fluoropolyether group-containing compound of 0.1%. Thereafter, the amount to be discharged by spraying was adjusted such that the fluoropolyether group-containing compound was treated in an amount of 50 mg per 1 $m^2$ in terms of solid content (0.01 mg per electrode), and then the positive electrode material or the negative electrode material was subjected to spray ejection.

Physical vapor deposition (PVD)

The following compositions for coating were each weighed and placed in a copper container, which was set in the resistance heating vessel in a vacuum chamber. An electrode material was set in the upper portion of the chamber. Thereafter, the internal pressure of the chamber was controlled to be $10^{-3}$ Pa by a vacuum pump. The compound in the copper container was heated and deposited by resistance heating to thereby give an electrode surface-treated with the fluoropolyether group-containing compound. The fluoropolyether group-containing compound corresponds to a 9 to 10 nm film thickness as measured by a crystal oscillator provided inside the vapor deposition chamber by setting the compound so as to be an amount treated of 50 mg per 1 $m^2$ in terms of solid content (0.01 mg per electrode).

Dip method (DIP)

The following compositions for coating were each dissolved in hydrofluoroether (HFE7200 manufactured by Sumitomo 3M Limited.) so as to achieve a concentration of the fluoropolyether group-containing compound of 0.1%. After an electrode material was dipped therein for a minute, the excessive compound attached to the surface of the electrode material was washed off with HFE7200. Thereafter, the electrode material was dried to give an electrode surface-treated with the fluoropolyether group-containing compound.

[Table 1]

| | Composition for coating | | Silane compound/ fluorine-containing oil | Treatment method | Object treated |
|---|---|---|---|---|---|
| | Silane compound | Fluorine-containing oil | | | |
| Example 1 | 1 | - | 100/0 | Spray | Positive electrode |
| Example 2 | 1 | - | 100/0 | PVD | Positive electrode |
| Example 3 | 1 | - | 100/0 | DIP | Positive electrode |
| Example 4 | 1 | A | 80/20 | Spray | Positive electrode |
| Example 5 | 1 | A | 80/20 | PVD | Positive electrode |
| Example 6 | 1 | A | 80/20 | DIP | Positive electrode |
| Example 7 | 2 | - | 100/0 | Spray | Positive electrode |
| Example 8 | 3 | - | 100/0 | Spray | Positive electrode |
| Example 9 | 1 | - | 100/0 | Spray | Negative electrode |
| Example 10 | 1 | A | 80/20 | Spray | Negative electrode |
| Example 11 | 1 | A | 80/20 | PVD | Negative electrode |
| Example 12 | 1 | A | 80/20 | DIP | Negative electrode |
| Example 13 | 2 | - | 100/0 | Spray | Negative electrode |
| Example 14 | 3 | - | 100/0 | Spray | Negative electrode |
| Example 15 | 1 | - | 100/0 | Spray | Positive electrode and negative electrode |
| Example 16 | 1 | A | 80/20 | Spray | Positive electrode and negative electrode |
| Example 17 | 1 | A | 80/20 | PVD | Positive electrode and negative electrode |
| Example 18 | 1 | A | 80/20 | DIP | Positive electrode and negative electrode |
| Example 19 | 2 | - | 100/0 | Spray | Positive electrode and negative electrode |
| Example 20 | 3 | - | 100/0 | Spray | Positive electrode and negative electrode |
| Comp. Ex. 1 | - | - | - | - | - |
| Comp. Ex. 2 | 4 | - | 100/0 | Spray | Positive electrode |
| Comp. Ex. 3 | 4 | - | 100/0 | PVD | Positive electrode |
| Comp. Ex. 4 | 4 | - | 100/0 | DIP | Positive electrode |

(continued)

| | Composition for coating | | Silane compound/ fluorine-containing oil | Treatment method | Object treated |
|---|---|---|---|---|---|
| | Silane compound | Fluorine-containing oil | | | |
| Comp. Ex. 5 | 5 | - | 100/0 | Spray | Positive electrode |
| Comp. Ex. 6 | 6 | - | 100/0 | Spray | Positive electrode |
| Comp. Ex. 7 | 4 | - | 100/0 | Spray | Negative electrode |
| Comp. Ex. 8 | 4 | - | 100/0 | PVD | Negative electrode |
| Comp. Ex. 9 | 4 | - | 100/0 | DIP | Negative electrode |
| Comp. Ex. 10 | 5 | - | 100/0 | Spray | Negative electrode |
| Comp. Ex. 11 | 6 | - | 100/0 | Spray | Negative electrode |
| Comp. Ex. 12 | 4 | - | 100/0 | Spray | Positive electrode and negative electrode |
| Comp. Ex. 13 | 4 | - | 100/0 | PVD | Positive electrode and negative electrode |
| Comp. Ex. 14 | 4 | - | 100/0 | DIP | Positive electrode and negative electrode |
| Comp. Ex. 15 | 5 | - | 100/0 | Spray | Positive electrode and negative electrode |
| Comp. Ex. 16 | 6 | - | 100/0 | Spray | Positive electrode and negative electrode |

• Production of aluminum laminate cell

The above positive electrode was faced to the negative electrode with a microporous polyethylene film (separator) having a thickness of 20 μm interposed therebetween, and the electrolytic solution produced above was injected therein. After the electrolytic solution was made to sufficiently permeate into the separator and the like, the assembly was sealed, preliminarily charged and aged to produce an aluminum laminate cell (lithium ion secondary battery).

Example B

An aluminum laminate cell were produced in the same manner as in Example A except that the particles of the positive electrode active material (Li $(Ni_{1/3}Mn_{1/3}Co_{1/3})O_2$) (average particle size: 12 μm) was treated with each of the coating compositions and by each of the coating methods shown in Table 2 instead of treating the positive electrode material with each of the coating compositions and that positive electrode active material treated was used to produce an positive electrode material.

[Table 2]

| | Composition for coating | | Silane compound/fluorine-containing oil | Treatment method | Object treated |
|---|---|---|---|---|---|
| | Silane compound | Fluorine-containing oil | | | |
| Example 21 | 1 | - | 100/0 | DIP | Positive electrode active material |
| Example 22 | 1 | - | 100/0 | PVD | Positive electrode active material |
| Example 23 | 1 | A | 80/20 | DIP | Positive electrode active material |
| Example 24 | 1 | A | 80/20 | PVD | Positive electrode active material |
| Example 25 | 2 | - | 100/0 | DIP | Positive electrode active material |
| Example 26 | 3 | - | 100/0 | DIP | Positive electrode active material |
| Comparative Example 17 | 4 | - | 100/0 | DIP | Positive electrode active material |
| Comparative Example 18 | 4 | - | 100/0 | PVD | Positive electrode active material |
| Comparative Example 19 | 5 | - | 100/0 | DIP | Positive electrode active material |
| Comparative Example 20 | 5 | - | 100/0 | PVD | Positive electrode active material |
| Comparative Example 21 | 6 | - | 100/0 | DIP | Positive electrode active material |

(Measurement of Battery Characteristics)

The aluminum laminate cells given above were examined for resistance increase rate, remaining capacity retention, gas increase rate, and cycle capacity retention as described below. The results are shown in Tables 3 and 4.

• Conditioning of battery and measurement of initial discharge capacity

The battery was charged to 4.35 V at a constant current corresponding to 0.2 C and then discharged to 3.0 V at a constant current of 0.2 C, at 25°C. Two cycles of this procedure was conducted to stabilize the battery. In the third cycle, the battery was charged to 4.35 V at a constant current of 0.2 C, then charged at a constant voltage of 4.35 V until the current value reached 0.05 C, and discharged to 3.0 V at a constant current of 0.2 C. Then, the initial discharge capacity was determined. Thereafter, the battery was charged to 4.35 V at a constant current of 0.2 C, then charged at a constant voltage of 4.35 V until the current value reached 0.05 C, and a storage test was conducted.

Here, 1 C represents a current value required for discharging the reference capacity of the battery over one hour. 5 C represents a current value that is 5 times 1 C, 0.1 C represents a current value that is 1/10 of 1 C, and 0.2 C represents a current value that is 1/5 of 1 C.

• Remaining capacity retention

A charged secondary battery after completion of the initial characteristics evaluation was stored at a high temperature under 60°C and 672-hour conditions. The battery after being sufficiently cooled was discharged to 3 V at 0.2 C at 25°C, and the remaining capacity was determined.

The remaining capacity retention (%) was determined according to the following expression.

$$(\text{Remaining capacity})/(\text{initial discharge capacity}) \times 100 = \text{remaining capacity retention } (\%)$$

• Measurement of resistance increase rate

The resistance of the battery, stabilized as described above, at the time of calculating the initial discharge capacity and the resistance after the storage test were measured. The measurement temperature was set to be -20°C. The resistance increase rate after the storage test was determined according to the following expression. The results are shown in Tables 3 and 4 below.

Resistance increase rate (%) = resistance after storage test (Ω) /resistance after calculation of initial discharge capacity (Ω) × 100

•Measurement of gas increase rate

The volume amount of a charged secondary battery after completion of the initial characteristics evaluation was measured using a specific gravity measuring apparatus (manufactured by A&D Company, Limited) to determine the initial volume amount. Thereafter, the battery was stored at a high temperature under 60°C and 672-hour conditions. The battery after being sufficiently cooled was discharged to 3 V at 0.2 C at 25°C, and then charged to 4.35 V at a constant current of 0.2 C. Thereafter, a specific gravity measuring apparatus (manufactured by A&D Company, Limited) was used to measure the volume amount to determine the volume amount after storage.

The gas increase rate (%) was determined according to the following expression.

$$(\text{Volume amount after storage})/(\text{initial volume amount}) \times 100 = \text{gas increase rate } (\%)$$

•Measurement of cycle capacity retention

The battery was charged to 4.35 V at a constant current of 1 C, then charged at a current voltage of 4.35 V until the current value reached 0.05 C, and discharged to 3.0 V at a constant current of 1 C, 25°C, and the initial discharge capacity was determined. Charge and discharge were carried out in the same manner as above. The discharge capacity after 500 cycles was measured. The proportion of the discharge capacity after 500 cycles relative to the initial discharge capacity was determined according to the following expression and specified as a cycle capacity retention (%). The measurement temperature of the cycle test was set to be 25°C.

$$(\text{Discharge capacity after 500 cycles})/(\text{initial discharge capacity}) \times 100 = \text{cycle capacity retention } (\%)$$

[Table 3]

| | Resistance increase rate (%) | Remaining capacity retention (%) | Gas increase rate (%) | Cycle capacity retention (%) |
|---|---|---|---|---|
| Example 1 | 130 | 78 | 117 | 70 |
| Example 2 | 125 | 81 | 113 | 72 |
| Example 3 | 127 | 80 | 114 | 71 |
| Example 4 | 123 | 83 | 111 | 74 |
| Example 5 | 121 | 85 | 109 | 76 |
| Example 6 | 117 | 87 | 106 | 78 |
| Example 7 | 126 | 80 | 114 | 71 |

(continued)

| | Resistance increase rate (%) | Remaining capacity retention (%) | Gas increase rate (%) | Cycle capacity retention (%) |
|---|---|---|---|---|
| Example 8 | 128 | 79 | 116 | 70 |
| Example 9 | - | - | - | 81 |
| Example 10 | - | - | - | 83 |
| Example 11 | - | - | - | 87 |
| Example 12 | - | - | - | 84 |
| Example 13 | - | - | - | 81 |
| Example 14 | - | - | - | 80 |
| Example 15 | 124 | 82 | 111 | 86 |
| Example 16 | 117 | 87 | 105 | 88 |
| Example 17 | 115 | 89 | 104 | 90 |
| Example 18 | 111 | 91 | 103 | 92 |
| Example 19 | 119 | 84 | 109 | 87 |
| Example 20 | 122 | 83 | 110 | 85 |
| Example 21 | 121 | 84 | 111 | 75 |
| Example 22 | 118 | 86 | 109 | 77 |
| Example 23 | 114 | 88 | 106 | 78 |
| Example 24 | 112 | 90 | 104 | 80 |
| Example 25 | 123 | 81 | 113 | 72 |
| Example 26 | 122 | 83 | 112 | 74 |

[Table 4]

| | | | | |
|---|---|---|---|---|
| Comparative Example 1 | 150 | 61 | 133 | 32 |
| Comparative Example 2 | 138 | 67 | 126 | 53 |
| Comparative Example 3 | 134 | 71 | 122 | 56 |
| Comparative Example 4 | 136 | 68 | 125 | 54 |

(continued)

| | | | | |
|---|---|---|---|---|
| Comparative Example 5 | 142 | 65 | 129 | 51 |
| Comparative Example 6 | 145 | 64 | 131 | 50 |
| Comparative Example 7 | - | - | - | 61 |
| Comparative Example 8 | - | - | - | 73 |
| Comparative Example 9 | - | - | - | 69 |
| Comparative Example 10 | - | - | - | 58 |
| Comparative Example 11 | - | - | - | 61 |
| Comparative Example 12 | 134 | 70 | 122 | 65 |
| Comparative Example 13 | 131 | 72 | 120 | 71 |
| Comparative Example 14 | 132 | 71 | 121 | 69 |
| Comparative Example 15 | 138 | 68 | 125 | 61 |
| Comparative Example 16 | 141 | 67 | 127 | 66 |
| Comparative Example 17 | 134 | 74 | 121 | 58 |
| Comparative Example 18 | 131 | 77 | 119 | 61 |
| Comparative Example 19 | 144 | 69 | 131 | 54 |
| Comparative Example 20 | 142 | 70 | 130 | 55 |
| Comparative Example 21 | 141 | 71 | 128 | 56 |

As clearly seen from the above results, the aluminum laminate cell including the electrode of the present disclosure, the positive electrode material or the positive electrode active material of which electrode was treated with a fluoropolyether group-containing compound having a group represented by the formula (S), has been confirmed to be excellent in all of resistance increase rate, remaining capacity retention, gas increase rate, and cycle capacity retention, in comparison with the aluminum laminate cells of Comparative Examples such as ones treated with a different fluoropolyether group-containing compound like Compound 5 and ones treated with a compound having a functional group like Compounds 6 and 7. The aluminum laminate cell including the electrode of the present disclosure, the negative electrode material of which electrode was treated with a fluoropolyether group-containing compound having a group represented by the formula (S), has been confirmed to be excellent in cycle capacity retention, in comparison with the aluminum laminate cells of Comparative Examples.

Industrial Applicability

The electrochemical device of the present disclosure has low resistance and a longer service life, and thus can be usefully used in various electronic devices.

## Claims

1. An electrode comprising a fluoropolyether group-containing compound, wherein the fluoropolyether group-containing compound is a fluoropolyether group-containing compound represented by the following formula (1) or (2):

$$\mathbf{R^{F1}}_{\alpha}\text{-}\mathbf{X^{A}}\text{-}\mathbf{R^{Si}}_{\beta} \quad (1)$$

$$\mathbf{R^{Si}}_{\gamma}\mathbf{X^{A}}\text{-}\mathbf{R^{F2}}\text{-}\mathbf{X^{A}}\text{-}\mathbf{R^{Si}}_{\gamma} \quad (2)$$

wherein

$R^{F1}$ at each occurrence is each independently $Rf^1$-$R^F$-$O_q$-;
$R^{F2}$ is -$Rf^2_p$-$R^F$-$O_q$-;

$Rf^1$ at each occurrence is each independently a $C_{1-16}$ alkyl group optionally substituted with one or more fluorine atoms;
$Rf^2$ is a $C_{1-6}$ alkylene group optionally substituted with one or more fluorine atoms;
$R^F$ at each occurrence is each independently a divalent fluoropolyether group;
p is 0 or 1;
q at each occurrence is each independently 0 or 1;
$R^{Si}$ at each occurrence is each independently a group represented by

$$-SiR^{a1}_{k1}R^{b1}_{l1}R^{c1}_{m1} \quad \text{(S)}$$

wherein:

$R^{a1}$ at each occurrence is each independently $-Z^1-SiR^{21}_{p1}R^{22}_{q1}R^{23}_{r1}$;
$Z^1$ at each occurrence is each independently an oxygen atom or a divalent organic group;
$R^{21}$ at each occurrence is each independently $-Z^{1'}-SiR^{21'}_{p1'}R^{22'}_{q1'}R^{23'}_{r1'}$ ;
$R^{22}$ at each occurrence is each independently a hydroxy group or a hydrolyzable group;
$R^{23}$ at each occurrence is each independently a hydrogen atom or a monovalent organic group;
p1 at each occurrence is each independently an integer of 0 to 3;
q1 at each occurrence is each independently an integer of 0 to 3;
r1 at each occurrence is each independently an integer of 0 to 3;
$Z^{1'}$ at each occurrence is each independently an oxygen atom or a divalent organic group;
$R^{21'}$ at each occurrence is each independently $-Z^{1''}-SiR^{22''}_{q1''}R^{23''}_{r1''}$ ;
$R^{22'}$ at each occurrence is each independently a hydroxy group or a hydrolyzable group;
$R^{23'}$ at each occurrence is each independently a hydrogen atom or a monovalent organic group;
p1' at each occurrence is each independently an integer of 0 to 3;
q1' at each occurrence is each independently an integer of 0 to 3;
r1' at each occurrence is each independently an integer of 0 to 3;
$Z^{1''}$ at each occurrence is each independently an oxygen atom or a divalent organic group;
$R^{22''}$ at each occurrence is each independently a hydroxy group or a hydrolyzable group;
$R^{23''}$ at each occurrence is each independently a hydrogen atom or a monovalent organic group;
q1" at each occurrence is each independently an integer of 0 to 3;
r1" at each occurrence is each independently an integer of 0 to 3;
$R^{b1}$ at each occurrence is each independently a hydroxy group or a hydrolyzable group;
$R^{c1}$ at each occurrence is each independently a hydrogen atom or a monovalent organic group;
k1 at each occurrence is each independently an integer of 0 to 3;
l1 at each occurrence is each independently an integer of 0 to 3; and
m1 at each occurrence is each independently an integer of 0 to 3;
$X^A$ is each independently, single bond or a divalent to decavalent organic group;
$\alpha$ is an integer of 1 to 9;
$\beta$ is an integer of 1 to 9; and
$\gamma$ is each independently an integer of 1 to 9.

2. The electrode according to claim 1, wherein $Rf^1$ at each occurrence is each independently a $C_{1-16}$ perfluoroalkyl group, and
$Rf^2$ at each occurrence is each independently a $C_{1-6}$ perfluoroalkylene group.

3. The electrode according to claim 1 or 2, wherein $R^F$ at each occurrence is each independently a group represented by the formula:

$$-(OC_6F_{12})_a-(OC_5F_{10})_b-(OC_4F_8)_c-(OC_3R^{Fa}{}_6)_d-(OC_2F_4)_e-(OCF_2)_f-$$

wherein $R^{Fa}$ at each occurrence is each independently a hydrogen atom, a fluorine atom or a chlorine atom, a, b, c, d, e, and f are each independently an integer of 0 to 200, the sum of a, b, c, d, e, and f is 1 or more, and the occurrence order of the respective repeating units in parentheses with a, b, c, d, e, or f is optional in the formula.

4. The electrode according claim 3, wherein $R^{Fa}$ is a fluorine atom.

5. The electrode according to any one of claims 1 to 4, wherein $R^F$ at each occurrence is each independently a group

represented by the following formula (f1), (f2), (f3), (f4), or (f5):

$$-(OC_3F_6)_d- \quad (f1)$$

wherein d is an integer of 1 to 200;

$$-(OC_4F_8)_c-(OC_3F_6)_d-(OC_2F_4)_e-(OCF_2)_f- \quad (f2)$$

wherein c and d are each independently an integer of 0 to 30;
e and f are each independently an integer of 1 to 200;
the sum of c, d, e, and f is an integer of 10 to 200; and
the occurrence order of the respective repeating units in parentheses with the subscript c, d, e, or f is optional in the formula;

$$-(R^6-R^7)_g- \quad (f3)$$

wherein $R^6$ is $OCF_2$ or $OC_2F_4$;
$R^7$ is a group selected from $OC_2F_4$, $OC_3F_6$, $OC_4F_8$, $OC_5F_{10}$, and $OC_6F_{12}$, or a combination of 2 or 3 groups selected from these groups; and
g is an integer of 2 to 100;

$$-(OC_6F_{12})_a-(OC_5F_{10})_b-(OC_4F_8)_c-(OC_3F_6)_d-(OC_2F_4)_e-(OCF_2)_f- \quad (f4)$$

wherein e is an integer of 1 or more and 200 or less,
a, b, c, d, and f are each independently an integer of 0 or more and 200 or less, and
the occurrence order of the respective repeating units in parentheses with a, b, c, d, e, or f is optional in the formula;

$$-(OC_6F_{12})_a-(OC_5F_{10})_b-(OC_4F_8)_c-(OC_3F_6)_d-(OC_2F_4)_e-(OCF_2)_f- \quad (f5)$$

wherein f is an integer of 1 or more and 200 or less a, b, c, d, and e are each independently an integer of 0 or more and 200 or less, and
the occurrence order of the respective repeating units in parentheses with a, b, c, d, e, or f is optional in the formula.

6. The electrode according to any one of claims 1 to 5 wherein $R^F$ is a group represented by the following formula (f1'):

$$-(OCF(CF_3)CF_2)_d- \quad (f1')$$

wherein d is an integer of 1 to 200.

7. The electrode according to any one of claims 1 to 5, wherein $R^F$ is a group represented by the following formula (f2'):

$$-(OCF_2CF_2CF_2CF_2)_c-(OCF_2CF_2CF_2)_d-(OCF_2CF_2)_e-(OCF_2)_f- \quad (f2')$$

wherein c and d are each independently an integer of 0 to 30;
e and f are each independently an integer of 1 to 200;
the sum of c, d, e, and f is an integer of 10 to 200; and
the occurrence order of the respective repeating units in parentheses with the subscript c, d, e, or f is optional in the formula.

8. The electrode according to any one of claims 1 to 7, wherein $\alpha$, $\beta$, and $\gamma$ each are 1.

9. The electrode according to any one of claims 1 to 8, wherein k1 is 3, l1 and m1 each are 0, p1 and r1 each are 0, and q1 is 3.

10. The electrode according to any one of claims 1 to 9, wherein the fluoropolyether group-containing compound comprises two or more fluoropolyether group-containing compounds.

11. The electrode according to any one of claims 1 to 9, wherein the fluoropolyether group-containing compound is a

fluoropolyether group-containing compound represented by the formula (1).

**12.** The electrode according to any one of claims 1 to 9, wherein the fluoropolyether group-containing compound is a fluoropolyether group-containing compound represented by the formula (2).

**13.** The electrode according to any one of claims 1 to 10, wherein the fluoropolyether group-containing compound is a fluoropolyether group-containing compound represented by the formula (1) and a fluoropolyether group-containing compound represented by the formula (2).

**14.** The electrode according to any one of claims 1 to 13, wherein a surface of the electrode is coated with the fluoropolyether group-containing compound.

**15.** The electrode according to any one of claims 1 to 14, wherein an active material of the electrode is coated with the fluoropolyether group-containing compound.

**16.** The electrode according to any one of claims 1 to 15, further comprising one or more additional components selected from a fluorine-containing oil, a silicone oil, and a catalyst.

**17.** The electrode according to any one of claims 1 to 16, comprising a fluorine-containing oil.

**18.** An electrochemical device comprising the electrode according to any one of claims 1 to 17.

**19.** The electrochemical device according to claim 18, being an alkali metal battery or an alkaline earth metal battery.

**20.** The electrochemical device according to claim 19, being a lithium ion secondary battery.

**21.** The electrochemical device according to claim 19 or 20, wherein a positive electrode of the battery is the electrode according to any one of claims 1 to 17.

**22.** The electrochemical device according to claim 19 or 20 wherein a negative electrode of the battery is the electrode according to any one of claims 1 to 17.

**23.** The electrochemical device according to claim 19 or 20 wherein a positive electrode and a negative electrode of the battery each are the electrode according to any one of claims 1 to 17.

**24.** A module comprising the electrochemical device according to any one of claims 18 to 23.

**INTERNATIONAL SEARCH REPORT**

International application No.
PCT/JP2020/040890

A. CLASSIFICATION OF SUBJECT MATTER
C08G 65/336(2006.01)i; H01M 4/13(2010.01)i; H01M 4/36(2006.01)i; H01M 4/62(2006.01)i; H01G 11/06(2013.01)i; H01G 11/26(2013.01)i; H01G 11/30(2013.01)i; H01M 10/052(2010.01)i; H01M 10/054(2010. 01) i
FI: H01M4/62 Z; H01M4/13; H01M4/36 C; H01M10/054; H01M10/052; H01G11/06; H01G11/30; H01G11/26; C08G65/336
According to International Patent Classification (IPC) or to both national classification and IPC

B. FIELDS SEARCHED
Minimum documentation searched (classification system followed by classification symbols)
C08G65/336; H01M4/13; H01M4/36; H01M4/62; H01G11/06; H01G11/26; H01G11/30; H01M10/052; H01M10/054

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-040205 A (DAIKIN INDUSTRIES, LTD.) 24 February 2011 (2011-02-24) claims | 1-24 |
| A | WO 2018/084265 A1 (DAIKIN INDUSTRIES, LTD.) 11 May 2018 (2018-05-11) paragraph [0236] | 1-24 |
| A | WO 2014/050873 A1 (DAIKIN INDUSTRIES, LTD.) 03 April 2014 (2014-04-03) claims | 1-24 |
| P, A | WO 2019/216177 A1 (DAIKIN INDUSTRIES, LTD.) 14 November 2019 (2019-11-14) claims | 1-24 |

☐ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 December 2020 (22.12.2020) | 12 January 2021 (12.01.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/040890

| Patent Documents referred in the Report | Publication Date | Patent Family | Publication Date |
|---|---|---|---|
| JP 2011-040205 A | 24 Feb. 2011 | (Family: none) | |
| WO 2018/084265 A1 | 11 May 2018 | US 2020/0067097 A1<br>paragraph [0386]<br>EP 3537515 A1<br>KR 10-2019-0056407 A<br>CN 109937497 A | |
| WO 2014/050873 A1 | 03 Apr. 2014 | US 2015/0236378 A1<br>claims<br>EP 2887439 A1<br>CN 104685693 A | |
| WO 2019/216177 A1 | 14 Nov. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002083632 A
- JP 11233141 A
- JP 11283669 A
- JP 8222270 A
- JP 2002100405 A
- JP 10294131 A
- JP 11035765 A
- JP 11086630 A
- JP 2004301934 A
- JP 9007896 A